(19) Europäisches Patentamt
European Patent Office
Office européen des brevets

(11) EP 0 962 638 B1

(12) EUROPEAN PATENT SPECIFICATION

(45) Date of publication and mention of the grant of the patent:
**11.01.2006 Bulletin 2006/02**

(51) Int Cl.:
***F02D 21/08*** *(2006.01)* ***F02D 41/14*** *(2006.01)*
***F02D 41/26*** *(2006.01)*

(21) Application number: **99110381.3**

(22) Date of filing: **28.05.1999**

# (54) Internal combustion engine

Verbrennungsmotor

Moteur à combustion interne

(84) Designated Contracting States:
**DE FR GB**

(30) Priority:
**20.10.1998 JP 29858898**
**09.06.1998 JP 16084298**
**05.06.1998 JP 15746898**
**12.11.1998 JP 32255298**
**21.10.1998 JP 29986898**
**12.11.1998 JP 32254698**

(43) Date of publication of application:
**08.12.1999 Bulletin 1999/49**

(73) Proprietor: **Toyota Jidosha Kabushiki Kaisha**
**Toyota-shi, Aichi-ken 471-8571 (JP)**

(72) Inventors:
- **Sasaki, Shizuo**
  **Toyota-shi,**
  **Aichi-ken, 471-8571 (JP)**
- **Gotoh, Masato**
  **Toyota-shi,**
  **Aichi-ken, 471-8571 (JP)**
- **Ito, Takekazu**
  **Toyota-shi,**
  **Aichi-ken, 471-8571 (JP)**
- **Yoshizaki, Kouji**
  **Toyota-shi,**
  **Aichi-ken, 471-8571 (JP)**
- **Murata, Hiroki**
  **Toyota-shi,**
  **Aichi-ken, 471-8571 (JP)**

(74) Representative: **TBK-Patent**
**Bavariaring 4-6**
**80336 München (DE)**

(56) References cited:
**EP-A- 0 627 548**
**EP-A- 0 803 645**
**GB-A- 2 307 311**

- **PATENT ABSTRACTS OF JAPAN vol. 1996, no. 06, 28 June 1996 (1996-06-28) & JP 08 042369 A (NISSAN MOTOR CO LTD), 13 February 1996 (1996-02-13)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 962 638 B1

Printed by Jouve, 75001 PARIS (FR)

## Description

## BACKGROUND OF THE INVENTION

### 1. Field of the Invention

The present invention relates to an internal combustion engine having a combustion chamber into which inactive gas is introduced so as to cause combustion.

### 2. Description of the Related Art

Conventionally, in an internal combustion engine such as a diesel engine, an engine exhaust passage and an engine intake passage are connected with each other by an exhaust gas recirculation (hereinafter referred to as EGR) passage. Exhaust gas, namely, EGR gas is recirculated into the engine intake passage via the EGR passage. In this case, the EGR gas has a relatively high specific heat and is able to absorb a large amount of heat. Hence, as the amount of EGR gas is increased, that is, as the EGR rate (the amount of EGR gas / (the amount of EGR gas + the amount of intake air)) is increased, the combustion temperature in a combustion chamber decreases. If the combustion temperature decreases, the generation amount of NOx is reduced. Thus, the larger the EGR rate becomes, the smaller the generation amount of NOx becomes.

As described hitherto, it has been conventionally known that the generation amount of NOx is reduced by increasing the EGR rate. However, in the process of increasing the EGR rate, when the EGR rate exceeds a certain threshold value, the generation amount of soot, namely, smoke starts increasing abruptly. In this respect, it is conventionally considered that if the EGR rate is increased beyond a certain threshold value, the amount of smoke increases endlessly. In other words, the EGR rate at which the amount of smoke starts increasing abruptly is considered to be a maximum allowable value of the EGR rate.

Accordingly, the EGR rate is set below the maximum allowable value. Although the maximum allowable value of the EGR rate differs greatly depending on a type of the engine or fuel, it is approximately 30 to 50%. Therefore, in the diesel engine, the EGR rate is at most set to 30 to 50%.

As described above, it is conventionally considered that the EGR rate has a maximum allowable value. Thus, the EGR rate is set so as to reduce a generation amount of NOx to the maximum possible extent, on condition that the EGR rate does not exceed the maximum allowable value. However, even if the EGR rate has been thus determined, the generation amount of NOx cannot be reduced limitlessly. In fact, the generation of a considerable amount of NOx is inevitable.

In this connection, it is referred to EP-A-803 645 which deals with a compression-ignition type internal combustion engine that is capable of reducing the amount of generation of soot and NOx. The generation of soot and NOx is reduced by making the size of the fuel droplets relatively large and by injecting the fuel before 60 degrees before top dead center of the compression stroke so as to make the fuel droplets diffuse uniformly and the density of the fuel droplets low. In addition, the density of oxygen around the fuel droplets is reduced by causing recirculation of EGR gas in the combustion chamber at the time of high engine load operation and setting the EGR ratio to at least about 40%. At that time, the air-fuel ratio is controlled to substantially the stoichiometric air-fuel ratio and the combustion is controlled by adjusting the EGR ratio based on an amount of depression of an accelerator pedal.

The following fact has been discovered in the course of studies on combustion in diesel engines. That is, as described above, if the EGR rate is made larger than the maximum allowable value, the generation amount of smoke increases abruptly. However, the generation amount of smoke has its peak. If the EGR rate is further increased after the generation amount of smoke has reached its peak, the generation amount of smoke then starts decreasing abruptly. If the EGR rate is set to 70% or more during an idling operation, or if the EGR rate is set to about 55% or more in the case where EGR gas is cooled intensively, NOx is hardly generated and the generation amount of smoke becomes almost zero. Namely, soot is hardly generated. Thereafter, based on this discovery, further studies have been conducted on the reason why soot is hardly generated. As a result, a novel unprecedented combustion system capable of reducing soot and NOx simultaneously has been constructed. This novel combustion system will be explained later in detail. In short, this combustion system is based on the idea that the growth ofhydrocarbon is stopped before it grows up to become soot.

In other words, it has been revealed by repeated experiments and studies that if the temperature of fuel and ambient gas in the combustion chamber during combustion is equal to or lower than a certain temperature, the growth of hydrocarbon is stopped before it becomes soot, and that if the temperature of fuel and ambient gas becomes higher than the aforementioned certain temperature, the hydrocarbon rapidly grows up to become soot. In this case, the temperature of fuel and ambient gas is greatly affected by the endothermic effect of the gas surrounding fuel at the time of fuel combustion. If the endothermic value of the gas surrounding the fuel is adjusted in accordance with an exothermic value during the fuel combustion, the temperature of fuel and ambient gas can be controlled.

Accordingly, if the temperature of fuel and ambient gas in the combustion chamber during combustion is set equal to or lower than a temperature at which the growth of hydrocarbon is stopped halfway, no soot is generated. The temperature of fuel and ambient gas in the combustion chamber during combustion can be set equal to or lower than a temperature at which the growth of hydrocarbon is stopped halfway, by adjusting an endothermic value of the gas surrounding fuel. On the other hand, the hydrocarbon that has stopped growing before becoming soot can be cleaned easily by means of a posttreatment that uses an oxidation catalyst or the like. This is the basic concept of the novel combustion system. The present applicant has already applied for a patent for an internal combustion engine employing the novel combustion system, under the application number of EP-A-879,946.

In performing combustion suitably under the novel combustion system, the air-fuel ratio and the EGR rate have their respective optimal values, which are determined according to an operational state of the engine. Therefore, if there occurs a change in operational state of the engine under the new combustion system, the air-fuel ratio and the EGR rate need to be adjusted to their respective optimal values, which correspond to a current operational state of the engine.

On the other hand, the concentration of oxygen contained in EGR gas supplied to the engine intake passage greatly affects the air-fuel ratio. In other words, the air-fuel ratio increases as the concentration of oxygen contained in the EGR gas becomes higher, and the air-fuel ratio decreases as the concentration of oxygen contained in the EGR gas becomes lower.

As described above, if the operational state of the engine changes under the novel combustion system, the optimal air-fuel ratio and the optimal EGR rate also change. However, despite the change in operational state of the engine, the concentration of oxygen contained in the EGR gas supplied to the engine intake passage does not change immediately but remains at a level corresponding to a previous operational state of the engine. Hence, unless it is taken into account that the concentration of oxygen contained in EGR gas changes in accordance with a change in operational state of the engine, the air-fuel ratio and the EGR rate deviate from their respective optimal values at the time of such change. Consequently, problems such as generation of smoke or incomplete combustion arise.

In connection with this problem, it is referred to JP-A-08-042369 which suggests improving the precision of internal combustion control by detecting an oxygen amount contained in EGR gas by an oxygen sensor disposed in an engine exhaust passage; finding the amount of oxygen to be actually allowed to flow into a cylinder of the engine, including the fluctuation by the exhaust recirculation; and controlling the fuel injection amount on the basis of the EGR gas amount and the oxygen concentration.

## SUMMARY OF THE INVENTION

It is an object of the present invention to provide an internal combustion engine which achieves suitable combustion, that is, prevents generation of smoke and occurrence of incomplete combustion at the time of a change in operational state of the engine.

The above-described object is achieved by combination of features stated in the main claim. Further advantages of the present invention are apparent from the dependent claims.

According to the invention, there is provided an internal combustion engine in which a first combustion and second combustion mode are selectively performed. During the first combustion mode, an amount of exhaust recirculation gas supplied to a combustion chamber is larger than an amount of exhaust recirculation gas corresponding to a peak generation amount of soot, and soot is hardly generated. During the second combustion mode, an amount of exhaust recirculation gas supplied to the combustion chamber is smaller than the amount of exhaust recirculation gas corresponding to the peak generation amount of soot. A concentration of oxygen contained in exhaust recirculation gas supplied to an engine intake passage is estimated. Based on the concentration of oxygen contained in the exhaust recirculation gas, at least one of an air-fuel ratio and an exhaust gas recirculation rate is adjusted to its target value. With this internal combustion engine, suitable combustion can be accomplished. In other words, it is possible to prevent generation of smoke and occurrence of incomplete combustion even at the time of a change in operational state of the engine.

Although this summary does not disclose all the features of the present invention, it is to be understood that any combination of the features stated in the dependent claims is within the scope of the present invention.

## BRIEF DESCRIPTION OF THE DRAWINGS

The foregoing and further objects, features and advantages of the present invention will become apparent from the following description of preferred embodiments with reference to the accompanying drawings, wherein:

Fig. 1 is a general view of a compression ignition type internal combustion engine according to a first embodiment of the present invention;

Fig. 2 shows generation amounts and the like of smoke and NOx;
Figs. 3A and 3B show combustion pressure;
Fig. 4 shows molecules of fuel during combustion;
Fig. 5 shows a relationship between generation amount of smoke and EGR rate;
Fig. 6 shows a relationship between fuel injection amount and amount of mixture gas;
Fig. 7 shows a first operational area I and a second operational area II;
Fig. 8 shows opening degree of a throttle valve and the like;
Figs. 9A and 9B show torque requirement;
Figs. 10A and 10B show target air-fuel ratio in the first operational area I;
Figs. 11A and 11B show target EGR rate in the first operational area I;
Figs. 12A through 12D show maps of target opening degree of the throttle valve;
Figs. 13A through 13D show maps of target opening degree of the EGR control valve;
Figs. 14A through 14D show maps of target value of intake air amount;
Figs. 15A through 15D show maps of target value of EGR gas amount;
Fig. 16 shows effective flow area of the EGR control valve;
Figs. 17A and 17B show target air-fuel ratio and target EGR rate during the second combustion mode;
Fig. 18 shows a relationship between EGR gas amount and value of i;
Fig. 19 is a flowchart for estimating oxygen concentration;
Fig. 20 is a flowchart for controlling operation of the engine;
Fig. 21 is a flowchart for controlling the throttle valve;
Fig. 22 is a flowchart for controlling the EGR control valve;
Fig. 23 is a flowchart for controlling the throttle valve;
Fig. 24 is a flowchart for controlling the EGR control valve;
Figs. 25A through 25D show maps of target pressure in an intake passage;
Fig. 26 is a flowchart for controlling the EGR control valve;
Fig. 27 is a flowchart for controlling the EGR control valve according to a modification of the first embodiment;
Figs. 28A through 28D show maps of target pressure in a combustion chamber;
Fig. 29 is a flowchart for controlling the EGR control valve according to still another modification of the first embodiment;
Fig. 30 is a flowchart for controlling the EGR control valve according to still another modification of the first embodiment;
Fig. 31 shows a map of target opening degree of the throttle valve and the like according to a second embodiment;
Fig. 32 shows a map of injection amount and the like;
Fig. 33 shows correction amounts for the throttle valve and the EGR control valve;
Fig. 34 is a flowchart for controlling operation of the engine;
Fig. 35 is an explanatory view of functions of absorbing and discharging NOx;
Fig. 36 shows a map of injection start timing according to a third embodiment;
Figs. 37 and 38 show a plurality of operational areas of the engine;
Figs. 39 through 41 are flowcharts for controlling operation of the engine;
Fig. 42 is a map of absorption amount of NOx per unit time according to a fourth embodiment;
Fig. 43 is an explanatory view of NOx discharge control;
Figs. 44 and 45 show injection amount control and a change in air-fuel ratio at the time of a transition from a lean air-fuel ratio to a rich air-fuel ratio;
Fig. 45 shows a map of injection amount;
Fig. 46 shows injection amount control and a change in air-fuel ratio at the time of a transition from a lean air-fuel ratio to a rich air-fuel ratio;
Fig. 47 is a flowchart for processing an NOx discharge flag;
Fig. 48 is a flowchart for controlling operation of the engine;
Fig. 49 is a flowchart for performing injection control I;
Fig. 50 is a flowchart for performing injection control II;
Figs. 51 and 52 show maps of correction factor for maximum allowable value according to a fifth embodiment;
Fig. 53 is a flowchart for processing correction of maximum allowable value;
Fig. 54 is a flowchart for controlling operation of the engine;
Fig. 55 is a flowchart for controlling correction of fuel injection;
Fig. 56 is an explanatory view of NOx discharge control according to a sixth embodiment;
Figs. 57 and 58 are flowcharts for controlling operation of the engine;
Fig. 59 is an explanatory view of NOx discharge control;
Fig. 60 is a flowchart showing a subroutine for controlling fuel injection;

Figs. 61 through 63 show a relationship between injection amount control and changes in air-fuel ratio at the time of a transition from a lean air-fuel ratio to a rich air-fuel ratio according to a seventh embodiment;
Fig. 64 is a flowchart for processing an NOx discharge flag;
Fig. 65 is a flowchart for controlling operation of the engine;
Fig. 66 is a flowchart for performing injection control I;
Fig. 67 is a flowchart for performing injection control II;
Fig. 68 is a flowchart for performing injection control III;
Fig. 69 shows a relationship between injection amount control and changes in air-fuel ratio at the time of a transition from a lean air-fuel ratio to a rich air-fuel ratio;
Fig. 70 shows a relationship between lean air-fuel ratio and time;
Fig. 71 is a flowchart for performing injection control II;
Fig. 72 shows a relationship between injection amount control and changes in air-fuel ratio at the time of a transition from a lean air-fuel ratio to a rich air-fuel ratio;
Fig. 73 is a flowchart for performing injection control II;
Fig. 74 is a general view of a compression ignition type internal combustion engine according to an eigth embodiment;
Fig. 75 is a flowchart for performing injection control I;
Fig. 76 is a flowchart showing a time interruption routine; and
Fig. 77 is a flowchart for performing injection control II.

## DESCRIPTION OF THE PREFERRED EMBODIMENTS

Fig. 1 shows a first embodiment of the present invention, which is applied to a four-stroke compression ignition type internal combustion engine.

An engine body 1 is composed of a cylinder block 2, a cylinder head 3, a piston 4, a combustion chamber 5, an electronically controlled fuel injection valve 6, an intake valve 7, an intake port 8, an exhaust valve 9 and an exhaust port 10. The intake port 8 communicates with a surge tank 12 via a corresponding intake branch pipe 11, and the surge tank 12 communicates with an outlet portion of a compressor 16 of an exhaust turbocharger 15 via an intake duct 13 and an inter cooler 14. An inlet portion of the compressor is connected to an air cleaner 18 via an air suction pipe 17. On the other hand, the exhaust port 10 is connected to an inlet portion of an exhaust turbine 20 of the exhaust turbocharger 15 via an exhaust manifold 17. An outlet portion of the exhaust turbine 20 is connected to a catalytic converter 23 via an exhaust pipe 21. The catalytic converter 23 incorporates a catalyst 22, which has a function of oxidation. As the catalyst 22 having the function of oxidation, a three-way catalyst or an NOx absorber can be employed.

Disposed in the intake duct 13 is a throttle valve 25, which is driven by a step motor 24. An air-fuel ratio sensor 26 is disposed in the exhaust manifold. An exhaust manifold communicates with the surge tank 12 via an EGR passage 27. Disposed in the EGR passage 27 is an EGR control valve 29, which is driven by a step motor 28. Further, a cooling device 30 for cooling EGR gas flowing through the EGR passage 27 is disposed around the EGR passage 27. In the embodiment shown in Fig. 1, engine coolant is introduced into the cooling device 30. The engine coolant cools the EGR gas.

On the other hand, each fuel injection valve 6 communicates with a fuel reservoir, namely, what is called a common rail 32 via a fuel feed pipe 31. Fuel is supplied to the common rail 32 from an electrically controlled fuel pump 33 whose discharge amount is variable. The fuel that has been supplied to the common rail 32 is supplied to the fuel injection valve 6 via each fuel feed pipe 31. A fuel pressure sensor 34 for detecting a fuel pressure in the common rail 32 is attached thereto. Based on an output signal from the fuel pressure sensor 34, the discharge amount of the fuel pump 33 is controlled such that the fuel pressure in the common rail 32 becomes a target fuel pressure.

Further, in the exhaust pipe downstream of the catalyst 22, there is disposed a downstream air-fuel ratio sensor 54 for detecting an air-fuel ratio of exhaust gas flowing out of the catalyst. The downstream air-fuel ratio sensor is of the same type as the air-fuel ratio sensor 26. An output signal from the downstream air-fuel ratio sensor is inputted to an input port 45 via a corresponding AD converter 47.

An electronic control unit (ECU) 40 is composed of a digital computer and provided with a ROM (read only memory) 42, a RAM (random access memory) 43, a CPU (microprocessor) 44, the input port 45 and an output port 46, which are interconnected with one another by a bi-directional bus 41. An output signal from the fuel pressure sensor 34 is inputted to the input port 45 via a corresponding AD converter 47. Disposed in the intake branch pipe 11 is a temperature sensor 35 for detecting a temperature of inlet air supplied to the combustion chamber 5. An output signal from the temperature sensor 35 is inputted to the input port 45 via a corresponding AD converter 47. Further, pressure sensors 36 and 37 are disposed in the surge tank 12 and the EGR passage 27 upstream of the EGR control valve 29 respectively. Output signals from the pressure sensors 36 and 37 are inputted to the input port 45 via corresponding AD converters 47.

On the other hand, a mass flowmeter 38 for detecting a mass flow rate of inlet air is disposed in the air suction pipe 17. Disposed in the combustion chamber 5 is a pressure sensor 39 for detecting a pressure in the combustion chamber 5. Output signals from the mass flowmeter 38 and the pressure sensor 39 are inputted to the input port 45 via corresponding AD converters 47. Further, an opening degree sensor 29a for detecting an opening degree of the EGR control valve 29 is attached thereto. An output signal from the opening degree sensor 29a is inputted to the input port 45 via a corresponding AD converter 47.

Connected with an accelerator pedal 50 is a load sensor 51, which generates an output voltage proportional to a depression amount L of the accelerator pedal 50. The output voltage of the load sensor 51 is inputted to the input port 45 via a corresponding AD converter 47. Also, a crank angle sensor 52, which generates a pulse every time a crank shaft rotates, for example, by 30°, is connected with the input port 45. On the other hand, the output port 46 is connected with the fuel injection pump 6, the step motor 24 for controlling the throttle valve, the step motor 28 for controlling the EGR control valve, and the fuel pump 33 via a corresponding driving circuit 48.

Fig. 2 shows an experimental example of changes in output torque and changes in discharge amount of smoke, HC (hydrocarbon), CO and NOx in the case where the air-fuel ratio A/F (an axis of abscissa in Fig. 2) is changed by changing an opening degree of the throttle valve 25 and an EGR rate at the time of a low-load operation of the engine. In this experimental example, the EGR rate becomes higher as the air-fuel ratio A/F becomes smaller. When the air-fuel ratio is equal to or smaller than a stoichiometric air-fuel ratio (= about 14.6), the EGR rate is equal to or higher than 65%.

As shown in Fig. 2, if the air-fuel ratio A/F is made smaller by increasing the EGR rate (from the left-hand side to the right-hand side in the drawing), the generation amount of smoke starts increasing when the EGR rate reaches about 40% (when the air-fuel ratio A/F reaches about 30). Then, if the EGR rate is enhanced (if the air-fuel ratio A/F is made smaller), the generation amount of smoke increases abruptly and reaches its peak. Then, if the EGR rate is further enhanced, the generation amount of smoke drops abruptly. When the EGR rate is equal to or higher than 65% (when the air-fuel ratio A/F approaches 15), the generation amount of smoke almost becomes zero. That is, soot is hardly generated. At this time, the output torque of the engine drops slightly, and the generation amount of NOx becomes comparatively low. On the other hand, the generation amounts of HC and CO start increasing.

Fig. 3A shows changes in fuel pressure in the combustion chamber 5 when the air-fuel ratio A/F is in the vicinity of 21 and the generation amount of smoke assumes its maximum value. Fig. 3B shows changes in fuel pressure in the combustion chamber 5 when the air-fuel ratio A/F is in the vicinity of 18 and the generation amount of smoke is almost zero. As is apparent from the comparison of Fig. 3A with Fig. 3B, the fuel pressure is lower in the case where the generation amount of smoke is almost zero (Fig. 3B) than in the case where the generation amount of smoke is large (Fig. 3A).

The following conclusion can be drawn from the experimental results shown in Figs. 2, 3A and 3B. That is, first of all, when the air-fuel ratio A/F is equal to or smaller than 15.0 and the generation amount of smoke is almost zero, the generation amount of NOx drops drastically, as can be seen from Fig. 2. The fact that the generation amount of NOx has dropped means that the combustion temperature in the combustion chamber 5 has dropped. Accordingly, when soot is hardly generated, it can be concluded that the combustion temperature in the combustion chamber 5 is low. The same conclusion can also be drawn from Figs. 3A and 3B. That is, the combustion pressure is low in a state shown in Fig. 3B where soot is hardly generated. Therefore, in this state, it can be concluded that the combustion temperature in the combustion chamber 5 is low.

Secondly, as shown in Fig. 2, when the generation amount of smoke, namely, the generation amount of soot becomes almost zero, the discharge amounts of HC and CO increase. This means that hydrocarbon is discharged before growing up to become soot. In other words, the linear hydrocarbon or aromatic hydrocarbon contained in fuel as shown in Fig. 4 is thermally decomposed when heated in a state of oxygen deficiency, and a precursor of soot is formed. Then, soot that is composed of a solid body of assembled carbon atoms is produced. In this case, the actual process in which soot is produced is complicated, and it is unclear what state the precursor of soot assumes.

In any case, the hydrocarbon as shown in Fig. 4 grows up to become soot through the precursor of soot. Accordingly, as described above, when the generation amount of soot becomes almost zero, the discharge amounts of HC and CO increase as shown in Fig. 2. At this time, HC is either the precursor of soot or hydrocarbon in a state prior to the precursor of soot.

The above-described studies based on the experimental results shown in Figs. 2, 3A and 3B are summarised as follows. That is, when the combustion temperature in the combustion chamber 5 is low, the generation amount of soot is almost zero. At this time, the precursor of soot or hydrocarbon in a state prior to the precursor of soot is discharged from the combustion chamber 5. As a result of more elaborate experiments and studies on this subject, it has been revealed that the growing process of soot is stopped halfway, that is, no soot is generated in the case where the temperature of fuel and ambient gas in the combustion chamber 5 is equal to or lower than "a certain temperature". When the temperature of fuel and ambient gas in the combustion chamber 5 becomes equal to or higher than "the certain temperature", soot is generated.

The temperature of fuel and ambient gas at the time of stoppage of the process of producing hydrocarbon in a state prior to the precursor of soot, namely, the aforementioned "certain temperature" changes depending on various factors such as the type of fuel, air-fuel ratio, compression ratio and the like. Accordingly, it is impossible to mention a concrete value of the aforementioned certain temperature. However, the aforementioned certain temperature is closely related to the generation amount of NOx and thus can be limited to a certain range judging from the generation amount of NOx. In other words, the higher the EGR rate becomes, the lower the temperature of fuel and ambient gas during combustion becomes. The higher the EGR rate becomes, the smaller the generation amount of NOx becomes. In this case, when the generation amount of NOx becomes about 10ppm or less, soot is hardly generated. Accordingly, the aforementioned "certain temperature" virtually coincides with a temperature at which the generation amount of NOx becomes about 10ppm or less.

Once soot has been produced, the soot cannot be cleaned by means of a posttreatment that uses a catalyst having the function of oxidation. On the other hand, the precursor of soot or hydrocarbon in a state prior to the precursor of soot can be cleaned easily by means of a posttreatment that uses a catalyst having the function of oxidation. If such a posttreatment that uses the catalyst having the function of oxidation is taken into account, there is a great difference between the case where hydrocarbon is discharged from the combustion chamber 5 as the precursor of soot or in a state prior to the precursor of soot and the case where hydrocarbon is discharged from the combustion chamber 5 as soot. The important features of the novel combustion system employed in the present invention are that hydrocarbon is discharged from the combustion chamber 5 as the precursor of soot or in a state prior to the precursor of soot without producing soot in the combustion chamber 5 and that the hydrocarbon is oxidised by means of the catalyst having the function of oxidation.

In order to stop the growth of hydrocarbon in a state prior to the production of soot, it is necessary to keep fuel and ambient gas in the combustion chamber 5 during combustion lower than a temperature at which soot is produced. In this case, it has been revealed that the endothermic effect of ambient gas at the time of fuel combustion has an enormous effect in limiting the temperature of the fuel and ambient gas.

In other words, if there is only air around fuel, the evaporated fuel immediately reacts with oxygen in the air and burns. In this case, the temperature of the air that is away from the fuel does not rise considerably, and only the air surrounding the fuel locally reaches a very high temperature. Namely, at this time, the air that is away from the fuel is hardly subjected to the endothermic effect of the combustion heat of the fuel. In this case, since the combustion temperature locally becomes very high, the unburnt hydrocarbon that has received the combustion heat produces soot.

On the other hand, if there is fuel in the mixture of a large amount of inactive gas and a small amount of air, things are slightly different. In this case, the evaporated fuel is diffused all around, reacts with the oxygen intermingled in the inactive gas, and burns. In this case, since the inactive gas in the periphery absorbs combustion heat, the combustion temperature does not rise considerably. That is, the combustion temperature can be limited to a low temperature. Namely, the presence of inactive gas plays an important role in limiting the combustion temperature, and the endothermic effect of the inactive gas makes it possible to limit the combustion temperature to a low temperature.

In this case, in order to keep fuel and ambient gas lower than a temperature at which soot is produced, a sufficient amount of inactive gas that can absorb heat of an amount sufficient to achieve such a purpose is required. Accordingly, if the amount of fuel increases, the required amount of inactive gas increases correspondingly. In this case, the larger the specific heat of inactive gas becomes, the larger the endothermic effect thereof becomes. Hence, it is preferable that the specific heat of the inactive gas is large. From this standpoint, since $CO_2$ or EGR gas has a relatively large specific heat, it is preferable to use EGR gas as inactive gas.

Fig. 5 shows a relationship between EGR rate and smoke in the case where EGR gas is used as inactive gas and the cooling degree of the EGR gas is changed. That is, referring to Fig. 5, a curve A represents a case where EGR gas is maintained at about 90°C by cooling the EGR gas intensively, a curve B represents a case where EGR gas is cooled by a compact cooling system, and a curve C represents a case where EGR gas is not cooled forcibly.

As indicated by the curve A in Fig. 5, in the case where EGR gas is cooled intensively, the generation amount of soot reaches its peak when the EGR rate is slightly lower than 50%. In this case, if the EGR rate is set to about 55% or more, soot is hardly generated.

On the other hand, as indicated by the curve B, in the case where EGR gas is cooled by the compact cooling system, the generation amount of soot reaches its peak when the EGR rate is slightly higher than 50%. Therefore, in this case, if the EGR rate is set to 65% or more, soot is hardly generated.

Further, as indicated by the curve C in Fig. 5, in the case where EGR gas is not cooled forcibly, the generation amount of soot reaches its peak when the EGR rate is in the vicinity of 55%. In this case, if the EGR rate is set to about 70% or more, soot is hardly generated.

Fig. 5 shows a generation amount of smoke when the engine load is relatively high. If the engine load decreases, the EGR rate at which the generation amount of soot reaches its peak drops slightly, and the lower limit of the EGR rate at which soot is hardly generated also drops slightly. Thus, the lower limit of the EGR rate at which soot is hardly generated changes depending on the cooling degree of EGR gas or the engine load. Fig. 6 shows an amount of the mixture of EGR gas and air and a proportion of air to EGR gas in the mixture, which are necessary to keep fuel and ambient gas during combustion lower than a temperature at which soot is generated, in the case where EGR gas is used as inactive gas. In Fig. 6, the axis of ordinate represents a total amount of inlet gas admitted into the combustion chamber 5, and an alternate long and short dash line Y represents a total amount of inlet gas that can be admitted into the combustion chamber 5 when the supercharging operation is not performed. Further, the axis of abscissa represents a load requirement, and Z1 represents an area of low-load operation.

Referring to Fig. 6, the proportion of air, namely, the amount of air in the mixture represents an amount of air that is necessary for complete combustion of injected fuel. That is, in the case shown in Fig. 6, the ratio of the amount of air to the amount of injected fuel is equal to the stoichiometric air-fuel ratio. On the other hand, in Fig. 6, the proportion of EGR gas, namely, the amount of EGR gas in the mixture represents a minimum amount of EGR gas that is necessary to keep fuel and ambient gas lower than a temperature at which soot is formed. The aforementioned amount of EGR gas corresponds to an EGR rate of about 55% or more. In the embodiment shown in Fig. 6, the EGR rate is equal to or larger than 70%. Namely, in the case where the total amount of inlet gas admitted into the combustion chamber 5 is represented by a solid line X in Fig. 6 and the ratio of the amount of air to the amount of EGR gas is set as shown in Fig. 6, the temperature of fuel and ambient gas becomes lower than a temperature at which soot is produced, and no soot is generated. At this time, the generation amount of NOx is about 10ppm or less. Accordingly, the generation amount of NOx is very small.

If the amount of fuel injection increases, the exothermic value at the time of fuel combustion increases. Hence, in order to keep fuel and ambient gas lower than a temperature at which soot is generated, it is necessary to increase an amount of heat to be absorbed by EGR gas. Therefore, as shown in Fig. 6, the amount of EGR gas needs to be increased as the amount of fuel injection increases. In other words, it is necessary to increase an amount of EGR gas as the load requirement becomes higher.

On the other hand, in a load area Z2 in Fig. 6, the total amount X of inlet gas that is necessary to prevent generation of soot exceeds the total amount of inlet gas that can be admitted. Accordingly, in this case, in order to supply the combustion chamber 5 with a total amount of inlet gas that is necessary to prevent generation of soot, it is necessary to supercharge or pressurise both EGR gas and inlet air or only EGR gas. In the case where EGR gas or the like is not supercharged or pressurised, in the load area Z2, the total amount X of inlet gas coincides with the total amount Y of inlet gas that can be admitted. Therefore, in this case, with a view to preventing generation of soot, the amount of air is slightly reduced so as to increase an amount of EGR gas, and fuel combustion is promoted under a rich air-fuel ratio.

As described previously, Fig. 6 shows a case where fuel burns under the stoichiometric air-fuel ratio. However, in the area Z1 of low-load operation shown in Fig. 6, even if the amount of air is made smaller than that shown in Fig. 6, that is, even if the air-fuel ratio is made rich, it is possible to limit the generation amount of NOx to about 10ppm or less while preventing generation of soot. Further, in the area Z1 of low-load operation, even if the amount of air is made larger than that shown in Fig. 6, that is, even if the average air-fuel ratio is set to a lean value of 17 to 18, it is possible to limit the generation amount of NOx to about 10ppm or less while preventing generation of soot.

In other words, when the air-fuel ratio is made rich, the amount of fuel becomes excessive. However, since the combustion temperature is set low, a surplus of fuel does not grow up to become soot. Thus, no soot is generated. Further, at this time, the generation amount of NOx is very small. On the other hand, even when the air-fuel ratio is lean on average or stoichiometric, if the combustion temperature becomes high, a small amount of soot is produced. However, according to the present invention, since the combustion temperature is set low, no soot is produced. Furthermore, the generation amount of NOx is also very small.

Thus, in the area Z1 of low-load operation of the engine, no soot is generated and the generation amount of NOx is very small regardless of the air-fuel ratio, that is, regardless of whether the air-fuel ratio is rich, stoichiometric or lean on average. Accordingly, from the standpoint of an enhancement in fuel consumption, it is preferable at this time to set the average air-fuel ratio lean.

Fuel and ambient gas in the combustion chamber during combustion can be kept equal to or lower than a temperature at which the growth of hydrocarbon is stopped halfway, only when the engine load is relatively low, that is, when the exothermic value of combustion is small. Therefore, according to the embodiment of the present invention, when the engine load is relatively low, fuel and ambient gas during combustion is kept lower than a temperature at which the growth of hydrocarbon is stopped halfway, and first combustion mode, namely, low-temperature combustion is performed. When the engine load is relatively high, second combustion mode, namely, conventionally adopted combustion is performed. As is apparent from the foregoing description, when the first combustion mode, namely, the low-temperature combustion is performed, the amount of inactive gas in the combustion chamber is larger than an amount of inactive gas corresponding to a peak generation amount of soot, so that soot is hardly generated. When the second combustion mode, namely, the conventionally adopted combustion is performed, the amount of inactive gas in the combustion chamber is smaller than the amount of inactive gas corresponding to the peak generation amount of soot.

Fig. 7 shows an operational area I as a first operational area wherein the first combustion mode, namely, the low-temperature combustion is performed, and an operational area II as a second operational area wherein the second combustion mode, namely, the conventionally adopted combustion is performed. In Fig. 7, the axis of ordinate TQ represents load requirement, and the axis of abscissa N represents engine speed. Further, X(N) represents a first border between the first operational area I and the second operational area II, and Y(N) represents a second border between the first operational area I and the second operational area II. Based on the first border X(N), it is determined whether or not a transition from the first operational area I to the second operational area II has been made. Based on the second border Y(N), it is determined whether or not a transition from the second operational area II to the first operational area I has been made.

That is, when the operational state of the engine is in the first operational area I and low-temperature combustion is performed, if the torque requirement TQ exceeds the first border X(N) which is a function of engine speed N, it is determined that a transition to the second operational area II has been made. Therefore, the conventionally adopted combustion is performed. Then, if the torque requirement TQ becomes lower than the second border Y(N), it is determined that a transition to the first operational area I has been made. Therefore, the low-temperature combustion is performed again.

The first reason why the first border X(N) and the second border Y(N), which is more inclined to a low-load side than the first border X(N), have been thus provided is that the combustion temperature is relatively high on a high-load side in the second operational area II and that the low-temperature combustion cannot be-performed immediately even if the torque requirement TQ has become lower than the first border X(N). In other words, unless the torque requirement TQ has become comparatively low and dropped below the second border Y(N), the low-temperature combustion cannot be started immediately. The second reason is that a hysteresis is to be set to prevent fluctuations between the first operational area I and the second operational area II.

When the engine is in the first operational area I and the low-temperature combustion is performed, soot is hardly generated. Instead, unburnt hydrocarbon is discharged from the combustion chamber 5 in the form of a precursor of soot or in a state prior to the precursor of soot. At this time, the unburnt hydrocarbon that has been discharged from the combustion chamber 5 is suitably oxidised by the catalyst 22, which has a function of oxidation.

As described already, an oxidation catalyst, a three-way catalyst or an NOx absorber can be employed as the catalyst 22. The NOx absorber has the functions of absorbing NOx when the average air-fuel ratio in the combustion chamber 5 is lean, and discharging the NOx when the average air-fuel ratio in the combustion chamber 5 is rich.

The NOx absorber has a carrier, for example, of alumina. Carried on this carrier are an alkaline metal such as potassium (K), sodium (Na), lithium (Li) and cesium (Cs), an alkaline earth metal such as barium (Ba) and calcium (Ca), at least one material selected from rare earth metals such as lanthanum (La) and yttrium (Y), and a noble metal such as platinum (Pt). The ratio of the air and the fuel (hydrocarbon) that have been supplied to the intake passage of the engine, the combustion chamber 5 and the exhaust passage upstream of the NOx absorber is referred to as the air-fuel ratio of the exhaust gas that has flown into the NOx absorber. When the air-fuel ratio of the inflow exhaust gas is lean, the NOx absorber absorbs NOx. When the air-fuel ratio of the inflow exhaust gas is rich or stoichiometric, the NOx absorber discharges the NOx absorbed therein.

If disposed in the exhaust passage of the engine, the NOx absorber actually performs the functions of absorbing and discharging NOx. However, the detailed mechanism of the functions of absorbing and discharging NOx is not completely clear. However, the functions of absorbing and discharging NOx are considered to be performed under the mechanism as shown in Figs. 35A and 35B. This mechanism will be explained hereinafter referring to an example where platinum (Pt) and barium (Ba) are carried on the carrier. However, even if another noble metal, an alkaline metal, an alkaline earth metal or a rare earth metal is employed, a similar mechanism works.

In the compression ignition type internal combustion engine shown in Fig. 1, combustion is normally performed in a state where the air-fuel ratio is lean. In the case where combustion is thus performed in a state where the air-fuel ratio is lean, the concentration of oxygen in exhaust gas is high. At this time, as shown in Fig. 35A, oxygen $O_2$ adheres to a surface of Pt in the form of $O_{2-}$ or $O^{2-}$. On the other hand, the NO contained in the inflow exhaust gas reacts with $O_{2-}$ or $O^{2-}$ on the surface of Pt and becomes $NO_2$ ($2NO + O_2 \rightarrow 2NO_2$). Then, part of the $NO_2$ produced is oxidised on Pt, absorbed into the absorber, coupled with barium oxide (BaO), and diffused into the absorber in the form of a nitrate ion $NO_{3-}$ as shown in Fig. 35A. Thus, NOx is absorbed into the NOx absorber. As long as the concentration of oxygen contained in the inflow exhaust gas is high, $NO_2$ is produced on the surface of Pt. As long as the ability of the absorber to absorb NOx has not been exhausted, $NO_2$ is absorbed into the absorber and a nitrite ion $NO_{3-}$ is produced.

On the other hand, if the air-fuel ratio of inflow exhaust gas is made rich, the concentration of oxygen contained in the inflow exhaust gas decreases, so that the amount of $NO_2$ produced on the surface of Pt decreases. If the production amount of $NO_2$ drops, the reaction proceeds in a reverse direction ($NO^{3-} \rightarrow NO_2$) and the nitrite ion $NO^{3-}$ in the absorber is discharged therefrom in the form of $NO_2$. At this time, the NOx that has been discharged from the NOx absorber is reduced by reacting with a large amount of unburnt hydrocarbon, namely, CO which is contained in the inflow exhaust gas, as can be seen from Fig. 35B. In this manner, if $NO_2$ disappears from the surface of Pt, $NO_2$ is discharged from the absorber continuously. Accordingly, if the air-fuel ratio of inflow exhaust gas is made rich, NOx is discharged from the NOx absorber within a short period of time. Because the NOx thus discharged is reduced, there is no possibility of NOx being discharged into the atmosphere.

In this case, even if the air-fuel ratio of inflow exhaust gas has been made stoichiometric, NOx is discharged from the NOx absorber. However, in the case where the air-fuel ratio of inflow exhaust gas is made stoichiometric, NOx is discharged from the NOx absorber gradually. Therefore, it takes a relatively long time to completely discharge the NOx that is absorbed in the NOx absorber.

Not to mention the oxidation catalyst, the three-way catalyst and the NOx absorber also have the functions of oxidation. Therefore, as described above, the three-way catalyst and the NOx absorber can be employed as the catalyst 22.

The outline of the operational control performed in the first operational area I and the second operational area II will now be explained with reference to Fig. 8.

Fig. 8 shows changes in opening degree of the throttle valve 25, opening degree of the EGR control valve 29, EGR rate, air-fuel ratio, injection timing and injection amount in accordance with changes in torque requirement TQ. As shown in Fig. 8, in the first operational area I where the torque requirement TQ is low, as the torque requirement TQ becomes higher, the opening degree of the throttle valve 25 gradually increases approximately from a completely closed state to an opening degree of 2/3. Further, as the torque requirement TQ becomes higher, the opening degree of the EGR control valve 29 gradually increases approximately from a completely closed state to a completely open state. Further, according to an example shown in Fig. 8, the EGR rate is about 70% in the first operational area I, and the air-fuel ratio is slightly lean (a lean air-fuel ratio).

In other words, the opening degrees of the throttle valve 25 and the EGR control valve 29 are controlled such that the EGR rate is about 70% and the air-fuel ratio is slightly lean in the first operational area I. Further, in the first operational area I, fuel injection is carried out before the compression top dead centre TDC. In this case, an injection start timing θS is retarded as the torque requirement TQ becomes higher. Besides, an injection end timing θE is also retarded as the injection start timing θS is retarded.

During idling operation, the throttle valve 25 is closed until it is closed almost completely, and the EGR control valve 29 is closed until it is closed almost completely. If the throttle valve 25 is closed until it is closed almost completely, the pressure in the combustion chamber 5 at the beginning of compression becomes low. Hence, the compressive pressure becomes small. If the compressive pressure becomes small, the amount of compressive work done by the piston 4 becomes small, so that vibration of the engine body 1 is curbed. In other words, during an idling operation, in order to curb vibration of the engine body 1, the throttle valve 16 is closed until it is closed almost completely.

On the other hand, if the engine undergoes a transition from the first operational area I to the second operational area II, the opening degree of the throttle valve 25 increases stepwise from an opening degree of 2/3 toward a completely open state. At this time, according to the example shown in Fig. 8, the EGR rate decreases stepwise from about 70% to 40% or less, and the air-fuel ratio increases stepwise. That is, since the EGR rate goes beyond a range (Fig. 5) where a large amount of smoke is generated, there is no possibility of a large amount of smoke being generated when the engine undergoes a transition from the first operational area I to the second operational area II.

In the second operational area II, the conventionally adopted combustion is performed. During the conventionally adopted combustion, despite generation of a small amount of soot and NOx, the thermal efficiency is higher in comparison with the low-temperature combustion. Accordingly, if the engine undergoes a transition from the first operational area I to the second operational area II, the injection amount is reduced stepwise. In the second operational area II, apart from a few exceptional cases, the throttle valve 25 is held in a completely open state, and the opening degree of the EGR control valve 29 is gradually reduced as the torque requirement TQ becomes higher. In the second operational area II, the EGR rate becomes lower as the torque requirement TQ becomes higher, and the air-fuel ratio becomes smaller as the torque requirement TQ becomes higher. However, the air-fuel ratio remains lean even if the torque requirement TQ has become high. Further, the injection start timing θS is in the vicinity of the compressive top dead centre TDC.

Fig. 9A shows a relationship among torque requirement TQ, depression amount L of the accelerator pedal 50 and engine speed N. Respective curves in Fig. 9A represent constant-torque curves. The curve indicated by TQ = 0 shows that the torque is zero. The other curves show that the torque gradually becomes higher in the order of TQ = a, TQ = b, TQ = c and TQ = d. The torque requirement TQ shown in Fig. 9A is preliminarily stored in the ROM 42 as a function of depression amount L of the accelerator pedal 50 and engine speed N, in the form of a map shown in Fig. 9B. In this embodiment, first of all, a torque requirement TQ corresponding to a depression amount L of the accelerator pedal 50 and an engine speed N is calculated from a map shown in Fig. 9B. Based on the torque requirement TQ, a target opening degree of the throttle valve 25 or the like is calculated.

Fig. 10A shows a target air-fuel ratio A/F in the first operational area I when the inlet gas supplied to the combustion chamber 5 is at a reference temperature $T_0$. Referring to Fig. 10A, curves indicated by A/F = 15.5, A/F = 16, A/F = 17 and A/F = 18 represent the cases where the air-fuel ratio is 15.5, 16, 17 and 18 respectively. The air-fuel ratios between the respective curves are determined by means of proportional distribution. In the first operational area I, the target air-fuel ratio is lean. As the torque requirement TQ becomes lower, the target air-fuel ratio A/F is shifted toward the lean side.

In other words, as the torque requirement TQ becomes lower, the exothermic value by means of combustion decreases. Accordingly, as the torque requirement TQ becomes lower, the low-temperature combustion can be performed more easily even if the EGR rate has been reduced. If the EGR rate is reduced, the air-fuel ratio becomes larger.

Therefore, as shown in Fig. 10A, as the torque requirement TQ becomes lower, the air-fuel ratio A/F is made larger. The larger the air-fuel ratio A/F becomes, the more the fuel consumption is improved. Thus, in order to set the air-fuel ratio toward the lean side to the maximum possible extent, according to this embodiment, the air-fuel ratio A/F is made larger as the torque requirement TQ becomes lower.

On the other hand, if the temperature of the inlet gas supplied to the combustion chamber 5 rises, the temperature of fuel and ambient gas during combustion rises. Hence, at this time, it is necessary to reduce a concentration of oxygen around fuel particles. In this embodiment, as shown in Fig. 10B, the target air-fuel ratio A/F is multiplied by a correction factor K1, which gradually decreases as the temperature T of inlet gas supplied to the combustion chamber 5 rises. In this manner, the ultimate target air-fuel ratio is obtained (= K1 × (A/F)).

On the other hand, the target EGR rate EG when the inlet gas supplied to the combustion chamber 5 is at the reference temperature $T_0$ is preliminarily stored in the ROM 42 as a function of torque requirement TQ and engine speed N, in the form of a map shown in Fig. 11A. As described above, if the temperature of the inlet gas supplied to the combustion chamber 5 rises, the temperature of fuel and ambient gas during combustion rises. Therefore, at this time, it is preferable to increase an endothermic value of the EGR gas in order to prevent the combustion temperature from rising. Thus, according to this embodiment, as shown in Fig. 11B, the target EGR rate EG is multiplied by a correction factor K2, which gradually increases in proportion to a rise in temperature T of the inlet gas supplied to the combustion chamber 5. In this manner, the ultimate target air-fuel ratio is obtained (= K2 × EG).

In the case where the vehicle runs constantly in the first operational state, the opening degree of the throttle valve 25 and the opening degree of the EGR control valve 29, which are necessary for setting the air-fuel ratio and the EGR rate EG to the target air-fuel ratio (K1 × (A/F)) and the target EGR rate (K2 × EG) respectively, are determined as certain constant values. At this time, the amount of inlet air and the amount of EGR gas are also determined as certain constant values. Further, the concentration of oxygen supplied to the combustion chamber 5 is also determined as a certain constant value. That is, the amount of oxygen supplied to the combustion chamber 5 is the sum of the amount of oxygen contained in the inlet air supplied to the combustion chamber 5 and the amount of oxygen contained in the EGR gas supplied to the combustion chamber 5. The sum of these amounts of oxygen are set such that the air-fuel ratio becomes the target air-fuel ratio (K1 × (A/F)).

On the other hand, in the case where the vehicle runs constantly in the second operational state where a target air-fuel ratio (K1 × (A/F)) and a target EGR rate (K2 × EG) are different from those in the first operational state, the opening degree of the throttle valve 25, the opening degree of the EGR control valve 29, the amount of inlet gas, the amount of EGR gas and the concentration of oxygen contained in the EGR gas, which are necessary for setting the air-fuel ratio and the EGR rate to the target air-fuel ratio (K1 × (A/F)) and the target EGR rate (K2 × EG) respectively, are determined as certain constant values. However, these respective values are different from those in the first operational state.

Accordingly, the target opening degree of the throttle valve 25 and the target opening degree of the EGR control valve 29, which are necessary for setting the air-fuel ratio and the EGR rate to the target air-fuel ratio (K1 × (A/F)) and (K2 × EG) respectively, are preliminarily calculated. Then, if the opening degree of the throttle valve 25 and the opening degree of the EGR control valve 29 are set to those target opening degrees, the air-fuel ratio and the EGR rate become the target air-fuel ratio (K1 × (A/F)) and the target EGR rate (K2 × EG) respectively. However, in fact, the concentration of oxygen contained in the EGR gas supplied to the combustion chamber 5 does not change immediately after a change in operational state of the engine. As a result, the air-fuel ratio and the EGR rate deviate from the target air-fuel ratio (K1 × (A/F)) and the target EGR rate (K2 × EG) respectively.

For example, the following description will consider a case where a transition from the first operational state wherein the target air-fuel ratio (K1 × (A/F)) is relatively large to the second operational state wherein the target air-fuel ratio (K1 × (A/F)) is relatively small has been made. In this case, since the target air-fuel ratio (K1× (A/F)) is relatively large in the first operational state, the concentration of oxygen contained in the EGR gas supplied to the combustion chamber 5 is high. Then, even if a transition from the first operational state to the second operational state has been made, the concentration of oxygen contained in the EGR gas supplied to the combustion chamber 5 does not become low immediately but remains high for a while. As a result, the air-fuel ratio becomes larger than the target air-fuel ratio (K1 × (A/F)), so that smoke is generated. Such generation of smoke becomes remarkable at the time of a transition from the second combustion mode to the first combustion mode.

On the contrary, if a transition from the operational state wherein the target air-fuel ratio (K1 × (A/F)) is small to the operational state wherein the target air-fuel ratio (K1 × (A/F)) is large has been made, the air-fuel ratio becomes smaller than the target air-fuel ratio (K1 × (A/F)). As a result, incomplete combustion is caused. Especially, such incomplete combustion becomes remarkable at the time of a transition to the second combustion mode from the first combustion mode wherein the target air-fuel ratio rises greatly.

In view of this, according to this embodiment, the target opening degree of the throttle valve 25 and the target opening degree of the EGR control valve 29, which are necessary for setting the air-fuel ratio to the target air-fuel ratio (K1 × (A/F)) and the EGR rate to the target EGR rate EG respectively in accordance with a concentration of oxygen contained in the EGR gas supplied to the combustion chamber 5, are preliminarily calculated. Then, the opening degree of the throttle valve 25 and the opening degree of the EGR control valve 29 are adjusted to the respective target opening degrees corresponding to a concentration of oxygen contained in the EGR gas supplied to the combustion chamber 5.

To be more specific, the target opening degree ST of the throttle valve 25, which is necessary for setting the air-fuel ratio to the target air-fuel ratio A/F shown in Fig. 10A and the EGR rate to the target EGR rate EG shown in Fig. 11A when the inlet gas introduced into the combustion chamber 5 is at the reference temperature $T_0$, is preliminarily calculated through experiments, for various concentrations of oxygen contained in the EGR gas supplied to the combustion chamber 5, as a function of torque requirement and engine speed. The target opening degree ST of the throttle valve 25 is preliminarily stored in the ROM 42 as a function of torque requirement TQ and engine speed N, in the form of maps shown in Figs. 12A through 12D. Fig. 12A, Fig. 12B, Fig. 12C and Fig. 12D show cases where the concentration of oxygen contained in the EGR gas supplied to the combustion chamber 5 is 0%, 7%, 14% and 21% respectively.

Furthermore, according to this embodiment, the target opening degree ST of the throttle valve 25, which is necessary for setting the air-fuel ratio to the target air-fuel ratio (K1 × (A/F)) and the EGR rate to the target EGR rate (K2 × EG) when the inlet gas introduced into the combustion chamber 5 is at a temperature $T_1$ (Fig. 10B), is preliminarily calculated through experiments, for various concentrations of oxygen contained in the EGR gas supplied to the combustion chamber 5, as a function of torque requirement and engine speed. The target opening degree ST of the throttle valve 25 is preliminarily stored in the ROM 42 as a function of torque requirement TQ and engine speed N, in the form of maps similar to those shown in Figs. 12A through 12D.

Namely, according to this embodiment, the target opening degree ST of the throttle valve 25 corresponding to a concentration of oxygen contained in the EGR gas supplied to the combustion chamber 5 and a temperature of the inlet gas supplied to the combustion chamber 5 is calculated through interpolation from the maps shown in Figs. 12A through 12D.

Further, according to this embodiment, the target opening degree SE of the EGR control valve 29, which is necessary for setting the air-fuel ratio to the target air-fuel ratio shown in Fig. 10A and the EGR rate to the target EGR rate EG when the inlet gas introduced into the combustion chamber 5 is at the reference temperature $T_0$, is preliminarily calculated through experiments, for various concentrations of oxygen contained in the EGR gas supplied to the combustion chamber 5, as a function of torque requirement and engine speed. The target opening degree SE of the EGR control valve 29 is preliminarily stored in the ROM 42 as a function of torque requirement TQ and engine speed N, in the form of maps shown in Fig. 13A through 13D. Fig. 13A, Fig. 13B, Fig. 13C and Fig. 13D show cases where the concentration of oxygen contained in the EGR gas supplied to the combustion chamber 5 is 0%, 7%, 14% and 21% respectively.

On the other hand, the target opening degree SE of the EGR control valve 29, which is necessary for setting the air-fuel ratio to the target air-fuel ratio (K1 × (A/F)) and the EGR rate to the target EGR rate (K2 × EG) when the inlet gas introduced into the combustion chamber 5 is at the temperature $T_1$ (Fig. 11B), is preliminarily calculated through experiments, for various concentrations of oxygen contained in the EGR gas supplied to the combustion chamber 5, as a function of torque requirement and engine speed. The target opening degree SE of the EGR control valve 29 is preliminarily stored in the ROM 42 as a function of torque requirement TQ and engine speed N, in the form of maps similar to those shown in Figs. 13A through 13D.

Namely, according to this embodiment, the target opening degree SE of the EGR control valve 29 corresponding to a concentration of oxygen contained in the EGR gas supplied to the combustion chamber 5 and a temperature of the inlet gas supplied to the combustion chamber 5 is calculated through interpolation from the maps shown in Figs. 13A through 13D.

Alternatively, either the target opening degree ST of the throttle valve 25 or the target opening degree SE of the EGR control valve 29 may be a function of concentration of oxygen contained in the EGR gas supplied to the combustion chamber 5.

During the low-temperature combustion, the opening degree of the throttle valve 25 is set to a target opening degree calculated from the maps shown in Figs. 12A through 12D, and the opening degree of the EGR control valve 29 is set to a target opening degree calculated from the maps shown in Figs. 13A through 13D. Thus, regardless of changes in operational state of the engine, the air-fuel ratio becomes the target air-fuel ratio (K1 × (A/F)) and the EGR rate becomes the target EGR rate (K2 × EG). Therefore, control is performed such that the opening degrees of the throttle valve 25 and the EGR control valve 29 become the target opening degrees ST and SE respectively.

If deposits adhere to the throttle valve 25 or the EGR control valve 29, the air-fuel ratio and the EGR rate deviate from the target air-fuel ratio (K1 × (A/F)) and the target EGR rate (K2 × EG) respectively. Then, according to this embodiment, a target value GA of an amount Ga of inlet air and a target value GE of an amount Ge of EGR gas are preliminarily determined. Then, the target opening degree ST of the throttle valve 25 and the target opening degree SE of the EGR control valve 29 are corrected such that the amount Ga of inlet air and the amount Ge of EGR gas become the target values GA and GE respectively.

That is, the target value GA of the amount of inlet air, which is necessary for setting the air-fuel ratio to the target air-fuel ratio shown in Fig. 10A and the EGR rate to the target EGR rate EG shown in Fig. 11A when the inlet gas introduced into the combustion chamber 5 is at the reference temperature To, is preliminarily calculated through experiments, for various concentrations of oxygen contained in the EGR gas supplied to the combustion chamber 5, as a function of torque requirement and engine speed. The target value GA of the amount of inlet air is preliminarily stored in the ROM 42 as a function of torque requirement TQ and engine speed N, in the form of maps shown in Figs. 14A through 14D. Fig. 14A, Fig. 14B, Fig. 14C and Fig. 14D show cases where the concentration of oxygen contained in the EGR gas supplied to the combustion chamber 5 is 0%, 7%, 14% and 21% respectively.

Furthermore, according to this embodiment, the target value GA of the amount of inlet air, which is necessary for setting the air-fuel ratio to the target air-fuel ratio (K1 × (A/F)) and the EGR rate to the target EGR rate (K2 × EG) when the inlet gas introduced into the combustion chamber 5 is at the temperature $T_1$ (Fig. 10B), is preliminarily calculated through experiments, for various concentrations of oxygen contained in the EGR gas supplied to the combustion chamber 5, as a function of torque requirement and engine speed. The target value GA of the amount of inlet air is preliminarily stored in the ROM 42 as a function of torque requirement TQ and engine speed N, in the form of maps similar to those shown in Figs. 14A through 14D.

Namely, the target value GA of the amount of inlet air corresponding to a concentration of oxygen contained in the EGR gas supplied to the combustion chamber 5 and a temperature of the inlet gas supplied to the combustion chamber 5 is calculated through interpolation from the maps shown in Figs. 14A through 14D. Then, the thus-calculated target value GA of the amount of inlet air is compared with a mass flow rate Ga (hereinafter referred to simply as an amount of inlet air) of the inlet air detected by the mass flowmeter 38. The target opening degree ST of the throttle valve 25 is corrected such that the actual amount Ga of inlet air becomes the target value GA.

Furthermore, according to this embodiment, the target value GE of the amount of EGR gas, which is necessary for setting the air-fuel ratio to the target air-fuel ratio A/F shown in Fig. 10A and the EGR rate to the target EGR rate EG shown in Fig. 11A when the inlet gas introduced into the combustion chamber 5 is at the reference temperature To, is preliminarily calculated through experiments, for various concentrations of oxygen contained in the EGR gas supplied to the combustion chamber 5, as a function of torque requirement and engine speed. The target value GE of the amount of EGR gas is preliminarily stored in the ROM 42 as a function of torque requirement TQ and engine speed N, in the form of maps shown in Fig. 15A through 15D. Fig. 15A, Fig. 15B, Fig. 15C and Fig. 15D show cases where the concentration of oxygen contained in the EGR gas supplied to the combustion chamber 5 is 0%, 7%, 14% and 21% respectively.

Further, the target value GE of the amount of EGR gas, which is necessary for setting the air-fuel ratio to the target air-fuel ratio (K1 × (A/F)) and the EGR rate to the target EGR rate (K2 × EG) when the inlet gas introduced into the combustion chamber 5 is at the temperature $T_1$ (Fig. 11B), is preliminarily determined through experiments, for various concentrations of oxygen contained in the EGR gas supplied to the combustion chamber 5, as a function of torque requirement and engine speed. The target value GE of the amount of EGR gas is preliminarily stored in the ROM 42 as a function of torque requirement TQ and engine speed N, in the form of maps similar to those shown in Figs. 15A through 15D.

Namely, the target value GE of the amount of EGR gas corresponding to a concentration of oxygen contained in the EGR gas supplied to the combustion chamber 5 and a temperature of the inlet gas supplied to the combustion chamber 5 is calculated through interpolation from the maps shown in Figs. 15A through 15D. On the other hand, the actual amount Ge of EGR gas is calculated from a difference $\Delta P$ between pressures upstream and downstream of the EGR control valve 29 and an effective flow area S of the EGR control valve 29 ($Ge = S \times \sqrt{(\Delta P)}$). The differential pressure $\Delta P$ is detected by the pressure sensors 36 and 37. The actual opening degree SE of the EGR control valve 29 is detected by the opening degree sensor 29a. Based on the opening degree SE, the effective flow area S is calculated from the relationship shown in Fig. 19.

Then, the target value GE of the thus-calculated amount of EGR gas is compared with an actual flow rate Ge thereof. The target opening degree SE of the EGR control valve 29 is corrected such that the actual flow rate Ge becomes the target value GE.

Fig. 17A shows a target air-fuel ratio when the second combustion mode, namely, the conventionally adopted combustion is performed. Referring to Fig. 17A, curves indicated by A/F = 24, A/F = 35, A/F = 45 and A/F = 60 represent the cases where the air-fuel ratio is 24, 35, 45 and 60 respectively. Further, Fig. 17B shows a target EGR rate EG during the second combustion mode. The target EGR rate EG is stored in the ROM 42 as a function of torque requirement TQ and engine speed N, in the form of a map shown in Fig. 17B. In this embodiment, even during the second combustion mode, a target opening degree ST of the throttle valve 25 and a target opening degree SE of the EGR control valve 29 are determined based on a concentration of oxygen contained in the EGR gas supplied to the combustion chamber 5. These target opening degrees ST and SE are corrected based on an amount Ga of inlet air and an amount Ge of EGR gas.

More specifically, the target opening degree ST of the throttle valve 25, which is necessary for setting the air-fuel ratio to the air-fuel ratio shown in Fig. 17A and the EGR rate to the target EGR rate EG shown in Fig. 17B, is preliminarily calculated through experiments, for various concentrations of oxygen contained in the EGR gas supplied to the combustion chamber 5, as a function of torque requirement and engine speed. The target opening degree ST of the throttle valve 25 is preliminarily stored in the ROM 42 as a function of torque requirement TQ and engine speed N, in the form of maps similar to those shown in Figs. 12A through 12D.

Further, according to this embodiment, the target opening degree SE of the EGR control valve 29, which is necessary for setting the air-fuel ratio to the air-fuel ratio A/F shown in Fig. 17A and the EGR rate to the target EGR rate EG shown in Fig. 17B, is preliminarily calculated through experiments, for various concentrations of oxygen contained in the EGR gas supplied to the combustion chamber 5, as a function of torque requirement and engine speed. The target opening degree SE of the EGR control valve 29 is preliminarily stored in the ROM 42 as a function of torque requirement TQ and engine speed N, in the form of maps similar to those shown in Figs. 13A through 13D.

Further, the target value GA of the amount of inlet air, which is necessary for setting the air-fuel ratio to the target air-fuel ratio shown in Fig. 17A and the EGR rate to the target EGR rate EG shown in Fig. 17B, is preliminarily calculated through experiments, for various concentrations of oxygen contained in the EGR gas supplied to the combustion chamber 5, as a function of torque requirement and engine speed. The target value GA of the amount of inlet air is preliminarily stored in the ROM 42 as a function of torque requirement TQ and engine speed N, in the form of maps similar to those shown in Figs. 14A through 14D.

Further, the target value GE of the amount of EGR gas, which is necessary for setting the air-fuel ratio to the target air-fuel ratio shown in Fig. 17A and the EGR rate to the target EGR rate EG shown in Fig. 17B, is preliminarily calculated through experiments, for various concentrations of oxygen contained in the EGR gas supplied to the combustion chamber 5, as a function of torque requirement and engine speed. The target value EG of the amount of EGR gas is preliminarily stored in the ROM 42 as a function of torque requirement TQ and engine speed N, in the form of maps similar to those shown in Figs. 15A through 15D.

As described hitherto, according to this embodiment, the opening degree of the throttle valve 25 and the like are controlled based on a concentration of oxygen contained in the EGR gas supplied to the combustion chamber 5. In order to control the opening degree of the throttle valve 25 and the like, it is necessary to detect, calculate or estimate a concentration of oxygen contained in the EGR gas. In this embodiment, the concentration of oxygen contained in the EGR gas is estimated. Hereinafter, an example of a method of estimating a concentration of oxygen contained in EGR gas will be explained.

An amount Wg (g/rev) of burnt gas discharged from the combustion chamber 5 per one revolution of the engine is expressed by a formula (1), where Ga (g/rev), Ge (g/rev), Q($mm^3$/rev) and $\rho$ ($g/mm^3$) denote amount of intake air, amount of EGR gas, fuel injection amount and fuel density respectively.

$$Wg = Ga + Ge + \rho \times Q \qquad \ldots(1)$$

On the other hand, using the EGR rate K2 × EG, the amount of EGR gas Ge is expressed by a formula (2) shown below.

$$Ge = Ga \times K2 \times EG/(1-K2 \times EG) \qquad \ldots(2)$$

Therefore, the amount Wg of burnt gas discharged from the combustion chamber 5 is expressed by a formula (3) shown below.

$$Wg = Ga + Ga \times K2 \times EG/(1-K2 \times EG) + \rho \times Q \quad \ldots (3)$$

On the other hand, assuming that the concentration of oxygen contained in the EGR gas supplied to the surge tank 12 is OEGR, the amount Oe of oxygen supplied to the combustion chamber 5 is expressed by a formula (4) shown below.

$$Oe = OEGR \times Ga \times K2 \times EG/(1-K2 \times EG) \qquad \ldots (4)$$

Further, the amount Oa of oxygen contained in the inlet air supplied to the combustion chamber 5 is expressed by a formula (5) shown below.

$$Oa = 0.21 \times Ga \qquad \ldots (5)$$

On the other hand, the amount Ocon of oxygen consumed by fuel in the combustion chamber 5 is expressed by a formula (6) shown below.

$$\begin{aligned} Ocon &= 0.21 \times \text{stoichiometric air-fuel ratio} \times \rho \times Q \\ &= 0.21 \times 0.21 \times 14.6 \times \rho \times Q \\ &= 3.1 \times \rho \times Q \qquad \ldots (6) \end{aligned}$$

Accordingly, the amount Oex of oxygen contained in the burnt gas discharged from the combustion chamber 5 is expressed by a formula (7) below.

$$\begin{aligned} Oex &= Oe + Oa - Ocon \\ &= OEGR \times Ga \times K2 \times EG/(1-K2 \times EG) + 0.21 \times Ga - 3.1 \times \rho \times Q \ldots (7) \end{aligned}$$

The concentration OEX of oxygen contained in the exhaust gas in the exhaust port 10 is the ratio of an amount Oex of oxygen contained in the burnt gas to an amount Wg of the burnt gas. The concentration OEX of oxygen is expressed by a formula (8) shown below.

$$OEX = Oex/Wg \qquad \ldots (8)$$

On the other hand, according to this embodiment, using the concentration OEGR of oxygen contained in exhaust gas, an injection amount Q is determined such that the air-fuel ratio becomes the target air-fuel ratio (K1 $\times$(A/F)). That is, as described above, the amount of oxygen supplied to the combustion chamber 5 is (Oe + Oa).

Accordingly, the injection amount necessary for setting the air-fuel ratio to the target air-fuel ratio (K1 $\times$ (A/F)) is expressed as follows.

$$\begin{aligned} (Oe + Oa) \times (1/0.21) &= (K1 \times (A/F)) \times \rho \times Q \\ &= OEGR \times Ga \times K2 \times EG/(1-K2 \times EG) + 0.21 \times Ga \ldots (9) \end{aligned}$$

Hence,

$$Q = (Oe + Oa) \times (1/0.21)/[K1 \times (A/F) \times \rho] \qquad \ldots (10)$$

If the operational state of the engine is determined in the above-mentioned formulas (9) and (10), the correction factors K1 and K2, the target air-fuel ratio A/F and the target EGR rate EG are determined. Further, the amount of inlet air Ga is detected by the mass flowmeter 38. Therefore, if the concentration OEGR of oxygen contained in EGR gas is known, the injection amount Q is determined.

On the other hand, at this time, if the concentration OEGR of oxygen contained in EGR gas is known, the target opening degree ST of the throttle valve 25 and the opening degree SE of the EGR control valve 29 are determined. Namely, if the concentration OEGR of oxygen contained in EGR gas is known, the injection amount Q, the target opening degree ST of the throttle valve 25, and the target opening degree SE of the EGR control valve 29 are determined.

Part of the exhaust gas discharged from the combustion chamber 5 into the exhaust manifold 19 flows into the EGR passage 27. This exhaust gas, namely, the EGR gas is displaced toward the surge tank 12 in the EGR passage 27 every time exhaust gas is discharged from the combustion chamber 5. Therefore, the thus-displaced exhaust gas flows into the surge tank 12 as EGR gas, after some revolutions of the engine following the inflow of exhaust gas into the EGR passage 27. In other words, the exhaust gas that is present in the exhaust manifold 19 prior to some revolutions of the engine is supplied to the surge tank 12. In this case, assuming that the exhaust gas that is present in the exhaust manifold 19 prior to i revolutions of the engine is supplied to the surge tank 12, the number i becomes larger as the amount Ge of EGR gas becomes smaller.

In this embodiment, as shown in Fig. 18, the relationship between number i and amount Ge of EGR gas is preliminarily obtained through experiments. Based on the amount Ge of EGR gas, the number i is calculated from the relationship. In this case, the amount of EGR gas Ge is calculated according to the aforementioned formula (2). For example, if it is assumed that the amount of EGR gas is R in Fig. 18, the number i is 5 at this time. That is, the exhaust gas that is present in the exhaust manifold 19 prior to five revolutions of the engine is supplied to the surge tank 12. In other words, at this time, the concentration OEGR of oxygen contained in the EGR gas supplied to the surge tank 12 is equal to the concentration of oxygen contained in the exhaust gas that is present in the exhaust manifold 19 prior to five revolutions of the engine.

If the concentration of oxygen contained in the exhaust gas that is present in the exhaust manifold 19 prior to i revolutions of the engine is referred to as OEX(i), the value of OEX(i) is already calculated according to the aforementioned formula (8) prior to i revolutions of the engine. Accordingly, it is possible to calculate a concentration OEGR of oxygen contained in the EGR gas supplied to the surge tank 12.

Fig. 19 shows a routine for estimating a concentration OEGR of oxygen contained in the EGR gas supplied to the surge tank 12 and a concentration OEX of oxygen contained in the exhaust gas in the exhaust manifold 19. This routine is carried out when one of the cylinders finishes its exhaust stroke.

First of all, in step 100, an amount Ge of EGR gas is calculated from a correction factor K2, a target EGR rate EG and an amount Ga of inlet air in the current operational state of the engine, and based on the amount Ge of EGR gas, a number i is calculated from the relationship shown in Fig. 18. Then in step 101, a concentration OEX(i) of oxygen contained in the exhaust gas that is present in the exhaust manifold 19 prior to i revolutions of the engine is set to a concentration OEGR of oxygen contained in the EGR gas supplied to the surge tank 12.

Then in step 102, using the concentration OEGR of oxygen, a concentration OEX of oxygen contained in the exhaust gas in the exhaust manifold 19 is calculated according to the aforementioned formula (8). Then in step 103, all the stored values of OEX (i-1) are set to the value of OEX (i), and the value of OEX calculated in step 102 is set to OEX(1).

The operational control will now be described with reference to Fig. 20.

First of all, it is determined in step 200 whether or not a flag I indicating that the engine is in the first operational area I has been set. If the flag I has been set, namely, if the engine is in the first operational area I, the process proceeds to step 201, where it is determined whether or not the torque requirement TQ has become larger than a first border X1(N). If $TQ \leq X1(N)$, the process proceeds to step 203, where low-temperature combustion is performed.

Namely, in step 203, the throttle valve 25 is controlled. Fig. 21 shows a control routine for the throttle valve 25. Then in step 204, the EGR control valve 29 is controlled. Fig. 22 shows a control routine for the EGR control valve 29. Then in step 205, an injection amount Q is calculated according to the aforementioned formula (10), based on a target air-fuel ratio ($K1 \times (A/F)$), a target EGR rate ($K2 \times EG$), an amount of inlet air Ga and a concentration OEGR of oxygen contained in EGR gas in the current operational state of the engine.

On the other hand, if it is determined in step 201 that $TQ > X(N)$, the process proceeds to step 202, where the flag I is reset. The process then proceeds to step 208, where the second combustion mode is performed.

Namely, in step 208, the throttle valve 25 is controlled. Fig. 23 shows a control routine for the throttle valve 25. Then in step 209, the EGR control valve 29 is controlled. Fig. 24 shows a control routine for the EGR control valve 29. Then in step 210, an injection amount Q is calculated according to the aforementioned formula (10), based on a target air-fuel ratio ($K1 \times (A/F)$), a target EGR rate ($K2 \times EG$), an amount Ga of inlet air and a concentration OEGR of oxygen in EGR gas in the current operational state of the engine.

If the flag I has been reset, the process proceeds from step 200 to step 206 in the following processing cycle. It is determined in step 206 whether or not the torque requirement TQ has become lower than the second border Y(N). If $TQ \geq Y(N)$, the process proceeds to step 208, where the second combustion mode is performed. On the other hand, if it is determined in step 206 that $TQ < Y(N)$, the process proceeds to step 207, where the flag I is set. The process then proceeds to step 203, where the low-temperature combustion is performed.

The routine for controlling the throttle valve 25 in step 203 in Fig. 20 will now be described with reference to Fig. 21.

Referring to Fig. 21, first of all, in step 220, a target opening degree ST of the throttle valve 25 corresponding to a concentration OEGR of oxygen contained in EGR gas is calculated from the maps shown in Figs. 12A through 12D. Then in step 221, a target value GA of the amount of inlet air corresponding to the concentration OEGR of oxygen contained in EGR gas is calculated from the maps shown in Figs. 14A through 14D. Then in step 222, an actual amount Ga of inlet air, which is detected by the mass flowmeter 38, is read.

Then, it is determined in step 223 whether or not the actual amount Ga of inlet air is larger than the target value GA of the amount of inlet air. If Ga > GA, the process proceeds to step 224, where a predetermined value $\alpha$ is subtracted from a correction value $\Delta$ST1 for the target opening degree of the throttle valve 25, and the process then proceeds to step 226. On the contrary, if Ga $\leq$ GA, the process proceeds to step 225, where the predetermined value $\alpha$ is added to the correction value $\Delta$ST1, and the process then proceeds to step 226. In step 226, the correction value $\Delta$ST1 is added to the target opening degree ST of the throttle valve 25, whereby the ultimate target opening degree ST of the throttle valve 25 (= ST + $\Delta$ST1) is calculated.

The routine for controlling the EGR control valve 29 in step 204 in Fig. 20 will now be described with reference to Fig. 22.

Referring to Fig. 22, first of all, in step 230, a target opening degree SE of the EGR control valve 29 corresponding to a concentration OEGR of oxygen contained in EGR gas is calculated from the maps shown in Figs. 14A through 14D. Then in step 231, a target value GE of the amount of EGR gas corresponding to the concentration OEGR of oxygen contained in EGR gas is calculated from the maps shown in Figs. 15A through 15D. Then in step 232, a pressure $P_0$ in the surge tank 12 and a pressure $P_1$ in the EGR passage 27, which are detected by the pressure sensors 36 and 37 respectively, are read.

Then in step 233, a difference $\Delta$P between the pressures $P_1$ and $P_0$ (=$P_1$ -$P_0$) is calculated. In step 234, based on an opening degree SE of the EGR control valve 29 detected by the opening degree sensor 29a, an effective flow area S of the EGR control valve 29 is calculated from the relationship shown in Fig. 16. In step 235, the effective flow area S is multiplied by a square root of the differential pressure $\Delta$P, whereby an actual amount Ge of EGR gas is calculated.

Then, it is determined in step 236 whether or not the actual amount Ge of EGR gas is larger than the target value GE of the amount of EGR gas.. If Ge > GE, the process proceeds to step 237, where a predetermined value $\beta$ is subtracted from a correction value $\Delta$SE1 for the target opening degree of the EGR control valve 29, and the process then proceeds to step 239. On the contrary, if Ge $\leq$ GE, the process proceeds to step 238, where the predetermined value $\beta$ is added to the correction value $\Delta$SE1. The process then proceeds to step 239, where the correction value $\Delta$SE1 is added to the target opening degree SE of the EGR control valve 29, whereby the ultimate target opening degree SE of the EGR control valve 29 (= SE + $\Delta$SE1) is calculated.

Figs. 23 and 24 show a routine for controlling the throttle valve 25 in step 208 in Fig. 20 and a routine for controlling the EGR control valve 29 in step 209 in Fig. 20 respectively. The processings performed in the respective routines are the same as those shown in Figs. 21 and 22, except that the correction value $\Delta$ST1 in Figs. 21 and 22 has been replaced by the correction value $\Delta$ST2. Therefore, the description of the routines shown in Figs. 23 and 24 will be omitted.

If the opening degrees of the throttle valve 25 and the EGR control valve 29 are determined, not only the amounts of inlet air and EGR gas but also the pressure in the intake passage downstream of the throttle valve 25 is also determined. Accordingly, a target pressure Pm in the intake passage corresponding to a concentration of oxygen contained in EGR gas may be preliminarily calculated so as to correct the target opening degree SE of the EGR control valve 29 such that the pressure Pm in the intake passage becomes a target pressure PM.

In this case, when the inlet air introduced into the combustion chamber 5 is at the reference temperature To, the air-fuel ratio is set to the target air-fuel ratio A/F shown in Fig. 10A and the EGR rate is set to the target EGR rate shown in Fig. 11A during the first combustion mode. The target pressure PM in the surge tank 12 at this time is preliminarily calculated through experiments, for various concentrations of oxygen contained in the EGR gas supplied to the combustion chamber 5, as a function of torque requirement and engine speed. The target pressure PM is preliminarily stored in the ROM 42 as a function of torque requirement TQ and engine speed N, in the form of maps shown in Figs. 25A through 25D. Figs. 25A, Fig. 25B, Fig. 25C and Fig. 25D show cases where the concentration of oxygen contained in the EGR gas supplied to the combustion chamber 5 is 0%, 7%, 14% and 21% respectively.

Further, when the inlet air introduced into the combustion chamber 5 is at the temperature $T_1$ (Fig. 11B), the air-fuel ratio is set to the target air-fuel ratio (K1 $\times$ A/F) and the EGR rate is set to the target EGR rate (K2 $\times$ EG). The target pressure PM in the surge tank 12 is preliminarily calculated through experiments, for various concentrations of oxygen contained in the EGR gas supplied to the combustion chamber 5, as a function of torque requirement and engine speed. The target pressure PM is preliminarily stored in the ROM 42 as a function of torque requirement TQ and engine speed N, in the form of maps similar to those shown in Figs. 25A through 25D.

Furthermore, the air-fuel ratio is set to the target air-fuel ratio A/F shown in Fig. 17A and the EGR rate is set to the target EGR rate EG shown in Fig. 17B during the second combustion mode. The target pressure PM in the surge tank 12 at this time is preliminarily calculated through experiments, for various concentrations of oxygen contained in the EGR gas supplied to the combustion chamber 5, as a function of torque requirement and engine speed. The target pressure PM is preliminarily stored in the ROM 42 as a function of torque requirement TQ and engine speed N, in the form of maps similar to those shown in Figs. 25A through 25D.

The routine for controlling the EGR control valve 29 in step 204 in Fig. 20 will now be described with reference to Fig. 26.

First of all, in step 300, a target opening degree SE of the EGR control valve 29 corresponding to a concentration OEGR of oxygen contained in EGR gas is calculated from the maps shown in Figs. 13A through 13D. In step 301, a target pressure PM in the surge tank 12 corresponding to the concentration OEGR of oxygen contained in EGR gas is calculated from the maps shown in Figs. 25A through 25D. In step 302, a pressure Pm in the surge tank 12, which is detected by the pressure sensor 36, is read.

Then, it is determined in step 303 whether or not the actual pressure Pm in the surge tank 12 is higher than the target pressure PM. If $Pm > PM$, the process proceeds to step 304, where a predetermined value $\beta$ is subtracted from a correction value $\Delta SE1$ for the target opening degree of the EGR control valve 29. The process then proceeds to step 306. On the contrary, if $Pm \leq PM$, the process proceeds to step 305, where the predetermined value $\beta$ is added to the correction value $\Delta SE1$. The process then proceeds to step 306, where the correction value $\Delta SE1$ is added to the target opening degree SE of the EGR control valve 29. Thereby, an ultimate target opening degree SE of the EGR control valve 29 ($=SE + \Delta SE1$) is calculated.

Fig. 27 shows a routine for controlling the EGR control valve 29 in step 209 in Fig. 20.

This routine is the same as the aforementioned routine in Fig. 26, except that the correction value $\Delta SE1$ is replaced by $\Delta SE2$. Therefore, the description of the routine shown in Fig. 27 will be omitted.

Further, as described above, if the opening degrees of the throttle valve 25 and the EGR control valve 29 are determined, not only the amounts of inlet air and EGR gas but also the pressure in the intake passage downstream of the throttle valve 25 is determined. Furthermore, at this time, a pressure Pc in the combustion chamber 5 corresponding to a predetermined crank angle during a compression stroke is also determined. Thus, according to this embodiment, a target pressure PC in the combustion chamber 5 corresponding to a concentration OEGR of oxygen contained in EGR gas, which concentration corresponds to the predetermined crank angle during the compression stroke, is preliminarily calculated. The target opening degree SE of the EGR control valve 29 may be corrected such that the pressure Pc corresponding to the predetermined crank angle during the compression stroke becomes the target pressure PC.

More specifically, when the inlet gas introduced into the combustion chamber 5 is at the reference temperature To, the air-fuel ratio is set to the target air-fuel ratio ($K1 \times (A/F)$) shown in Fig. 10A and the EGR rate is set to the target EGR rate ($K2 \times EG$) shown in Fig. 11A. The target pressure PC in the combustion chamber 5 at this time is preliminarily calculated through experiments, for various concentrations of oxygen contained in the EGR gas supplied to the combustion chamber 5, as a function of torque requirement and engine speed. The target pressure PC is preliminarily stored in the ROM 42 as a function of torque requirement TQ and engine speed N, in the form of maps shown in Figs. 28A through 28D. Fig. 28A, Fig. 28B, Fig. 28C and Fig. 28D show cases where the concentration of oxygen contained in the EGR gas supplied to the combustion chamber 5 is 0%, 7%, 14% and 21% respectively. Further, when the inlet air introduced into the combustion chamber 5 is at the temperature $T_1$ (Fig. 11B), the air-fuel ratio is set to the target air-fuel ratio ($K1 \times (A/F)$) and the EGR rate is set to the target EGR rate ($K2 \times EG$). The target pressure PC in the combustion chamber 5 is preliminarily calculated through experiments, for various concentrations of oxygen contained in the EGR gas supplied to the combustion chamber 5, as a function of torque requirement and engine speed. The target pressure PC is preliminarily stored in the ROM 42 as a function of torque requirement TQ and engine speed N, in the form of maps similar to those shown in Figs. 28A through 28D.

Furthermore, according to this embodiment, the air-fuel ratio is set to the target air-fuel ratio A/F shown in Fig. 17A and the EGR rate is set to the target EGR rate EG shown in Fig. 17B during the second combustion mode. The target pressure PC in the combustion chamber 5 at this time is preliminarily calculated through experiments, for various concentrations of oxygen contained in the EGR gas supplied to the combustion chamber 5, as a function of torque requirement and engine speed. The target pressure PC is preliminarily stored in the ROM 42 as a function of torque requirement TQ and engine speed N, in the form of maps similar to those shown in Figs. 28A through 28D.

The routine for controlling the EGR control valve 29 in step 204 in Fig. 20 will now be described with reference to Fig. 29.

First of all, in step 400, a target opening degree SE of the EGR control valve 29 corresponding to a concentration OEGR of oxygen contained in EGR gas is calculated from the maps shown in Figs. 13A through 13D. In step 401, a target pressure PC in the combustion chamber 5 corresponding to the concentration OEGR of oxygen contained in the EGR gas is calculated from the maps shown in Figs. 28A through 28D. In step 402, a pressure Pc in the combustion chamber 5 corresponding to a predetermined crank angle during a compression stroke, which pressure is detected by the combustion pressure sensor 39, is read.

Then, it is determined in step 403 whether or not the actual pressure Pc in the combustion chamber 5 is higher than the target pressure PC. If $Pc > PC$, the process proceeds to step 404, where a predetermined value $\beta$ is subtracted from a correction value $\Delta SE1$ for the target opening degree of the EGR control valve 29. The process then proceeds to step 406. On the contrary, if $Pc \leq PC$, the process proceeds to step 405, where the predetermined value $\beta$ is added to the correction value $\Delta SE1$. The process then proceeds to step 406, where the correction value $\Delta SE1$ is added to the target opening degree SE of the EGR control valve 29, whereby an ultimate opening degree SE (= SE + ΔSE1) of the EGR control valve 29 is calculated.

Fig. 30 shows a routine for controlling the EGR control valve 29 in step 209 in Fig. 20.

This routine is the same as the aforementioned routine shown in Fig. 29, except that the correction value ΔSE1 is replaced by ΔSE2. Therefore, the description of the routine shown in Fig. 30 will be omitted.

A second embodiment of the present invention will now be described.

In this embodiment, the target opening degree ST of the throttle valve 25, which is necessary for setting the air-fuel ratio to the target air-fuel ratio A/F in the first operational area I (Fig. 10A), is preliminarily stored in the ROM 42 as a function of torque requirement TQ and engine speed N, in the form of a map shown in Fig. 31A. Further, the target opening degree SE of the EGR control valve 29, which is necessary for setting the air-fuel ratio to the target air-fuel ratio, is preliminarily stored in the ROM 42 as a function of torque requirement TQ and engine speed N, in the form of a map shown in Fig. 31B. Further, the injection amount Q in the first operational area I is preliminarily stored in the ROM 42 as a function of torque requirement TQ and engine speed N, in the form of a map shown in Fig. 32A. Still further, according to this embodiment, an EGR rate EG is estimated based on the target opening degree ST of the throttle valve 25 and the target opening degree SE of the EGR control valve 29. The estimated value EG of the EGR rate in the first operational area I is preliminarily stored in the ROM 42 as a function of target opening degree ST of the throttle valve 25 and target opening degree SE of the EGR control valve 29, in the form of a map shown in Fig. 32B.

On the other hand, the target air-fuel ratio A/F in the second operational area II in this embodiment is the same as that in the first embodiment shown in Fig. 17A.

Further, in the second operational area II, the target opening degree ST of the throttle valve 25 and the target opening degree SE of the EGR control valve 29, which are necessary for setting the air-fuel ratio to the target air-fuel ratio, are preliminarily stored in the ROM 42 in the form of maps similar to those shown in Figs. 31A and 31B respectively. Further, as is the case with the first operational area I, the injection amount Q in the second operational area II is also preliminarily stored in the ROM 42 as a function of torque requirement TQ and engine speed N, in the form of a map similar to that shown in Fig. 32. Furthermore, the estimated value EG of the EGR rate is also preliminarily stored in the ROM 42 as a function of target opening degree ST of the throttle valve 25 and target opening degree SE of the EGR control valve 29, in the form of a map shown in Fig, 32B.

Furthermore, also in this embodiment, the following formulas which are similar to those mentioned in the first embodiment (8), (3) and (7) are used so as to calculate a concentration of oxygen contained in the exhaust gas in the exhaust port 10.

$$OEX = Oex/Wg \qquad ...(10)$$

wherein

$$Wg = Ga + Ga \times EG/(1-EG) + \rho \times Q \qquad ...(11),$$

and

$$Oex = OEGR \times Ga \times EG/(1-EG) + 0.21/Ga - 3.1 \times \rho \times Q \qquad ...(12)$$

However, in this embodiment, the estimated value EG of the EGR rate shown in Fig. 32B is used as the target EGR rate EG, and the injection amount Q shown in Fig. 32 A is used as an injection amount.

Furthermore, according to this embodiment, by means of a routine for estimating concentration of oxygen as shown in Fig. 19, a concentration OEGR of oxygen contained in the EGR gas supplied to the surge tank 12 and a concentration OEX of oxygen contained in the exhaust manifold 19 are calculated. As is the case with the first embodiment, this routine is also carried out when one of the cylinders finishes its exhaust stroke.

Namely, first of all, in step 100, an amount of EGR gas Ge (= Ga × EG/(1-EG)) is calculated from an estimated value EG of the EGR rate and an amount Ga of inlet air. Based on the amount Ge of EGR gas, the number i is calculated from the relationship shown in Fig. 18. Then in step 101, a concentration OEX(i) of oxygen contained in the exhaust gas that is present in the exhaust manifold 19 prior to i revolutions of the engine is set to the concentration OEGR of oxygen contained in the EGR gas supplied to the surge tank 12.

Then in step 102, using the concentration OEGR of oxygen, a concentration OEX of oxygen contained in the exhaust gas in the exhaust manifold 19 is calculated according to the aforementioned formula (11). Then in step 103, all the stored values of OEX (i-1) are set to OEX(i), and the value of OEX calculated in step 102 is set to OEX(1).

In the second embodiment, based on the concentration OEGR of oxygen contained in EGR gas, the opening degree of the throttle valve 25 and the opening degree of the EGR control valve 29 are controlled such that the air-fuel ratio becomes the target air-fuel ratio A/F. Hence, methods of controlling the throttle valve 25 and the EGR control 29 will now be described.

If the air-fuel ratio is maintained at the target air-fuel ratio A/F, a concentration tO of oxygen contained in the burnt gas in the combustion chamber 5 is calculated according to a formula shown below.

$$\begin{aligned} tO &= 0.21 \times \rho \times Q \times A/F - 0.21 \times \rho \times Q \times (A/F)\ st \\ &= 0.21 \times \rho \times Q \times [(A/F) - (A/F)\ st] \qquad \ldots(13) \end{aligned}$$

wherein (A/F) st represents the stoichiometric air-fuel ratio.

At this time, the concentration OEGR of oxygen contained in EGR gas coincides with the calculated concentration tO of oxygen contained in burnt gas. On the other hand, if the actual air-fuel ratio deviates from the target air-fuel ratio A/F, the concentration OEGR of oxygen contained in the EGR gas deviates from the concentration tO of oxygen calculated based on the aforementioned formula (13). Therefore, unless the concentration OEGR of oxygen contained in EGR gas coincides with the concentration tO of oxygen calculated based on the aforementioned formula (13), it can be concluded that the actual air-fuel ratio is not maintained at the target air-fuel ratio A/F.

That is, when the concentration OEGR of oxygen contained in the EGR gas is higher than the concentration tO of oxygen calculated based on the aforementioned formula (13), the actual air-fuel ratio is larger than the target air-fuel ratio A/F. At this time, the larger the difference between values of OEGR and tO becomes, the more greatly the actual air-fuel ratio deviates from the target air-fuel ratio A/F. On the contrary, when the concentration OEGR of oxygen contained in EGR gas is lower than the concentration tO of oxygen calculated based on the aforementioned formula (13), the actual air-fuel ratio is smaller than the target air-fuel ratio A/F. At this time, the larger the difference between values of OEGR and tO becomes, the more greatly the actual air-fuel ratio deviates from the target air-fuel ratio A/F.

Thus, according to this embodiment, if the difference in oxygen concentration ΔO (= OEGR - tO), namely, the difference between the concentration OEGR of oxygen contained in EGR gas and the concentration tO of oxygen calculated based on the aforementioned formula (13) is positive, the throttle valve 25 is closed and the EGR control valve 29 is opened so as to reduce an air-fuel ratio. At this time, the closing amount of the throttle valve 25 and the opening amount of the EGR control valve 29 are increased in proportion to an increase in difference in oxygen concentration ΔO. If the difference in oxygen concentration ΔO is negative, the throttle valve 25 is opened and the EGR control valve 29 is closed so as to increase an air-fuel ratio. At this time, the opening amount of the throttle valve 25 and the closing amount of the EGR control valve 29 are increased in proportion to an increase in absolute value of the difference in oxygen concentration ΔO.

More specifically, as shown in Figs. 33A and 33B, a correction value KST for the target opening degree ST of the throttle valve 25 and a correction value KSE for the target opening degree SE of the EGR control valve 29 are changed in accordance with the difference in oxygen concentration ΔO.

If the opening degree of the throttle valve 25 and the opening degree of the EGR control valve 29 are controlled based on the difference in oxygen concentration ΔO, the difference in oxygen concentration ΔO eventually becomes zero. Then, the actual air-fuel ratio coincides with the target air-fuel ratio A/F.

The operational control will now be described with reference to Fig. 34.

First of all, it is determined in step 600 whether or not a flag I indicating that the engine is in the first operational area I has been set. If the flag I has been set, the process proceeds to step 601, where it is determined whether or not the torque requirement TQ has become larger than the first border X1(N). If TQ ≤ X1(N), the process proceeds to step 603, where low-temperature combustion is performed.

Namely, in step 603, a target opening degree ST of the throttle valve 25 is calculated from the map shown in Fig. 31A. Then in step 604, a target opening degree SE of the EGR control valve 29 is calculated from the map shown in Fig. 31B. In step 605, an injection amount Q is calculated from the map shown in Fig. 32A. In step 606, a concentration tO of oxygen contained in burnt gas, which concentration is detected when the air-fuel ratio is equal to the target air-fuel ratio A/F, is calculated using the aforementioned formula (9). In step 607, a difference in oxygen concentration ΔO (= OEGR - tO) is calculated by subtracting the concentration tO of oxygen contained in burnt gas from the concentration OEGR of oxygen contained in EGR gas.

Then in step 608, based on the difference in oxygen concentration ΔO, a correction value KST for the target opening degree ST of the throttle valve 25 is calculated from the relationship shown in Fig. 33A. In step 609, the correction value KST is added to the target opening degree of the throttle valve 25, whereby an ultimate target opening degree ST (= ST + KST) of the throttle valve 25 is calculated. In step 610, based on the difference in oxygen concentration ΔO, a correction value KSE for the target opening degree SE of the EGR control valve 29 is calculated from the relationship shown in Fig. 33B. In step 611, the correction value KSE is added to the target opening degree SE of the EGR control valve 29, whereby an ultimate target opening degree SE (= SE + KSE) of the EGR control valve 29 is calculated.

On the other hand, if it is determined in step 601 that TQ > X(N), the process proceeds to step 602, where the flag I is reset. The process then proceeds to step 614, where the second combustion mode is performed. The processings performed in steps 614 through 622 are identical to those performed in steps 603 through 611.

If the flag I is reset, the process proceeds from step 600 to step 612 in the following processing cycle. It is determined in step 612 whether or not the torque requirement TQ has become lower than the second border Y(N). If TQ ≥ Y(N), the process proceeds to step 614, where the second combustion mode is performed. On the other hand, if it is determined in step 612 that TQ < Y(N), the process proceeds to step 613, where the flag I is set. The process then proceeds to step 603, where the low-temperature combustion is performed.

A third embodiment of the present invention will now be described.

Fig. 36 shows an injection start timing θS in the first operational area I according to this embodiment. The injection start timing θS is preliminarily stored in the ROM 42 as a function of torque requirement TQ and engine speed N, in the form of a map.

In this embodiment, the opening degree of the throttle valve 25 is controlled such that the air-fuel ratio becomes the target air-fuel ratio A/F. Namely, while the first combustion mode is performed, an opening degree of the throttle valve 25 is calculated based on a formula (15) below. While the second combustion mode is performed, an opening degree of the throttle valve 25 is calculated based on a formula (16) below.

Opening degree of throttle valve 25 = target opening degree ST + correction value ΔST + learning value KGIij ...(15)

Opening degree of throttle valve 25 = target opening degree ST + correction value ΔST + learning value KGIIij ...(16)

The target opening degree ST in the above-mentioned formulas (15) and (16) are calculated from a map similar to that shown in Fig. 31. Further, the correction value ΔST is a correction value for the target opening degree ST of the throttle valve 25. In this embodiment, if an actual air-fuel ratio $(A/F)_R$ detected by the air-fuel ratio sensor 26 is larger than the target air-fuel ratio A/F shown in Fig. 10 by a predetermined value α or more during the first combustion mode, or if the actual air-fuel ratio $(A/F)_R$ is larger than the target air-fuel ratio A/F shown in Fig. 17 by the predetermined value α or more during the second combustion mode, the correction value ΔST is reduced by a predetermined value (e.g. 1°). If the actual air-fuel ratio $(A/F)_R$ detected by the air-fuel ratio sensor 26 is smaller than the target air-fuel ratio A/F shown in Fig. 10 by the predetermined value α or more during the first combustion mode, or if the actual air-fuel ratio $(A/F)_R$ is smaller than the target air-fuel ratio A/F shown in Fig. 17 by the predetermined value α or more during the second combustion mode, the correction value ΔST is increased by a predetermined value, for example, 1°.

The actual air-fuel ratio $(A/F)_R$ may be calculated based on an amount of inlet air detected by the mass flowmeter 38 and an injection amount Q calculated from the map shown in Fig. 32.

Further, referring to the formula (15), if the correction value ΔST has become larger than a predetermined value (e.g. 3°) during the first combustion mode, the learning value KGIij may be increased by a predetermined value (e.g. 0.2°). Likewise, if the correction value ΔST has become smaller than a predetermined value (e.g. -3°) during the first combustion mode, the learning value KGIij may be reduced by a predetermined value (e.g. 0.2°).

Similarly, referring to the formula (11), if the correction value ΔST has become larger than a predetermined value, for example, 3° during the second combustion mode, the learning value KGIIij may be increased by a predetermined value, for example, 0.2°. Likewise, if the correction value ΔST has become smaller than a predetermined value, for example, 3° during the second combustion mode, the learning value KGIIij may be reduced by a predetermined value, for example, 0.2°.

As indicated by broken lines in Fig. 37, the operational area of the engine during the first combustion mode is divided into a plurality of operational areas (15 operational areas in the example shown in Fig. 37). For each of the operational areas, a learning value KGIij is determined separately. Further, as indicated by broken lines in Fig. 38, the operational area of the engine during the second combustion mode is divided into a plurality of operational areas (6 operational areas in the example shown in Fig. 38). For each of the operational areas, a learning value KGIIij is determined separately.

During the first combustion mode, the air-fuel ratio needs to be controlled more finely than during the second combustion mode. Thus, the operational area of the engine during the first combustion mode is divided more finely than that during the second combustion mode.

The operational control according to this embodiment will now be described with reference to Figs. 39 through 41.

First of all, it is determined in step 700 whether or not a flag I indicating that the engine is in the first operational area I has been set. If the flag I has been set, namely, if the engine is in the first operational area I, the process proceeds to step 701, where it is determined whether or not the torque requirement TQ has become larger than the first border X1(N). If TQ ≤ X1(N), the process proceeds to step 703, where low-temperature combustion is performed.

In step 703, a torque requirement TQ is calculated. In step 704, a target opening degree ST of the throttle valve 25 is calculated. Then in step 705, a target opening degree SE of the EGR control valve 31 is calculated. The opening degree of the EGR control valve 31 is then set to the thus-calculated target opening degree SE. Then in step 706, an injection amount Q is calculated. In step 707, an injection start timing θS is calculated from the map shown in Fig. 35.

It is determined in step 708 whether or not a predetermined time period has elapsed after a transition from the second combustion mode to the first combustion mode. If the predetermined time period has not elapsed yet, the process jumps to step 719. If the predetermined time period has elapsed, the process proceeds to step 709. In step 709, an actual air-fuel ratio $(A/F)_R$ is calculated based on an output signal from the air-fuel ratio sensor 26.

It is determined in step 710 whether or not the actual air-fuel ratio $(A/F)_R$ is larger than the target air-fuel ratio A/F shown in Fig. 10 by a predetermined value α or more. If $(A/F)_R > A/F + \alpha$, the process proceeds to step 711, where 1° is added to the correction value ΔST. Thereafter, the process proceeds to step 714. On the contrary, if (A/F)R ≤ A/F + α, the process proceeds to step 712, where it is determined whether or not the actual air-fuel ratio $(A/F)_R$ is smaller than the target air-fuel ratio A/F by the predetermined value α or more. If $(A/F)_R < A/F - \alpha$, the process proceeds to step 713, where 1° is subtracted from the correction value ΔST. Thereafter, the process proceeds to step 714. In step 714, it is determined with reference to Fig. 37 which of the operational areas ij, namely, which of the learning areas ij corresponds to a current state of the engine.

Then, it is determined in step 715 whether or not the correction value has become larger than 3°. If ΔST > 3°, the process proceeds to step 716, where 0.2° is added to a learning value KGIij in the current learning area ij. Thereafter, the process proceeds to step 719. On the contrary, if ΔST ≤ 3°, the process proceeds to step 717, where it is determined whether or not the correction value ΔST is smaller than -3°. If ΔST < -3°, the process proceeds to step 718, where 0.2° is subtracted from a learning value KGIIij in the current learning area ij. Thereafter, the process proceeds to step 719, where an opening degree ST of the throttle valve 25 is calculated based on a formula shown below.

$$ST = ST + \Delta ST + KGIij$$

On the other hand, if it is determined in step 701 that TQ > X(N), the process proceeds to step 702, where the flag I is reset. The process then proceeds to step 722, where the second combustion mode is performed.

In steps 722 through 737, the processings similar to those in the aforementioned steps 703 through 718 are performed. Then in step 719, an ultimate opening degree ST of the throttle valve 25 is calculated based on a formula shown below.

$$ST = ST + \Delta ST + KGIIij$$

If the flag I is reset, the process proceeds from step 700 to step 720 in the following processing cycle. It is determined in step 720 whether or not the torque requirement TQ has become lower than the second border Y(N). If TQ ≥ Y(N), the process proceeds to step 722, where the second combustion mode is performed under a lean air-fuel ratio. On the other hand, if it is determined in step 720 that TQ < Y(N), the process proceeds to step 721, where the flag I is set. The process then proceeds to step 703, where the low-temperature combustion is performed.

In the aforementioned steps 709 and 728, an actual air-fuel ratio $(A/F)_R$ (= Ga/Q) may be calculated based on an amount Ga of inlet air detected by the mass flowmeter and an injection amount Q calculated from the map.

According to the aforementioned third embodiment, the air-fuel ratio can be made to exactly coincide with the target air-fuel ratio.

A fourth embodiment of the present invention will now be described.

As described above, an NOx absorber including a noble metal such as Pt can be employed as the oxidation catalyst 22. On the other hand, as described previously, when the engine is in the first operational area I and the low-temperature combustion is performed, soot is hardly generated. Instead, unburnt hydrocarbon is discharged from the combustion chamber 5 in the form of a precursor of soot or in a state prior to the precursor of soot. However, as described above, since the NOx absorber has the function of oxidation, the unburnt hydrocarbon that has been discharged from the combustion chamber 5 is suitably oxidised by the NOx absorber.

It is to be noted herein that the ability of the NOx absorber to absorb NOx is limited. Hence, it is necessary to discharge NOx from the NOx absorber before the ability to absorb NOx is exhausted. For this purpose, it is necessary to estimate an amount of NOx absorbed in the NOx absorber. Thus, according to this embodiment, an absorption amount A of NOx per unit time during the first combustion mode is preliminarily calculated as a function of load requirement L (depression amount of the accelerator pedal) and engine speed N, in the form of a map as shown in Fig. 42A. An absorption amount B of NOx per unit time during the second combustion mode is preliminarily calculated as a function of load requirement L and engine speed N, in the form of a map as shown in Fig. 42B. By multiplying the absorption amounts A and B, an amount $\Sigma NO_x$ of NOx absorbed in the NOx absorber is estimated.

In this embodiment, when the absorption amount ΣNOx of NOx exceeds a predetermined maximum allowable value, NOx is discharged from the NOx absorber, as will be described with reference to Fig. 43.

In this embodiment, two maximum allowable values MAX1 and MAX2 are set. The maximum allowable value MAX1 is approximately 30% of the maximum possible amount of NOx absorbed by the NOx absorber, and the maximum allowable value MAX2 is approximately 80% of the maximum possible amount of NOx absorbed by the NOx absorber. If the absorption amount ΣNOx of NOx has exceeded the maximum allowable value MAX1 during the first combustion mode, the air-fuel ratio is made rich so as to discharge NOx from the NOx absorber. If the absorption amount ΣNOx of NOx has exceeded the maximum allowable value MAX1 during the second combustion mode, the air-fuel ratio is made rich so as to discharge NOx from the NOx absorber at the time of a transition from the second combustion mode to the first combustion mode. If the absorption amount ΣNOx of NOx has exceeded the maximum allowable value MAX2 during the second combustion mode, additional fuel is injected so as to discharge NOx from the NOx absorber in the latter half of an expansion stroke or during an exhaust stroke.

Namely, referring to Fig. 43, a time period X represents a case where the load requirement L is lower than the first border X(N) and the first combustion mode is performed. At this time, the air-fuel ratio is slightly lean with respect to the stoichiometric air-fuel ratio. During the first combustion mode, the generation amount of NOx is very small. Accordingly, at this time, the absorption amount ΣNOx of NOx rises comparatively slowly. If the absorption amount ΣNOx of NOx has exceeded the maximum allowable value MAX1 during the first combustion mode, the air-fuel ratio A/F is made rich temporarily, whereby NOx is discharged from the NOx absorber. At this time, the absorption amount ΣNOx of NOx is set to zero.

As described previously, during the first combustion mode, no soot is generated regardless of whether the air-fuel ratio is lean, stoichiometric or rich. Therefore, even if the air-fuel ratio A./F is made rich during the first combustion mode so as to discharge NOx from the NOx absorber, no soot is generated at this time.

Then, if the load requirement L has exceeded the first border X(N) at a time point t1, a transition from the first combustion mode to the second combustion mode is made. As shown in Fig. 43, while the second combustion mode is performed, the air-fuel ratio A/F is comparatively lean. During the second combustion mode, the generation amount of NOx is larger than during the first combustion mode. Therefore, while the second combustion mode is performed, the amount ΣNOx of NOx rises relatively rapidly.

If the air-fuel ratio A/F is made rich during the second combustion mode, a large amount of soot is generated. For this reason, the air-fuel ratio cannot be made rich during the second combustion mode. Accordingly, as shown in Fig. 43, even if the absorption amount ΣNOx of NOx has exceeded the maximum allowable value MAX1 during the second combustion mode, the air-fuel ratio A/F is not made rich, so that NOx is not discharged from the NOx absorber. In this case, as at a time point t2, if the load requirement L has become lower than the second border Y(N) and a transition from the second combustion mode to the first combustion mode has been made, the air-fuel ratio A/F is temporarily made rich so as to discharge NOx from the NOx absorber.

Then, it is assumed that after a transition from the first combustion mode to the second combustion mode at a time point t3, the second combustion mode has continued for a while. At this time, if the absorption amount ΣNOx of NOx has exceeded the maximum allowable value MAX1 and then exceeded the maximum allowable value MAX2 at a time point t4, additional fuel is injected in the latter half of an expansion stroke or during an exhaust stroke so as to discharge NOx from the NOx absorber. The air-fuel ratio of the exhaust gas flowing into the NOx absorber is made rich.

The additional fuel injected in the latter half of the expansion stroke or during the exhaust stroke does not contribute to the generation of engine outputs. Accordingly, it is desirable to make the best possible effort to avoid injection of additional fuel. Hence, if the absorption amount ΣNOx of NOx has exceeded the maximum allowable value MAX1 during the second combustion mode, the air-fuel ratio is temporarily made rich at the time of a transition from the second combustion mode to the first combustion mode. Only in special cases where the absorption amount ΣNOx of NOx has exceeded the maximum allowable value MAX2, additional fuel is injected.

It will now be described with reference to Fig. 44, how to perform injection control for making rich the air-fuel ratio of the exhaust gas flowing into the NOx absorber so as to discharge NOx from the NOx absorber during the first combustion mode.

As shown in Fig. 44, in the case where the air-fuel ratio of the exhaust gas flowing into the NOx absorber is made rich during the first combustion mode, the air-fuel ratio is made rich by increasing an amount of fuel injection, with the opening degree of the throttle valve and the EGR rate remaining unchanged. In this case, according to a conventional method, when the air-fuel ratio $(A/F)_L$ should be changed into the target air-fuel ratio $(A/F)_R$, the injection amount is set to $[(A/F)_L/(A/F)_R] \times Q$. $(A/F)_L$ represents the lean air-fuel ratio that has been calculated from the map shown in Fig. 10 according to an operational state of the engine, and $(A/F)_R$ represents the target rich air-fuel ratio. In the case shown in Fig. 44, conventionally, the injection amount is set to $(17/12) \times Q$. fa represents injection amount, which is preliminarily stored in the ROM 42 as a function of load requirement L and engine speed N, in the form of a map shown in Fig. 45.

The following relationship is established among amount Ga of inlet air, fuel injection amount $Q_R$ and target rich air-fuel ratio $(A/F)_R$:

amount Ga of inlet air/fuel injection amount $Q_R$ = target rich air-fuel ratio$(A/F)_R$,
that is, fuel injection amount $Q_R$ = amount Ga of inlet air/target rich air-fuel ratio $(A/F)_R$.

Then, according to this embodiment, the fuel injection amount $Q_R$ is calculated using the above-mentioned formula, so that fuel is injected in an amount equal to the thus-calculated fuel injection amount $Q_R$. In this case, the air-fuel ratio exactly coincides with the target rich air-fuel ratio $(A/F)_R$.

Now, the relationship among amount Ga of inlet air, fuel injection amount $Q_R$ and target rich air-fuel ratio $(A/F)_R$ will be described in further detail.

The mass flowmeter 38 detects a mass flow rate of inlet air, for example, a mass flow rate (g/sec) of the air that is introduced into the mass flowmeter 38 per unit time. On the other hand, the fuel injection amount QR represents a volume of fuel corresponding to one injection cycle. Hence, assuming that the specific weight of fuel is C and the engine speed is N, the amount (g/sec) of fuel injected during one second is expressed according to a formula shown below.

$$C \times Q_R \times (N/60) \times (\text{number of cylinders}/2)$$

Thus, the relationship among amount Ga of inlet air, fuel injection amount $Q_R$ and target rich air-fuel ratio $(A/F)_R$ is as follows.

$$Ga/[C \times Q_R \times (N/60) \times (\text{number of cylinders}/2)] = (A/F)_R$$

Accordingly, a fuel injection amount QR is calculated according to a formula shown below.

$$Q_R = Ga/[C \times (N/60) \times (\text{number of cylinders}/2) \times (A/F)_R]$$

Fig. 46 shows a case where the air-fuel ratio is set to the target rich air-fuel ratio $(A/F)_R$ at the time of a transition from the second combustion mode to the first combustion mode. Also at this time, a fuel injection amount $Q_R$ is calculated based on the above-mentioned formula.

The time period for maintaining the air-fuel ratio at the target rich air-fuel ratio $(A/F)_R$ will now be described.

First of all, a fuel injection amount $Q_{ST}$ necessary for setting the air-fuel ratio to the stoichiometric air-fuel ratio $(A/F)_{ST}$ is calculated. Then, the aforementioned fuel injection amount $Q_{ST}$ is subtracted from the fuel injection amount $Q_R$ necessary for setting the air-fuel ratio to the target rich air-fuel ratio $(A/F)_R$, whereby an amount $\Delta Q$ (= $Q_R$ - $Q_{ST}$) of excessive fuel is calculated. The air-fuel ratio is maintained at the target rich air-fuel ratio $(A/F)_R$ until the cumulative value $\Sigma\Delta Q$ of the excessive amount of fuel becomes larger than a set value X1.

The set value X1 represents an amount of excessive fuel which is necessary for discharging all the NOx absorbed in the NOx absorber. Therefore, the set value X1 increases in proportion to an increase in absorption amount ΣNOx of NOx.

Fig. 47 shows a routine for processing an NOx discharge flag that is set when NOx should be discharged from the NOx absorber. This routine is carried out as an interruption processing at predetermined time intervals.

First of all, it is determined in step 800 whether or not a flag I indicating that the engine is in the first operational area I has been set. If the flag I has been set, the process proceeds to step 801, where an absorption amount A of NOx per unit time is calculated from the map shown in Fig. 36A. In step 802, the value of A is added to the absorption amount ΣNOx of NOx. It is determined in step 803 whether or not the absorption amount ΣNOx of NOx has exceeded the maximum allowable value MAX1. If ΣNOx > MAX1, the process proceeds to step 804, where an NOx discharge flag I indicating that NOx should be discharged during the first combustion mode is set.

On the other hand, if it is determined in step 800 that the flag I has been reset, namely, that the engine is in the second operational area II, the process proceeds to step 805, where an amount B of NOx absorbed per unit time is calculated from the map shown in Fig. 42B. In step 806, the value of B is added to the absorption amount ΣNOx of NOx. It is determined in step 807 whether or not the absorption amount ΣNOx of NOx has exceeded the maximum allowable value MAX1. If ΣNOx > MAX1, the process proceeds to step 808, where the NOx discharge flag I indicating that NOx should be discharged during the first combustion mode is set.

On the other hand, it is determined in step 809 whether or not the absorption amount ΣNOx of NOx has exceeded the maximum allowable value MAX2. If ΣNOx > MAX2, the process proceeds to step 810, where an NOx discharge flag II indicating that NOx should be discharged in the latter half of an expansion stroke or during an exhaust stroke is set.

The operational control will now be described with reference to Fig. 48.

First of all, it is determined in step 900 whether or not a flag I indicating that the engine is in the first operational area I has been set. If the flag I has been set, the process proceeds to step 901, where it is determined whether or not the load requirement L has become larger than the first border X1(N). If L ≤ X1(N), the process proceeds to step 903, where low-temperature combustion is performed.

Namely, in step 903, a target opening degree ST of the throttle valve 25 is calculated from the map shown in Fig. 43A, and the opening degree of the throttle valve 25 is set to the thus-calculated opening degree ST. In step 904, a target opening degree SE of the EGR control valve 29 is calculated from a map similar to that shown in Fig. 31B (a map with the axis of ordinate representing load requirement L), and the opening degree of the EGR control valve 29 is set to the thus-calculated target opening degree SE. It is determined in step 905 whether or not the NOx discharge flag I has been set. If the NOx discharge flag I has not been set, the process proceeds to step 906, where fuel injection is performed such that the air-fuel ratio shown in Fig. 10 is reached. At this time, low-temperature combustion is performed under a lean air-fuel ratio.

On the other hand, if it is determined in step 905 that the NOx discharge flag I has been set, the process proceeds to step 907, where injection control I shown in Fig. 44 is performed.

On the other hand, if it is determined in step 901 that L > X(N), the process proceeds to step 902, where the flag I is reset. The process then proceeds to step 910, where the second combustion mode is performed.

Namely, in step 910, a target opening degree ST of the throttle valve 25 is calculated from a map similar to that shown in Fig. 43A, and the opening degree of the throttle valve 25 is set to the thus-calculated target opening degree ST. Then in step 911, a target opening degree ST of the EGR control valve 29 is calculated from a map similar to that shown in Fig. 43B, and the opening degree of the EGR control valve 29 is set to the thus-calculated target opening degree ST. It is determined in step 812 whether or not the NOx discharge flag II has been set. If the NOx discharge flag II has not been set, the process proceeds to step 913, where fuel injection is performed such that the air-fuel ratio shown in a form similar to Fig. 17 (with the axis of ordinate representing load requirement L) is reached. At this time, the second combustion mode is performed under a lean air-fuel ratio.

On the other hand, if it is determined in step 912 that the NOx discharge flag II has been set, the process proceeds to step 914, where injection control II shown in Fig. 50 is performed.

The injection control I will now be described with reference to Fig. 49.

First of all, in step 1000, the mass flow rate Ga of inlet air detected by the mass flowmeter 38 is adopted. In step 1001, a fuel injection amount $Q_R$ for setting the air-fuel ratio to the target rich air-fuel ratio $(A/F)_R$ is calculated based on a formula shown below.

$$QR = Ga/[C \times (N/60) \times (\text{number of cylinders}/2) \times (A/F)_R]$$

Then in step 1002, the injection timing is retarded so as to prevent output torque of the engine from fluctuating upon a transition from a lean air-fuel ratio to a rich air-fuel ratio. In this embodiment, the retarded injection timing is preliminarily stored in the ROM 42 as a function of operational state of the engine, in the form of a map. In step 1002, an injection timing is calculated based on the map. In step 1003, a processing is performed so as to inject fuel of the amount $Q_R$ calculated in step 1001 at the injection timing calculated in step 1002. Thus, the lean air-fuel ratio is changed into the target rich air-fuel ratio $(A/F)_R$.

If an air-fuel ratio sensor is provided in the engine exhaust passage and feed back control is performed based on an output signal from the air-fuel ratio sensor such that the air-fuel ratio becomes the target air-fuel ratio $(A/F)_R$, it is possible to maintain the air-fuel ratio at the target air-fuel ratio $(A/F)_R$ when NOx should be discharged from the NOx absorber. However, in the case of such feed back control, the air-fuel ratio cannot exactly be adjusted to the target rich air-fuel ratio immediately after the transition from a lean air-fuel ratio to a rich air-fuel ratio.

On the contrary, according to this embodiment, based on a mass flow rate Ga of the inlet air introduced into an engine cylinder, an amount $Q_R$ of fuel injected into the cylinder is calculated. In other words, feed forward control is performed. Accordingly, the air-fuel ratio can be exactly adjusted to the target rich air-fuel ratio immediately after the transition from a lean air-fuel ratio to a rich air-fuel ratio.

In the steps following step 1004, processings are performed so as to maintain the air-fuel ratio at the target rich air-fuel ratio $(A/F)_R$ until all the NOx absorbed in the NOx absorber is discharged. That is, in step 904, a fuel injection amount $Q_{ST}$ which is necessary for setting the air-fuel ratio to the stoichiometric air-fuel ratio $(A/F)_{ST}$ is calculated based on a formula shown below.

$$Q_{ST} = Ga/[C \times (N/60) \times (\text{number of cylinders}/2) \times (A/F)_{ST}]$$

Then in step 1005, an amount $\Delta Q$ (= $Q_R$ - $Q_{ST}$) of excessive fuel is calculated. In step 1006, a cumulative value $\Sigma\Delta Q$ (= $\Sigma\Delta Q$ + $\Delta Q$) of the amount of excessive fuel is calculated. It is determined in step 1007 whether or not the cumulative value $\Sigma\Delta Q$ of the amount of excessive fuel has exceeded the set value X1. If $\Sigma\Delta Q > X1$, the process proceeds to step 1008, where the NOx discharge flag I is reset. Then in step 1009, the value of $\Sigma$NOx is set to zero. Then in step 910, the value of $\Sigma\Delta Q$ is set to zero.

The injection control II according to this embodiment will now be described with reference to Fig. 50.

First of all, in step 1100, a fuel injection amount Q is calculated. In step 1101, the mass flow rate Ga detected by the mass flowmeter 38 is adopted. In step 1102, a fuel injection amount $Q_R$ for setting the air-fuel ratio to the target rich air-fuel ratio $(A/F)_R$ is calculated based on a formula shown below.

$$Q_R = Ga/[C \times (N/60) \times (\text{number of cylinders}/2) \times (A/F)_R]$$

Then in step 1103, the fuel injection amount Q is subtracted from the fuel injection amount $Q_R$ which is necessary for setting the air-fuel ratio to the target rich air-fuel ratio $(A/F)_R$, an amount $Q_{add}$ (= $Q_R$ - Q) of additional fuel is calculated. In step 1104, fuel of the amount Q is injected in the vicinity of the compression top dead centre, and a processing is performed so as to inject additional fuel of the amount $Q_{add}$ in the latter half of an expansion stroke or during an exhaust stroke. At this time, the second combustion mode is performed under the lean air-fuel ratio shown in Fig. 17. The air-fuel ratio of the exhaust gas flowing into the NOx absorber due to the additional fuel is set to the target rich air-fuel ratio $(A/F)_R$.

In steps 1105 through 1107, processings similar to those in the aforementioned steps 1104 through 1006 are performed. Then, it is determined in step 1108 whether or not the cumulative value $\Sigma\Delta Q$ of the amount of excessive fuel has exceeded a set value X2 (> X1). If $\Sigma\Delta Q > X2$, the process proceeds to step 1109, where the NOx discharge flags I and II are reset. In step 1110, the value of $\Sigma$NOx is set to zero. In step 1111, the value of $\Sigma\Delta Q$ is set to zero.

Then, a fifth embodiment of the present invention will be described.

In this embodiment, based on outputs from the air-fuel ratio sensor 26 and 54, the maximum allowable values MAX1 and MAX2 used in processing the NOx discharge flag shown in Fig. 47 are changed and optimized. Namely, if the air-fuel ratio of the exhaust gas flowing into the NOx absorber is made rich so as to discharge NOx from the NOx absorber, the air-fuel ratio sensor detects that the air-fuel ratio of the exhaust gas is rich. Immediately thereafter, the NOx absorber performs functions of discharging and reducing NOx. Thus, the downstream air-fuel ratio sensor 54 indicates that the air-fuel ratio of the exhaust gas is not rich, namely, that the air-fuel ratio is stoichiometric. Thereafter, for a while, the downstream air-fuel ratio sensor 54 keeps indicating that the air-fuel ratio of the exhaust gas is not rich. Upon completion of the functions of discharging and reducing NOx in the NOx absorber, the downstream air-fuel ratio sensor 54 indicates that the air-fuel ratio is rich. The time period, which starts with a first output from the air-fuel ratio sensor 26 indicating that the air-fuel ratio of exhaust gas is rich and ends with a first output from the downstream air-fuel ratio sensor 54 indicating that the air-fuel ratio of exhaust gas is rich, corresponds to a time period during which NOx is discharged from the NOx absorber (hereinafter referred to as an NOx discharge continuation time period). This time period becomes longer as the amount of NOx absorbed in the NOx absorber increases. In other words, the NOx discharge continuation time period is a parameter indicative of an amount of the NOx that has been absorbed in the NOx absorber.

Further, the higher the average air-fuel ratio A/F of the exhaust gas flowing into the NOx absorber during the NOx discharge continuation time period becomes, the larger the amount of the hydrocarbon flowing into the NOx absorber becomes. Namely, as the aforementioned average air-fuel ratio A/F becomes higher, the amount of NOx reacting with hydrocarbon increases. Therefore, the average air-fuel ratio A/F of the exhaust gas flowing into the NOx absorber during the NOx discharge continuation time period is a parameter indicative of an amount of the NOx that has been absorbed in the NOx absorber.

Moreover, the larger the amount of the exhaust gas flowing into the NOx absorber during the NOx discharge continuation time period becomes, the larger the amount of the hydrocarbon flowing into the NOx absorber becomes. That is, as the aforementioned amount of the exhaust gas flowing into the NOx absorber increases, the amount of the NOx reacting with hydrocarbon increases. Thus, the amount of the exhaust gas flowing into the NOx absorber within the NOx discharge continuation time period is a parameter indicative of an amount of the NOx that has been absorbed in the NOx absorber. Hence, according to this embodiment, the maximum allowable values MAX1 and MAX2 are corrected based on the NOx discharge continuation time period, the average air-fuel ratio of the exhaust gas flowing into the NOx absorber during the NOx discharge continuation time period, and the amount of the exhaust gas flowing into the NOx absorber during the NOx discharge continuation time period. Therefore, each of the thus-corrected maximum allowable values MAX1 and MAX2 exactly indicates a largest possible amount of NOx that can currently be absorbed into the NOx absorber. In this embodiment, a correction factor J for correcting the maximum allowable values MAX1 and MAX2 of the NOx absorber to actual maximum allowable values is preliminarily stored in the ROM 42 as a function of NOx discharge continuation time period $\Delta t$, in the form of a map shown in Fig. 51. Also, a correction factor K is preliminarily stored in the ROM42 as a function of average air-fuel ratio A/F and amount AE of the exhaust gas flowing into the NOx absorber during the NOx discharge continuation time period, in the form of a map shown in Fig. 52. Using these correction factors, the maximum allowable values MAX1 and MAX2 of the NOx absorber are corrected. Consequently, when the actual maximum allowable value is smaller than a preliminarily set maximum allowable value, it is possible to prevent the NOx from flowing out without being absorbed into the NOx absorber. Further, when the actual maximum allowable value is larger than the preliminarily set maximum allowable value, it is possible to prevent the NOx from being discharged and reduced before the amount of the NOx absorbed in the NOx absorber exceeds the actual maximum allowable value. In other words, there is no need to frequently perform the processings for discharging and reducing NOx.

The air-fuel ratio sensor 26 and the mass flowmeter 38 detect respectively an average air-fuel ratio and an amount of the exhaust gas flowing into the NOx absorber. However, the air-fuel ratio of the exhaust gas may be estimated from an air-fuel ratio in the combustion chamber 5. Further, since the maximum allowable values change depending on a temperature of the NOx absorber, the NOx discharge continuation time period may be corrected using the temperature of the NOx absorber.

Fig. 54 is a flowchart showing how to control maximum allowable values of the NOx absorber.

First of all, it is determined in step 1200 whether or not a rich flag, which is to be set when the air-fuel ratio sensor 26 detects that the air-fuel ratio A/F of exhaust gas has become rich, has been set. If the rich flag has been set, the process proceeds to step 1201, where correction factors J and K are calculated from the maps shown in Figs. 20 and 21. Then in step 1202, the maximum allowable value MAX1 is corrected using the correction factors J and K. Then in step 1203, the maximum allowable value MAX2 is corrected using the correction factors J and K. Then in step 1204, the rich flag is set.

The operational control will now be described with reference to Fig. 54. The operational control according to this embodiment is substantially identical to the above-described one shown in Fig. 48. Hence, only the steps different from those shown in Fig. 48 will be explained.

In this embodiment, if it is determined in step 1305 that the NOx discharge flag I has been set, the process proceeds to step 1307, where injection control is performed so as to make rich the average air-fuel ratio in the combustion chamber 5. At this time, NOx is discharged from the NOx absorber. Then in step 307a, the absorption amount ΣNOx of NOx is set to zero.

On the other hand, if it is determined in step 1313 that the NOx discharge flag II has been set, the process proceeds to step 1314. In step 1314, fuel of the amount Q calculated from the map is injected and additional fuel is injected in the latter half of an expansion stroke of the engine or during an exhaust stroke of the engine, so as to achieve the air-fuel ratio shown in Fig. 17 (with the axis of ordinate representing load requirement L). Thereby, injection control is performed so as to make rich the air-fuel ratio of the exhaust gas flowing into the NOx absorber, and then, NOx is discharged from the NOx absorber. Then in step 1314a, the absorption amount ΣNOx of NOx is set to zero.

The rich flag may be set after steps 1307a and 1314a. In this case, the air-fuel ratio sensor 26 is dispensable.

When the air-fuel ratio of exhaust gas flowing into the NOx absorber needs to be made rich or stoichiometric, the air-fuel ratio of the exhaust gas may not become rich or stoichiometric due to factors such as a deterioration of the fuel injection valve 6. In this case, control should be performed so as to set the air-fuel ratio of the exhaust gas to a desirable value. Hence, according to this embodiment, unless the amount of the air-fuel ratio sensor 26 detects that the air-fuel ratio of exhaust gas is rich or stoichiometric when the amount of fuel injected from the fuel injection valve 6 is controlled so as to make the air-fuel ratio in the combustion chamber 5 rich or stoichiometric, a correction for increasing the fuel injection amount is made with a view to setting the air-fuel ratio in the exhaust gas to a desired value. In this manner, when the air-fuel ratio of the exhaust gas flowing into the NOx absorber needs to be made rich or stoichiometric, the air-fuel ratio of the exhaust gas can reliably be made rich or stoichiometric. The correction made at this time to increase the fuel injection amount is directly applied to the case of correcting a fuel injection amount when the air-fuel ratio is lean during the first combustion mode or the second combustion mode. In this case, desired air-fuel ratios can be attained in all the operational states of the engine.

In the case where the air-fuel ratio sensor 26 is dispensed with in the present invention, fuel injection amount is controlled using the downstream air-fuel ratio sensor 54. Namely, unless the downstream air-fuel ratio sensor 54 detects that the air-fuel ratio of exhaust gas is rich or stoichiometric even if a predetermined time period has elapsed after an operation of making the air-fuel ratio in the combustion chamber 5 rich or stoichiometric, a correction for increasing the fuel injection amount is made.

Fig. 55 is a routine of processings for correcting fuel injection amount when the air-fuel ratio of exhaust gas needs to be made rich or stoichiometric.

First of all, it is determined in step 1400 whether or not a rich flag, which is to be set in performing control so as to make the air-fuel ratio in the combustion chamber 5 rich (or stoichiometric), has been set. If the rich flag is set in step 1400, the process proceeds to step 1401, where it is determined whether or not the air-fuel ratio sensor 26 has detected that the air-fuel ratio of exhaust gas is rich (or stoichiometric). If it has not been detected that the air-fuel ratio of the exhaust gas is rich (or stoichiometric), the process proceeds to step 1402, where a correction is made so as to increase the fuel injection amount.

A sixth embodiment of the present invention will now be described.

In this embodiment, as can be seen from Fig. 56, if the absorption amount ΣNOx of NOx has exceeded the maximum allowable value MAX1 during the second combustion mode, as long as the load requirement L is lower than a third border Z(N) which is lower than the first border X(N), NOx is discharged from the NOx absorber. Hence, after a transition from the second combustion mode to the first combustion mode has once been made, the second combustion mode is restored. This control is performed only when the load requirement L is lower than the third border Z(N), in order to minimise torque fluctuations at the time of the transition from the second combustion mode to the first combustion mode. In other words, according to this embodiment, the third border Z(N) is set to a value close to the first border X(N) such that relatively minor torque fluctuations are caused at the time of a transition from the second combustion mode to the first combustion mode.

If the second combustion mode is forcibly switched to the first combustion mode, the fuel injection amount decreases immediately. However, the amount of air flowing into the combustion chamber 5 gradually decreases. Then, if the first combustion mode is switched to the second combustion mode, the thus-decreased fuel injection amount starts increasing immediately and reaches the original amount corresponding to the second combustion mode. However, at this time, after the amount of air flowing into the combustion chamber 5 has gradually decreased, it does not return to the original level immediately but increases step by step. Namely, during the second combustion mode, if the second combustion mode is once switched to the first combustion mode and then returned to the second combustion mode, the air-fuel ratio becomes temporarily rich and NOx is discharged from the NOx absorber.

By performing NOx control shown in Fig. 56, the air-fuel ratio A/F is made temporarily rich and NOx is discharged from the NOx absorber. At this time, the absorption amount ΣNOx of NOx is set to zero. As at the time point t2, if the load requirement L becomes lower than the second border Y(N), the second combustion mode is switched to the first combustion mode.

As at the time points t1 and t3, if the load requirement L exceeds the first border X(N) and the first combustion mode is switched to the second combustion mode, the fuel injection amount increases immediately in response to an increase in load requirement L. However, the amount of air flowing into the combustion chamber 5 does not increase immediately. Hence, also in this case, the air-fuel ratio becomes temporarily rich, NOx is discharged from the NOx absorber, and the absorption amount ΣNOx of NOx is set to zero. Accordingly, if the load requirement L changes, every time the first combustion mode is switched to the second combustion mode, NOx is discharged or reduced. Thus, the absorption amount ΣNOx of NOx seldom exceeds the maximum allowable value MAX2. When torque fluctuations are likely to be caused, for example, in the latter half of an expansion stroke or during an exhaust stroke, the injection of additional fuel is far from necessary.

The routine for processing the NOx discharge flag according to this embodiment is the same as that shown in Fig. 47.

The operational control will now be described with reference to Figs. 57 and 58.

In the flowchart shown in Fig. 57, the substantially same processings as shown in Fig. 54 are performed.

In this embodiment, if it is determined in step 1513 that the NOx discharge flag I has been set, the process proceeds to step 1515, which is shown in Fig. 58. It is determined in step 1515 whether or not the load requirement L is smaller than the third border Z(N). If $L < Z(N)$, the process proceeds to step 1516, where the combustion mode is switched. At this time, the air-fuel ratio is temporarily made rich, and the normal combustion is performed under the rich air-fuel ratio. Then in step 216a, the absorption amount ΣNOx of NOx is set to zero.

On the other hand, if L ≥ Z(N) in step 1515, the process proceeds to step 1517, where it is determined whether or not the NOx discharge flag II has been set. If it is determined that the NOx discharge flag II has been set, the process proceeds to step 1518, where fuel injection is carried out. Furthermore, additional fuel is injected in the latter half of an expansion stroke or during an exhaust stroke. Then in step 1518a, the absorption amount ΣNOx of NOx is set to zero.

If it is determined in step 1517 that the NOx discharge flag II has been set, the process proceeds to step 1519, where fuel injection is carried out.

In this embodiment, when the second combustion mode is switched to the first combustion mode, the air-fuel ratio is less inclined to the lean side. Therefore, the air-fuel ratio of the exhaust gas flowing into the NOx absorber is also less inclined to the lean side. In the case where the air-fuel ratio of the inflow exhaust gas thus changes in a direction opposite to the lean side, even if the air-fuel ratio of exhaust gas is not rich, there is a possibility of NOx being discharged from the NOx absorber. In this case, a sufficient amount of hydrocarbon for reducing and cleaning NOx may not be contained in the inflow exhaust gas. Without being cleaned, the NOx is discharged from the NOx absorber to the downstream side. Then, according to another embodiment which will be described below, NOx is prevented from being discharged from the NOx absorber to the downstream side upon switching of the second combustion mode to the first combustion mode.

That is, referring to Fig. 59, the second combustion mode is switched to the first combustion mode at the time points tx and t2. At this time, according to this embodiment, the air-fuel ratio in the combustion chamber 5 is constantly maintained on the rich side. It is determined according to an amount of NOx in the NOx absorber, to what extent the air-fuel ratio at this time should be inclined to the rich side. Thus, at the time of a transition from the second combustion mode to the first combustion mode, NOx is prevented from being discharged from the NOx absorber to the downstream side.

Fig. 60 is a flowchart of a subroutine according to this embodiment, which is performed in place of step 1506. If the NOx discharge flag I has been reset in step 1505, the process proceeds to step 1600 in Fig. 60. It is determined in step 1600 whether or not a switching flag, which is to be set during the second combustion mode, has been set. If the switching flag has been reset, the process proceeds to step 1603, where injection control II is performed. At this time, low-temperature combustion is performed under a lean air-fuel ratio. On the other hand, if the switching flag has been set, the process proceeds to step 1601, where injection control I is performed. Namely, fuel injection is carried out so as to make the air-fuel ratio rich. The process then proceeds to step 1602, where the switching flag is reset.

A seventh embodiment of the present invention will now be described.

Although fuel injection as shown in Fig. 44 is carried out in the aforementioned second embodiment of the present invention, fuel injection shown in Fig. 61 is carried out in this embodiment. If ΣNOx > MAX1 during the first combustion mode, when the amount of NOx absorbed in the NOx absorber reaches 30% of the maximum absorption amount of NOx, the air-fuel ratio is made rich. At this time, an amount $Q_{NOX}$ of reducing gas necessary for discharging all the NOx from the NOx absorber is preliminarily calculated. A time period tr for continuing to increase a fuel injection amount is expressed by a formula shown below, using the amount $Q_{NOX}$ of reducing gas.

$$tr = C \times Q_{NOX}/(\Delta Q \times N)$$

$$\Delta Q = [(A/F)_L/(A/F)_R]] \times Q - [(A/F)_L/(A/F)_{ST}]] \times Q$$

In the aforementioned formula, C represents a constant, N represents an engine speed, and $(A/F)_{ST}$ represents the stoichiometric air-fuel ratio. Namely, ΔQ represents an excessive amount of fuel. As the amount ΔQ of excessive fuel increases, the time period tr is shortened. Further, as the engine speed N becomes higher, the amount of excessive fuel that is supplied per unit time becomes larger. Hence, the time period tr is shortened. Thus, the time period tr for continuing to increase a fuel injection amount is expressed according to the above-mentioned formula.

On the other hand, as described already, if ΣNOx > MAX1 during the second combustion mode, when the second combustion mode is switched to the first combustion mode, the air-fuel ratio is made rich so as to discharge NOx from the NOx absorber. Fig. 19 shows changes in air-fuel ratio A/F in the case where an increase ΔQ in fuel injection amount and a time period tr for continuing to increase the fuel injection amount have been calculated.

More specifically, when the engine speed is, for example, No, if the load requirement L has become Lo which is lower than the second border Y(N) shown in Fig. 10, the air-fuel ratio A/F, the opening degree ST of the throttle valve and the opening degree SE of the EGR control valve are respectively set to values determined based on the load requirement Lo and the engine speed No. It is assumed that the target air-fuel ratio is $(A/F)_L$ at this time. Fig. 62 shows a case where an injection amount Q and a time period tr for continuing to increase the injection amount, which are necessary for setting the air-fuel ratio to the target air-fuel ratio $(A/F)_R$, have been calculated, using a formula shown below.

$$\text{injection amount} = [(A/F)_L/(A/F)_R] \times Q$$

$$tr = C \times Q_{NOX}/(\Delta Q \times N)$$

In this case, as shown in Fig. 62, the air-fuel ratio A/F does not start decreasing immediately. Only after a certain time period has elapsed since an increase in injection amount, the air-fuel ratio A/F becomes rich.

In other words, in the case where combustion is performed under a lean air-fuel ratio, an excessive amount of air is contained in the exhaust gas discharged from the engine. Therefore, at this time, an excessive amount of air is contained also in the EGR gas recirculated into the engine intake passage. The excessive amount of air contained in the EGR gas is again supplied to the combustion chamber 5. Thus, the excessive amount of air contained in the EGR gas affects the air-fuel ratio in the combustion chamber 5.

As shown in Fig. 61, in the case where NOx needs to be discharged from the NOx absorber during the first combustion mode, that is, in the case where the air-fuel ratio is not greatly inclined to the lean side immediately before starting to switch the air-fuel ratio so as to discharge NOx from the NOx absorber, the amount of excessive air contained in EGR gas is small. Accordingly, the excessive amount of oxygen in the EGR gas hardly affects the air-fuel ratio in the combustion chamber 5. Hence, in this case, if fuel injection amount is increased by an amount necessary for changing the lean air-fuel ratio into a predetermined rich air-fuel ratio, the air-fuel ratio of exhaust gas immediately reaches the predetermined rich air-fuel ratio.- Thus, NOx is immediately discharged from the NOx absorber.

On the contrary, in the case where NOx needs to be discharged from the NOx absorber at the time of a transition from the second combustion mode to the first combustion mode, that is, in the case where the air-fuel ratio is greatly inclined to the lean side immediately before starting to switch the air-fuel ratio so as to discharge NOx from the NOx absorber, the amount of excessive air contained in EGR gas is large. Accordingly, in this case, even if fuel injection amount has been increased by an amount necessary for changing the lean air-fuel ratio into a predetermined rich air-fuel ratio, the air-fuel ratio A/F does not reach the predetermined rich air-fuel ratio, as can be seen from Fig. 62. It takes a while until the air-fuel ratio A/F becomes rich.

Hatched areas in Figs. 61 and 62 represent amounts of reducing gas that is fed to the NOx absorber. The amount of reducing gas shown in Fig. 62 is much smaller than the amount of reducing gas shown in Fig. 61, which is necessary for discharging all the NOx from the NOx absorber.

In this embodiment, when the engine speed is, for example, No, if the load requirement becomes Lo, the second combustion mode is switched to the first combustion mode. At this time, when the air-fuel ratio is temporarily made rich so as to discharge NOx from the NOx absorber, the injection amount is increased more drastically than in the case shown in Fig. 63 where the engine speed is No and the load requirement is Lo during the first combustion mode, so that the substantially same amount of reducing gas as shown in the hatched area in Fig. 61 can be fed to the NOx absorber.

To be more specific, at the time of a transition from the second combustion mode to the first combustion mode, based on the ratio of the air-fuel ratio $(A/F)_L$ immediately before the switching operation of the air-fuel ratio to the target air-fuel ratio $(A/F)_R$, an injection amount is calculated according to a formula shown below.

$$\text{injection amount} = [(A/F)_L/(A/F)_R] \times Q$$

Then, the injection amount is gradually reduced so that the rich air-fuel ratio becomes as close as possible to the target air-fuel ratio $(A/F)_R$.

On the other hand, as described previously, if ΣNOx > MAX2 during the second combustion mode, additional fuel is injected in the latter half of an expansion stroke or during an exhaust stroke. At this time, the amount of additional fuel and the time period for injecting additional fuel are set such that reducing gas of an amount necessary for discharging all the NOx absorbed in the NOx absorber can be fed to the NOx absorber.

Fig. 64 shows a routine for processing an NOx discharge flag, which is to be set when NOx should be discharged from the NOx absorber. This routine is carried out as an interruption processing at predetermined time intervals.

The processings performed in steps 1700 through 1706 are identical to those in steps 800 through 806 in Fig. 47.

In this embodiment, if the absorption amount ΣNOx > MAX1 in step 1707, the process proceeds to step 1708, where an NOx discharge flag II indicating that NOx should be discharged at the time of a transition from the second combustion mode to the first combustion mode is set.

On the other hand, it is determined in step 1709 whether or not the absorption amount ΣNOx of NOx has exceeded the maximum allowable value MAX2. If ΣNOx > MAX2, the process proceeds to step 1710, where an NOx discharge flag III indicating that NOx should be discharged in the latter half of an expansion stroke or during an exhaust stroke is set.

The operational control will now be described with reference to Fig. 65.

First of all, it is determined in step 1800 whether or not a flag I indicating that the engine is in the first operational area I has been set. If the flag I has been set, that is, if the engine is in the first operational area I, the process proceeds to step 1801, where it is determined whether or not the load requirement L has become larger than the first border X1(N). If L ≤ X1(N), the process proceeds to step 1803, where low-temperature combustion is performed.

Then in step 1805, it is determined whether or not the NOx discharge flag I has been set. If the NOx discharge flag I has not been set, the process proceeds to step 1806, where it is determined whether or not the NOx discharge flag II has been set. If the NOx discharge flag II has not been set, the process proceeds to step 1807, where fuel injection is performed. At this time, the low-temperature combustion is performed under a lean air-fuel ratio.

If it is determined in step 1805 that the NOx discharge flag I has been set, the process proceeds to step 1808, where injection control I shown in Fig. 66 is performed. On the contrary, if it is determined in step 1806 that the NOx discharge flag II has been set, the process proceeds to step 1809, where injection control II shown in Fig. 67 is performed.

On the other hand, if it is determined in step 1801 that L > X(N), the process proceeds to step 1802, where the flag I is reset. The process then proceeds to step 1812, where the second combustion mode is performed.

Then, it is determined in step 1814 whether or not the NOx discharge flag III has been set. If the NOx discharge flag III has not been set, the process proceeds to step 1815, where fuel injection is carried out. At this time, the second combustion mode is performed under a lean air-fuel ratio.

If it is determined in step 1814 that the NOx discharge flag III has been set, the process proceeds to step 1814, where injection control III shown in Fig. 68 is performed.

The injection control I will now be described with reference to Fig. 66.

First of all, it is determined in step 1900 whether or not the rich flag has been set. If the rich flag has not been set, the process proceeds to step 1901, where an injection amount $Q_0$ is calculated based on a formula shown below.

$$Q0 = [(A/F)_L/(A/F)_R] \times Q$$

In step 1902, an amount ΔQ of excessive fuel is calculated based on a formula shown below.

$$\Delta Q = [(A/F)_L/(A/F)_R] \times Q - [(A/F)_L/(A/F)_{ST}] \times Q$$

In the above-mentioned formula, $(A/F)_{ST}$ represents the stoichiometric air-fuel ratio.

In step 1903, a time period tr for continuing to increase the injection amount is calculated based on a formula shown below.

$$tr = C \times Q_{NOX}/(\Delta Q \times N)$$

In the above-mentioned formula, $Q_{NOX}$ represents 30% of the maximum amount of NOx to be absorbed in the NOx absorber.

In step 1904, the rich flag is set. After the rich flag has been set, the process proceeds from step 1900 to step 1905, where it is determined whether or not a lapse time t after the start of the injection control I has exceeded the time period tr. If t > tr, the process proceeds to step 1906, where the rich flag is reset. Then in step 307, the NOx discharge flag I is reset. Then in step 1908, the value of ΣNOx is set to zero. Accordingly, if the NOx discharge flag I has been set, the injection amount is increased over the time period tr, as can be seen from Fig. 61. Meanwhile, all the NOx absorbed in the NOx absorber is discharged.

The injection control II will now be described with reference to Fig. 67.

It is determined in step 2000 whether or not the rich flag has been set. If the rich flag has not been set, the process proceeds to step 2001, where an injection amount $Q_0$ is calculated. In steps 2001 through 2004, processings similar to those in the aforementioned steps 1901 through 1904 are performed.

In step 2005, a constant injection amount $Q_b$ in the latter half of the operation of increasing the injection amount, which is shown in Fig. 63, is calculated based on a formula shown below.

$$Q_b = [(A/F)_L/(A/F)_R] \times Q$$

In the above-mentioned formula, $(A/F)_L$ represents a lean air-fuel ratio after the second combustion mode has been switched to the first combustion mode.

If the rich flag has been set, the process proceeds from step 2000 to step 2006, where a predetermined value $\alpha$ is subtracted from the injection amount $Q_0$. It is determined in step 2007 whether or not the injection amount $Q_0$ has become smaller than $Q_b$. If $Q_0 < Q_b$, the process proceeds to step 2008, where the value of $Q_b$ is set to $Q_0$.

Then, it is determined in step 2009 whether or not a lapse time t after the start of the injection control II has exceeded the time period tr. If t > tr, the process proceeds to step 2010, where the rich flag is reset. In step 2011, the NOx discharge flag II is reset. Then in step 2012, the value of ΣNOx is set to zero. Therefore, as can be seen from Fig. 63, if the NOx discharge flag has been set, the injection amount is increased abruptly, reduced gradually and then maintained at the constant injection amount $Q_b$, which is larger than an initial injection amount. While the injection amount is on the increase, all the NOx absorbed in the NOx absorber is discharged.

The injection control III will now be described with reference to Fig. 68.

First of all, in step 2100, an injection amount Q is calculated. It is determined in step 2101 whether or not the rich flag has been set. If the rich flag has not been set, the process proceeds to step 2102, where an injection amount $Q_{add}$ of additional fuel is calculated based on a formula shown below.

$$Q_{add} = [(A/F)_L/(A/F)_R] \times Q$$

In the following steps 2103 through 2105, processings similar to those in steps 1902 through 1904 are performed.

If the rich flag has been set, the process proceeds from step 2101 to step 2106, where it is determined whether or not a lapse time t after the start of the injection control III has exceeded the time period tr. If t > tr, the process proceeds to step 2107, where the rich flag is reset. Then in step 2108, the NOx discharge flag II and the NOx discharge flag III are reset. After that, in step 2109, the value of ΣNOx is set to zero. Accordingly, if the NOx discharge flag III has been set, additional fuel of the amount $Q_{add}$ is injected over the time period tr. Meanwhile, all the NOx absorbed in the NOx absorber is discharged.

The aforementioned injection control II may be performed as shown in Fig. 71 instead of Fig. 67.

For example, Fig. 69 shows a case where when the engine speed is No, the load requirement becomes Lo and the second combustion mode is switched to the first combustion mode. At this time, when the air-fuel ratio is temporarily made rich so as to discharge NOx from the NOx absorber, the time period tr for increasing the injection amount during the first combustion mode with the engine speed No and the load requirement Lo is increased by Δtr, so that the substantially same amount of reducing gas as shown in the hatched area in Fig. 61 can be fed to the NOx absorber.

The value of Δtr represents a time period required for the air-fuel ratio to reach a mean value between the target rich air-fuel ratio and the stoichiometric air-fuel ratio after a transition from the second combustion mode to the first combustion mode. As shown in Fig. 70, as the air-fuel ratio immediately before the switching operation thereof becomes inclined toward the lean side, the value Δtr becomes larger.

The injection control II will now be described with reference to Fig. 71. First of all, it is determined in step 2200 whether or not the rich flag has been set. If the rich flag has not been set, the process proceeds to step 2201. In steps 2201 through 2203, processings similar to those in steps 2001 through 2003 are performed.

Then in step 2204, an extended time period Δtr corresponding to the time period tr (hereinafter referred to simply as the continuation time period tr) for continuing the operation of increasing the injection amount is calculated according to the relationship shown in Fig. 70. In step 2205, by adding the extended time period Δtr to the continuation time period tr, an ultimate continuation time period tr is calculated. In step 2206, the rich flag is set.

If the rich flag has been set, the process proceeds from step 2200 to step 2207. In steps 2207 through 2210, processings similar to those in steps 2009 through 2012 are performed.

Further, the aforementioned injection control II may be replaced by another type of injection control II, which will be described hereinafter.

In this case, as shown in Fig. 72, after a transition from the second combustion mode to the first combustion mode, the first combustion mode is performed for a while. If the time period Δtr has elapsed after the start of the first combustion mode, the air-fuel ratio is made rich. The time period Δtr is substantially the same as that shown in Fig. 69. Accordingly, as the air-fuel ratio immediately before the switching operation thereof becomes inclined toward the lean side, the value Δtr shown in Fig. 72 also becomes larger.

The injection control II will now be described with reference to Fig. 73.

First of all, it is determined in step 2300 whether or not the rich flag has been set. If the rich flag has not been set, the process proceeds to step 2301, where a value of Δtr is calculated according to the relationship shown in Fig. 70. It is determined in step 2302 whether or not a lapse time t after the start of the injection control II has exceeded the time period Δtr. If $t \leq \Delta tr$, the process proceeds to step 2303, where an injection amount Q is calculated. At this time, the first combustion mode is performed.

If it is determined in step 2302 that $t > \Delta tr$, the process proceeds to step 2304. In steps 2204 through 2206, processings similar to those in steps 2201 through 2203 are performed. In step 2307, the rich flag is set.

If the rich flag has been set, the process proceeds from step 2300 to step 2308. In steps 2308 through 2311, processings similar to those in steps 2207 through 2210 are performed.

An eighth embodiment of the present invention will now be described.

In this embodiment, as shown in Fig. 74, there is provided a bypass passage 135, which couples the intake duct 13 upstream of the throttle valve 25 to the surge tank 12. Disposed in the bypass passage 135 is a bypass control valve 17, which is driven by a step motor 136.

First of all, the injection control I will be described with reference to Fig. 75, focusing on processings different from those shown in Fig. 49.

First of all, in step 2400, a fuel injection amount $Q_R$ for setting the air-fuel ratio to the target rich air-fuel ratio $(A/F)_R$ is calculated based on a formula shown below.

$$QR = [(A/F)_L/(A/F)_R] \times Q$$

In steps 2401 and 2402, processings similar to those shown in steps 1002 and 1003 are performed. Then in step 2403, an intake air control flag is set.

In step 2404, a fuel injection amount $Q_{ST}$ necessary for setting the air-fuel ratio to the stoichiometric air-fuel ratio is calculated based on a formula shown below.

$$Q_{ST} = [(A/F)_L/(A/F)_R] \times Q$$

In steps 2405 through 2410, processings similar to those in steps 1005 through 1010 are performed.

Fig. 76 is an interruption routine that is carried out, for example, every 2msec.

First of all, it is determined in step 2500 whether or not the intake air control flag has been set. If the intake air control flag has been set, the process proceeds to step 2501, where an amount $G_0$ of intake air necessary for setting the air-fuel ratio to the target rich air-fuel ratio $(A/F)_R$ is calculated based on a formula shown below.

$$G_0 = C \times Q \times (N/60) \times (\text{number of cylinders}/2) \times (A/F)_L$$

In step 2502, the mass flow rate Ga of intake air detected by the mass flowmeter 38 is adopted. It is determined in step 2503 whether or not the amount Ga of intake air is larger than the amount Go of intake air. If $Ga > G_0$, the target number of steps of the step motor 136 is decreased by 1, so as to reduce an opening degree of the bypass control valve 137. On the contrary, if $Ga \leq G_0$, the process proceeds to step 2505, where the target number of steps of the step motor 136 is increased by 1, so as to increase an opening degree of the bypass control valve 137. In this manner, control is performed such that the amount Ga of intake air becomes $G_0$.

Instead of controlling an opening degree of the bypass control valve 137, the opening degree of the throttle valve 25 may be controlled.

The injection control II will now be described with reference to Fig. 77.

First of all, as is the case with step 1100, a value of Q is calculated in step 2600. In step 2601, a value of $Q_R$ is calculated.

In step 2602, as is the case with the aforementioned step 1103, an amount $Q_{add}$ (= $Q_R$ - Q) of additional fuel is calculated. In step 2604, the intake air control flag is set.

In steps 2605 through 2611, processings similar to those in steps 1105 through 1111 are performed. Then, the intake air control flag is reset in step 1412.

First combustion and second combustion mode are selectively performed. During the first combustion mode, an amount of exhaust recirculation gas supplied to a combustion chamber (5) is larger than an amount of exhaust recirculation gas corresponding to a peak generation amount of soot, and soot is hardly generated. During the second combustion mode, an amount of exhaust recirculation gas supplied to the combustion chamber (5) is smaller than the amount of exhaust recirculation gas corresponding to the peak generation amount of soot. A concentration of oxygen contained in exhaust recirculation gas supplied to an engine intake passage (12, 13) is estimated. Based on the concentration of oxygen contained in the exhaust recirculation gas, at least one of an air-fuel ratio and an exhaust gas recirculation rate is adjusted to its target value.

## Claims

1. An internal combustion engine (1), comprising:

an exhaust recirculation gas passage (27) for supplying exhaust recirculation gas to a combustion chamber (5) via an engine intake passage (12, 13); and
oxygen concentration estimation means for estimating a concentration of oxygen (OEGR) contained in the exhaust recirculation gas supplied to said engine intake passage (12, 13),

**characterized by**
switching means for selectively switching between a first combustion mode and a second combustion mode, wherein, during the first combustion mode, an amount of exhaust recirculation gas supplied to the combustion chamber (5) is larger than an amount of exhaust recirculation gas corresponding to a peak generation amount of soot so that soot is hardly generated and wherein, during the second combustion mode, an amount of exhaust recirculation gas supplied to the combustion chamber (5) is smaller than the amount of exhaust recirculation gas corresponding to the peak generation amount of soot; and
control means (40) for adjusting at least one of an air-fuel ratio and an exhaust gas recirculation rate to its target value based on the oxygen concentration (OEGR) estimated by the oxygen concentration estimation means when said switching means switches between the first and second combustion mode.

2. The internal combustion engine (1) according to claim 1, **characterized in that** the oxygen concentration estimation means is adapted to detect a concentration of oxygen contained in exhaust gas in an engine exhaust passage (10, 21) and to estimate a concentration of oxygen in the exhaust recirculation gas based on the detected concentration of oxygen.

3. The internal combustion engine (1) according to claim 1, **characterized in:**

**that** the engine intake passage (12, 13) is provided with a throttle valve (25);
**that** a target opening degree of the throttle valve (25), which is necessary for setting an air-fuel ratio and an exhaust recirculation gas rate to their target values in accordance with a concentration of oxygen contained in the exhaust recirculation gas, is preliminarily stored; and
**that** an opening degree of the throttle valve (25) is adjustable to the target opening degree.

4. The internal combustion engine (1) according to claim 3, **characterized in:**

**that** the internal combustion engine (1) is provided with detection means for detecting an amount of intake air;
**that** a target amount of air, which is necessary for setting an air-fuel ratio and an exhaust gas recirculation rate to the target values in accordance with a concentration of oxygen contained in the exhaust recirculation gas, is preliminarily stored; and
**that** a target opening degree of the throttle valve (25) is correctable by said control means (40) such that the detected amount of intake air becomes the target amount of air.

5. The internal combustion engine (1) according to claim 1, **characterized in:**

**that** an exhaust gas recirculation control valve (29) is provided in an exhaust recirculation gas passage (27), which couples the engine exhaust passage (10, 21) to the engine intake passage (12, 13);

**that** a target opening degree of the exhaust gas recirculation control valve (29), which is necessary for setting an air-fuel ratio and an exhaust gas recirculation rate to the target values, is preliminarily stored; and
**that** an opening degree of the exhaust gas recirculation valve (29) is adapted to be adjusted to the target opening degree.

**6.** The internal combustion engine (1) according to claim 5, **characterized in:**

**that** the internal combustion engine (1) is provided with detection means for detecting an amount of exhaust recirculation gas;
**that** a target amount of exhaust recirculation gas, which is necessary for setting an air-fuel ratio and an exhaust gas recirculation rate to the target values, is preliminarily stored; and
**that** said exhaust gas recirculation control valve(29) is adapted to correct its target opening degree such that the amount of exhaust recirculation gas becomes the target amount of exhaust recirculation gas.

**7.** The internal combustion engine (1) according to claim 5, **characterized in:**

**that** the internal combustion engine (1) is provided with detection means for detecting a pressure in the engine intake passage (12, 13);
**that** a target pressure in the intake passage, which is necessary for setting an air-fuel ratio and an exhaust gas recirculation rate to the target values in accordance with a concentration of oxygen contained in the exhaust recirculation gas, is preliminarily stored; and
**that** said exhaust gas recirculation control valve (29) is adapted to correct its target opening degree such that the detected pressure in the intake passage becomes the target pressure.

**8.** The internal combustion engine (1) according to claim 5, **characterized in:**

**that** the internal combustion engine (1) is provided with detection means for detecting a pressure in the combustion chamber (5) at a predetermined crank angle during a compression stroke;
**that** a target pressure in the combustion chamber (5) at the crank angle, which is necessary for setting an air-fuel ratio and an exhaust gas recirculation rate to the target values in accordance with a concentration of oxygen contained in the exhaust recirculation gas, is preliminarily stored; and
**that** said exhaust gas recirculation control valve (29) is adapted to correct its target opening degree such that the detected pressure in the combustion chamber becomes the target pressure.

**9.** The internal combustion engine (1) according to claim 1, **characterized in:**

**that** the engine intake passage (12, 13) is provided with a throttle valve (25);
**that** a target opening degree of the throttle valve (25), which is necessary for setting an air-fuel ratio to the target value, is preliminarily stored;
**that** an opening degree of the throttle valve (25) is adapted to be adjusted to the target opening degree; and
**that** the target opening degree of the throttle valve is adapted to be corrected based on the estimated concentration of oxygen, such that the air-fuel ratio becomes a target air-fuel ratio.

**10.** The internal combustion engine (1) according to claim 9, **characterized in:**

**that** the internal combustion engine (1) is provided with calculation means for calculating a concentration of oxygen contained in burnt gas when combustion is performed under the target air-fuel ratio;
**that** the target opening degree of the throttle valve (25) is controlled to be corrected to be reduced if the estimated concentration of oxygen is higher than the concentration of oxygen contained in the burnt gas by said control means (40); and
**that** the target opening degree of the throttle valve (25) is controlled to be corrected to be increased if the estimated concentration of oxygen is lower than the concentration of oxygen contained in the burnt gas by said control means (40).

**11.** The internal combustion engine (1) according to claim 1, **characterized in:**

**that** an exhaust gas recirculation control valve (29) is provided in an exhaust recirculation gas passage (27), which couples the engine exhaust passage (10, 21) to the engine intake passage (12, 13);

**that** a target opening degree of the exhaust gas recirculation control valve (29), which is necessary for setting an air-fuel ratio to the target value, is preliminarily stored; and
**that** an opening degree of the exhaust gas recirculation control valve (29) is adapted to be adjusted to the target opening degree; and
**that** the target opening degree of the exhaust gas recirculation control valve (29) is adapted to be corrected based on an estimated concentration of oxygen contained in exhaust recirculation gas, such that the target opening degree of the exhaust gas recirculation control valve (29) becomes the target air-fuel ratio.

**12.** The internal combustion engine (1) according to claim 11, **characterized in:**

**that** the internal combustion engine (1) is provided with calculation means for calculating a concentration of oxygen contained in burnt gas when combustion is performed under the target air-fuel ratio;
**that** the target opening degree of the exhaust gas recirculation control valve (29) is adapted to be corrected to be reduced if the estimated concentration of oxygen is higher than the concentration of oxygen contained in the burnt gas; and
**that** the target opening degree of the exhaust gas recirculation control valve (29) is adapted to be corrected to be increased if the estimated concentration of oxygen is lower than the concentration of oxygen contained in the burnt gas.

**13.** The internal combustion engine (1) according to claim 1, **characterized by** comprising:

storage means (42) for storing a target opening degree of the throttle valve (25), which is necessary for making an amount of gas supplied to the combustion chamber (5) larger than an amount of inactive gas corresponding to a peak generation amount of soot and for setting the air-fuel ratio to a predetermined target air-fuel ratio;
detection means for detecting an air-fuel ratio; and
correction means for correcting a target opening degree of the throttle valve (25) such that the detected air-fuel ratio becomes the target air-fuel ratio.

**14.** The internal combustion engine (1) according to claim 13, **characterized in:**

**that** the correction means is adapted to detect a correction amount for the target opening degree of the throttle valve (25); and
**that** if there is a discrepancy between the detected air-fuel ratio and the target air-fuel ratio, the correction means gradually increases or decreases the correction amount so as to reduce the discrepancy.

**15.** The internal combustion engine (1) according to claim 14, **characterized in:**

**that** the internal combustion engine (1) is provided with learning value calculation means for calculating, based on the discrepancy, a learning value of the correction amount for the target opening degree of the throttle valve (25); and
**that** if the discrepancy exceeds a predetermined set value, the learning value is renewed such that the opening degree of the throttle valve. approaches the target opening degree.

**16.** The internal combustion engine (1) according to claim 15, **characterized in:**

**that** an operational area of the engine (1) during the first combustion mode is divided into a plurality of operational areas, the learning value being calculated separately for each of the operational areas; and
**that** an operational area of the engine (1) during the second combustion mode is divided into a plurality of operational areas, the learning value being calculated separately for each of the operational areas.

**17.** The internal combustion engine (1) according to claim 16, **characterized in that** renewal of the learning value is suspended until a predetermined time period elapses after a switching operation between the first combustion mode and the second combustion mode.

**18.** The internal combustion engine (1) according to claim 1, **characterized in:**

**that** the internal combustion engine (1) is provided with detection means for detecting an amount of intake air and an NOx absorber (22) disposed in the engine exhaust passage (10, 21);

**that** the internal combustion engine (1) is further provided with calculation means for calculating either a target fuel injection amount or a target intake air amount, which is necessary for setting an air-fuel ratio to a target rich air-fuel ratio that is obtained by dividing a detected intake air amount by an injection amount of fuel to be supplied (the target rich air-fuel ratio = the detected intake air amount/the injection amount of fuel to be supplied); and
**that** when NOx should be discharged from the NOx absorber (22), the fuel injection amount or the intake air amount are set to the target fuel injection amount or the target intake air amount respectively.

**19.** The internal combustion engine (1) according to claim 18, **characterized in that** the calculation means is adapted to calculate the target fuel injection amount by dividing the detected intake air amount by the target rich air-fuel ratio.

**20.** The internal combustion engine according to claim 18, **characterized in that** the calculation means is adapted to calculate the target intake air amount by multiplying the target rich air-fuel ratio by the injection amount of fuel to be supplied.

**21.** The internal combustion engine (1) according to claim 20, **characterized in:**

**that** the internal combustion engine (1) is further provided with determination means for determining whether or not NOx should be discharged from the NOx absorber (22); and
**that** if the determination means has determined that NOx should be discharged, the air-fuel ratio is set to the target rich air-fuel ratio during the first combustion mode.

**22.** The internal combustion engine (1) according to claim 21, **characterized in:**

**that** the internal combustion engine (1) is provided with estimation means for estimating an amount of NOx absorbed in the NOx absorber (22);
**that** if the estimated amount of NOx has exceeded a first maximum allowable value during the second combustion mode, the control means (40) are adapted to control that the air-fuel ratio is temporarily made rich at the time of a transition from the second combustion mode to the first combustion mode; and
**that** if the estimated amount of NOx has exceeded a second maximum allowable value which is larger than the first maximum allowable value during the second combustion mode, the control means (40) are adapted to control that additional fuel is injected in the latter half of an expansion stroke or during an exhaust stroke so as to make the air-fuel ratio of exhaust gas flowing into the NOx absorber (22) stoichiometric or rich.

**23.** The internal combustion engine (1) according to claim 1, **characterized in:**

**that** an NOx absorber (22) is disposed in the engine exhaust passage (10, 21);
**that** air-fuel ratio detection means for detecting an air-fuel ratio of exhaust gas is disposed in the engine exhaust passage (10, 21);
and
**that** unless the air-fuel ratio detection means detects a rich air-fuel ratio after or when the air-fuel ratio in the combustion chamber (5) is made rich so as to discharge NOx from the NOx absorber (22), the air-fuel ratio in the combustion chamber (5) is adapted to be corrected toward the rich side.

**24.** The internal combustion engine (1) according to claim 23, **characterized in:**

**that** the air-fuel ratio detection means is disposed in the engine exhaust passage downstream of the NOx absorber (22);
**that** the air-fuel ratio detection means is adapted to detect a time period which starts with setting of an air-fuel ratio in the combustion chamber (5) to a rich value and ends with detection of a rich air-fuel ratio by the air-fuel ratio detection means; and
**that** in proportion to a length of the time period, a timing for discharging NOx from the NOx absorber (22) is adapted to be retarded.

**25.** The internal combustion engine (1) according to claim 24, **characterized in that** before lapse of the time period, the timing for discharging NOx from the NOx absorber (22) is adapted to be retarded in proportion to an amount of exhaust gas flowing into the NOx absorber (22).

**26.** The internal combustion engine (1) according to claim 25, **characterized in that** before lapse of the time period, the timing for discharging NOx from the NOx absorber (22) is adapted to be retarded in proportion to a richness of an air-fuel ratio of exhaust gas flowing into the NOx absorber (22).

**Patentansprüche**

1. Verbrennungsmotor (1) mit
einem Abgasrückführkanal (27) zur Zuführung von rückgeführtem Abgas zu einer Verbrennungskammer (5) über einen Motoransaugkanal (12, 13) und
einer Sauerstoffkonzentrationsschätzeinrichtung zum Schätzen der Konzentration (OEGR) des im zum Motoransaugkanal (12, 13) rückgeführten Abgas enthaltenen Sauerstoffes,
**gekennzeichnet durch**
eine Schalteinrichtung zum wahlweisen Umschalten zwischen einem ersten Verbrennungsmodus und einem zweiten Verbrennungsmodus, wobei während des ersten Verbrennungsmodus die Menge des der Verbrennungskammer (5) zugeführten rückgeführten Abgases größer ist als die Menge des rückgeführten Abgases entsprechend einer Spitzenerzeugungsmenge von Ruß, so dass kaum Ruß erzeugt wird, und wobei während des zweiten Verbrennungsmodus die Menge des der Verbrennungskammer (5) zugeführten rückgeführten Abgases geringer ist als die Menge des rückgeführten Abgases entsprechend der Spitzenerzeugungsmenge von Ruß; und
eine Steuereinrichtung (40) zum Einstellen des Luft-Kraftstoff-Verhältnisses und/oder der Abgasrückführrate auf den entsprechenden Sollwert auf der Basis der von der Sauerstoffkonzentrationsschätzeinrichtung geschätzten Sauerstoffkonzentration (OEGR), wenn die Schalteinrichtung zwischen dem ersten und zweiten Verbrennungsmodus umschaltet.

2. Verbrennungsmotor (1) nach Anspruch 1, **dadurch gekennzeichnet, dass** die Sauerstoffkonzentrationsschätzeinrichtung die Konzentration des im Abgas in einem Auslasskanal (10, 21) des Motors enthaltenen Sauerstoffes detektieren und die Konzentration des im rückgeführten Abgas enthaltenen Sauerstoffes auf der Basis der detektierten Sauerstoffkonzentration schätzen kann.

3. Verbrennungsmotor (1) nach Anspruch 1, **dadurch gekennzeichnet, dass**
der Motoransaugkanal (12, 13) mit einer Drosselklappe (25) versehen ist,
der Sollöffnungsgrad der Drosselklappe (25), der zur Einstellung des Luft-Kraftstoff-Verhältnisses und der Abgasrückführrate auf ihre Sollwerte in Abhängigkeit von der Konzentration des im rückgeführten Abgas enthaltenen Sauerstoffes erforderlich ist, vorläufig gespeichert wird und
der Öffnungsgrad der Drosselklappe (25) auf den Sollöffnungsgrad einstellbar ist.

4. Verbrennungsmotor (1) nach Anspruch 3, **dadurch gekennzeichnet, dass**
der Verbrennungsmotor (1) mit einer Detektionseinrichtung zum Detektieren der Ansaugluftmenge versehen ist,
die Sollluftmenge, die zur Einstellung des Luft-Kraftstoff-Verhältnisses und der Abgasrückführrate auf die Sollwerte in Abhängigkeit von der Konzentration des im rückgeführten Abgas enthaltenen Sauerstoffes erforderlich ist, vorläufig gespeichert wird und
der Sollöffnungsgrad der Drosselklappe (25) von der Steuereinrichtung (40) so korrigierbar ist, dass die detektierte Ansaugluftmenge zur Sollansaugluftmenge wird.

5. Verbrennungsmotor (1) nach Anspruch 1, **dadurch gekennzeichnet, dass**
ein Abgasrückführsteuerventil (29) in einem Abgasrückführkanal (27) vorgesehen ist, der den Motorauslasskanal (10, 21) mit dem Motoransaugkanal (12, 13) verbindet,
der Sollöffnungsgrad des Abgasrückführsteuerventils (29), der zur Einstellung des Luft-Kraftstoff-Verhältnisses und der Abgasrückführrate auf die Sollwerte erforderlich ist, vorläufig gespeichert wird und
der Öffnungsgrad des Abgasrückführsteuerventils (29) auf den Sollöffnungsgrad einstellbar ist.

6. Verbrennungsmotor (1) nach Anspruch 5, **dadurch gekennzeichnet, dass**
der Verbrennungsmotor (1) mit einer Detetkionseinrichtung zum Detektieren der Menge des rückgeführten Abgases versehen ist,
die Sollmenge des rückgeführten Abgases, die zum Einstellen des Luft-Kraftstoff-Verhältnisses und der Abgasrückführrate auf die Sollwerte erforderlich ist, vorläufig gespeichert wird und
das Abgasrückführsteuerventil (29) seinen Sollöffnungsgrad so steuern kann, dass die Menge des rückgeführten Abgases zur Sollmenge des rückgeführten Abgases wird.

7. Verbrennungsmotor (1) nach Anspruch 5, **dadurch gekennzeichnet, dass** der Verbrennungsmotor (1) mit einer Detektionseinrichtung zum Detektieren des Drucks im Motoransaugkanal (12, 13) versehen ist, der Solldruck im Ansaugkanal, der zur Einstellung des Luft-Kraftstoff-Verhältnisses und der Abgasrückführrate auf die Sollwerte in Abhängigkeit von der Konzentration des im rückgeführten Abgas enthaltenen Sauerstoffes erforderlich ist, vorläufig gespeichert wird und das Abgasrückführsteuerventil (29) seinen Sollöffnungsgrad so korrigieren kann, dass der detektierte Druck im Ansaugkanal zum Solldruck wird.

8. Verbrennungsmotor (1) nach Anspruch 5, **dadurch gekennzeichnet, dass** der Verbrennungsmotor (1) mit einer Detektionseinrichtung zum Detektieren des Drucks in der Verbrennungskammer (5) bei einem vorgegebenen Kurbelwinkel während eines Kompressionshubes versehen ist, der Solldruck in der Verbrennungskammer (5) bei dem Kurbelwinkel, der zur Einstellung des Luft-Kraftstoff-Verhältnisses und der Abgasrückführrate auf ihre Sollwerte in Abhängigkeit von der Konzentration des im rückgeführten Abgas enthaltenen Sauerstoffes erforderlich ist, vorläufig gespeichert wird und das Abgasrückführsteuerventil (29) seinen Sollöffnungsgrad so korrigieren kann, dass der detektierte Druck in der Verbrennungskammer zum Solldruck wird.

9. Verbrennungsmotor (1) nach Anspruch 1, **dadurch gekennzeichnet, dass** der Motoransaugkanal (12, 13) mit einer Drosselklappe (25) versehen ist, der Sollöffnungsgrad der Drosselklappe (25), der zur Einstellung des Luft-Kraftstoff-Verhältnisses auf den Sollwert erforderlich ist, vorläufig gespeichert wird, der Öffnungsgrad der Drosselklappe (25) auf den Sollöffnungsgrad einstellbar ist und der Sollöffnungsgrad der Drosselklappe auf Basis der geschätzten Sauerstoffkonzentration so korrigiert werden kann, dass das Luft-Kraftstoff-Verhältnis zum Soll-Luft-Kraftstoff-Verhältnis wird.

10. Verbrennungsmotor (1) nach Anspruch 9, **dadurch gekennzeichnet, dass** der Verbrennungsmotor (1) mit einer Berechnungseinrichtung zum Berechnen der Konzentration des im verbrannten Gas enthaltenen Sauerstoffes, wenn die Verbrennung bei dem Soll-Luft-Kraftstoff-Verhältnis durchgeführt wird, versehen ist, der Sollöffnungsgrad der Drosselklappe (25) so von der Steuereinrichtung (40) gesteuert wird, dass er korrigiert wird, um verringert zu werden, wenn die geschätzte Sauerstoffkonzentration höher ist als die Konzentration des im verbrannten Gas enthaltenen Sauerstoffes und der Sollöffnungsgrad der Drosselklappe (25) von der Steuereinrichtung (40) so gesteuert wird, dass er korrigiert wird, um erhöht zu werden, wenn die geschätzte Sauerstoffkonzentration geringer ist als die Konzentration des im verbrannten Gas enthaltenen Sauerstoffes.

11. Verbrennungsmotor (1) nach Anspruch 1, **dadurch gekennzeichnet, dass** ein Abgasrückführsteuerventil (29) in einem Abgasrückführkanal (27) vorgesehen ist, der den Motorauslasskanal (10, 21) mit dem Motoransaugkanal (12, 13) verbindet, der Sollöffnungsgrad des Abgasrückführsteuerventils (29), der zum Einstellen des Luft-Kraftstoff-Verhältnisses auf den Sollwert erforderlich ist, vorläufig gespeichert wird, der Öffnungsgrad des Abgasrückführsteuerventils (29) auf den Sollöffnungsgrad eingestellt werden kann und der Sollöffnungsgrad des Abgasrückführsteuerventils (29) auf der Basis der geschätzten Konzentration des im rückgeführten Abgas enthaltenen Sauerstoffes so korrigiert werden kann, dass der Sollöffnungsgrad des Abgasrückführsteuerventils (29) dem Soll-Luft-Kraftstoff-Verhältnis entspricht.

12. Verbrennungsmotor (1) nach Anspruch 11, **dadurch gekennzeichnet, dass** der Verbrennungsmotor (1) mit einer Berechnungseinrichtung zum Berechnen der Konzentration des im verbrannten Gas enthaltenen Sauerstoffes, wenn die Verbrennung beim Soll-Luft-Kraftstoff-Verhältnis durchgeführt wird, versehen ist, der Sollöffnungsgrad des Abgasrückführsteuerventils (29) korrigiert werden kann, um verringert zu werden, wenn die geschätzte Sauerstoffkonzentration höher ist als die Konzentration des im verbrannten Gas enthaltenen Sauerstoffes und der Sollöffnungsgrad des Abgasrückführsteuerventils (29) korrigiert werden kann, um erhöht zu werden, wenn die geschätzte Sauerstoffkonzentration geringer ist als die Konzentration des im verbrannten Gas enthaltenen Sauerstoffes.

**13.** Verbrennungsmotor (1) nach Anspruch 1, **dadurch gekennzeichnet, dass** er umfasst:

eine Speichereinrichtung (42) zum Speichern des Sollöffnungsgrades der Drosselklappe (25), der erforderlich ist, um die Menge des der Verbrennungskammer (5) zugeführten Gases größer zu machen als die Menge eines inaktiven Gases entsprechend einer Spitzenerzeugungsmenge von Ruß und um das Luft-Kraftstoff-Verhältnis auf ein vorgegebenes Soll-Luft-Kraftstoff-Verhältnis einzustellen,
eine Detektionseinrichtung zum Detektieren des Luft-Kraftstoff-Verhältnisses und
eine Korrektureinrichtung zum Korrigieren des Sollöffnungsgrades der Drosselklappe (25) derart, dass das detektierte Luft-Kraftstoff-Verhältnis zum Soll-Luft-Kraftstoff-Verhältnis wird.

**14.** Verbrennungsmotor (1) nach Anspruch 13, **dadurch gekennzeichnet, dass**
die Korrektureinrichtung eine Korrekturgröße für den Sollöffnungsgrad der Drosselklappe (25) detektieren kann und, wenn eine Diskrepanz zwischen dem detektierten Luft-Kraftstoff-Verhältnis und dem Soll-Luft-Kraftstoff-Verhältnis vorhanden ist, die Korrektureinrichtung allmählich die Korrekturgröße erhöht oder erniedrigt, um die Diskrepanz zu verringern.

**15.** Verbrennungsmotor (1) nach Anspruch 14, **dadurch gekennzeichnet, dass**
der Verbrennungsmotor (1) mit einer Lernwertberechnungseinrichtung zum Berechnen eines Lernwertes der Korrekturgröße für den Sollöffnungsgrad der Drosselklappe (25) auf der Basis dieser Diskrepanz versehen ist und, wenn die Diskrepanz einen vorgegebenen eingestellten Wert übersteigt, der Lernwert so erneuert wird, dass der Öffnungsgrad der Drosselklappe sich dem Sollöffnungsgrad annähert.

**16.** Verbrennungsmotor (1) nach Anspruch 15, **dadurch gekennzeichnet, dass**
der Betriebsbereich des Motors (1) während des ersten Verbrennungsmodus in eine Vielzahl von Betriebsbereichen aufgeteilt ist, wobei der Lernwert separat für jeden Betriebsbereich berechnet wird, und
der Betriebsbereich des Motors (1) während des zweiten Verbrennungsmodus in eine Vielzahl von Betriebsbereichen aufgeteilt ist, wobei der Lernwert separat für jeden Betriebsbereich berechnet wird.

**17.** Verbrennungsmotor (1) nach Anspruch 16, **dadurch gekennzeichnet, dass** die Erneuerung des Lernwertes ausgesetzt wird, bis eine vorgegebene Zeitdauer nach einem Umschaltvorgang zwischen dem ersten Verbrennungsmodus und dem zweiten Verbrennungsmodus abgelaufen ist.

**18.** Verbrennungsmotor (1) nach Anspruch 1, **dadurch gekennzeichnet, dass**
der Verbrennungsmotor (1) mit einer Detektionseinrichtung zum Detektieren der Ansaugluftmenge und einem NOx-Absorber (22), der im Motorauslasskanal (10, 21) angeordnet ist, versehen ist,
der Verbrennungsmotor (1) des weiteren mit einer Berechnungseinrichtung zum Berechnen entweder einer Sollkraftstoffeinspritzmenge oder einer Sollansaugluftmenge versehen ist, die erforderlich ist, um das Luft-Kraftstoff-Verhältnis auf ein fettes Soll-Luft-Kraftstoff-Verhältnis einzustellen, das erhalten wird, indem die detektierte Ansaugluftmenge durch die Kraftstoffeinspritzmenge geteilt wird, die zuzuführen ist (fettes Soll-Luft-Kraftstoff-Verhältnis = detektierte Ansaugluftmenge/zuzuführende Kraftstoffeinspritzmenge), und
die Kraftstoffeinspritzmenge oder die Ansaugluftmenge auf die Sollkraftstoffeinspritzmenge oder die Sollansaugluftmenge eingestellt wird, wenn NOx vom NOx-Absorber (22) abgegeben werden soll.

**19.** Verbrennungsmotor (1) nach Anspruch 18, **dadurch gekennzeichnet, dass** die Berechnungseinrichtung die Sollkraftstoffeinspritzmenge berechnen kann, indem sie die detektierte Ansaugluftmenge durch das fette Soll-Luft-Kraftstoff-Verhältnis teilt.

**20.** Verbrennungsmotor nach Anspruch 18, **dadurch gekennzeichnet, dass** die Berechnungseinrichtung die Sollansaugluftmenge berechnen kann, indem sie das fette Soll-Luft-Kraftstoff-Verhältnis durch die Einspritzmenge des zuzuführenden Kraftstoffes teilt.

**21.** Verbrennungsmotor (1) nach Anspruch 20, **dadurch gekennzeichnet, dass**
der Verbrennungsmotor (1) des weiteren mit einer Ermittlungseinrichtung versehen ist, um zu ermitteln, ob NOx vom NOx-Absorber (22) abgegeben werden soll oder nicht, und
das Luft-Kraftstoff-Verhältnis auf das fette Soll-Luft-Kraftstoff-Verhältnis während des ersten Verbrennungsmodus eingestellt wird, wenn die Ermittlungseinrichtung ermittelt hat, dass NOx abgegeben werden soll.

**22.** Verbrennungsmotor (1) nach Anspruch 21, **dadurch gekennzeichnet, dass**

der Verbrennungsmotor (1) mit einer Schätzeinrichtung zum Schätzen der im NOx-Absorber (22) absorbierten Menge an NOx versehen ist,
die Steuereinrichtung (40) eine derartige Steuerung durchführen kann, dass das Luft-Kraftstoff-Verhältnis zeitweise zum Zeitpunkt des Überganges vom zweiten Verbrennungsmodus zum ersten Verbrennungsmodus fett gemacht wird, wenn die geschätzte Menge an NOx einen ersten zulässigen Maximalwert während des zweiten Verbrennungsmodus überschritten hat, und
die Steuereinrichtung (40) eine derartige Steuerung durchführen kann, dass zusätzlicher Kraftstoff während der letzten Hälfte eines Expansionshubes oder während eines Ausstoßhubes eingespritzt wird, um das Luft-Kraftstoff-Verhältnis des in den NOx-Absorber (22) strömenden Abgases auf einen stöchiometrischen Wert zu bringen oder fett zu machen, wenn die geschätzte Menge an NOx einen zweiten zulässigen Maximalwert überschritten hat, der größer ist als der erste zulässige Maximalwert während des zweiten Verbrennungsmodus.

**23.** Verbrennungsmotor (1) nach Anspruch 1, **dadurch gekennzeichnet, dass**
ein NOx-Absorber (22) im Motorauslasskanal (10, 21) angeordnet ist,
eine Luft-Kraftstoff-Verhältnis-Detektionseinrichtung zum Detektieren des Luft-Kraftstoff-Verhältnisses des Abgases im Motorauslasskanal (10, 21) angeordnet ist und
das Luft-Kraftstoff-Verhältnis in der Verbrennungskammer (5) zur fetten Seite hin korrigiert werden kann, wenn nicht die Luft-Kraftstoff-Verhältnis-Detektionseinrichtung ein fettes Luft-Kraftstoff-Verhältnis detektiert oder das Luft-Kraftstoff-Verhältnis in der Verbrennungskammer (5) fett gemacht wird, um NOx vom NOx-Absorber (22) abzugeben.

**24.** Verbrennungsmotor (1) nach Anspruch 23, **dadurch gekennzeichnet, dass**
die Luft-Kraftstoff-Verhältnis-Detektionseinrichtung im Motorauslasskanal abstromseitig des NOx-Absorbers (22) angeordnet ist,
die Luft-Kraftstoff-Verhältnis-Detektionseinrichtung eine Zeitdauer detektieren kann, die mit der Einstellung des Luft-Kraftstoff-Verhältnisses in der Verbrennungskammer (5) auf einen fetten Wert beginnt und mit der Detektion eines fetten Luft-Kraftstoff-Verhältnisses durch die Luft-Kraftstoff-Verhältnis-Detektionseinrichtung endet, und proportional zur Länge der Zeitdauer das Timing zum Abgeben von NOx vom NOx-Absorber (22) verzögert werden kann.

**25.** Verbrennungsmotor (1) nach Anspruch 24, **dadurch gekennzeichnet, dass** vor einem Ablauf der Zeitdauer das Timing zum Abgeben von NOx vom NOx-Absorber (22) proportional zur Menge des in den NOx-Absorber (22) strömenden Abgases verzögert werden kann.

**26.** Verbrennungsmotor (1) nach Anspruch 25, **dadurch gekennzeichnet, dass** vor dem Ablauf der Zeitdauer das Timing zum Abgeben von NOx vom NOx-Absorber (22) proportional zur Fettheit des Luft-Kraftstoff-Verhältnisses des in den NOx-Absorber (22) strömenden Abgases verzögert werden kann.

## Revendications

**1.** Moteur à combustion interne (1), comprenant :

un passage de recirculation des gaz d'échappement (27) pour délivrer des gaz d'échappement remis à circuler à une chambre de combustion (5) via un passage d'admission du moteur (12, 13) ; et
un moyen d'estimation de concentration d'oxygène pour estimer une concentration d'oxygène (OEGR) contenue dans les gaz d'échappement remis à circuler délivrés au dit passage d'admission du moteur (12, 13),

**caractérisé par**
un moyen de commutation pour commuter sélectivement entre un premier mode de combustion et un second mode de combustion, dans lequel, pendant le premier mode de combustion, une quantité des gaz d'échappement remis à circuler délivrée à la chambre de combustion (5) est plus grande qu'une quantité des gaz d'échappement remis à circuler correspondant à une quantité de génération crête de suie de sorte que la suie est difficilement générée et dans lequel, pendant le second mode de combustion, une quantité des gaz d'échappement remis à circuler délivrée à la chambre de combustion (5) est plus petite que la quantité des gaz d'échappement remis à circuler correspondant à la quantité de génération crête de la suie ; et
un moyen de commande (40) pour ajuster au moins un d'un rapport air-carburant et d'un taux de recirculation des gaz d'échappement à sa valeur cible sur la base de la concentration d'oxygène (OEGR) estimée par le moyen d'estimation de concentration d'oxygène lorsque ledit moyen de commutation commute entre les premier et second modes de combustion ;

**2.** Moteur à combustion interne (1) selon la revendication 1, **caractérisé en ce que** le moyen d'estimation de concentration d'oxygène est adapté pour détecter une concentration d'oxygène contenue dans les gaz d'échappement dans un passage d'échappement du moteur (10, 21) et pour estimer une concentration d'oxygène dans les gaz d'échappement remis à circuler sur la base de la concentration détectée d'oxygène.

**3.** Moteur à combustion interne (1) selon la revendication 1, **caractérisé en ce que :**

le passage d'admission du moteur (12, 13) est muni d'une soupape d'étranglement (25) ;
un degré d'ouverture cible de la soupape d'étranglement (25), qui est nécessaire pour établir un rapport air-carburant et un taux des gaz d'échappement remis à circuler à leurs valeurs cible en conformité avec une concentration d'oxygène contenue dans les gaz d'échappement remis à circuler, est mémorisé préliminairement ; et
un degré d'ouverture de la soupape d'étranglement (25) est ajustable au degré d'ouverture cible.

**4.** Moteur à combustion interne (1) selon la revendication 3, **caractérisé en ce que :**

le moteur à combustion interne (1) est muni d'un moyen de détection pour détecter une quantité d'air d'admission ;
une quantité cible d'air, qui est nécessaire pour établir un rapport air-carburant et un taux de recirculation des gaz d'échappement aux valeurs cible en conformité avec une concentration d'oxygène contenue dans les gaz d'échappement remis à circuler est mémorisée préliminairement ; et
un degré d'ouverture cible de la soupape d'étranglement (25) peut être corrigé par ledit moyen de commande (40) de sorte que la quantité détectée d'air d'admission devient la quantité cible d'air.

**5.** Moteur à combustion interne (1) selon la revendication 1, **caractérisé en ce que :**

une soupape de commande de recirculation des gaz d'échappement (29) est prévue dans un passage des gaz d'échappement remis à circuler (27), qui couple le passage d'échappement du moteur (10, 21) au passage d'admission du moteur (12, 13) ;
un degré d'ouverture cible de la soupape de commande de recirculation des gaz d'échappement (29), qui est nécessaire pour établir un rapport air-carburant et un taux de recirculation des gaz d'échappement aux valeurs cible, est mémorisé préliminairement ; et
un degré d'ouverture de la soupape de recirculation des gaz d'échappement (29) est adapté pour être ajusté au degré d'ouverture cible.

**6.** Moteur à combustion interne (1) selon la revendication 5, **caractérisé en ce que** :

le moteur à combustion interne (1) est muni d'un moyen de détection pour la détection d'une quantité des gaz d'échappement remis à circuler ;
une quantité cible des gaz d'échappement remis à circuler, qui est nécessaire pour établir un rapport air-carburant et un taux de recirculation des gaz d'échappement aux valeurs cible, est mémorisée préliminairement ; et
ladite soupape de commande de recirculation des gaz d'échappement (29) est adaptée pour corriger son degré d'ouverture cible de sorte que la quantité des gaz d'échappement remis à circuler devient la quantité cible des gaz d'échappement remis à circuler.

**7.** Moteur à combustion interne (1) selon la revendication 5, **caractérisé en ce que** :

le moteur à combustion interne (1) est muni d'un moyen de détection pour détecter une pression dans le passage d'admission du moteur (12, 13) ;
une pression cible dans le passage d'admission, qui est nécessaire pour établir un rapport air-carburant et un taux de recirculation des gaz d'échappement aux valeurs cible en conformité avec une concentration d'oxygène contenue dans les gaz d'échappement remis à circuler, est mémorisée préliminairement ; et
ladite soupape de commande de recirculation des gaz d'échappement (29) est adaptée pour corriger son degré d'ouverture cible de sorte que la pression détectée dans le passage d'admission devient la pression cible.

**8.** Moteur à combustion interne (1) selon la revendication 5, **caractérisé en ce que :**

le moteur à combustion interne (1) est muni d'un moyen de détection pour détecter une pression dans la chambre de combustion (5) à un angle de vilebrequin prédéterminé pendant un temps de compression ;

une pression cible dans la chambre de combustion (5) à l'angle de vilebrequin, qui est nécessaire pour établir un rapport air-carburant et un taux de recirculation des gaz d'échappement aux valeurs cible en conformité avec une concentration d'oxygène contenue dans les gaz d'échappement remis à circuler, est mémorisée préliminairement ; et
ladite soupape de commande de recirculation des gaz d'échappement (29) est adaptée pour corriger son degré d'ouverture cible de sorte que la pression détectée dans la chambre de combustion devient la pression cible.

**9.** Moteur à combustion interne (1) selon la revendication 1, **caractérisé en ce que** :

le passage d'admission du moteur (12, 13) est muni d'une soupape d'étranglement (25) ;
un degré d'ouverture cible de la soupape d'étranglement (25), qui est nécessaire pour établir un rapport air-carburant à la valeur cible, est mémorisé préliminairement ;
un degré d'ouverture de la soupape d'étranglement (25) est adapté pour être ajusté au degré d'ouverture cible ; et
le degré d'ouverture cible de la soupape d'étranglement est adapté pour être corrigé sur la base de la concentration estimée d'oxygène, de sorte que le rapport air-carburant devient un rapport air-carburant cible.

**10.** Moteur à combustion interne (1) selon la revendication 9, **caractérisé en ce que** :

le moteur à combustion interne (1) est muni d'un moyen de calcul pour calculer une concentration en oxygène contenue dans les gaz brûlés lorsque la combustion est effectuée sous le rapport air-carburant cible ;
le degré d'ouverture cible de la soupape d'étranglement (25) est commandé pour être corrigé pour être réduit si la concentration estimée d'oxygène est plus élevée que la concentration d'oxygène contenue dans les gaz brûlés par ledit moyen de commande (40) ; et
le degré d'ouverture cible de la soupape d'étranglement (25) est commandé pour être corrigé pour être accru si la concentration estimée d'oxygène est inférieure à la concentration d'oxygène contenue dans les gaz brûlés par ledit moyen de commande (40).

**11.** Moteur à combustion interne (1) selon la revendication 1, **caractérisé en ce que** :

une soupape de commande de recirculation des gaz d'échappement (29) est prévue dans un passage des gaz d'échappement remis à circuler (27), qui couple le passage d'échappement du moteur (10, 21) au passage d'admission du moteur (12, 13) ;
un degré d'ouverture cible de la soupape de commande de recirculation des gaz d'échappement (29), qui est nécessaire pour établir un rapport air-carburant à la valeur cible, est mémorisé préliminairement ; et
un degré d'ouverture de la soupape de commande de recirculation des gaz d'échappement (29) est adapté pour être ajusté au degré d'ouverture cible ; et
le degré d'ouverture cible de la soupape de commande de recirculation des gaz d'échappement (29) est adapté pour être corrigé sur la base d'une concentration estimée d'oxygène contenue dans les gaz d'échappement remis à circuler, de sorte que le degré cible de la soupape de commande de recirculation des gaz d'échappement (29) devient le rapport air-carburant cible.

**12.** Moteur à combustion interne (1) selon la revendication 11, **caractérisé en ce que** :

le moteur de combustion interne (1) est muni d'un moyen de calcul pour calculer une concentration d'oxygène contenue dans les gaz brûlés lorsque la combustion est effectuée sous le rapport air-carburant cible ;
**en ce que** le degré d'ouverture cible de la soupape de commande de recirculation des gaz d'échappement (29) est adapté pour être corrigé pour être réduit si la concentration estimée d'oxygène est plus élevée que la concentration d'oxygène contenue dans les gaz brûlés ; et
le degré d'ouverture cible de la soupape de commande de recirculation des gaz d'échappement (29) est adapté pour être corrigé pour être augmenté si la consommation estimée d'oxygène est inférieure à la concentration d'oxygène contenue dans les gaz brûlés.

**13.** Moteur à combustion interne (1) selon la revendication 1, **caractérisé en ce qu'**il comprend :

un moyen de mémorisation (42) pour mémoriser un degré d'ouverture cible de la soupape d'étranglement (25), qui est nécessaire pour faire qu'une quantité de gaz délivrée à la chambre de combustion (5) soit plus grande qu'une quantité de gaz inactifs correspondant à une quantité de génération crête de suie et pour établir le rapport air-carburant à un rapport air-carburant cible prédéterminé ;

un moyen de détection pour détecter un rapport air-carburant ; et
un moyen de correction pour corriger un degré d'ouverture cible de la soupape d'étranglement (25) de sorte que le rapport air-carburant détecté devient le rapport air-carburant cible.

**14.** Moteur à combustion interne (1) selon la revendication 13, **caractérisé en ce que** :

le moyen de correction a été adapté pour détecter une quantité de correction pour le degré d'ouverture cible de la soupape d'étranglement (25) ; et
lorsqu'il existe une différence entre le rapport air-carburant détecté et le rapport air-carburant cible, le moyen de correction augmente ou diminue progressivement la quantité de correction de façon à réduire la différence.

**15.** Moteur à combustion interne (1) selon la revendication 14, **caractérisé en ce que :**

le moteur à combustion interne (1) est muni d'un moyen de calcul de valeur d'apprentissage pour calculer, sur la base de la différence, une valeur d'apprentissage de la quantité de correction pour le degré d'ouverture cible de la soupape d'étranglement (25) ; et
si la différence dépasse une valeur établie prédéterminée, la valeur d'apprentissage est renouvelée de sorte que le degré d'ouverture de la soupape d'étranglement rapproche le degré d'ouverture cible.

**16.** Moteur à combustion interne (1) selon la revendication 15, **caractérisé en ce que** :

une zone fonctionnelle du moteur (1) pendant le premier mode de combustion est divisée en une pluralité de zones fonctionnelles, la valeur d'apprentissage étant calculée séparément pour chacune des zones fonctionnelles ; et
une zone fonctionnelle du moteur (1) pendant le second mode de combustion est divisée en une pluralité de zones fonctionnelles, la valeur d'apprentissage étant calculée séparément pour chacune des zones fonctionnelles.

**17.** Moteur à combustion interne (1) selon la revendication 16, **caractérisé en ce que** le renouvellement de la valeur d'apprentissage est suspendu jusqu'à ce qu'une période de temps prédéterminée s'écoule après une opération de commutation entre le premier mode de combustion et le second mode de combustion.

**18.** Moteur à combustion interne (1) selon la revendication 1, **caractérisé en ce que** :

le moteur à combustion interne (1) est muni d'un moyen de détection pour détecter une quantité d'air d'admission et d'un absorbeur du NOx (22) disposé dans le passage d'échappement du moteur (10, 21) ;
le moteur à combustion interne (1) est de plus muni d'un moyen de calcul pour calculer soit une quantité d'injection de carburant cible, soit une quantité d'air d'admission cible, qui est nécessaire pour établir un rapport air-carburant à un rapport air-carburant riche cible qui est obtenu en divisant une quantité d'air d'admission détectée par une quantité d'injection de carburant qui doit être délivrée (le rapport air-carburant riche cible = la quantité d'air d'admission détectée/la quantité d'injection de carburant qui doit être délivrée) ; et
lorsque le NOx devrait être déchargé de l'absorbeur du NOx (22), la quantité d'injection de carburant ou la quantité d'air d'admission sont établies à la quantité d'injection de carburant cible ou à la quantité d'air d'admission cible respectivement.

**19.** Moteur à combustion interne (1) selon la revendication 18, **caractérisé en ce que** le moyen de calcul est adapté pour calculer la quantité d'injection de carburant cible en divisant la quantité d'air d'admission détectée par le rapport air-carburant riche cible.

**20.** Moteur à combustion interne selon la revendication 18, **caractérisé en ce que** le moyen de calcul est adapté pour calculer la quantité d'air d'admission cible en multipliant le rapport air-carburant riche cible par la quantité d'injection de carburant qui doit être délivrée.

**21.** Moteur à combustion interne (1) selon la revendication 20, **caractérisé en ce que :**

le moteur à combustion interne (1) est de plus muni d'un moyen de détermination pour déterminer si oui ou non le NOx devrait être déchargé de l'absorbeur de NOx (22) ; et
si le moyen de détermination a déterminé que le NOx devrait être déchargé, le rapport air-carburant est établi au rapport air-carburant riche cible pendant le premier mode de combustion.

**22.** Moteur à combustion interne (1) selon la revendication 21, **caractérisé en ce que :**

le moteur à combustion interne (1) est muni d'un moyen d'estimation pour estimer une quantité de NOx absorbée dans l'absorbeur de NOx (22) ;
si la quantité estimée de NOx a dépassé une première valeur autorisable maximale pendant le second mode de combustion, les moyens de commande (40) sont adaptés pour commander que le rapport air-carburant soit temporairement rendu riche au moment de la transition du second mode de combustion au premier mode de combustion ; et
si la quantité estimée de NOx a dépassé une seconde valeur autorisable maximale qui est plus grande que la première valeur autorisable maximale pendant le second mode de combustion, les moyens de commande (40) sont adaptés pour commander que du carburant supplémentaire soit injecté dans la dernière moitié d'un temps d'expansion ou pendant un temps d'échappement de façon à rendre le rapport air-carburant des gaz d'échappement s'écoulant dans l'absorbeur du NOx (22) stoïchiométrique ou riche.

**23.** Moteur à combustion interne (1) selon la revendication 1, **caractérisé en ce que** :

un absorbeur du NOx (22) est disposé dans le passage d'échappement du moteur (10, 21) ;
un moyen de détection du rapport air-carburant pour détecter un rapport air-carburant des gaz d'échappement est disposé dans le passage d'échappement du moteur (10, 21) ; et
à moins que le moyen de détection de rapport air-carburant détecte un rapport air-carburant riche après ou lorsque le rapport air-carburant dans la chambre de combustion (5) est rendu riche de façon à décharger le NOx de l'absorbeur du NOx (22), le rapport air-carburant dans la chambre de combustion (5) est adapté pour être corrigé vers le côté riche.

**24.** Moteur à combustion interne (1) selon la revendication 23, **caractérisé en ce que** :

le moyen de détection du rapport air-carburant est disposé dans le passage d'échappement du moteur en aval de l'absorbeur du NOx (22) ;
le moyen de détection du rapport air-carburant est adapté pour détecter une période de temps qui commence avec l'établissement d'un rapport air-carburant dans la chambre de combustion (5) à une valeur riche et se termine avec une détection d'un rapport air-carburant riche par le moyen de détection du rapport air-carburant ; et
en proportion à la durée de la période de temps, un cadencement pour décharger le NOx de l'absorbeur du NOx (22) est adapté pour être retardé.

**25.** Moteur à combustion interne (1) selon la revendication 24, **caractérisé en ce qu'**avant l'écoulement de la période de temps, le cadencement pour décharger le NOx de l'absorbeur du NOx (22) est adapté à être retardé en proportion à une quantité des gaz d'échappement s'écoulant dans l'absorbeur du NOx (22).

**26.** Moteur à combustion interne (1) selon la revendication 25, **caractérisé en ce qu'**avant l'écoulement de la période de temps, le cadencement pour décharger le NOx de l'absorbeur du NOx (22) est adapté pour être retardé en proportion à la richesse du rapport air-carburant des gaz d'échappement s'écoulant dans l'absorbeur du NOx (22).

FIG. 1

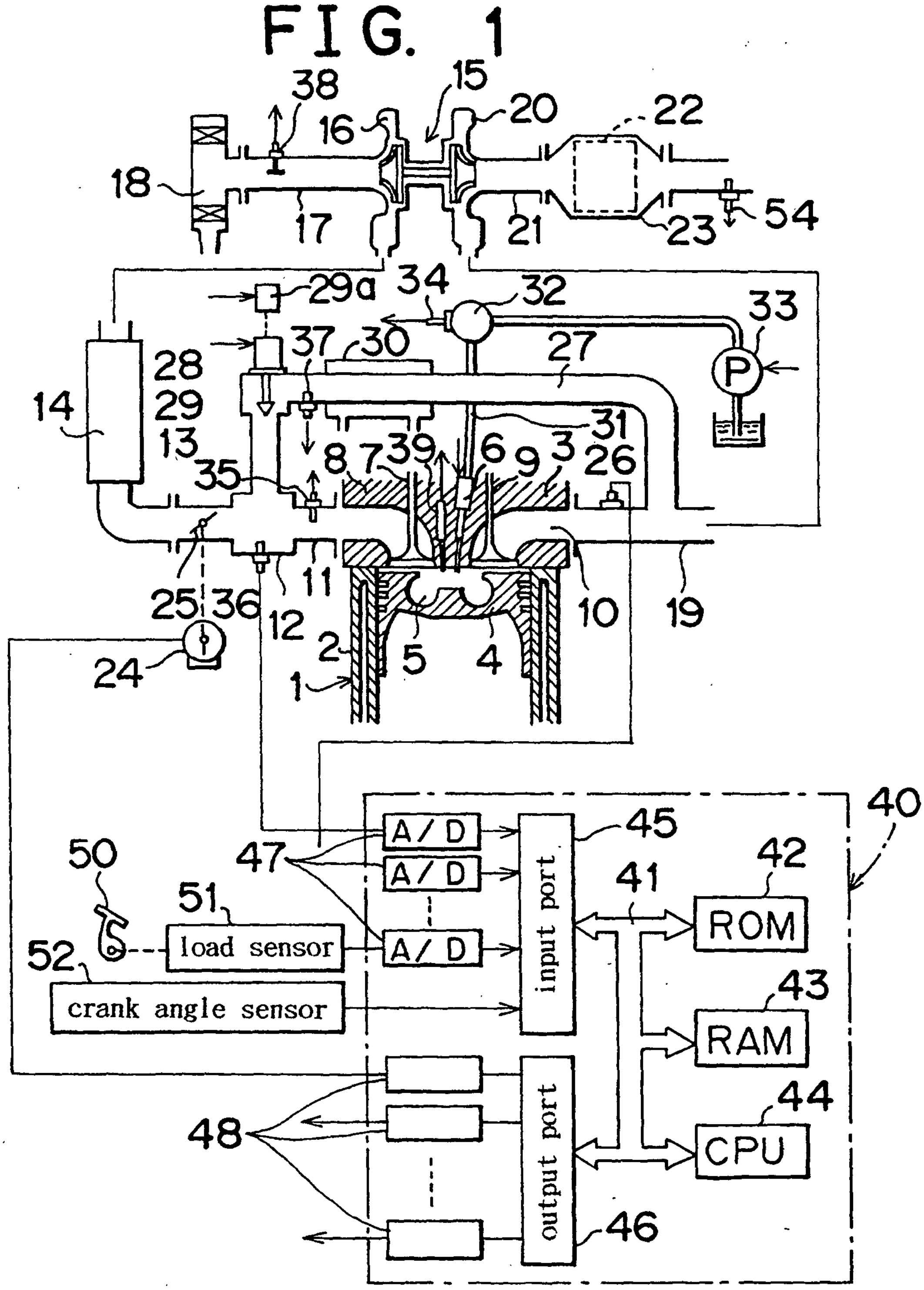

A/D
A/D
A/D
input port
output port
ROM
RAM
CPU
load sensor
crank angle sensor
P

FIG. 2

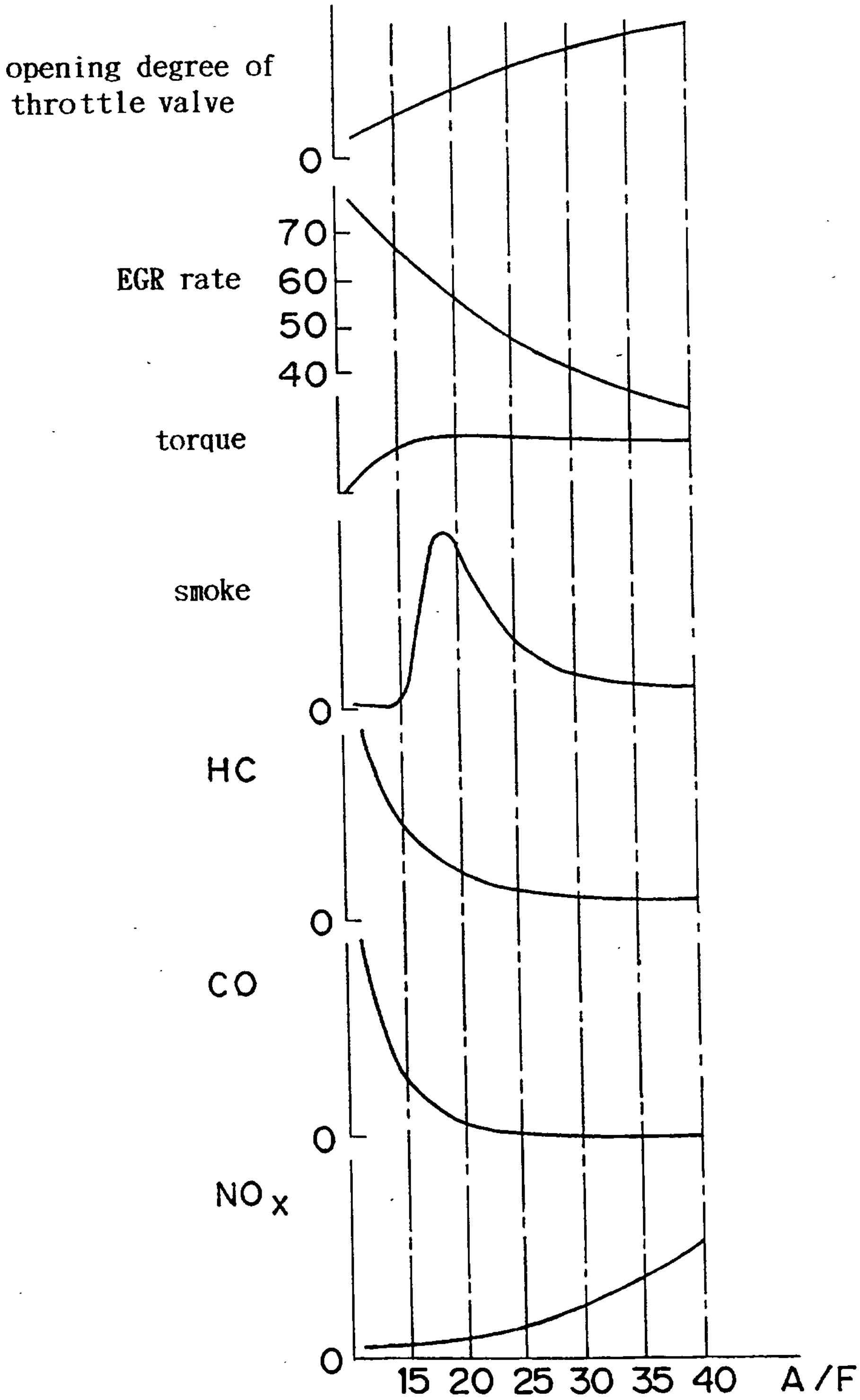
opening degree of throttle valve
0
EGR rate
70
60
50
40
torque
smoke
0
HC
0
CO
0
NOx
0
15 20 25 30 35 40
A/F

FIG. 3A

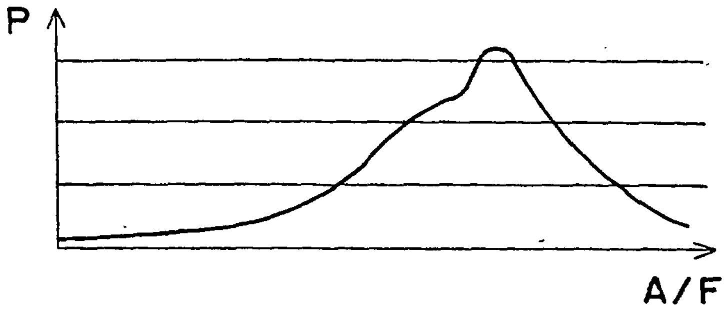


FIG. 3B

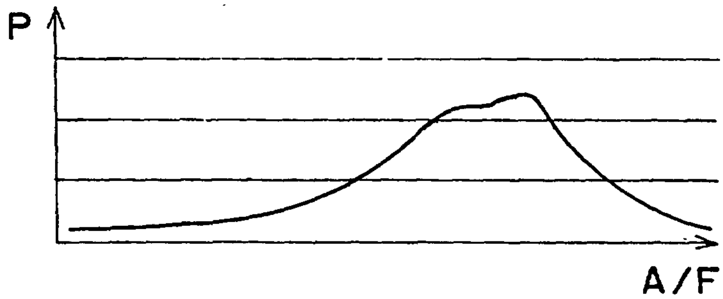

FIG. 4

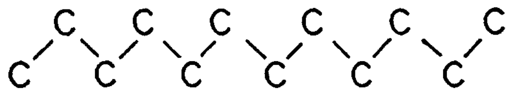

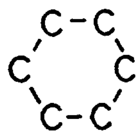

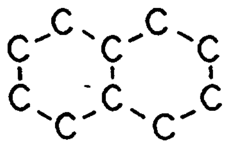

FIG. 5

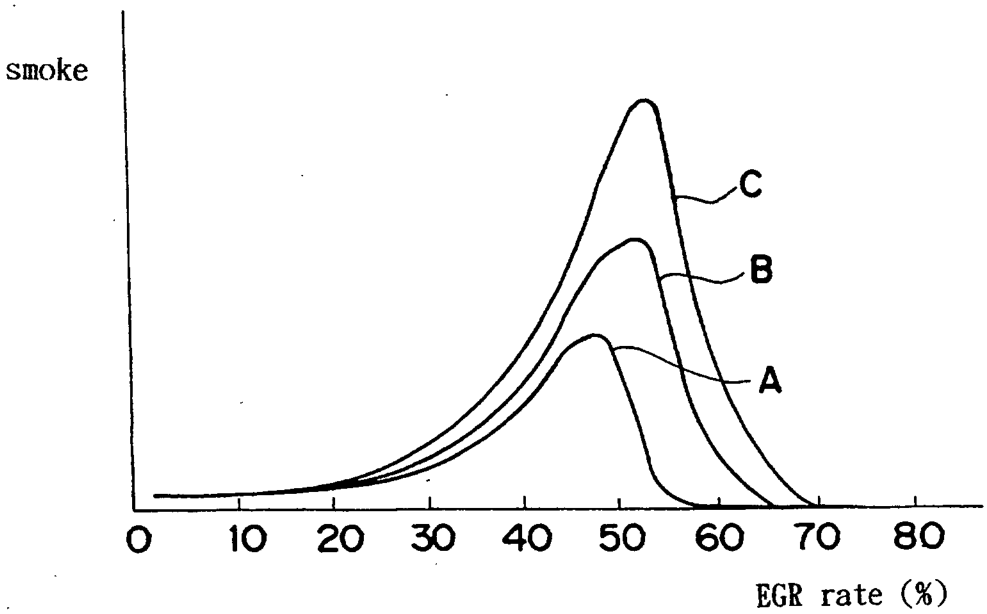

FIG. 6

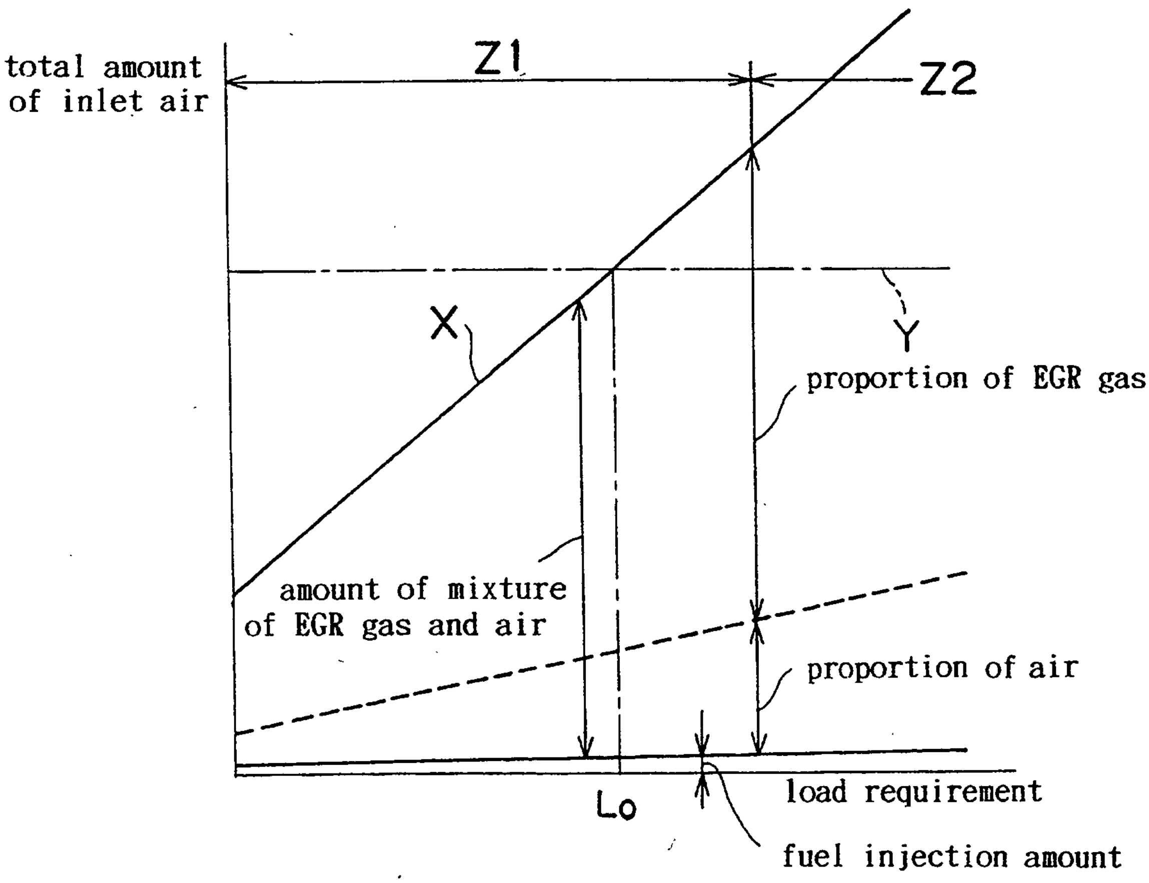
total amount of inlet air
Z1
Z2
X
Y
proportion of EGR gas
amount of mixture of EGR gas and air
proportion of air
Lo
load requirement
fuel injection amount

FIG. 7

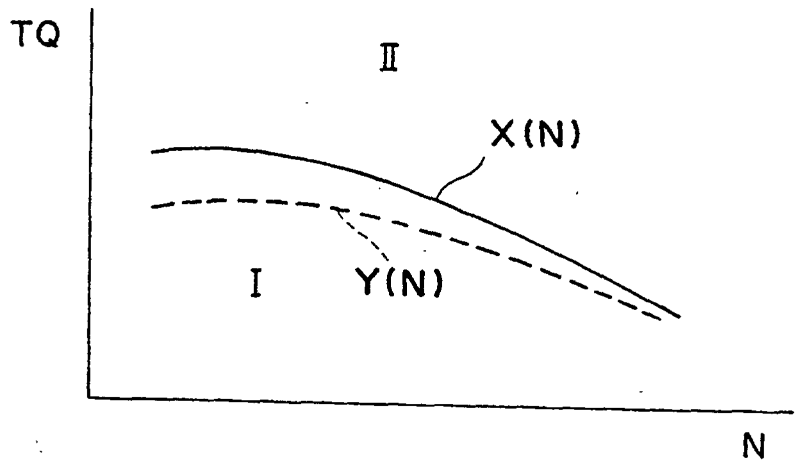

FIG. 8

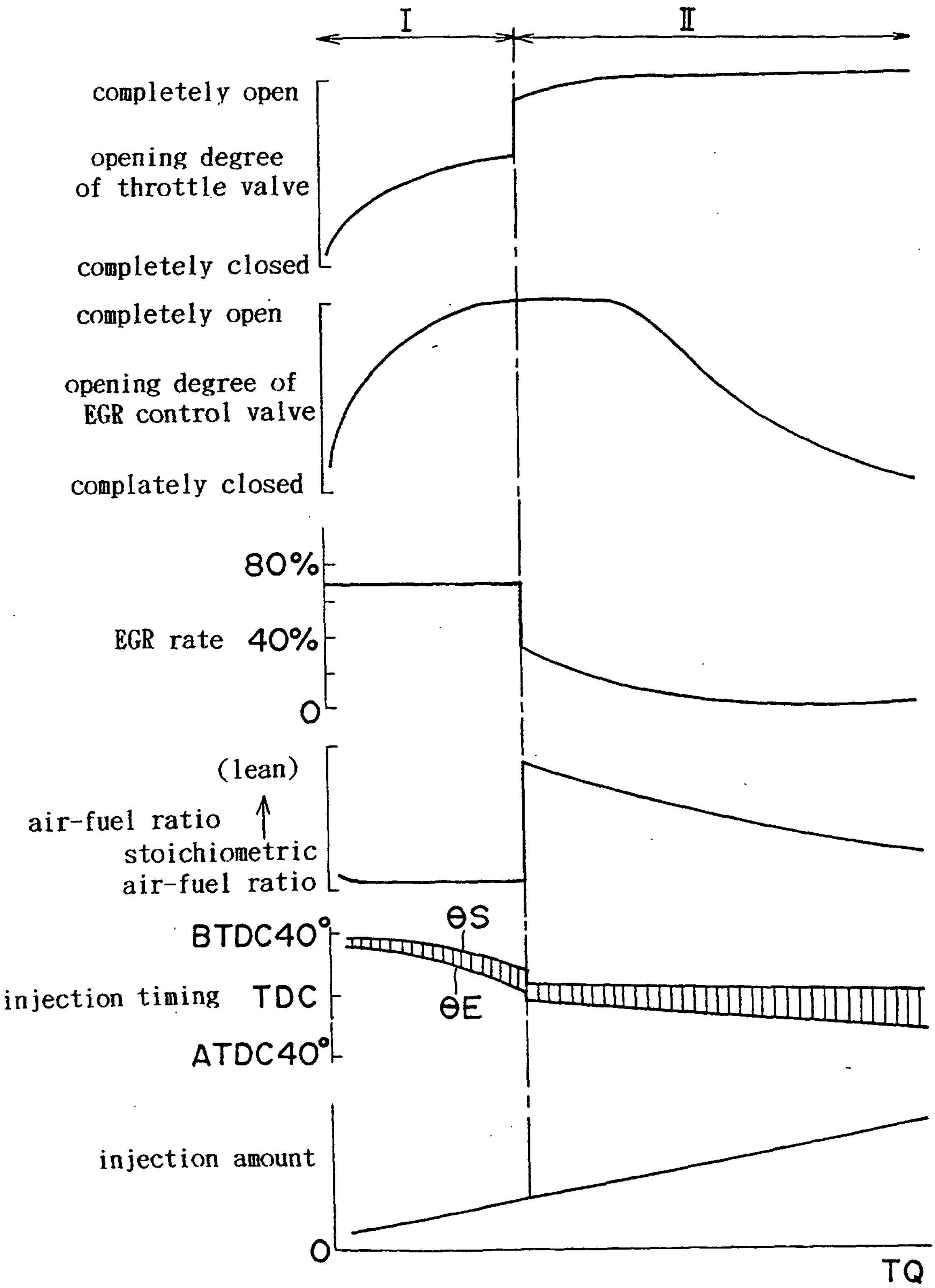
I
II
completely open
opening degree
of throttle valve
completely closed
completely open
opening degree of
EGR control valve
complately closed
80%
EGR rate 40%
0
(lean)
air-fuel ratio
stoichiometric
air-fuel ratio
BTDC40°
θS
injection timing TDC
θE
ATDC40°
injection amount
0
TQ

FIG. 9A

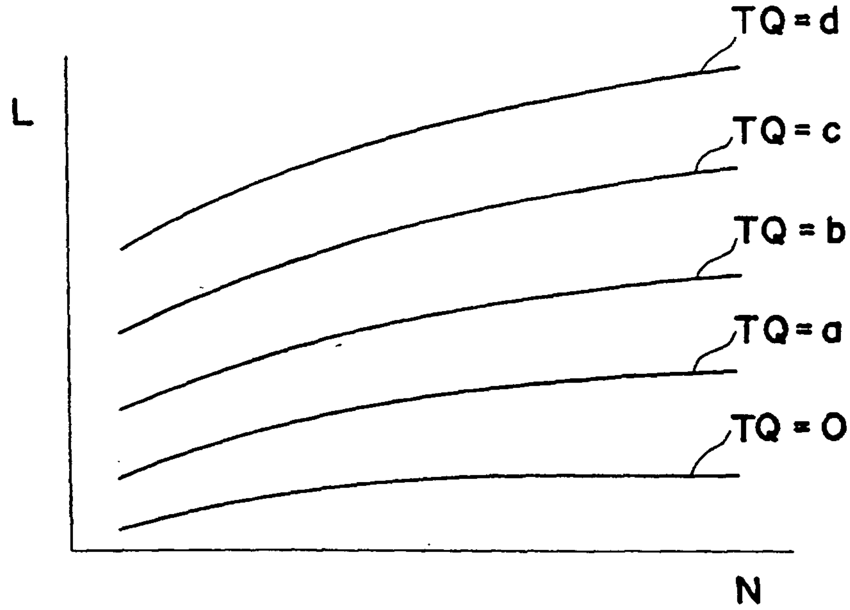


FIG. 9B

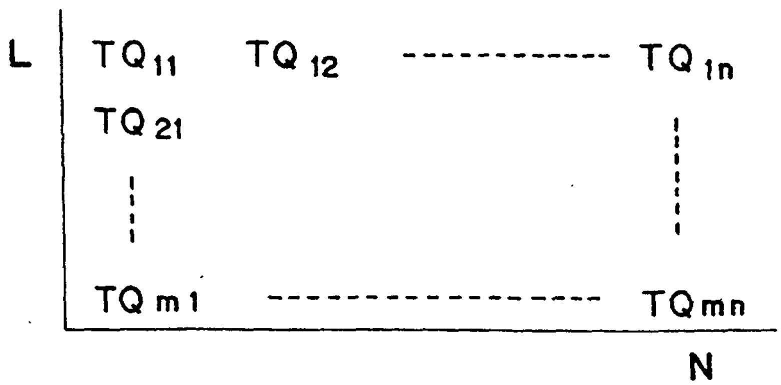

FIG. 10A

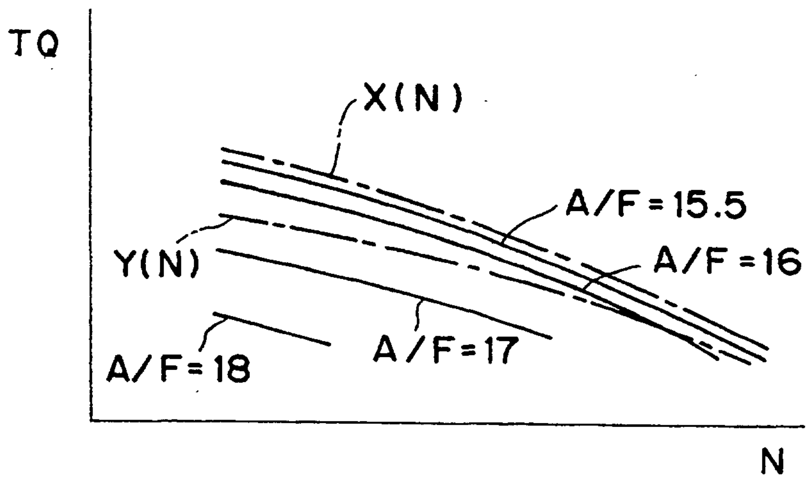


FIG. 10B

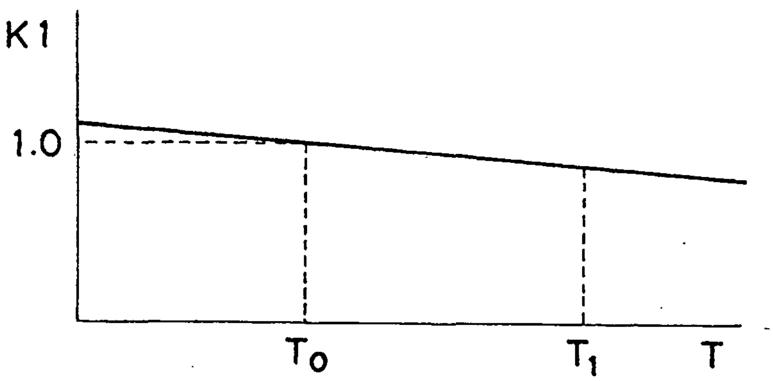

FIG. 11A

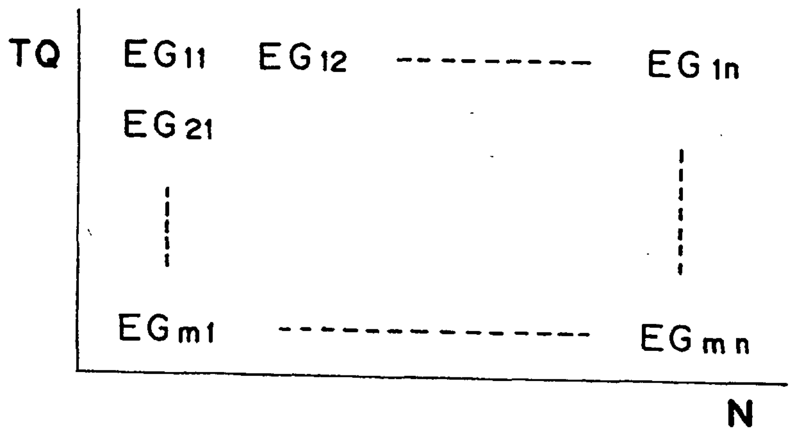


FIG. 11B

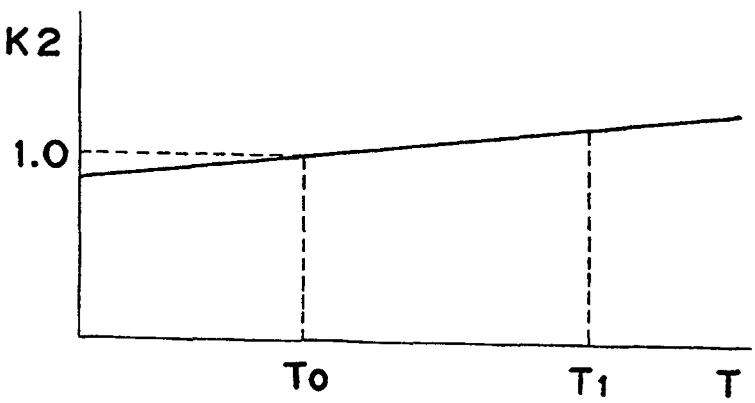

FIG. 12A

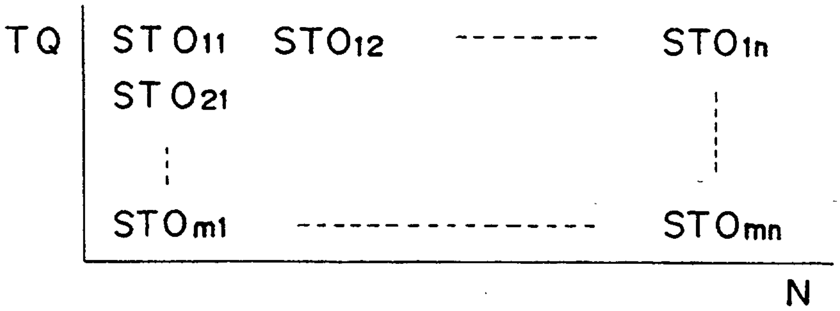


FIG. 12B

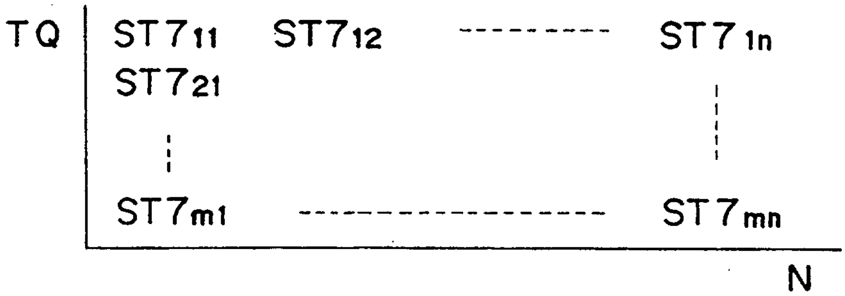


FIG. 12C

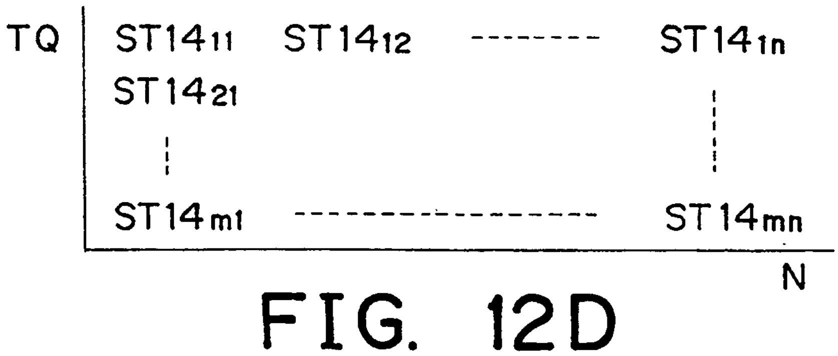


FIG. 12D

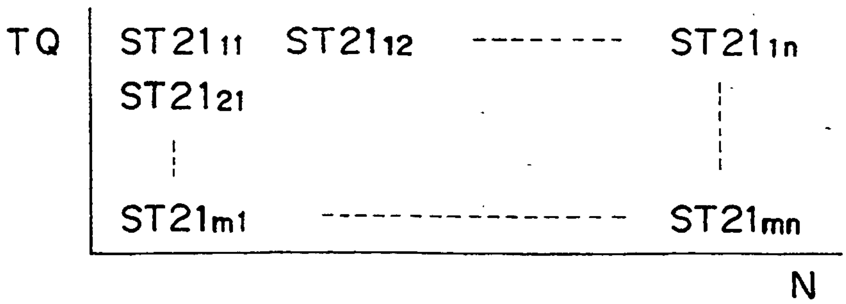

FIG. 13A

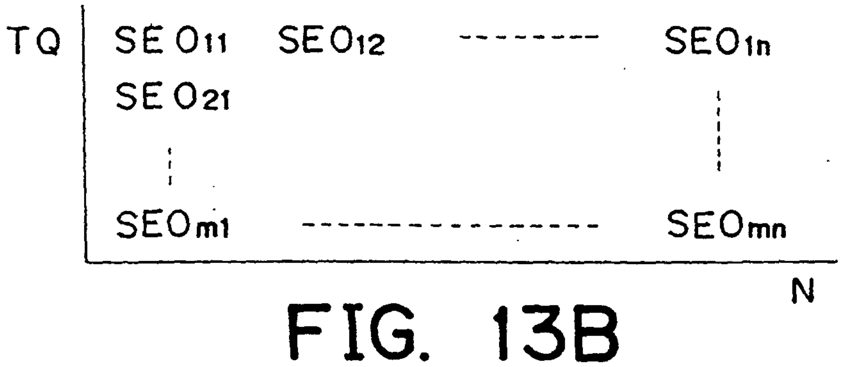


FIG. 13B

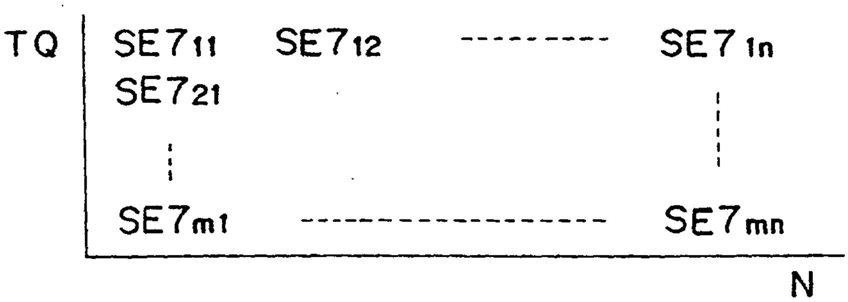


FIG. 13C

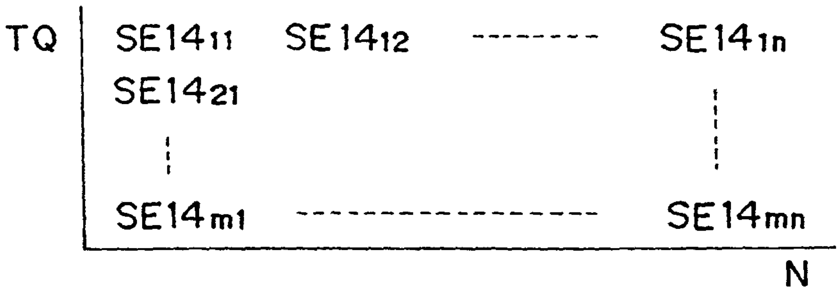


FIG. 13D

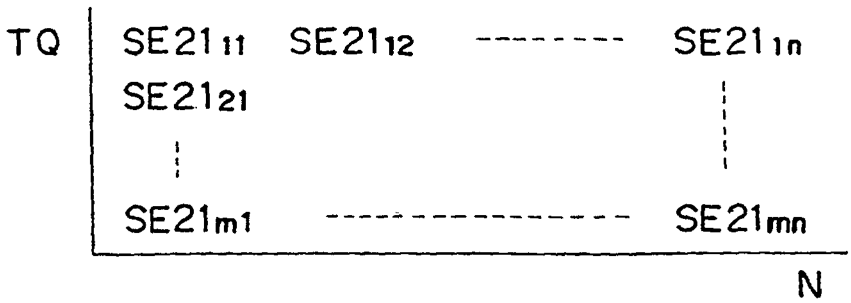

FIG. 14A

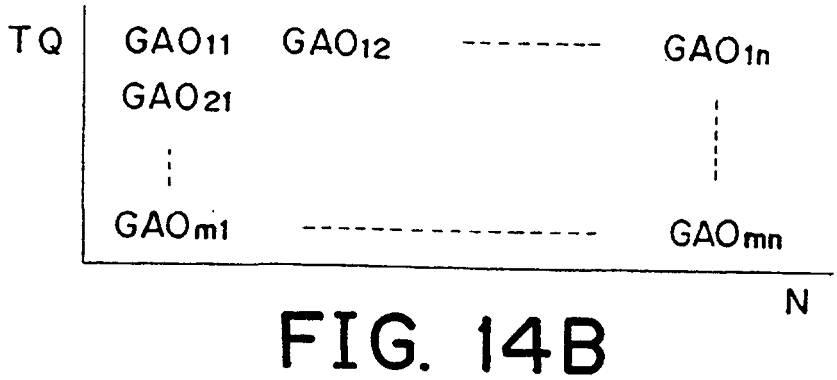


FIG. 14B

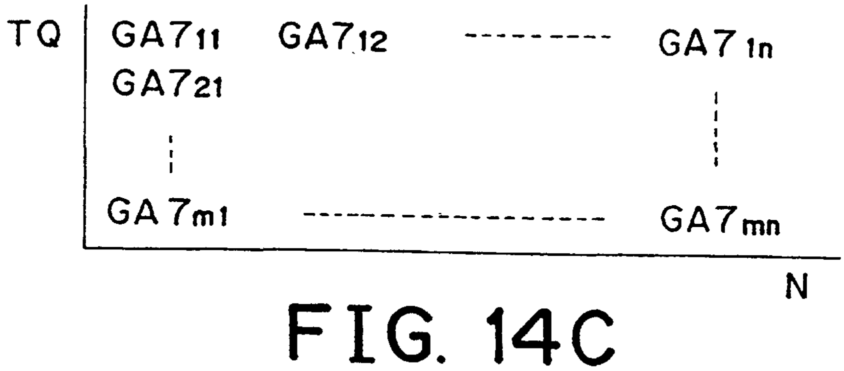


FIG. 14C

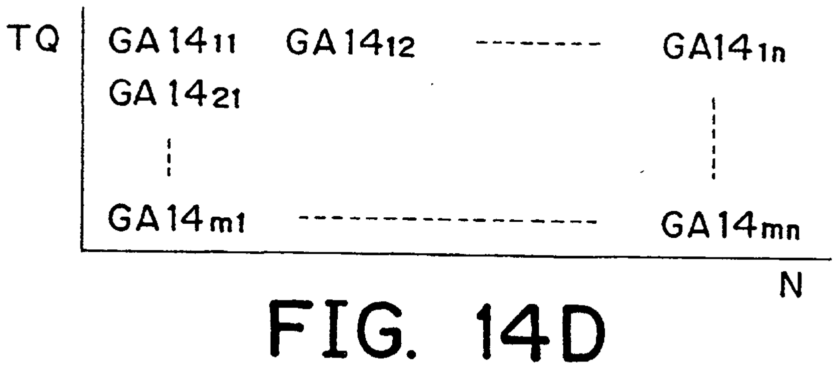


FIG. 14D

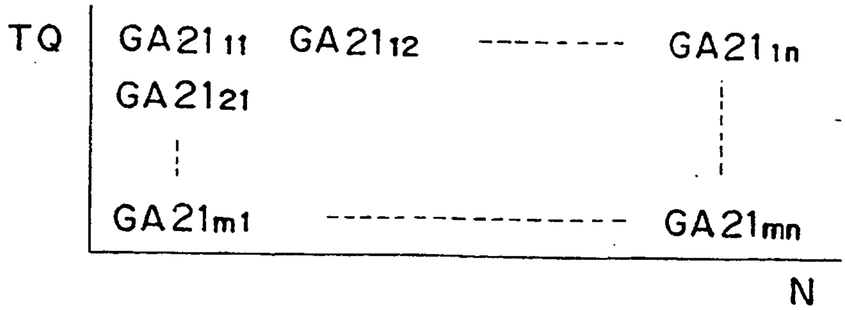

FIG. 15A

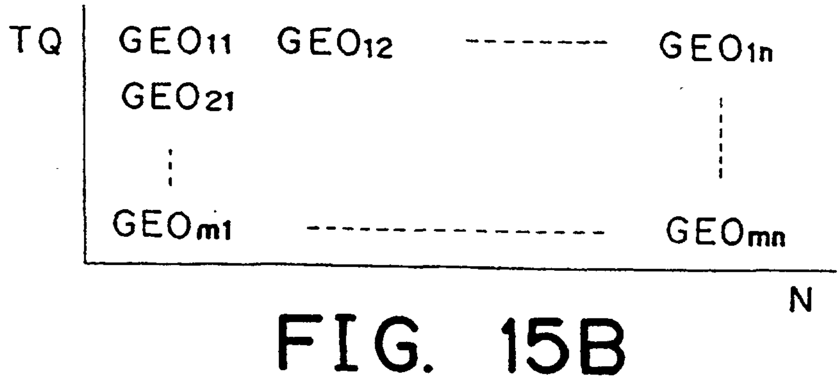


FIG. 15B

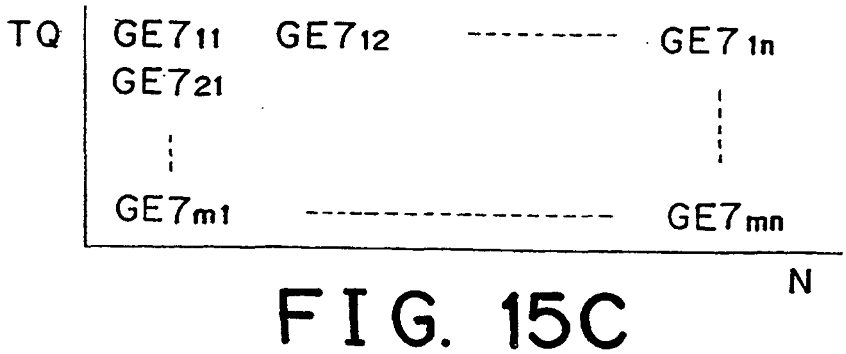


FIG. 15C

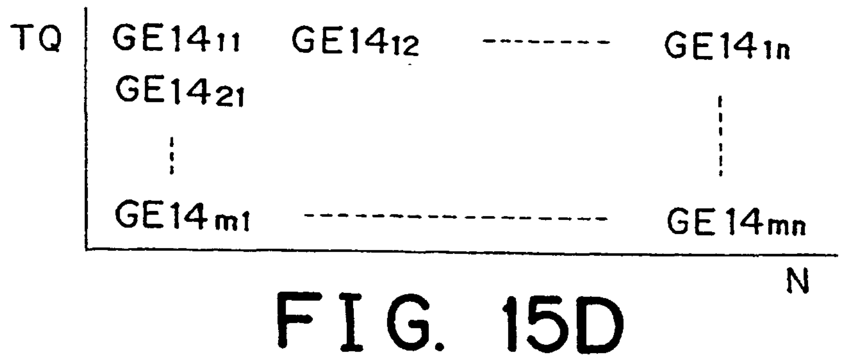


FIG. 15D

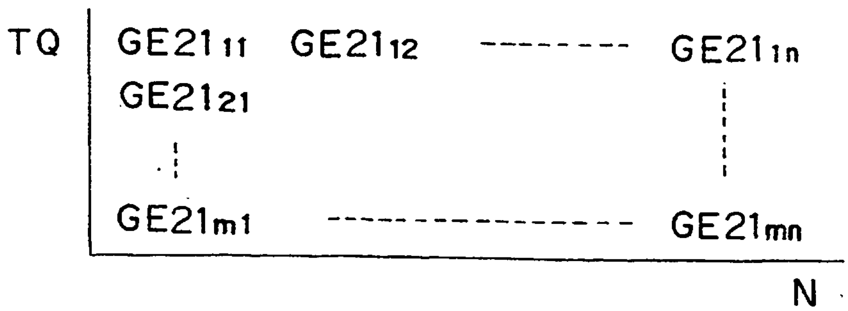

FIG. 16

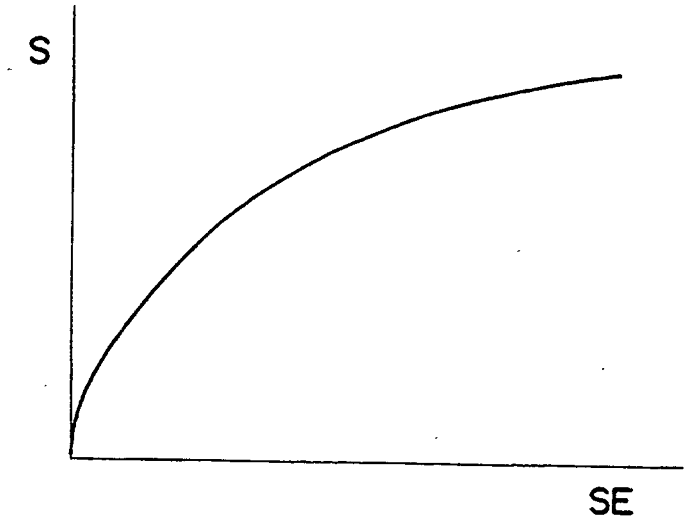

FIG. 17A

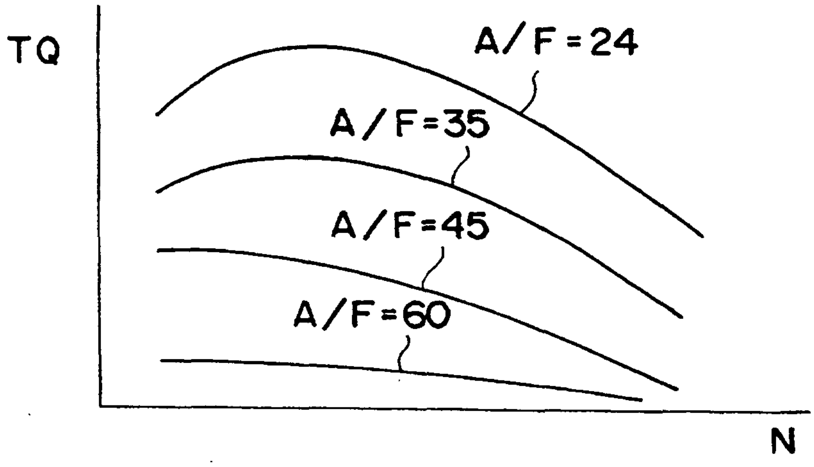


FIG. 17B

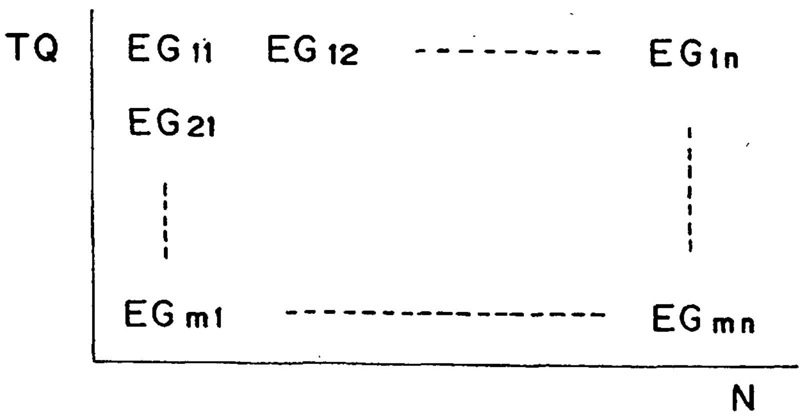

FIG. 18

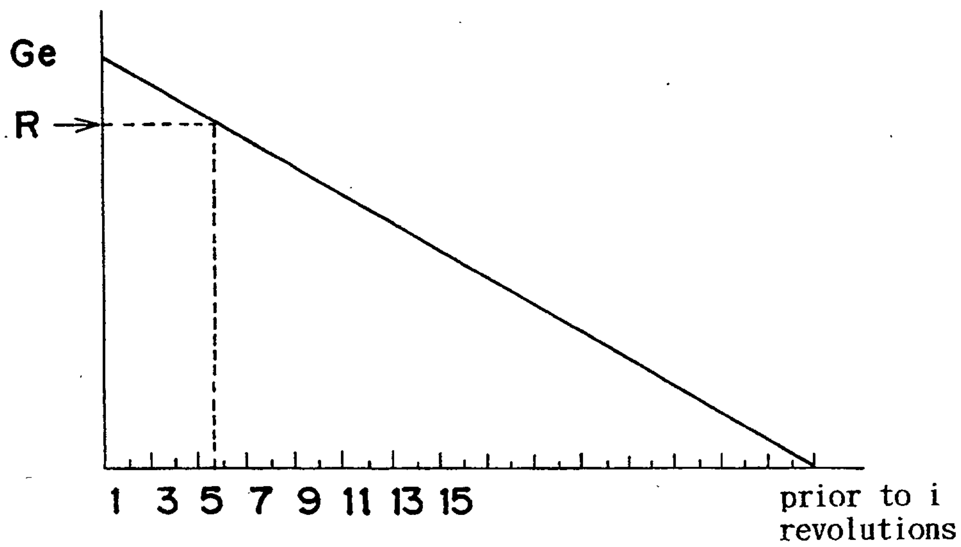

FIG. 19

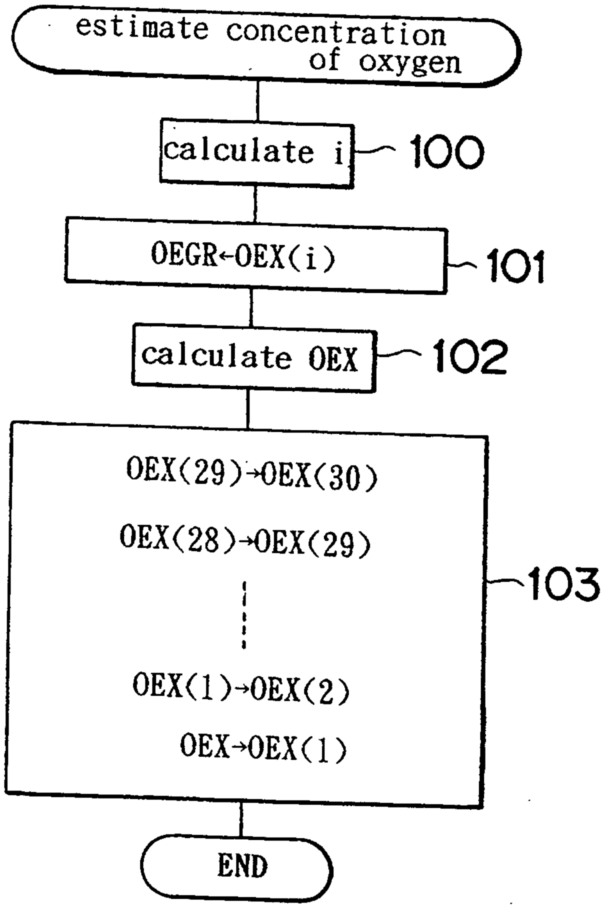
estimate concentration of oxygen
calculate i
100
OEGR←OEX(i)
101
calculate OEX
102
OEX(29)→OEX(30)
OEX(28)→OEX(29)
OEX(1)→OEX(2)
OEX→OEX(1)
103
END

FIG. 20

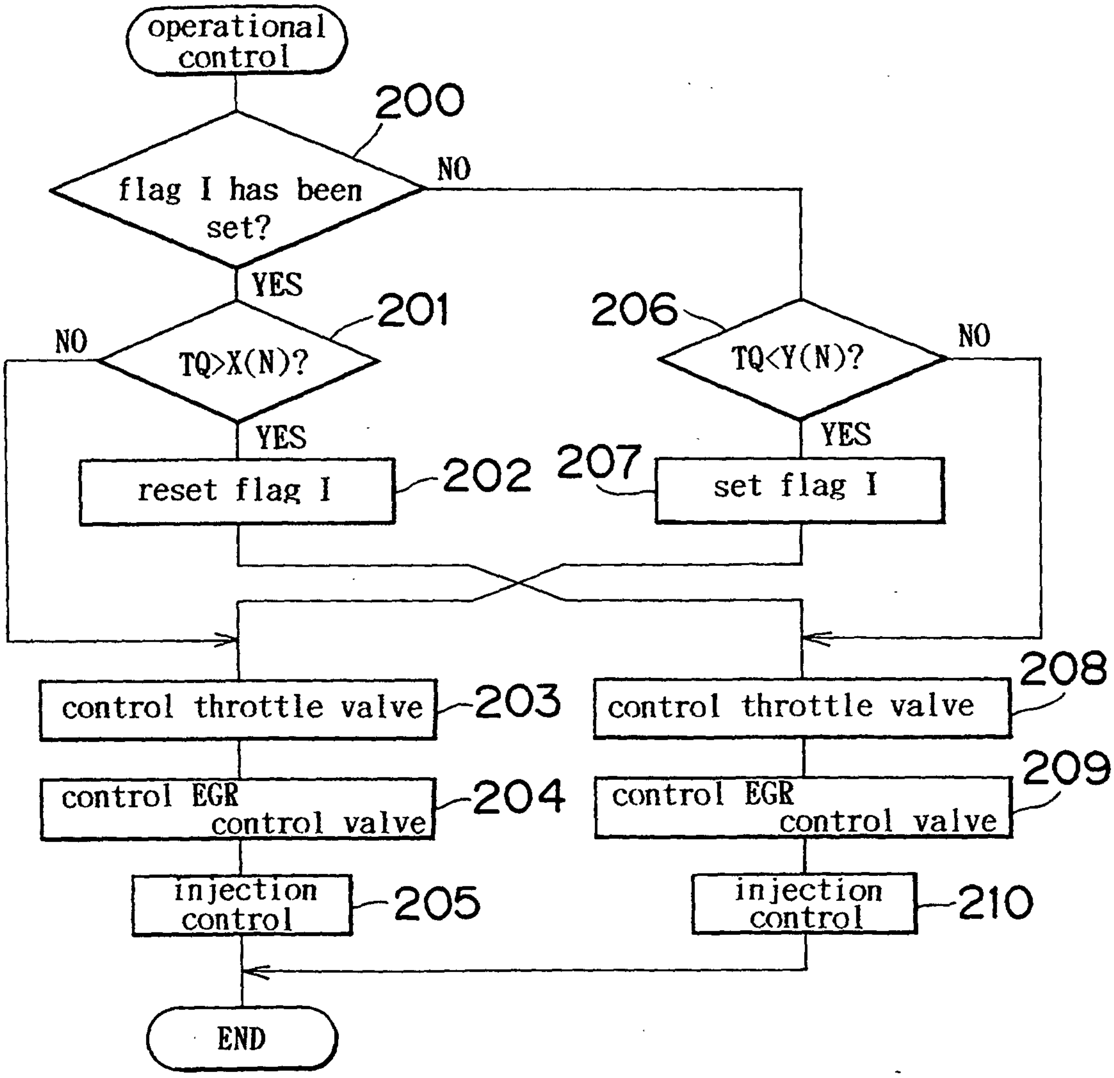
operational control
200
flag I has been set?
NO
YES
201
TQ>X(N)?
NO
YES
reset flag I
202
206
TQ<Y(N)?
NO
YES
207
set flag I
control throttle valve
203
control EGR control valve
204
injection control
205
control throttle valve
208
control EGR control valve
209
injection control
210
END

FIG. 21

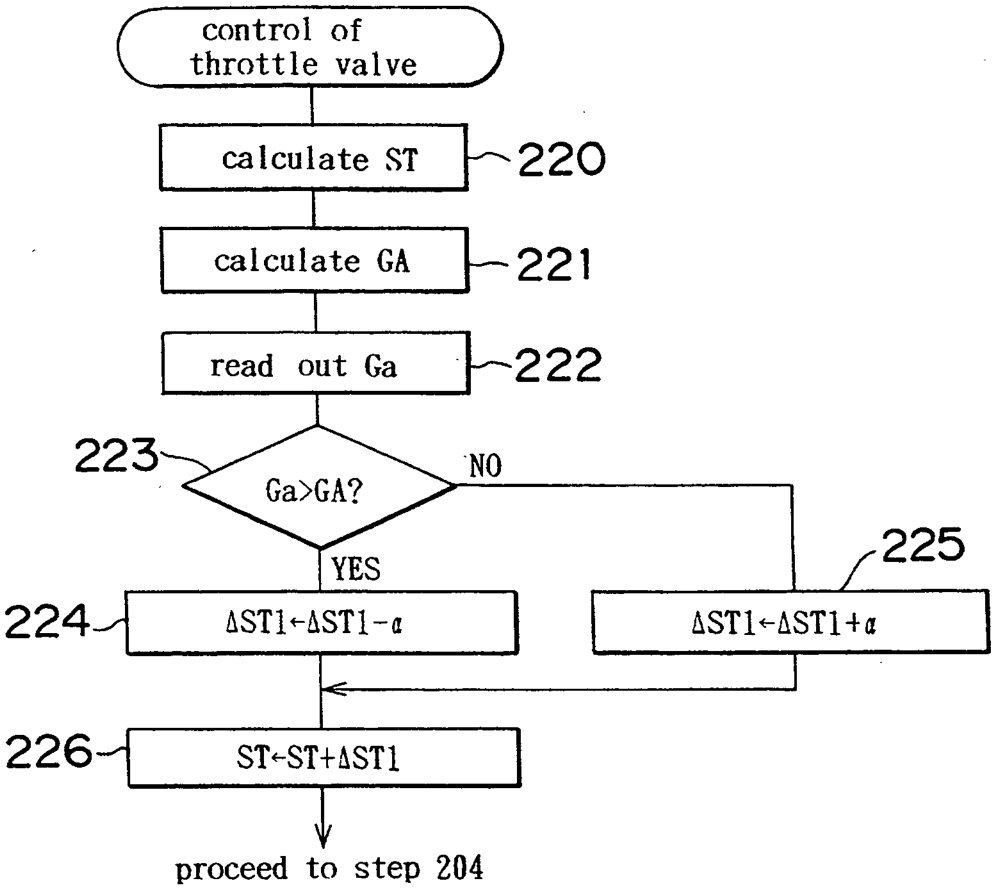
control of throttle valve
calculate ST
220
calculate GA
221
read out Ga
222
223
Ga>GA?
NO
YES
224
ΔST1←ΔST1−α
225
ΔST1←ΔST1+α
226
ST←ST+ΔST1
proceed to step 204

FIG. 22

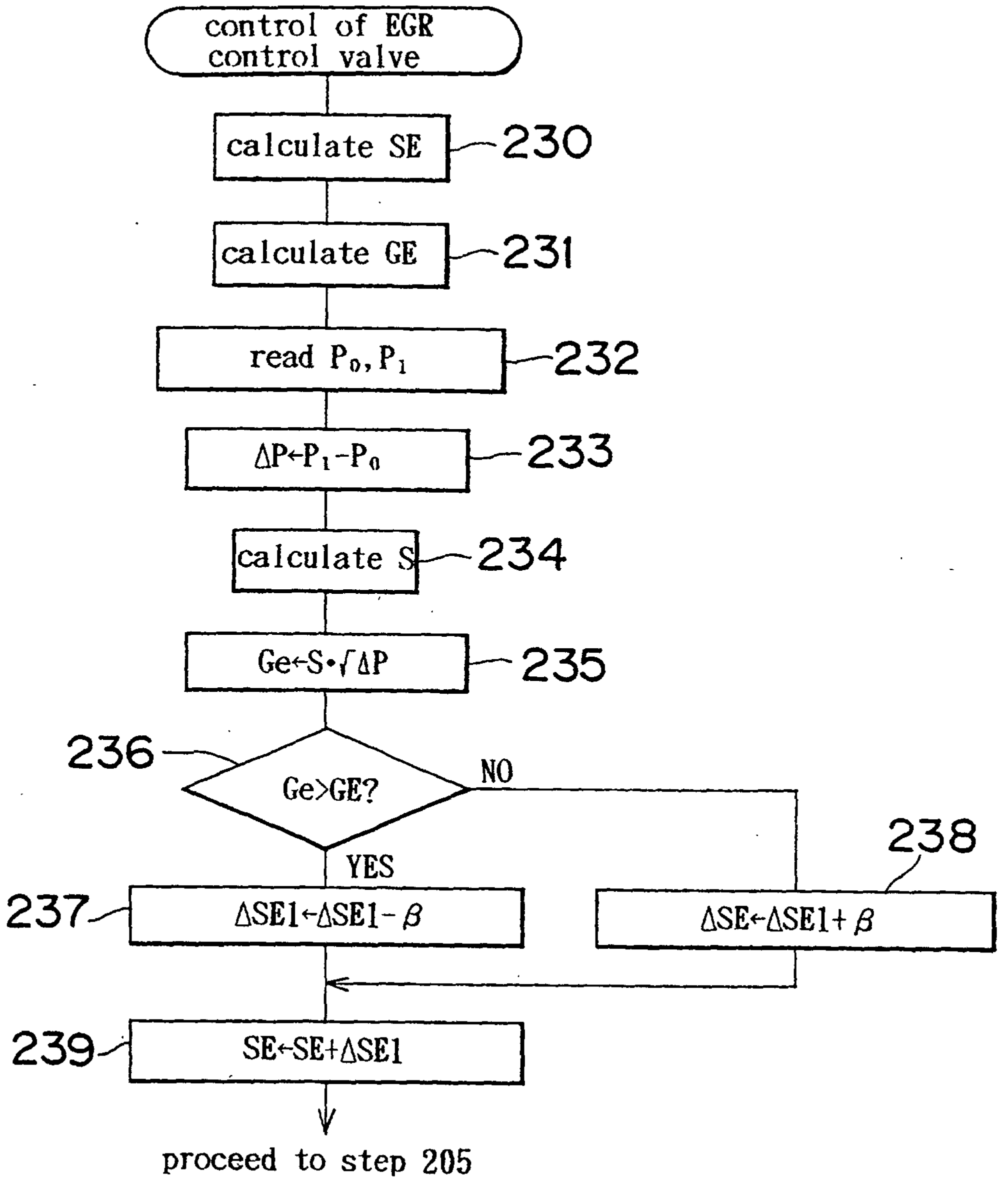
control of EGR control valve
calculate SE
230
calculate GE
231
read $P_0$, $P_1$
232
$\Delta P \leftarrow P_1 - P_0$
233
calculate S
234
$Ge \leftarrow S \cdot \sqrt{\Delta P}$
235
236
Ge>GE?
NO
YES
237
$\Delta SE1 \leftarrow \Delta SE1 - \beta$
238
$\Delta SE \leftarrow \Delta SE1 + \beta$
239
$SE \leftarrow SE + \Delta SE1$
proceed to step 205

FIG. 23

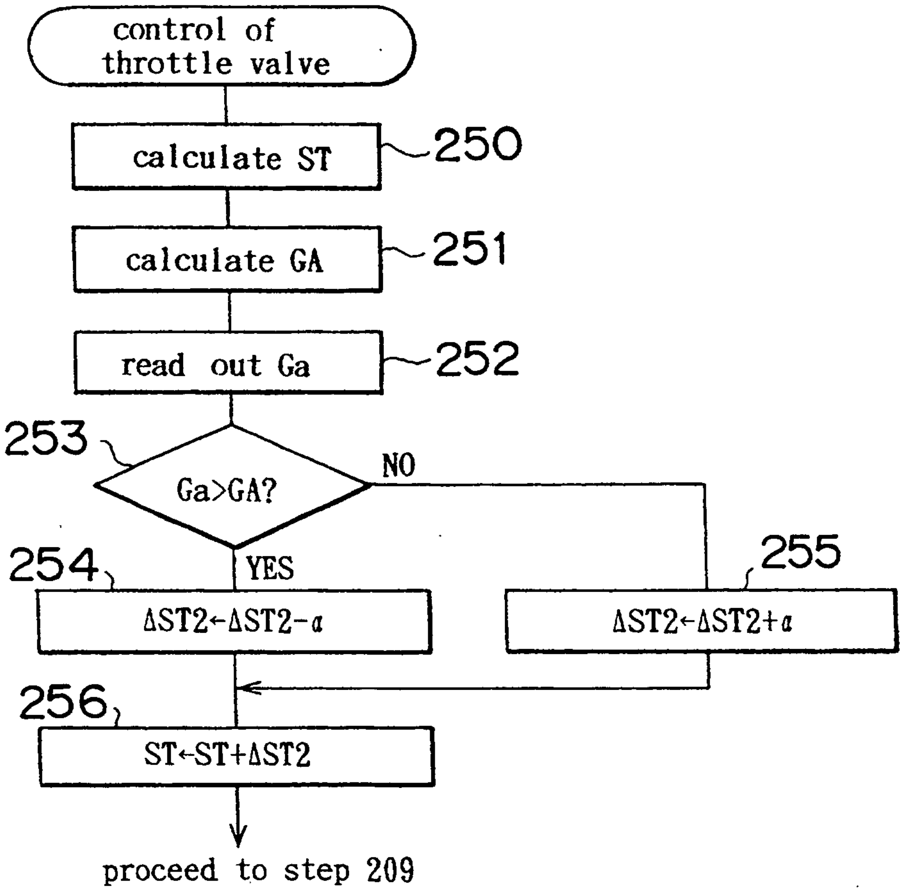
control of throttle valve
calculate ST
250
calculate GA
251
read out Ga
252
253
Ga>GA?
NO
YES
254
ΔST2←ΔST2-α
255
ΔST2←ΔST2+α
256
ST←ST+ΔST2
proceed to step 209

FIG. 24

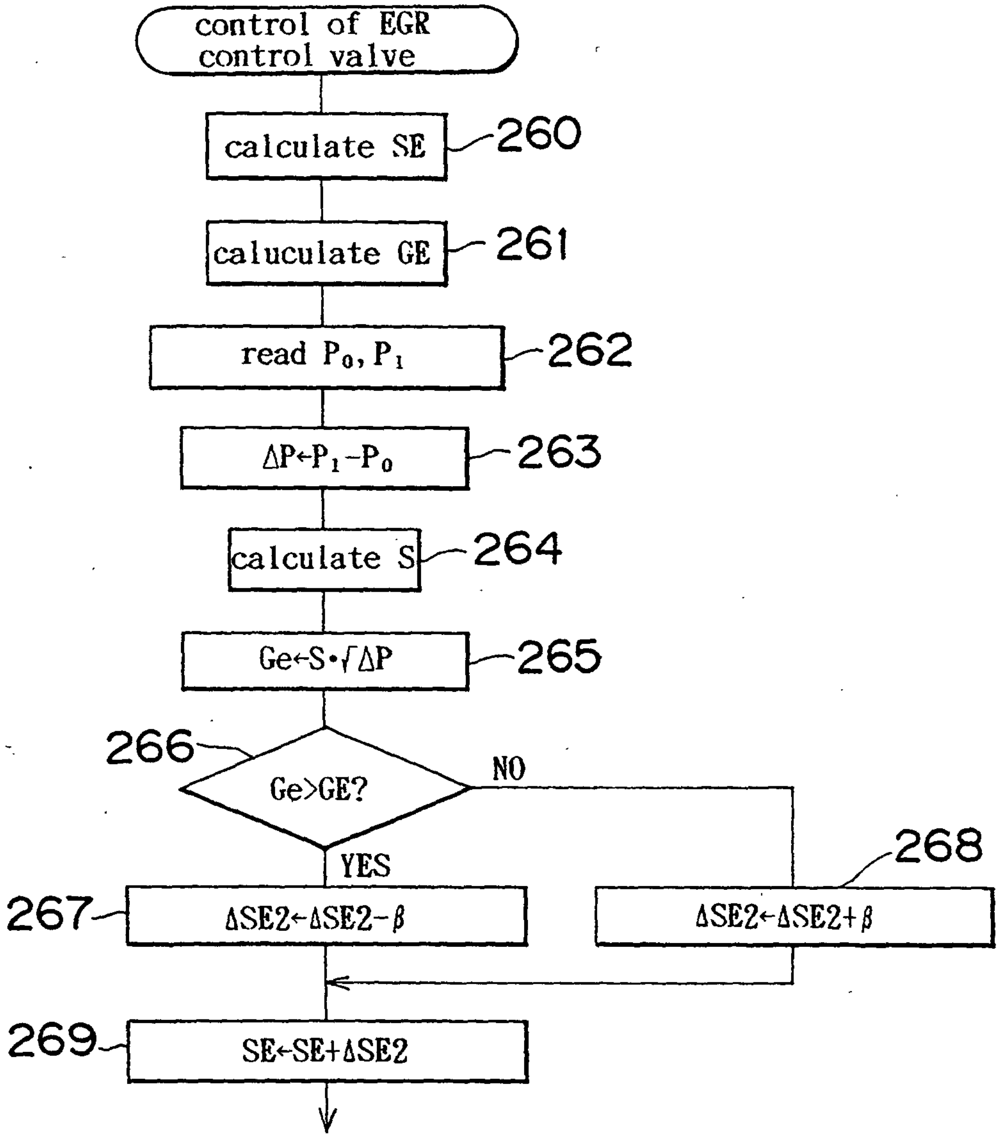
control of EGR control valve
calculate SE
260
caluculate GE
261
read P0, P1
262
ΔP←P1−P0
263
calculate S
264
Ge←S•√ΔP
265
266
Ge>GE?
NO
YES
268
267
ΔSE2←ΔSE2−β
ΔSE2←ΔSE2+β
269
SE←SE+ΔSE2

FIG. 25A

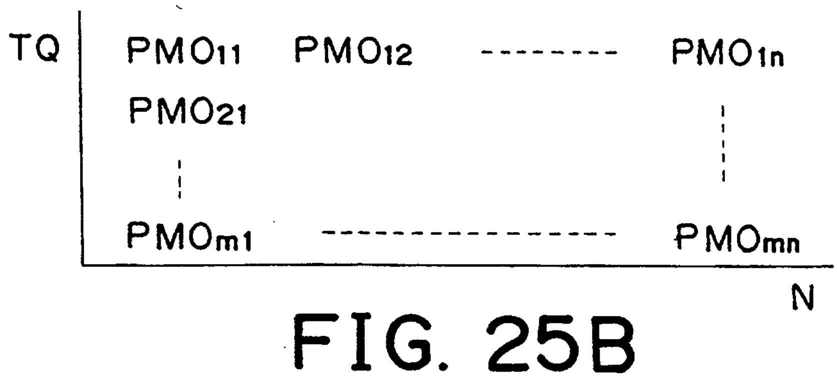


FIG. 25B

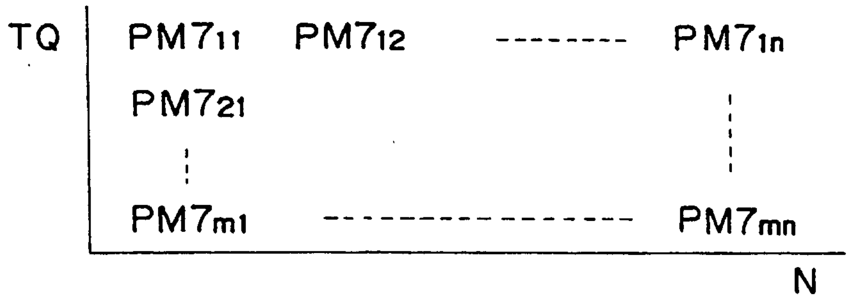


FIG. 25C

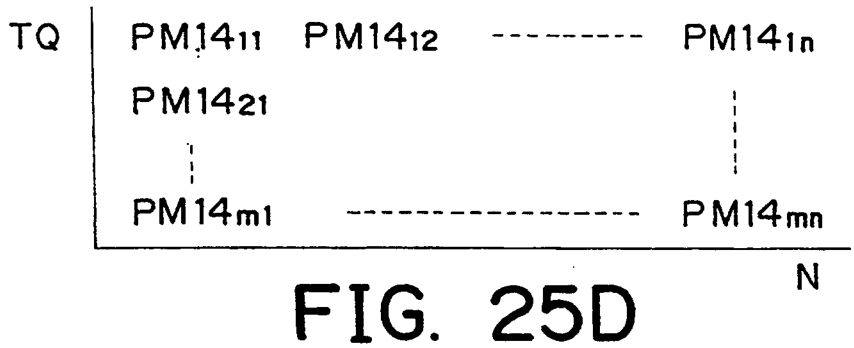


FIG. 25D

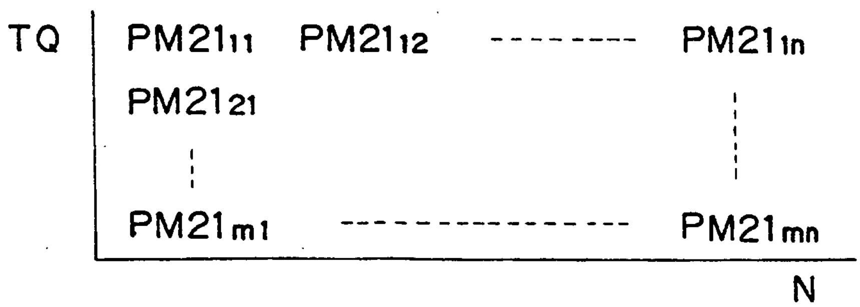

FIG. 26

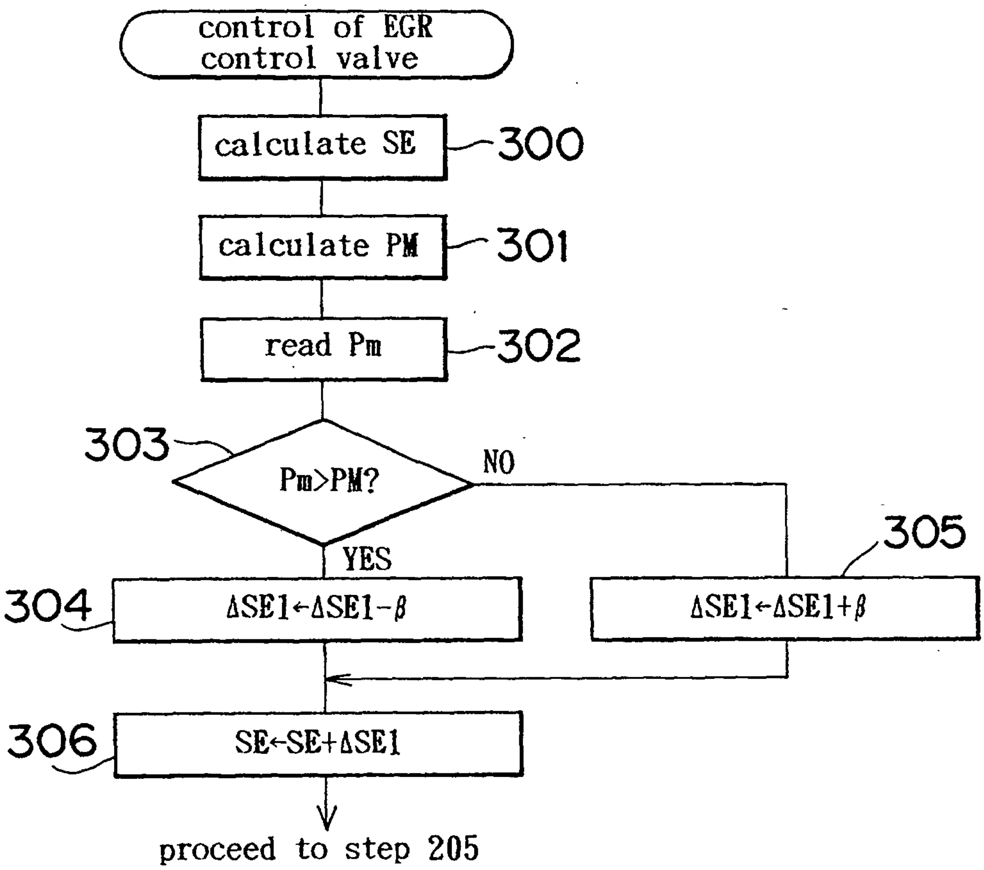
control of EGR control valve
calculate SE
300
calculate PM
301
read Pm
302
303
Pm>PM?
NO
YES
305
304
ΔSE1←ΔSE1−β
ΔSE1←ΔSE1+β
306
SE←SE+ΔSE1
proceed to step 205

FIG. 27

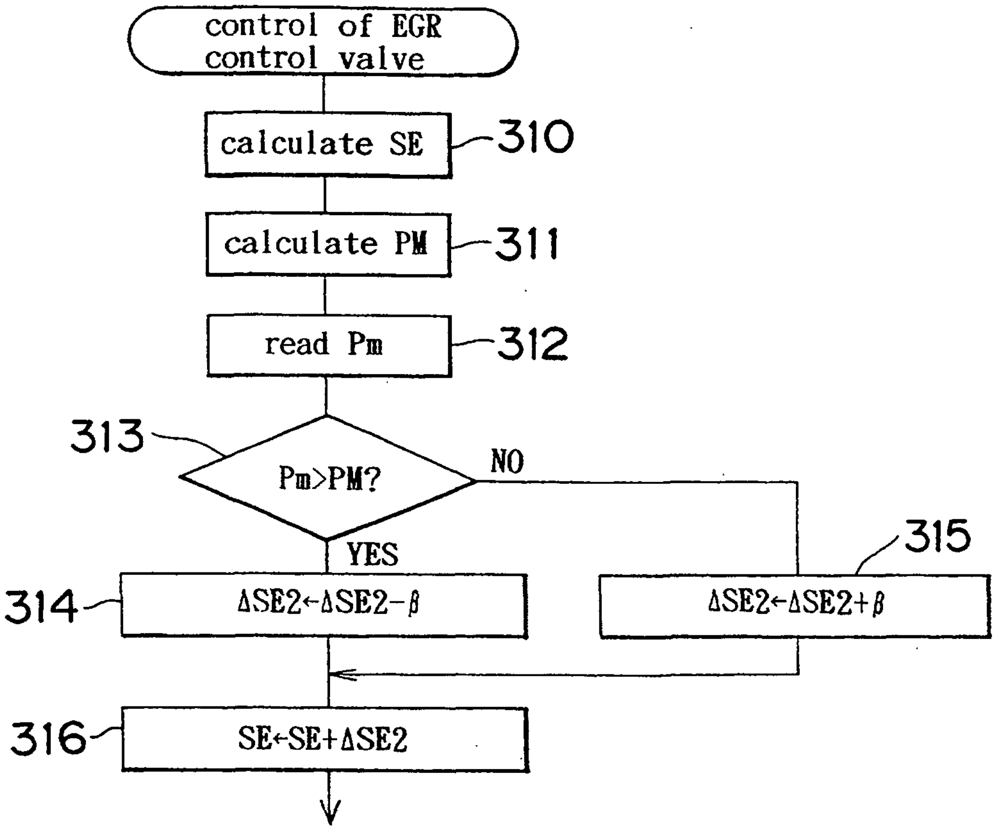
control of EGR control valve
calculate SE
310
calculate PM
311
read Pm
312
313
Pm>PM?
NO
YES
315
314
ΔSE2←ΔSE2−β
ΔSE2←ΔSE2+β
316
SE←SE+ΔSE2

FIG. 28A

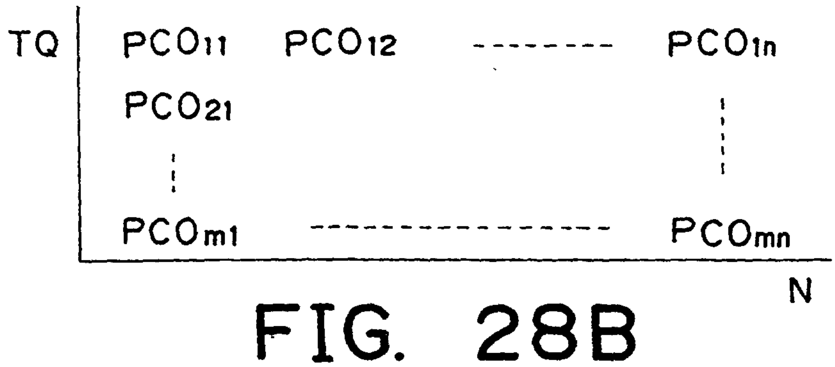


FIG. 28B

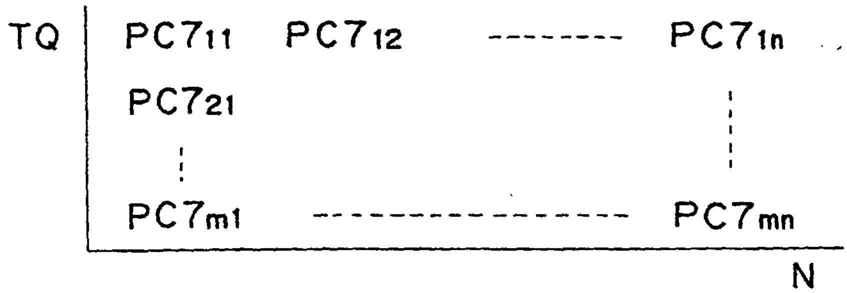


FIG. 28C

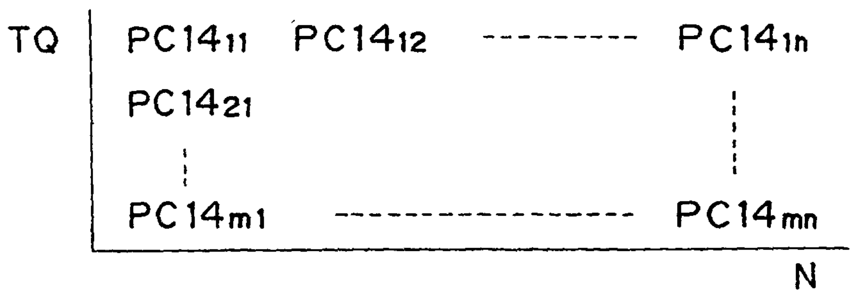


FIG. 28D

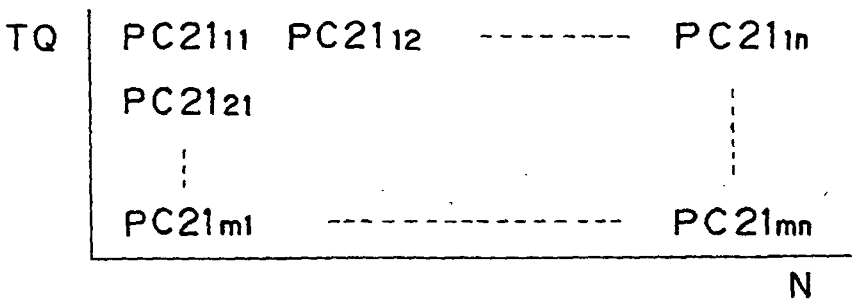

FIG. 29

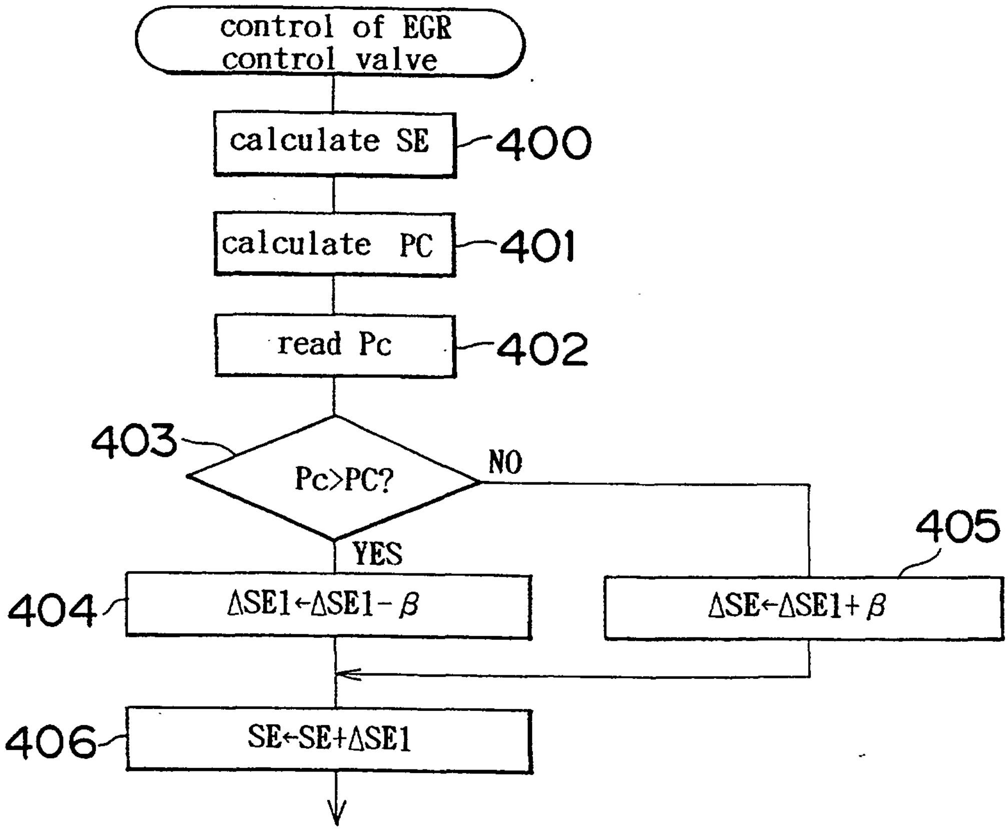
control of EGR control valve
calculate SE
400
calculate PC
401
read Pc
402
403
Pc>PC?
NO
YES
404
ΔSE1←ΔSE1−β
405
ΔSE←ΔSE1+β
406
SE←SE+ΔSE1

FIG. 30

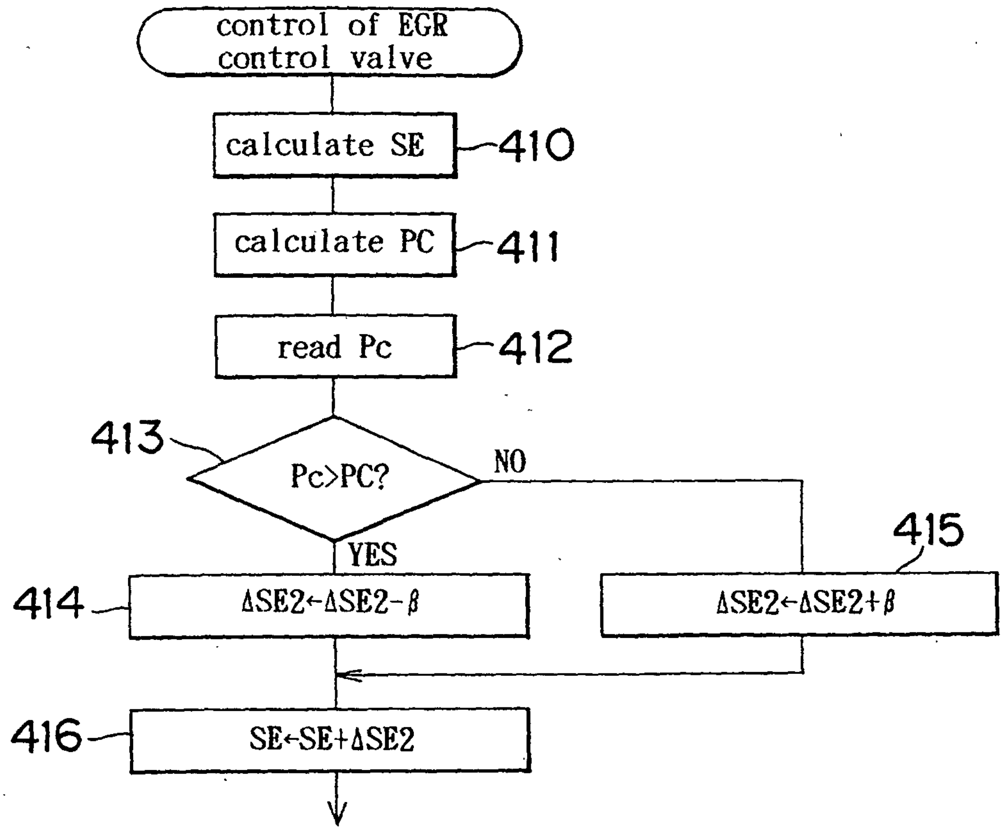
control of EGR control valve
calculate SE
410
calculate PC
411
read Pc
412
413
Pc>PC?
NO
YES
414
ΔSE2←ΔSE2-β
415
ΔSE2←ΔSE2+β
416
SE←SE+ΔSE2

FIG. 31 A

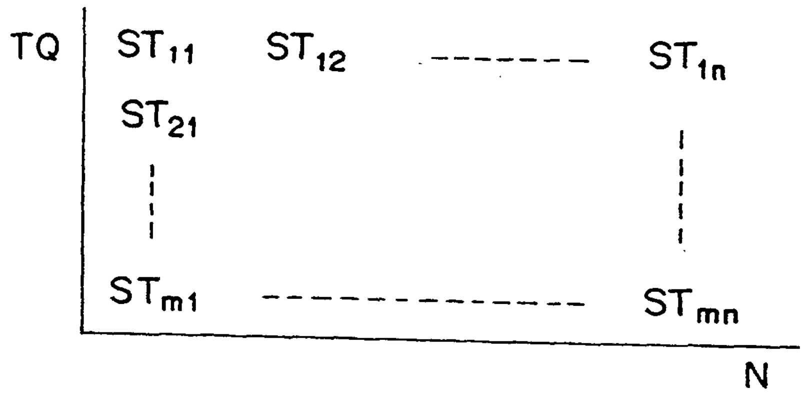


FIG. 31 B

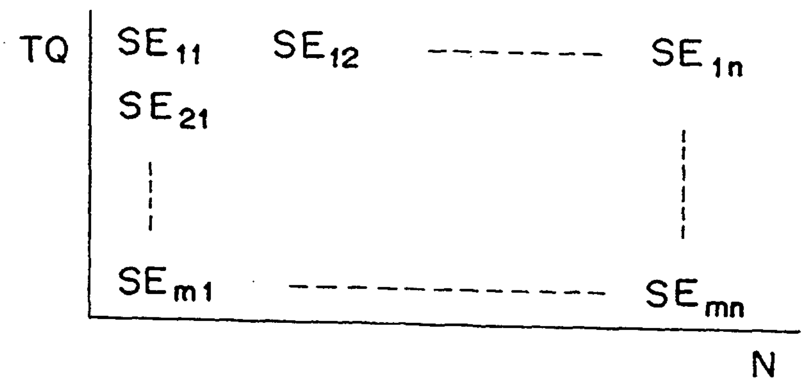

FIG. 32A

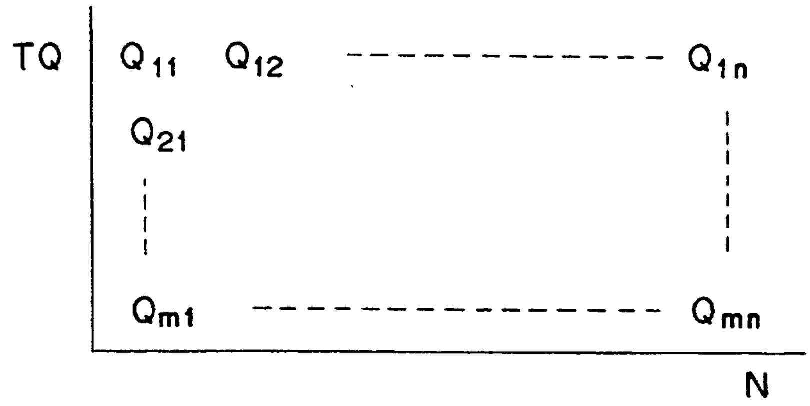


FIG. 32B

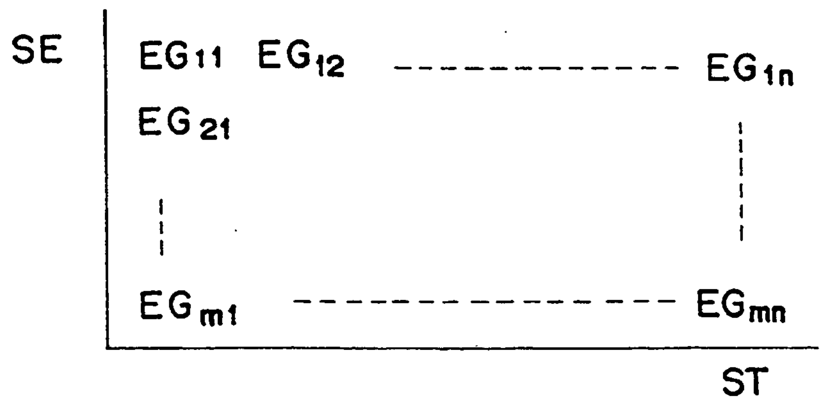

FIG. 33A

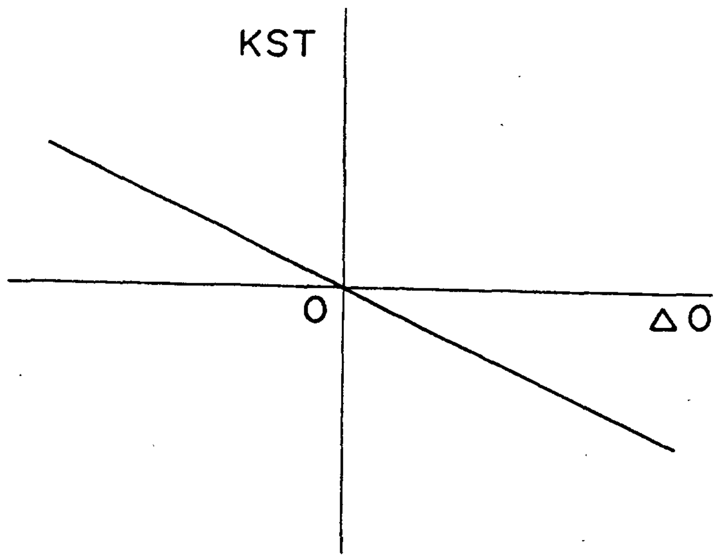


FIG. 33B

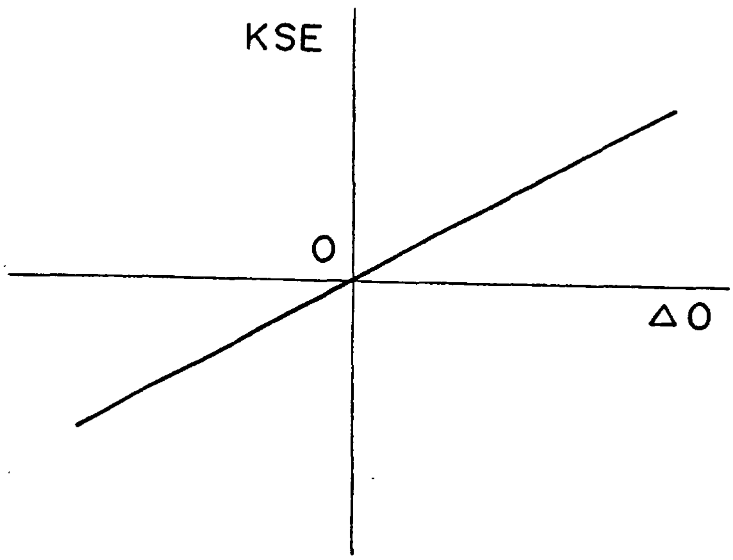

FIG. 34

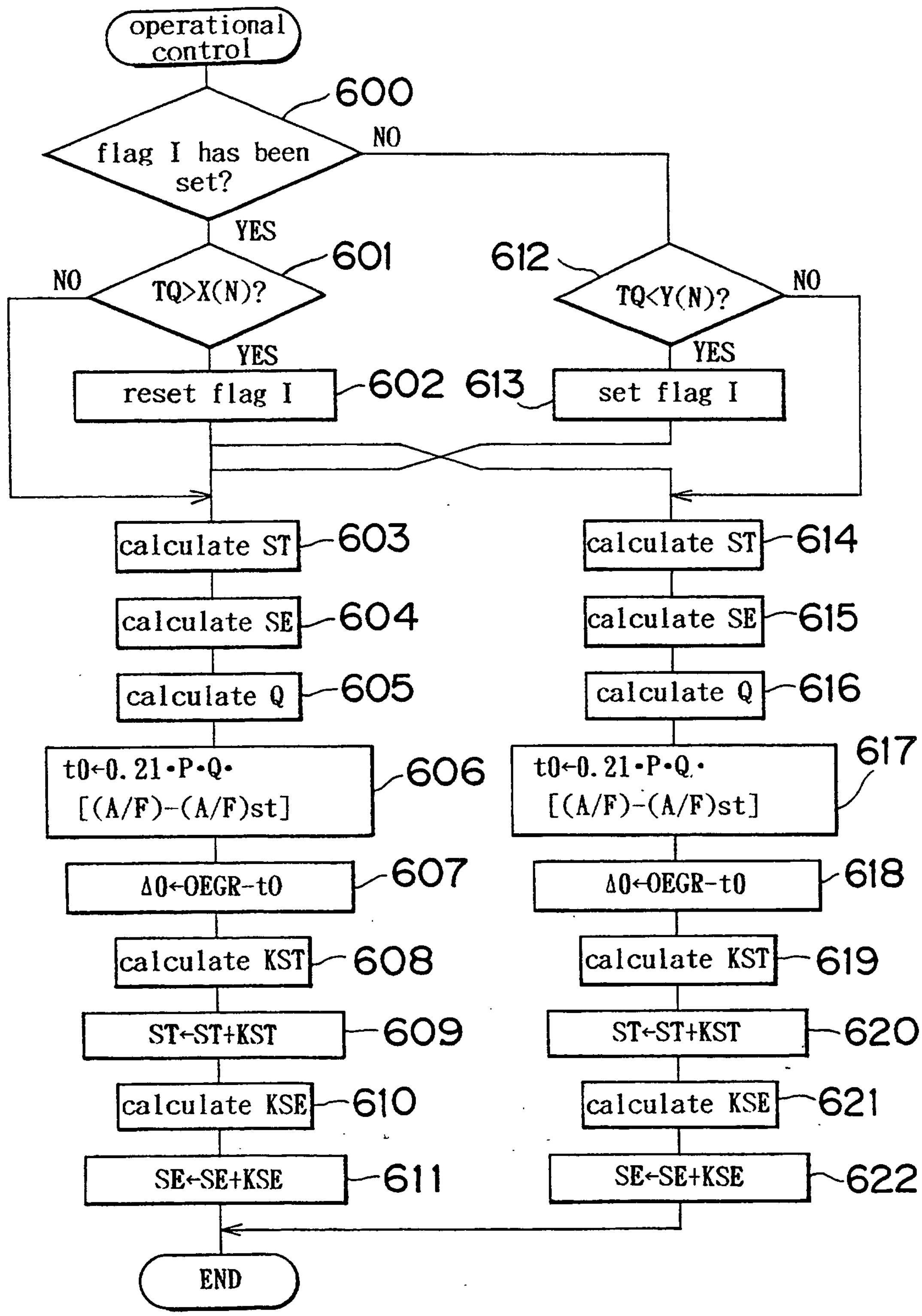
operational control
600
flag I has been set?
NO
YES
601
TQ>X(N)?
NO
YES
reset flag I
602
612
TQ<Y(N)?
NO
YES
613
set flag I
calculate ST
603
calculate SE
604
calculate Q
605
t0←0.21・P・Q・[(A/F)−(A/F)st]
606
Δ0←OEGR−t0
607
calculate KST
608
ST←ST+KST
609
calculate KSE
610
SE←SE+KSE
611
calculate ST
614
calculate SE
615
calculate Q
616
t0←0.21・P・Q・[(A/F)−(A/F)st]
617
Δ0←OEGR−t0
618
calculate KST
619
ST←ST+KST
620
calculate KSE
621
SE←SE+KSE
622
END

FIG. 35A

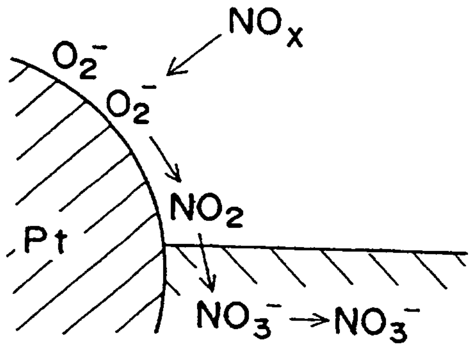


FIG. 35B

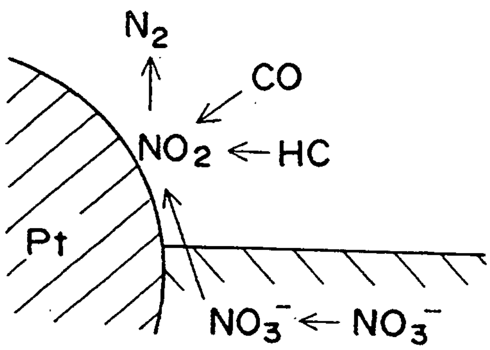

FIG. 36

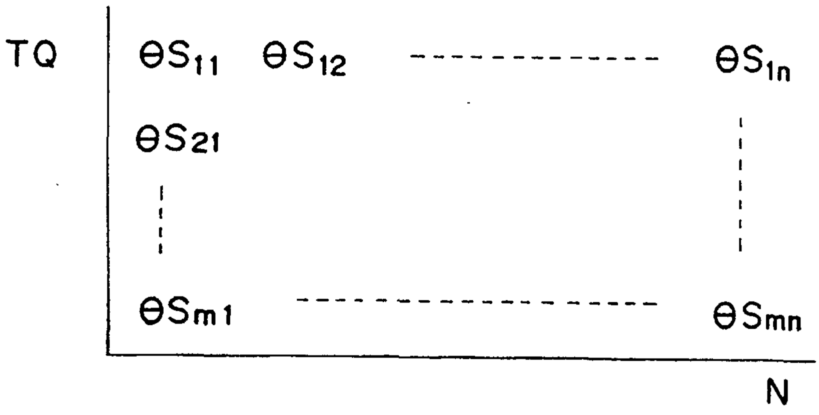


FIG. 37

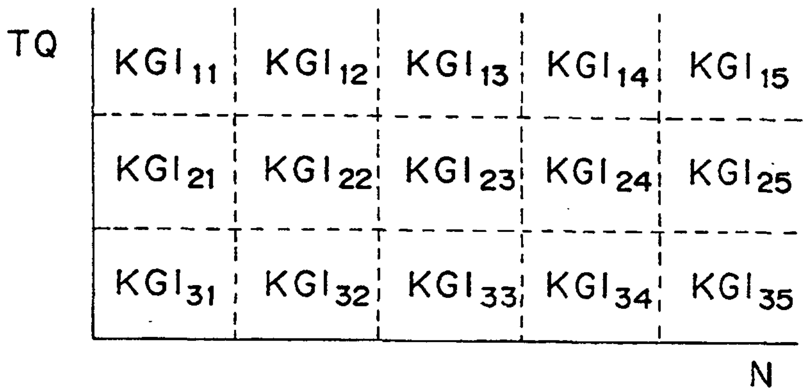


FIG. 38

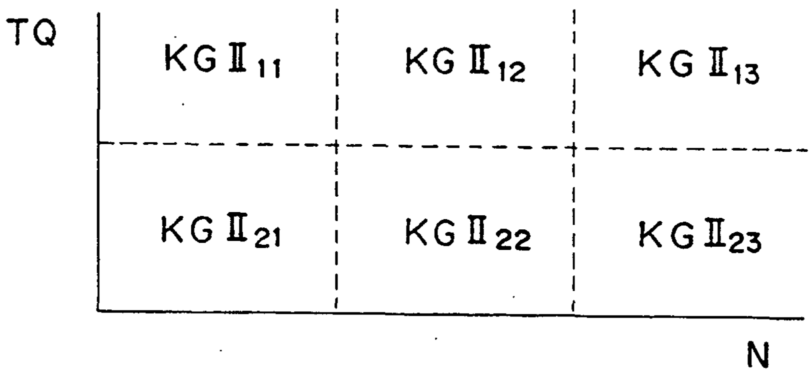

FIG. 39

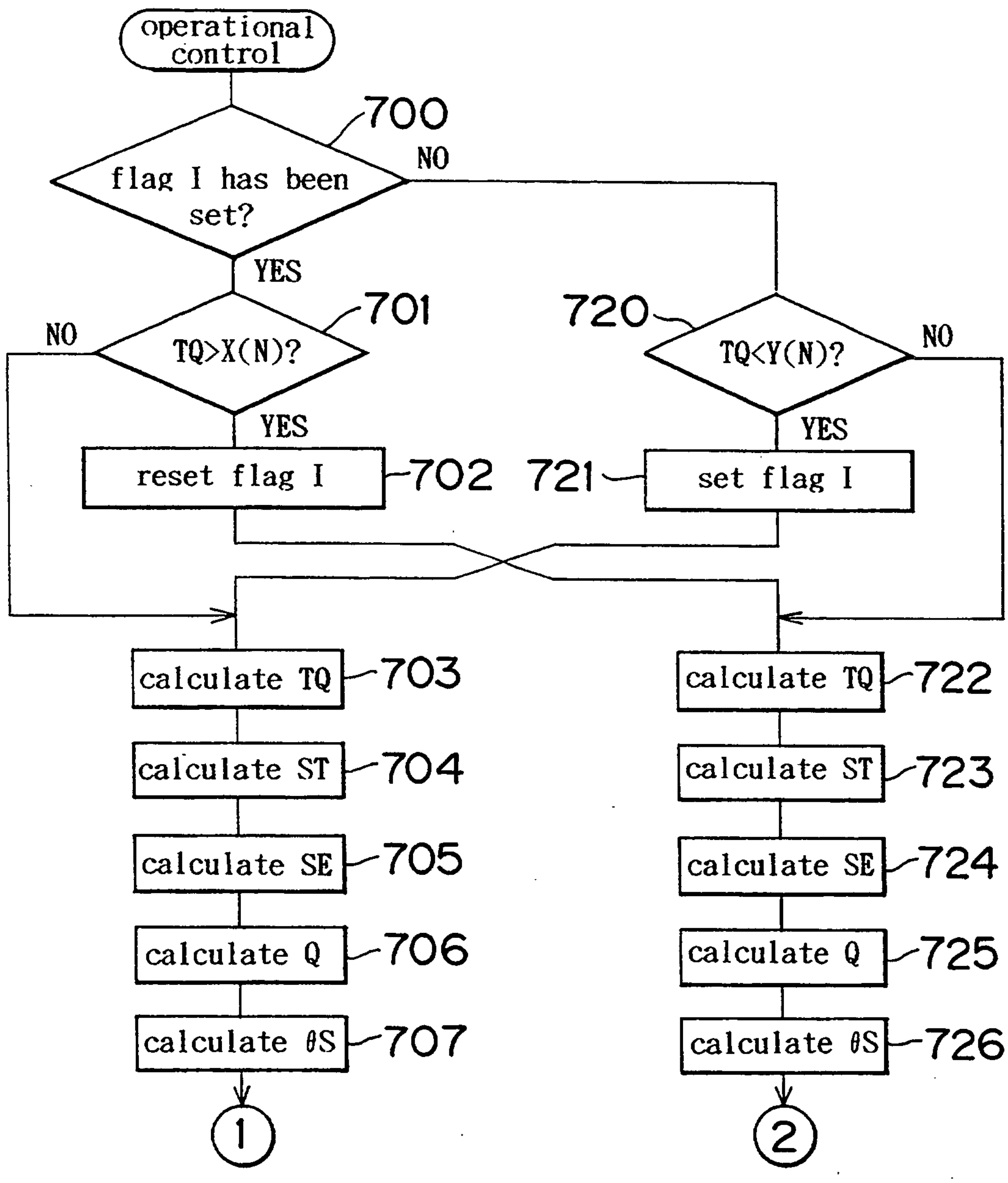
operational control
700
flag I has been set?
NO
YES
701
TQ>X(N)?
NO
YES
reset flag I
702
720
TQ<Y(N)?
NO
YES
721
set flag I
calculate TQ
703
calculate ST
704
calculate SE
705
calculate Q
706
calculate θS
707
1
calculate TQ
722
calculate ST
723
calculate SE
724
calculate Q
725
calculate θS
726
2

FIG. 40

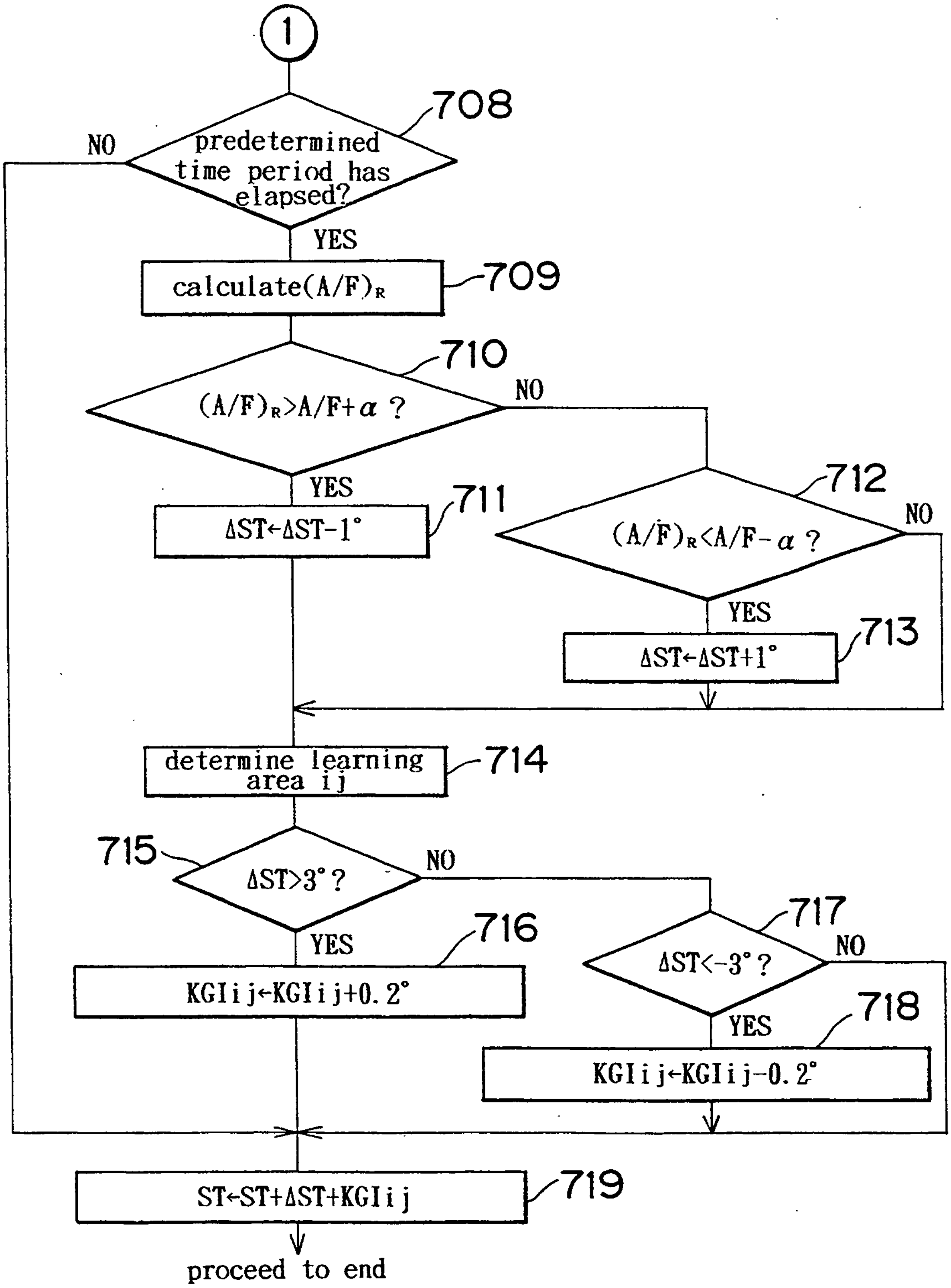
1
708
NO
predetermined time period has elapsed?
YES
calculate(A/F)R
709
710
(A/F)R>A/F+α ?
NO
YES
ΔST←ΔST-1°
711
712
(A/F)R<A/F-α ?
NO
YES
ΔST←ΔST+1°
713
determine learning area ij
714
715
ΔST>3°?
NO
YES
716
KGIij←KGIij+0.2°
717
ΔST<-3°?
NO
YES
718
KGIij←KGIij-0.2°
ST←ST+ΔST+KGIij
719
proceed to end

FIG. 41

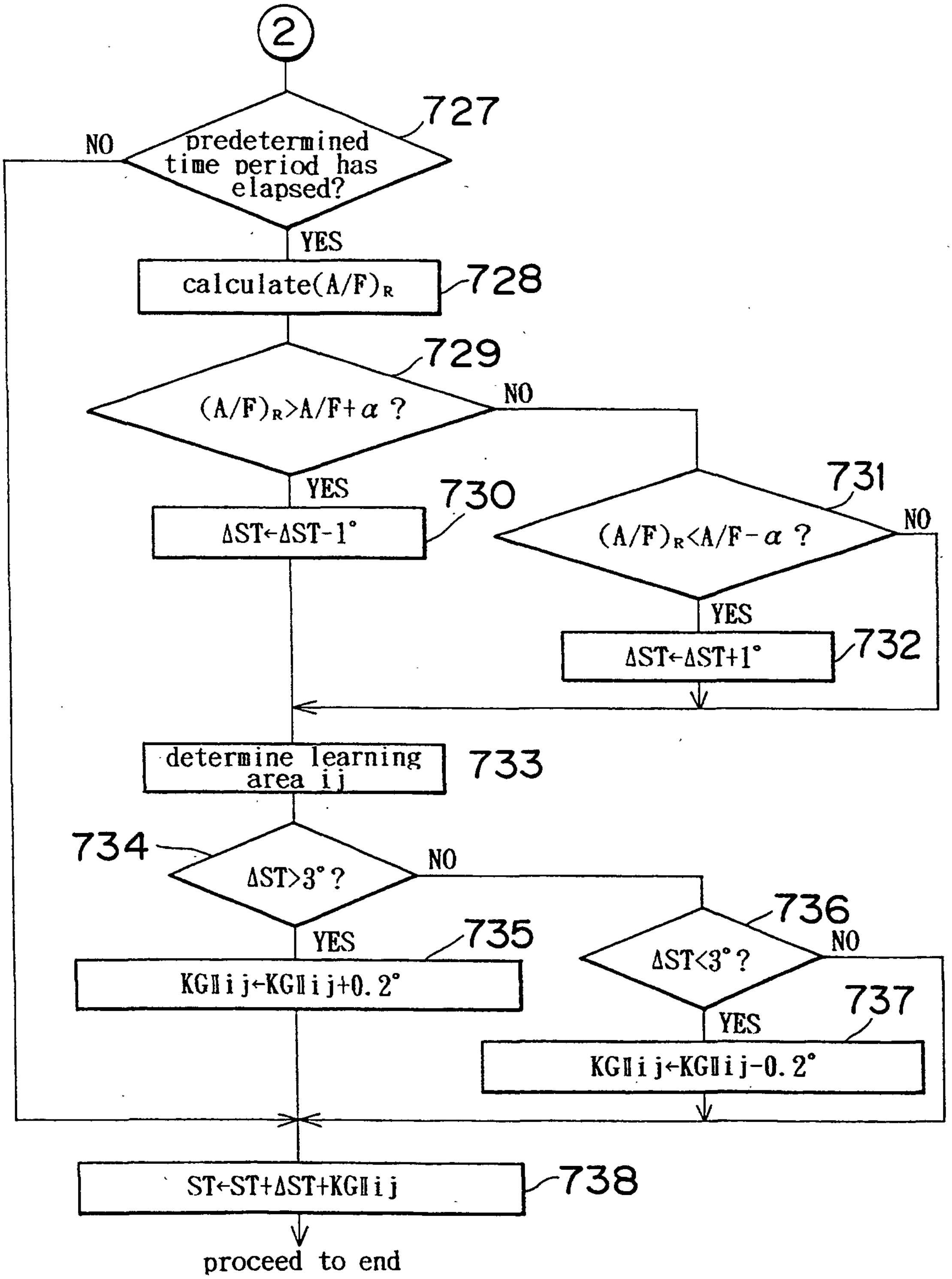
2
predetermined time period has elapsed?
727
NO
YES
calculate(A/F)R
728
(A/F)R>A/F+α ?
729
NO
YES
ΔST←ΔST-1°
730
(A/F)R<A/F-α ?
731
NO
YES
ΔST←ΔST+1°
732
determine learning area ij
733
ΔST>3°?
734
NO
YES
KGIIij←KGIIij+0.2°
735
ΔST<3°?
736
NO
YES
KGIIij←KGIIij-0.2°
737
ST←ST+ΔST+KGIIij
738
proceed to end

FIG. 42A

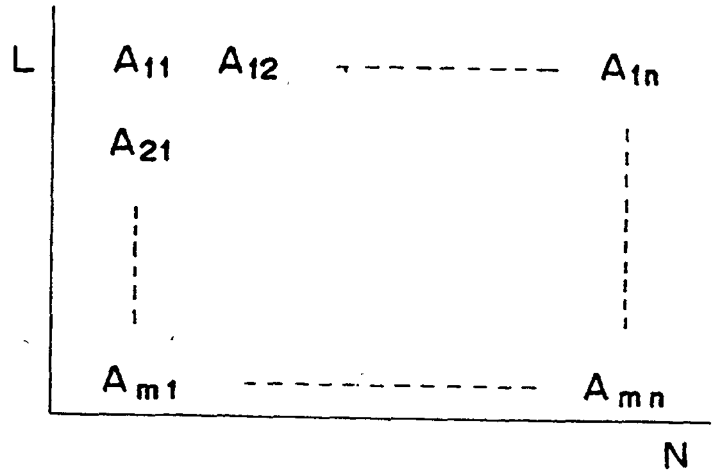


FIG. 42B

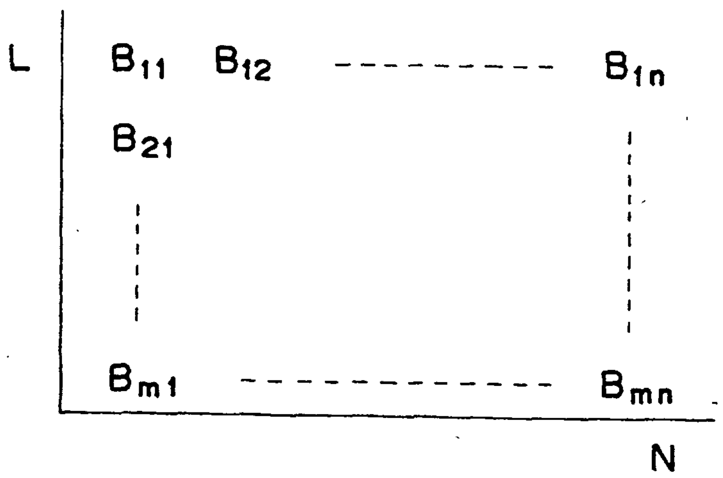

FIG. 43

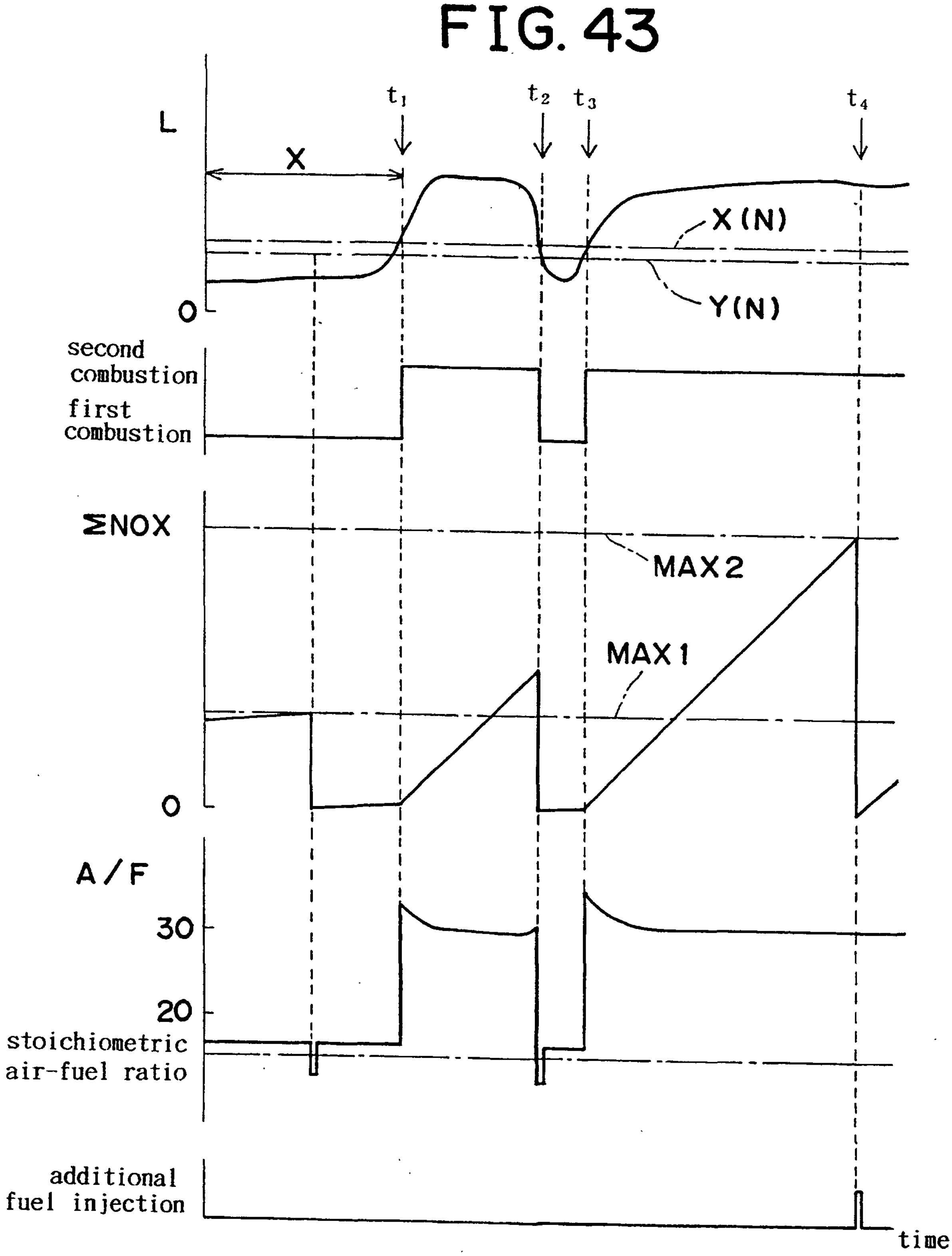
L
t1
t2
t3
t4
X
X(N)
Y(N)
0
second combustion
first combustion
ΣNOX
MAX2
MAX1
0
A/F
30
20
stoichiometric air-fuel ratio
additional fuel injection
time

FIG. 44

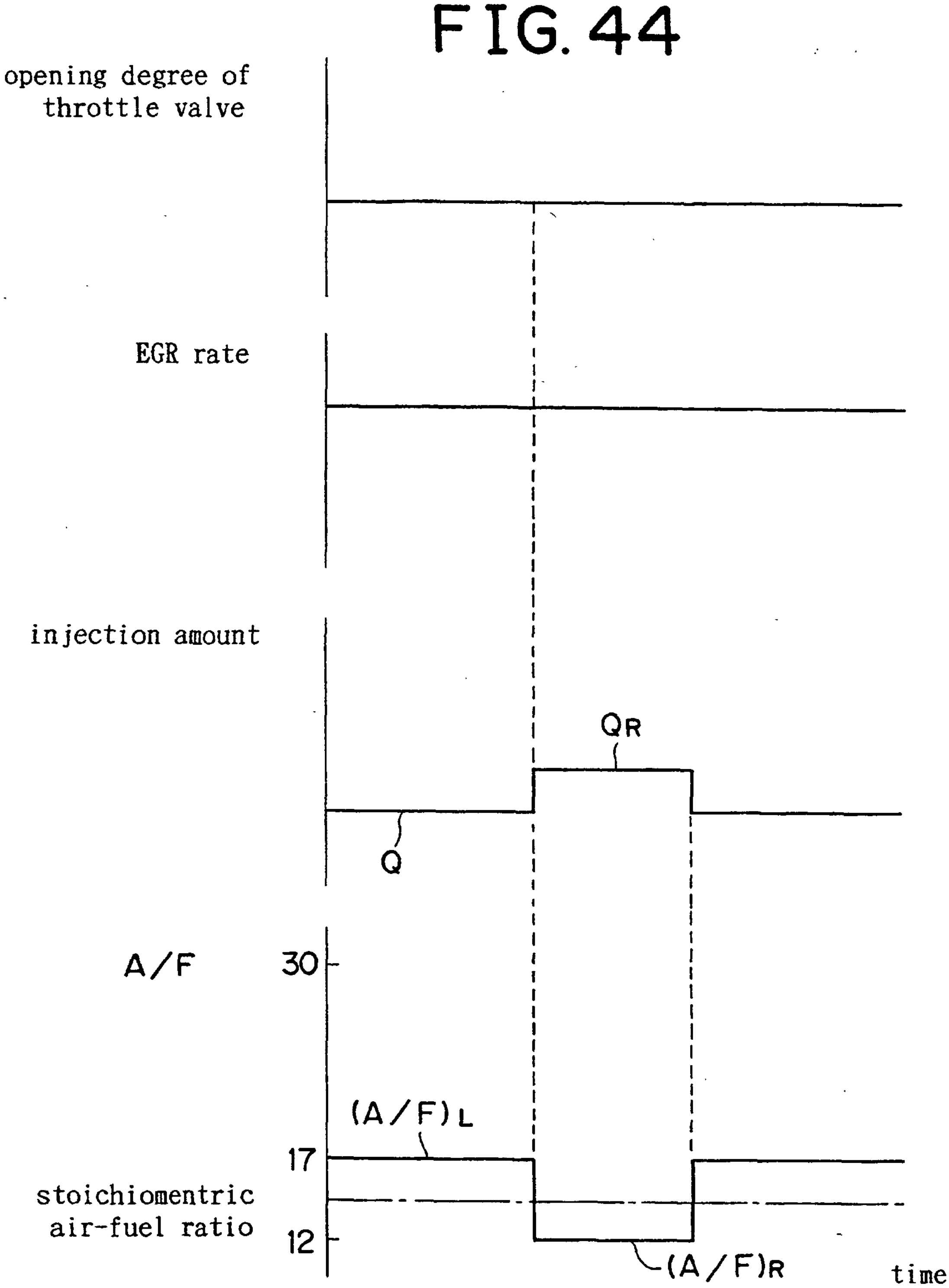
opening degree of throttle valve
EGR rate
injection amount
QR
Q
A/F
30
(A/F)L
17
stoichiomentric air-fuel ratio
12
(A/F)R
time

FIG. 45

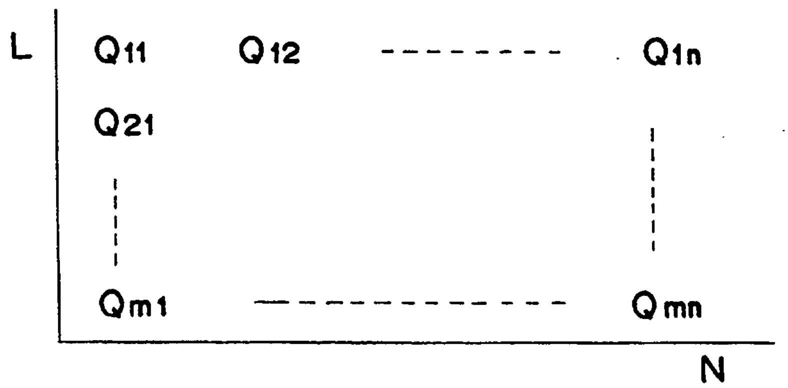

FIG. 46

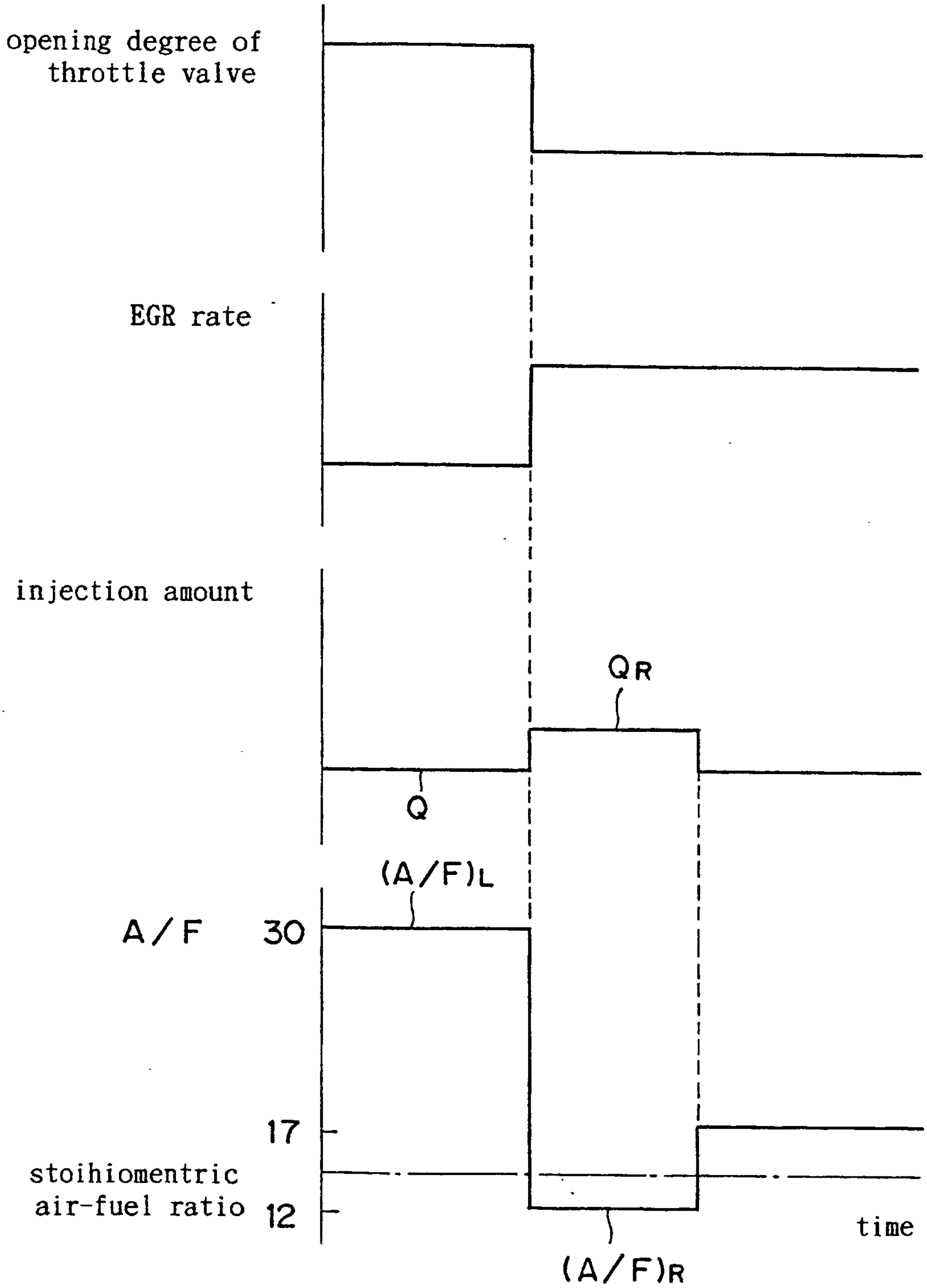
opening degree of throttle valve
EGR rate
injection amount
QR
Q
(A/F)L
A/F
30
17
stoihiomentric air-fuel ratio
12
time
(A/F)R

FIG. 47

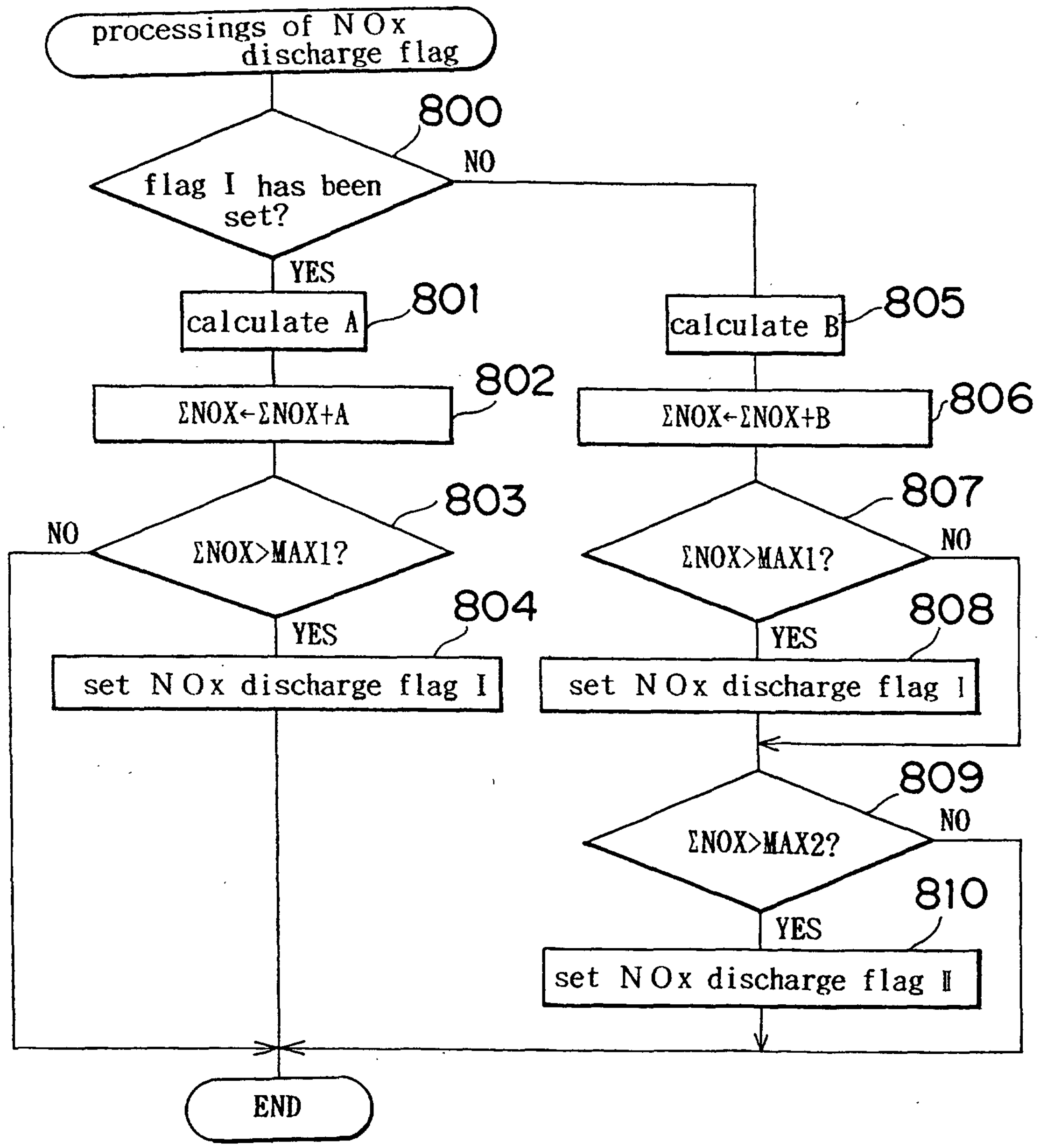
processings of NOx discharge flag
800
flag I has been set?
NO
YES
calculate A
801
calculate B
805
ΣNOX←ΣNOX+A
802
ΣNOX←ΣNOX+B
806
ΣNOX>MAX1?
803
NO
YES
ΣNOX>MAX1?
807
NO
YES
set NOx discharge flag I
804
set NOx discharge flag I
808
ΣNOX>MAX2?
809
NO
YES
set NOx discharge flag II
810
END

FIG. 48

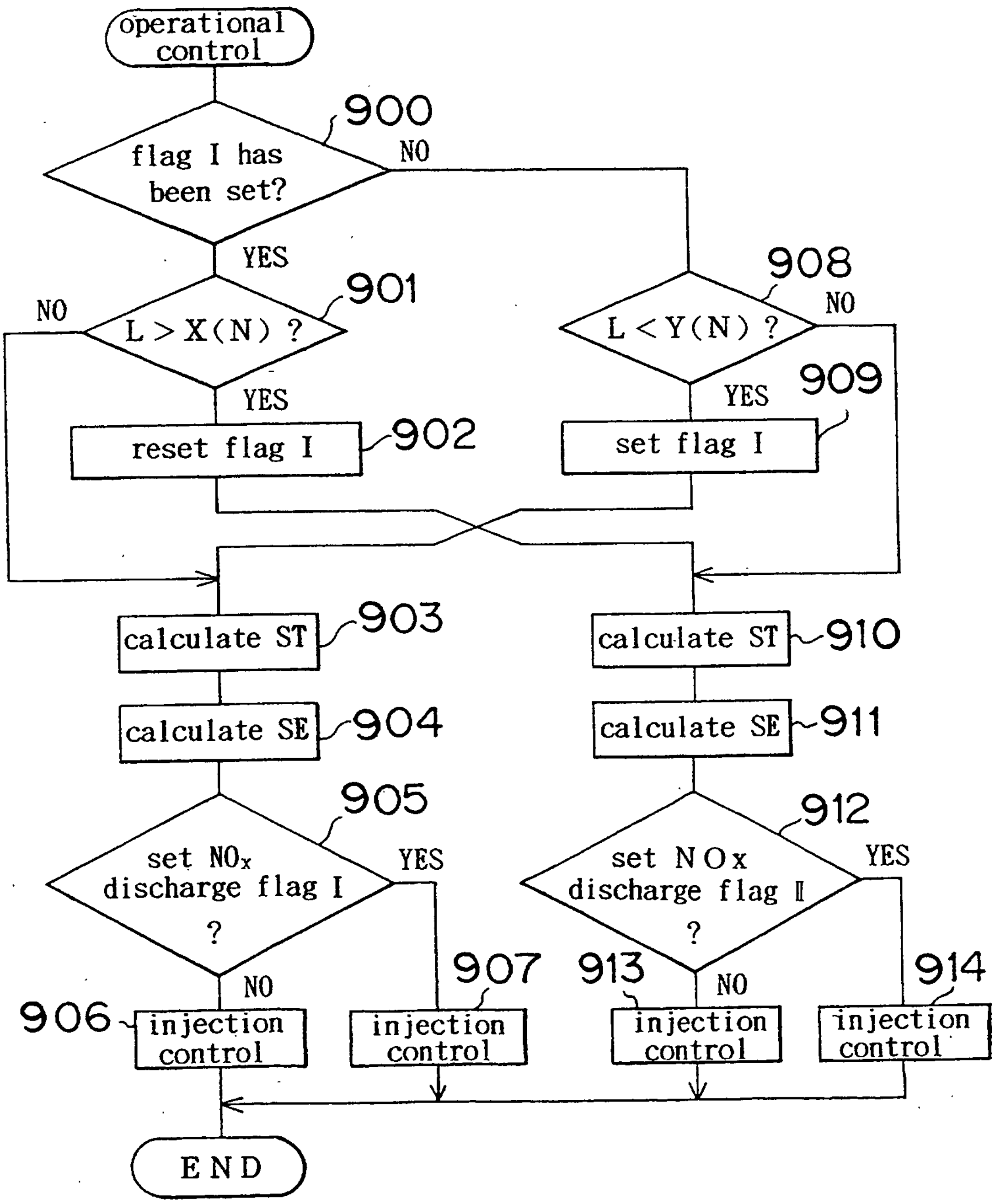
operational control
flag I has been set?
900
NO
YES
L > X(N) ?
901
NO
YES
reset flag I
902
L < Y(N) ?
908
NO
YES
909
set flag I
calculate ST
903
calculate SE
904
set NOx discharge flag I ?
905
YES
NO
906
injection control
907
injection control
calculate ST
910
calculate SE
911
set NOx discharge flag II ?
912
YES
NO
913
injection control
914
injection control
END

FIG. 49

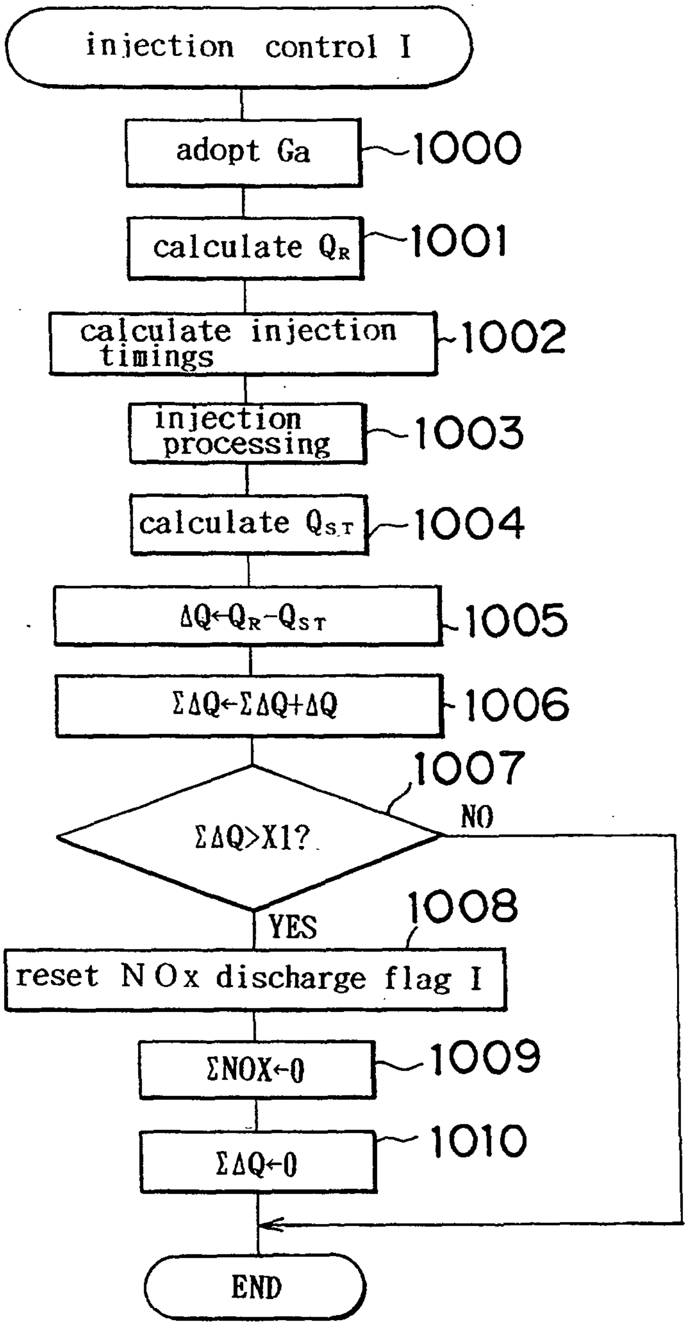
injection control I
adopt Ga
1000
calculate $Q_R$
1001
calculate injection timings
1002
injection processing
1003
calculate $Q_{ST}$
1004
$\Delta Q \leftarrow Q_R - Q_{ST}$
1005
$\Sigma\Delta Q \leftarrow \Sigma\Delta Q + \Delta Q$
1006
1007
$\Sigma\Delta Q > X1$?
NO
YES
1008
reset NOx discharge flag I
$\Sigma NOX \leftarrow 0$
1009
$\Sigma\Delta Q \leftarrow 0$
1010
END

FIG. 50

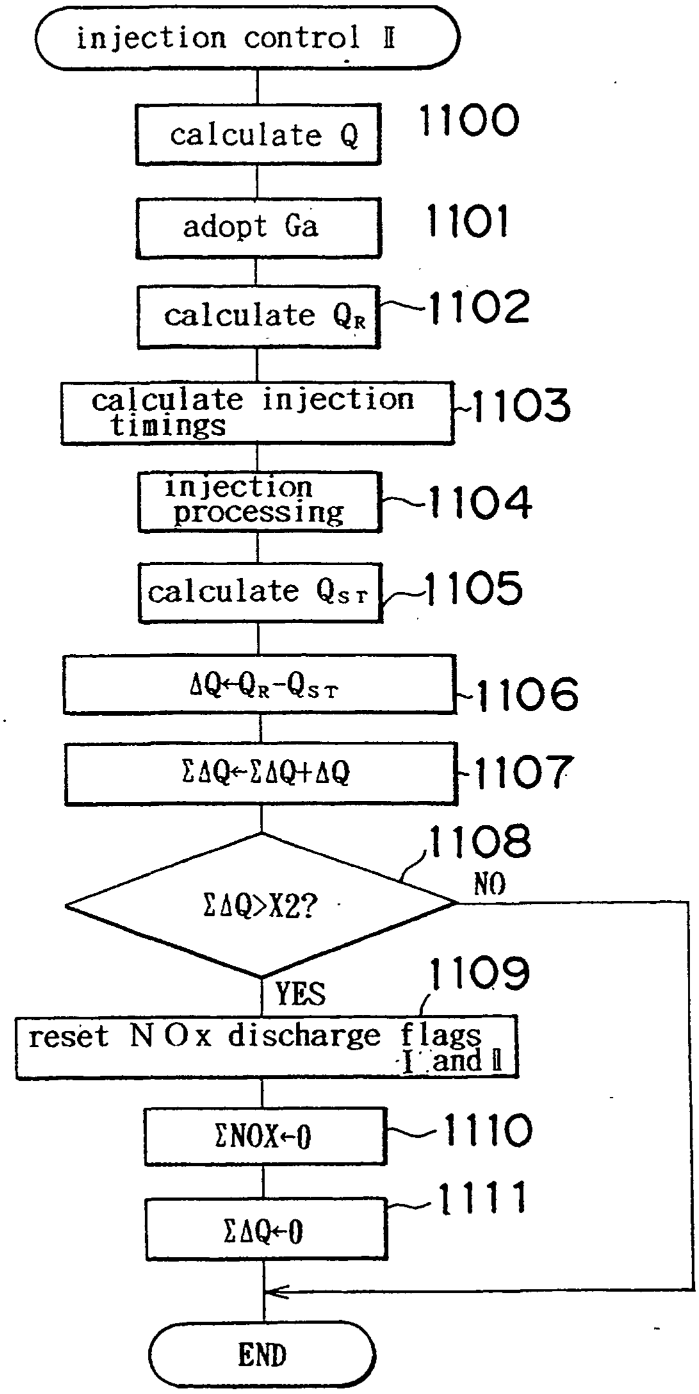
injection control II
calculate Q
1100
adopt Ga
1101
calculate $Q_R$
1102
calculate injection timings
1103
injection processing
1104
calculate $Q_{ST}$
1105
$\Delta Q \leftarrow Q_R - Q_{ST}$
1106
$\Sigma\Delta Q \leftarrow \Sigma\Delta Q + \Delta Q$
1107
1108
$\Sigma\Delta Q > X2$?
NO
YES
1109
reset NOx discharge flags I and II
$\Sigma NOX \leftarrow 0$
1110
$\Sigma\Delta Q \leftarrow 0$
1111
END

FIG. 51

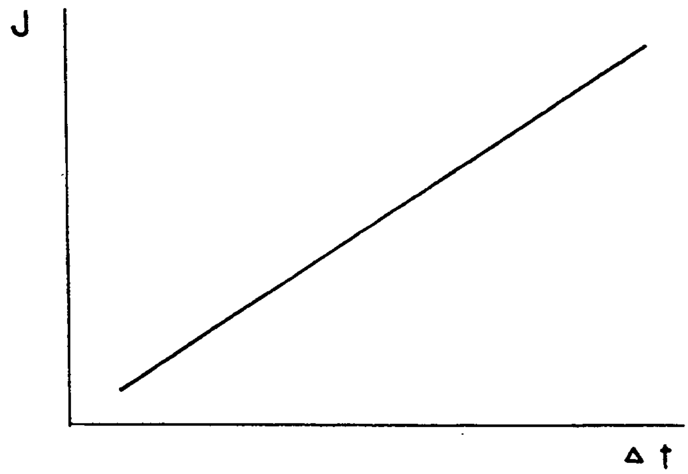


FIG. 52

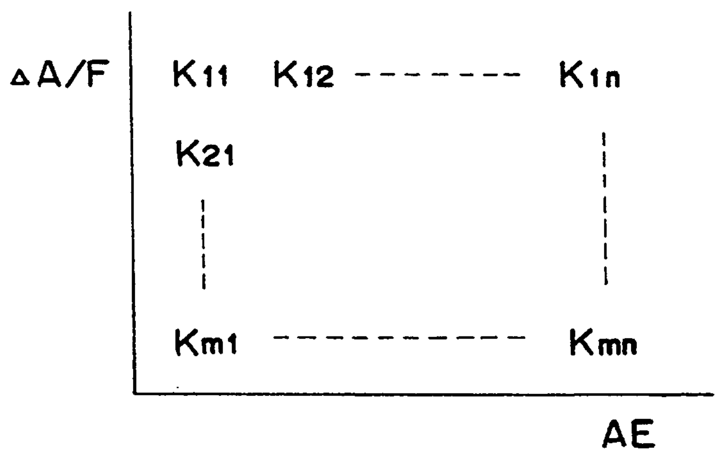

FIG. 53

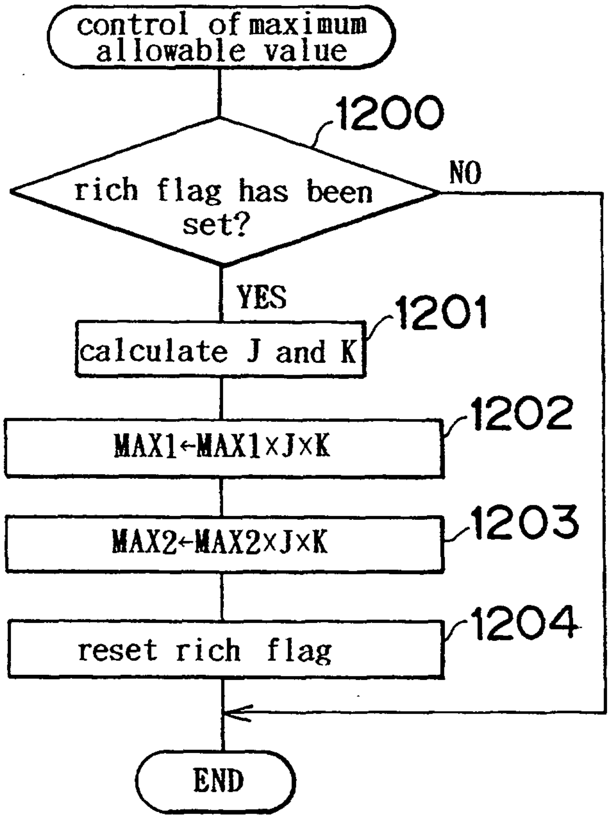
control of maximum allowable value
1200
rich flag has been set?
NO
YES
1201
calculate J and K
1202
MAX1←MAX1×J×K
1203
MAX2←MAX2×J×K
1204
reset rich flag
END

FIG. 54

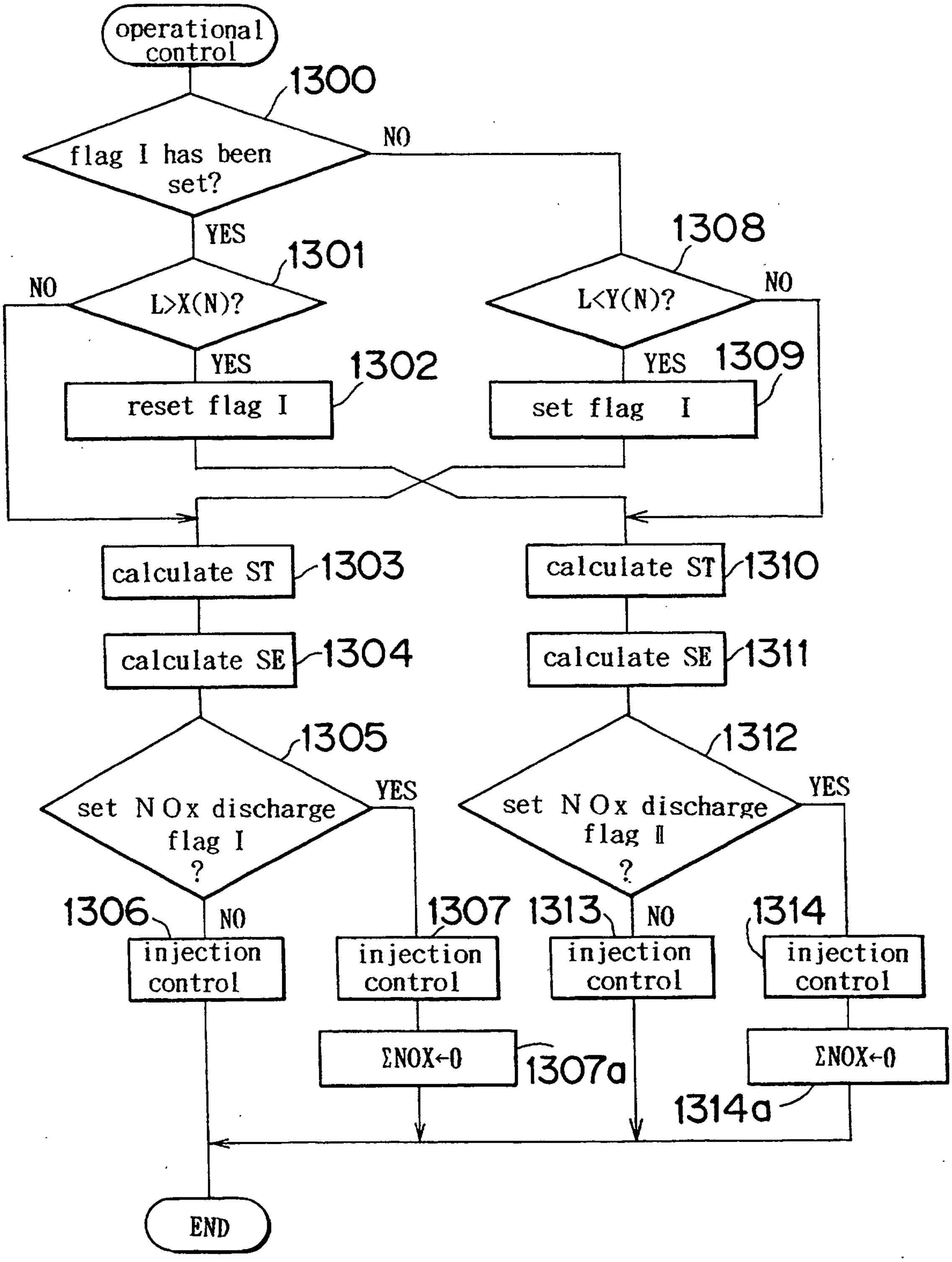
operational control
1300
flag I has been set?
NO
YES
1301
NO
L>X(N)?
YES
1302
reset flag I
1308
L<Y(N)?
NO
YES
1309
set flag I
calculate ST
1303
calculate SE
1304
1305
set NOx discharge flag I ?
YES
1306
NO
injection control
1307
injection control
ΣNOX←0
1307a
calculate ST
1310
calculate SE
1311
1312
set NOx discharge flag II ?
YES
1313
NO
injection control
1314
injection control
ΣNOX←0
1314a
END

FIG. 55

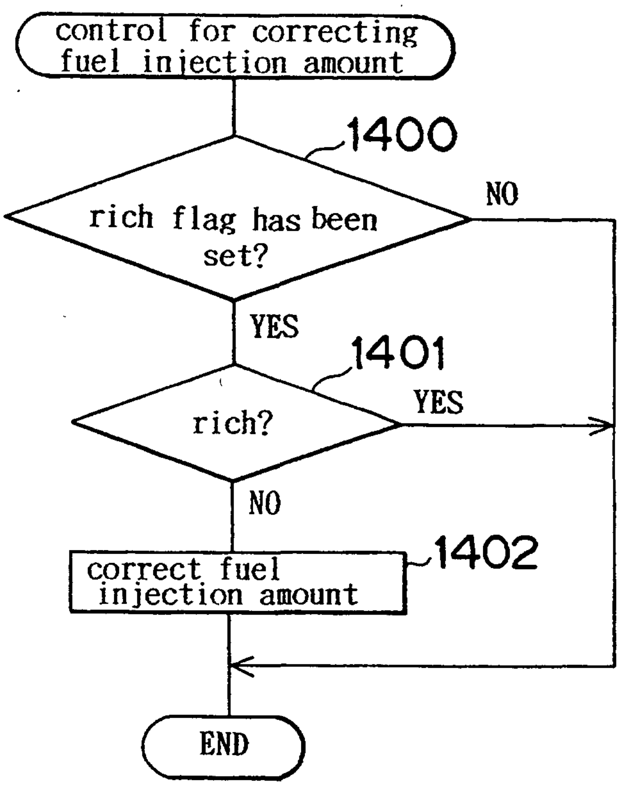
control for correcting fuel injection amount
1400
rich flag has been set?
NO
YES
1401
rich?
YES
NO
correct fuel injection amount
1402
END

FIG. 56

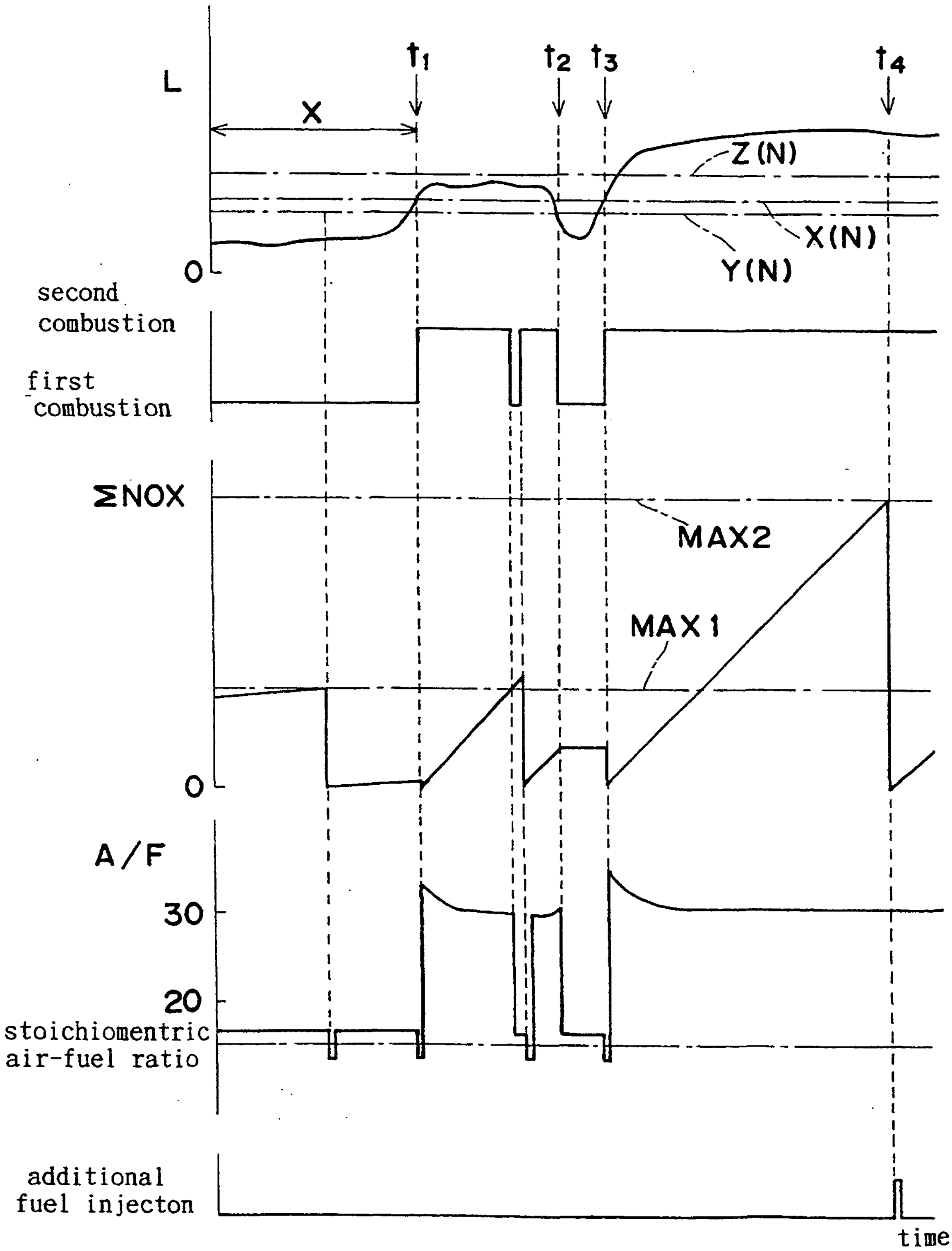
L
X
t1
t2
t3
t4
Z(N)
X(N)
Y(N)
0
second combustion
first combustion
ΣNOX
MAX2
MAX1
0
A/F
30
20
stoichiomentric air-fuel ratio
additional fuel injecton
time

FIG.57

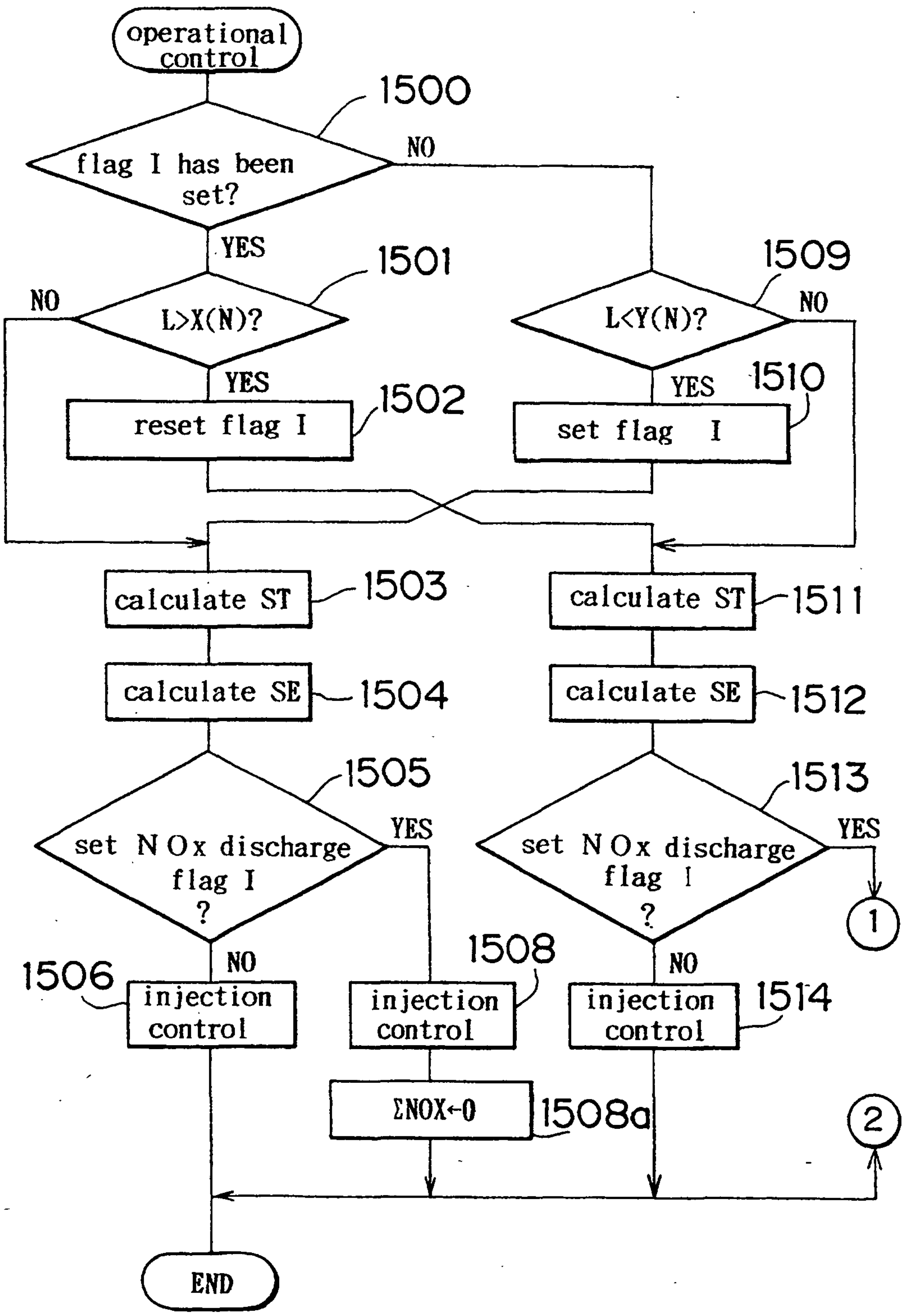
operational control
1500
flag I has been set?
NO
YES
1501
L>X(N)?
NO
YES
1502
reset flag I
1509
L<Y(N)?
NO
YES
1510
set flag I
calculate ST
1503
calculate SE
1504
1505
set NOx discharge flag I ?
YES
NO
1506
injection control
1508
injection control
ΣNOX←0
1508a
calculate ST
1511
calculate SE
1512
1513
set NOx discharge flag I ?
YES
1
NO
injection control
1514
2
END

FIG. 58

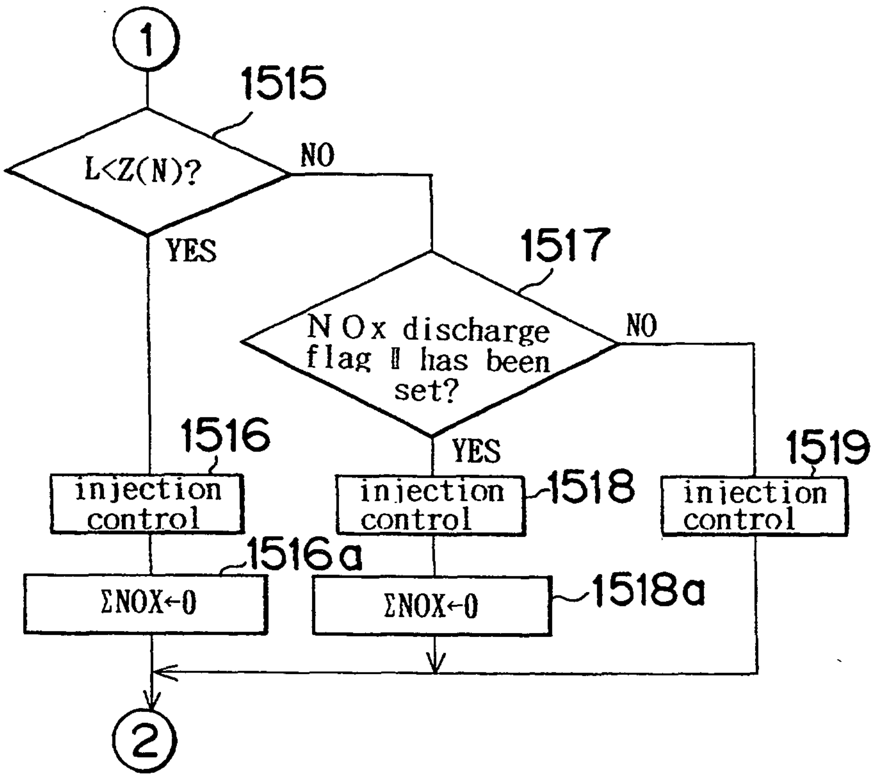
1
1515
L<Z(N)?
NO
YES
1517
NOx discharge flag II has been set?
NO
YES
1516
injection control
1518
injection control
1519
injection control
1516a
ΣNOX←0
ΣNOX←0
1518a
2

# FIG. 59

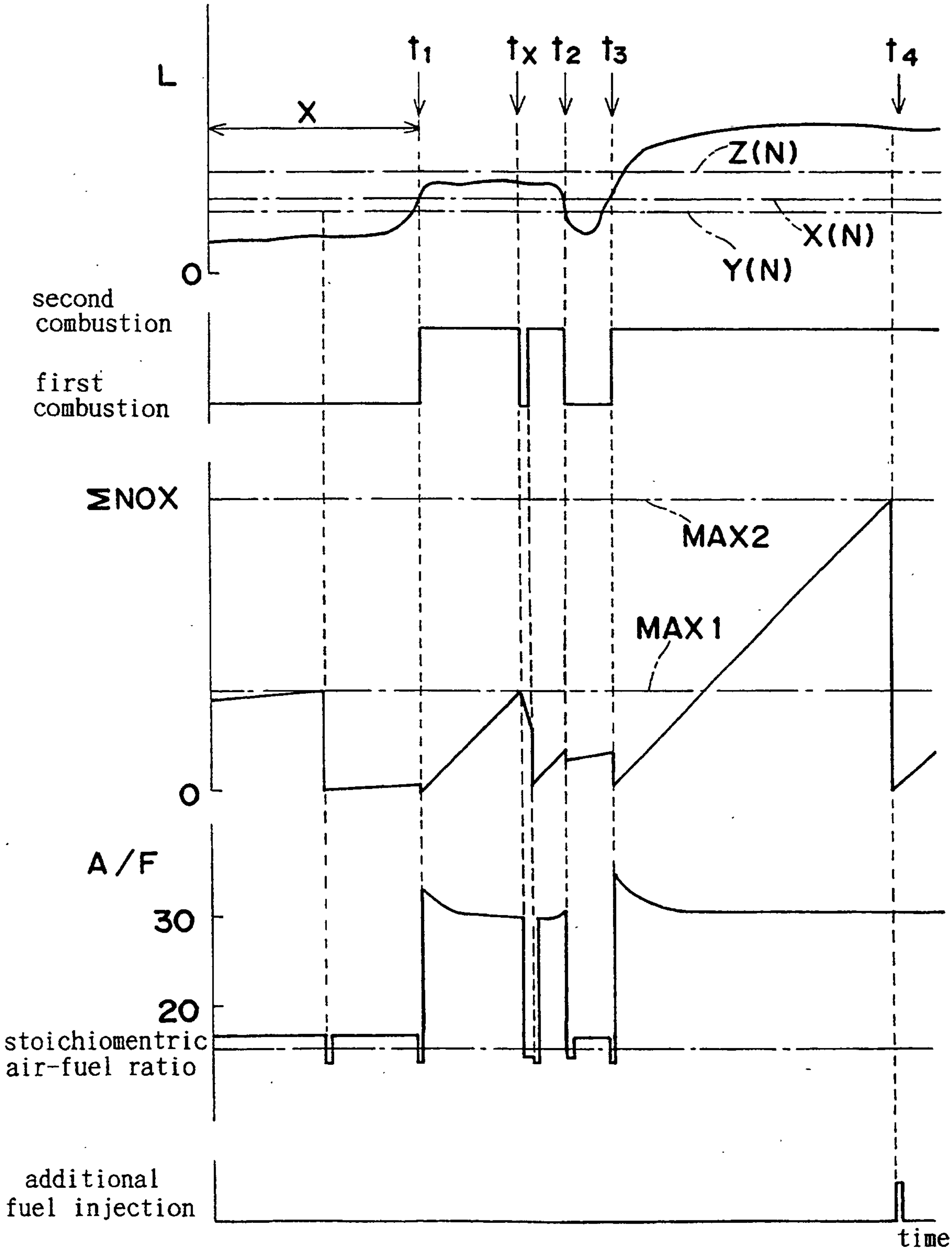
L
X
t1
tx
t2
t3
t4
Z(N)
X(N)
Y(N)
0
second combustion
first combustion
ΣNOX
MAX2
MAX1
0
A/F
30
20
stoichiomentric air-fuel ratio
additional fuel injection
time

FIG. 60

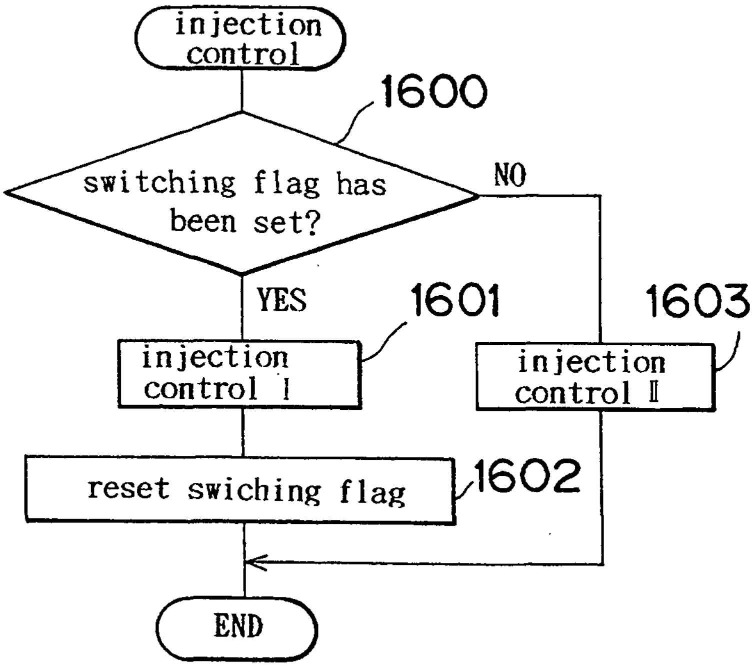
injection control
1600
switching flag has been set?
NO
YES
1601
1603
injection control I
injection control II
reset swiching flag
1602
END

FIG. 61

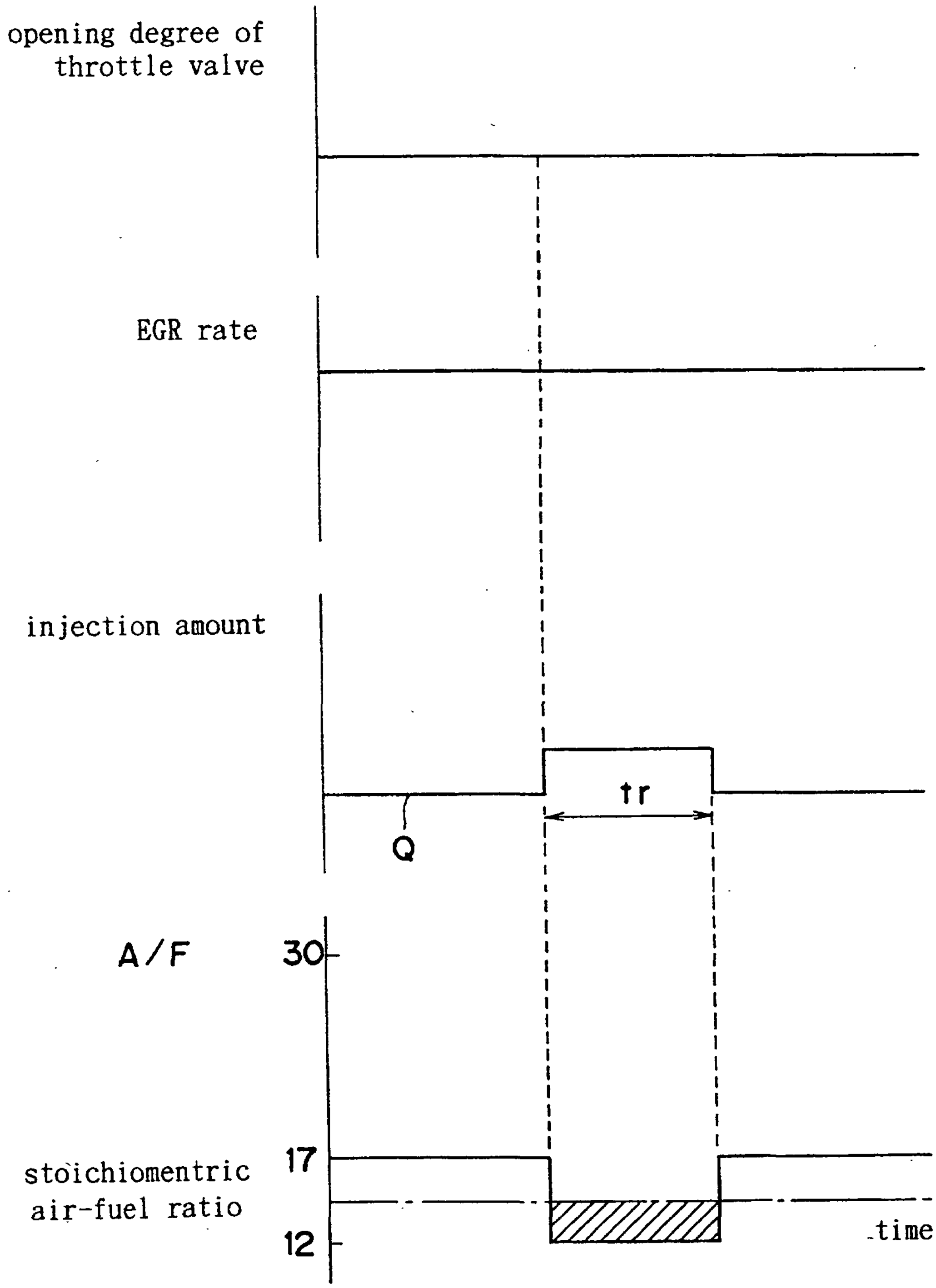
opening degree of throttle valve
EGR rate
injection amount
tr
Q
A/F
30
17
12
stoichiomentric air-fuel ratio
time

FIG. 62

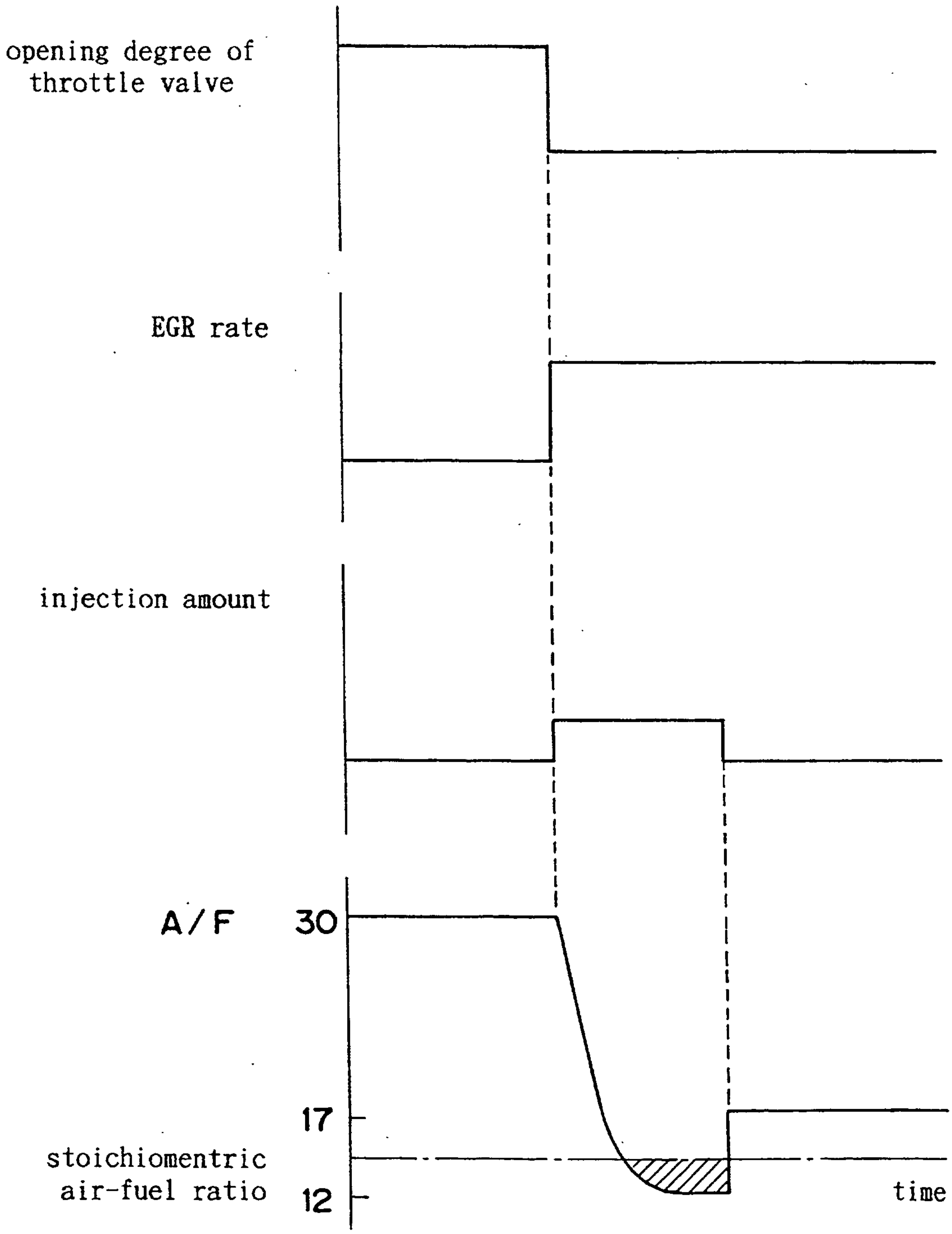
opening degree of throttle valve
EGR rate
injection amount
A/F
30
17
stoichiomentric air-fuel ratio
12
time

FIG. 63

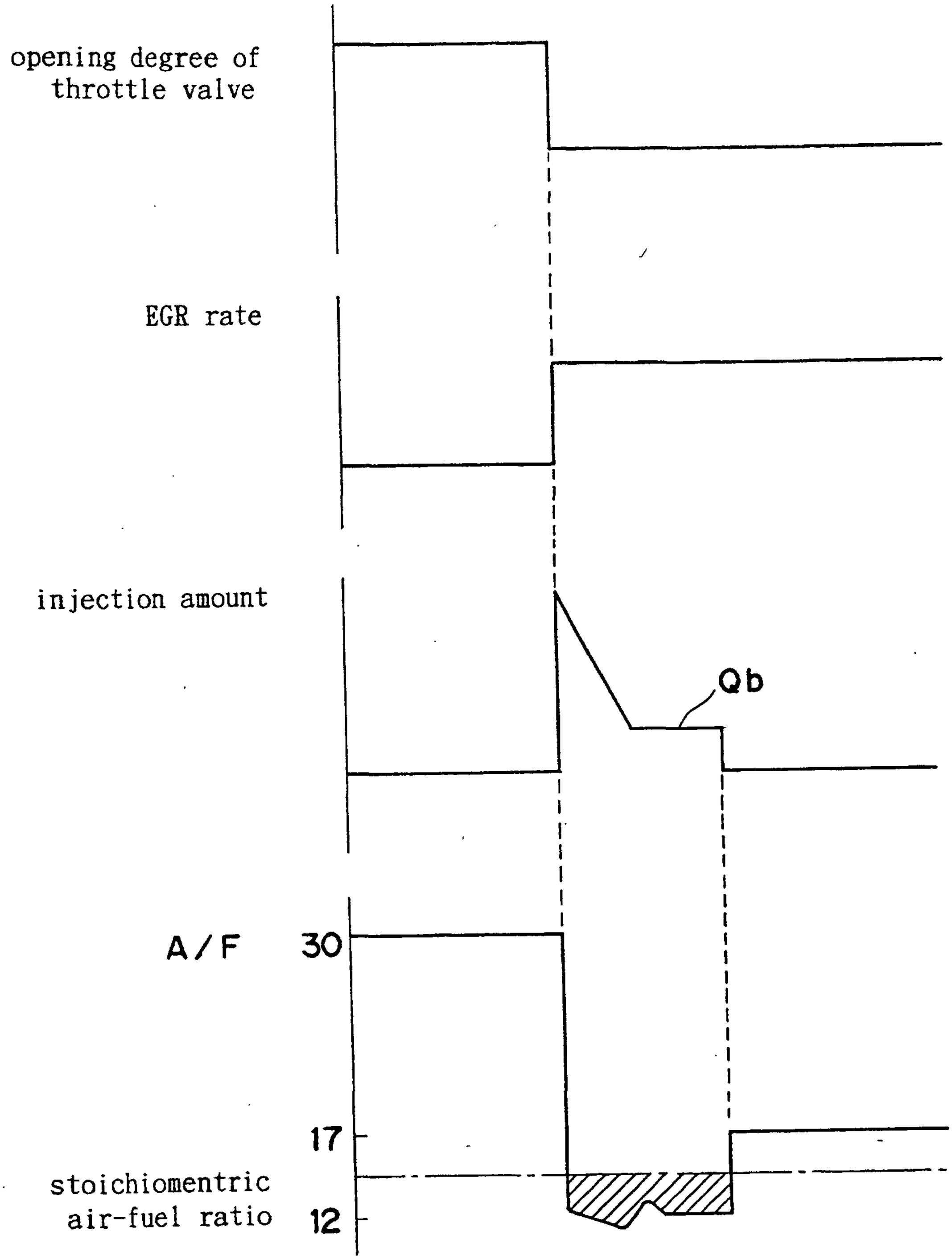
opening degree of throttle valve
EGR rate
injection amount
Qb
A/F
30
17
stoichiomentric air-fuel ratio
12

FIG. 64

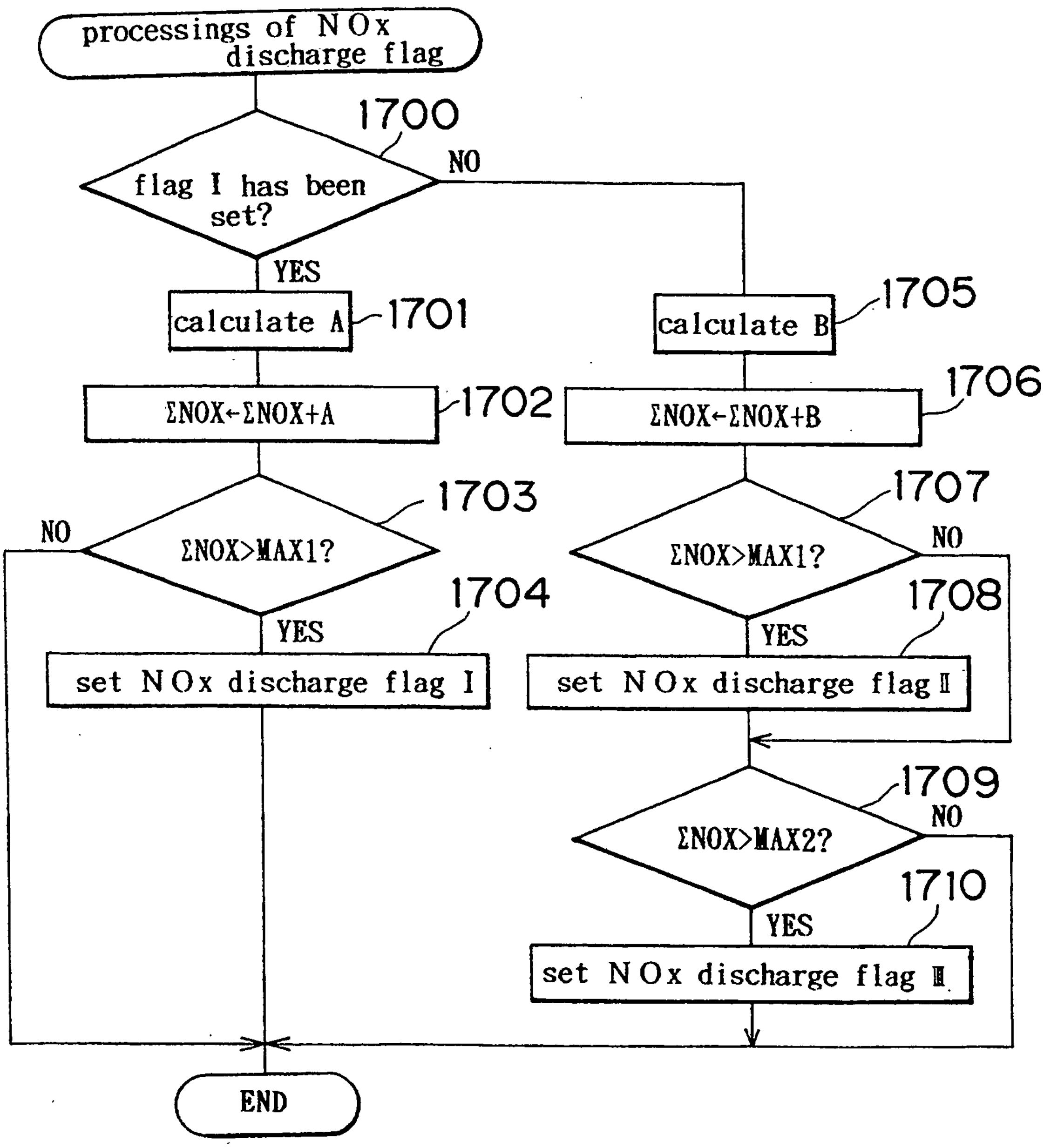
processings of NOx discharge flag
1700
flag I has been set?
NO
YES
calculate A
1701
ΣNOX←ΣNOX+A
1702
1703
ΣNOX>MAX1?
NO
YES
1704
set NOx discharge flag I
calculate B
1705
ΣNOX←ΣNOX+B
1706
1707
ΣNOX>MAX1?
NO
YES
1708
set NOx discharge flag II
1709
ΣNOX>MAX2?
NO
YES
1710
set NOx discharge flag III
END

FIG. 65

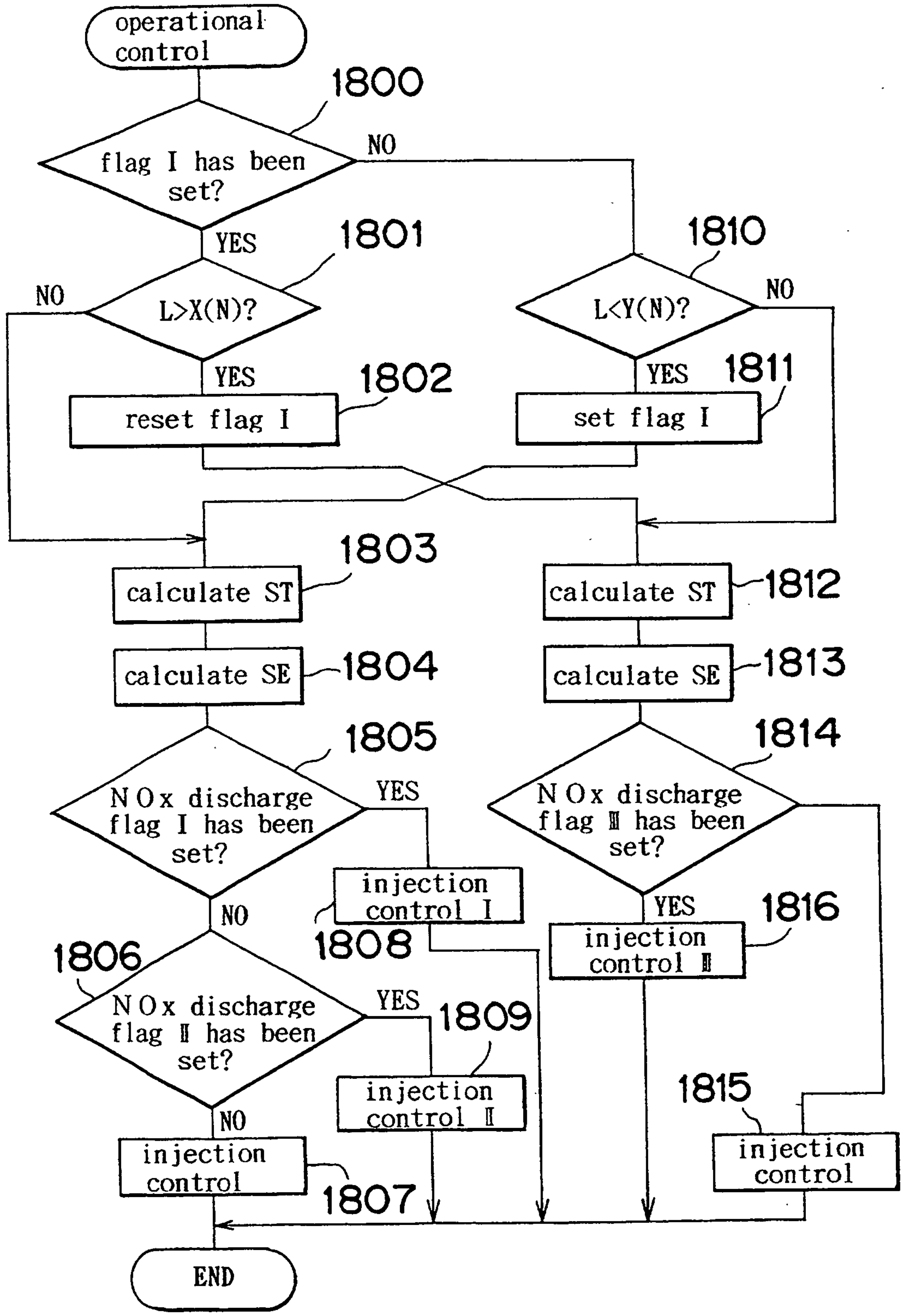
operational control
1800
flag I has been set?
NO
YES
1801
L>X(N)?
NO
YES
1802
reset flag I
1810
L<Y(N)?
NO
YES
1811
set flag I
1803
calculate ST
1804
calculate SE
1805
NOx discharge flag I has been set?
YES
NO
injection control I
1808
1806
NOx discharge flag II has been set?
YES
NO
1809
injection control II
injection control
1807
1812
calculate ST
1813
calculate SE
1814
NOx discharge flag III has been set?
YES
1816
injection control III
1815
injection control
END

FIG. 66

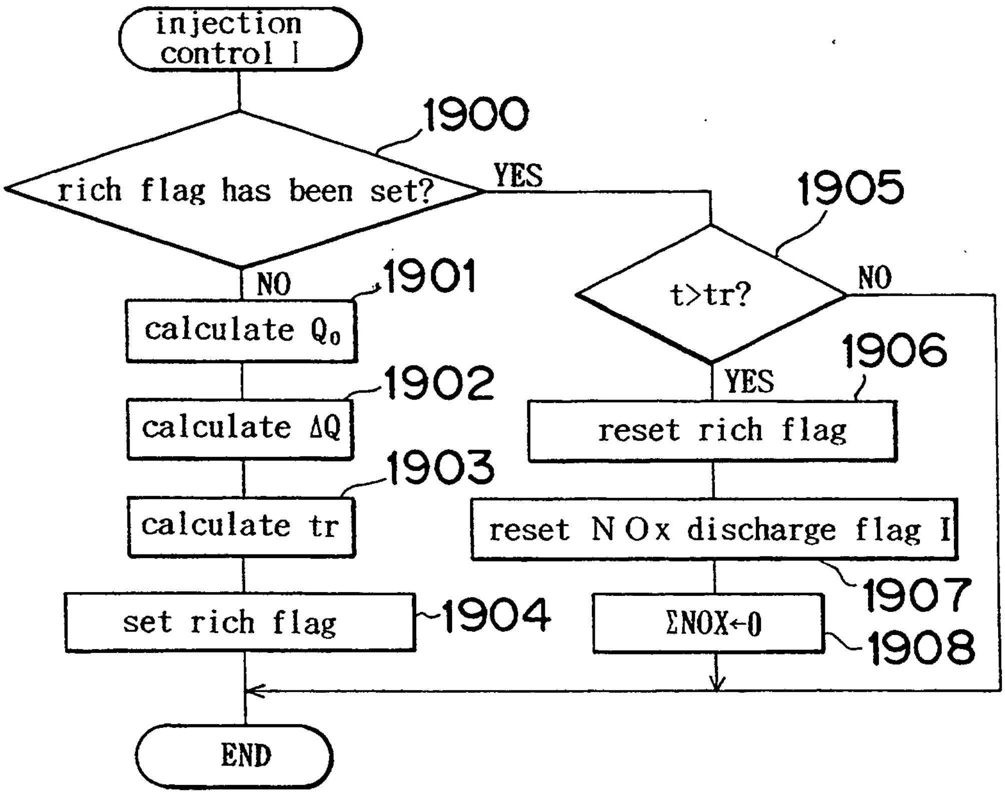
injection control I
1900
rich flag has been set?
YES
NO
1901
calculate $Q_0$
1902
calculate ΔQ
1903
calculate tr
set rich flag
1904
1905
t>tr?
NO
YES
1906
reset rich flag
reset NOx discharge flag I
1907
ΣNOX←0
1908
END

FIG. 67

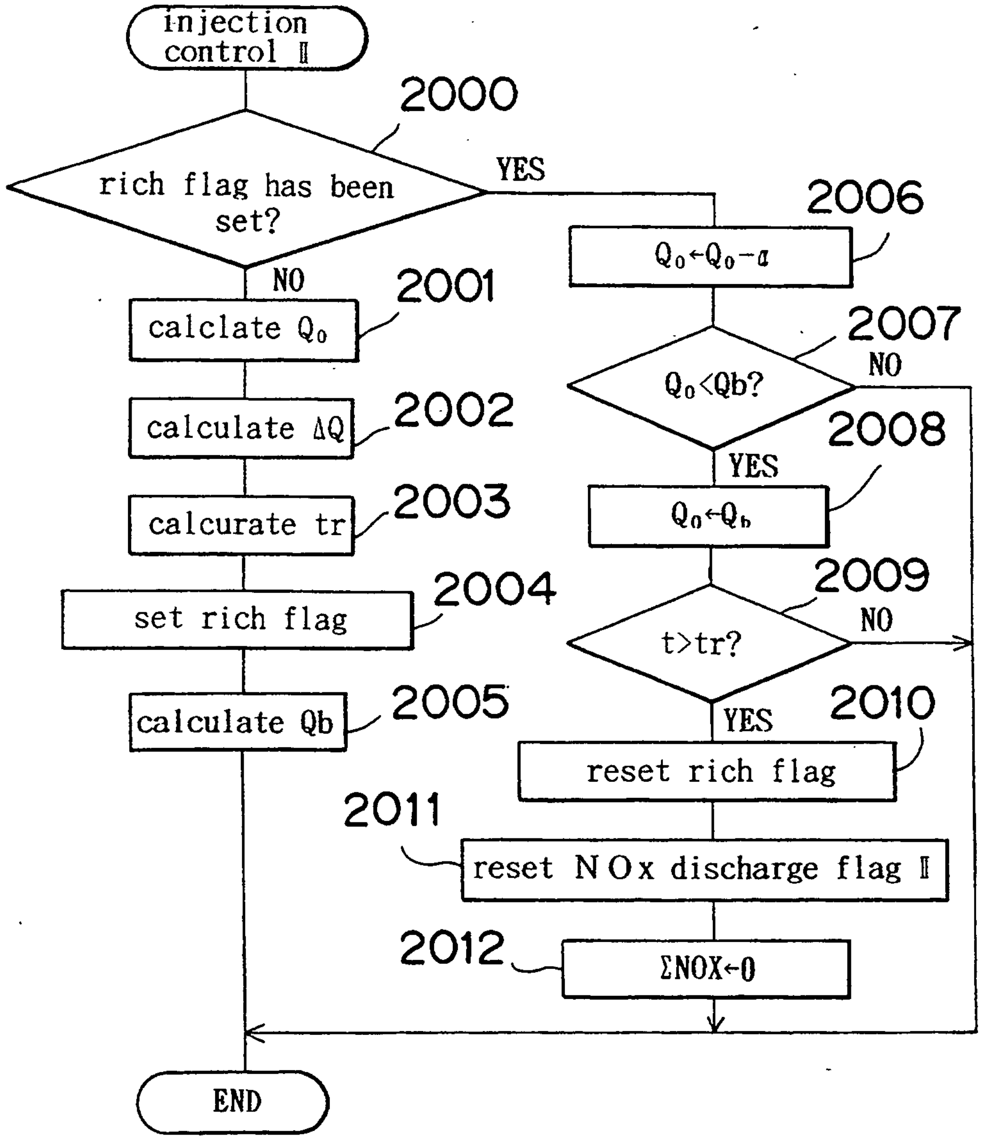
injection control II
2000
rich flag has been set?
YES
NO
2001
calclate $Q_0$
2002
calculate ΔQ
2003
calcurate tr
2004
set rich flag
2005
calculate Qb
2006
$Q_0 \leftarrow Q_0 - \alpha$
2007
$Q_0 < Qb$?
NO
YES
2008
$Q_0 \leftarrow Q_b$
2009
t>tr?
NO
YES
2010
reset rich flag
2011
reset NOx discharge flag II
2012
ΣNOX←0
END

FIG. 68

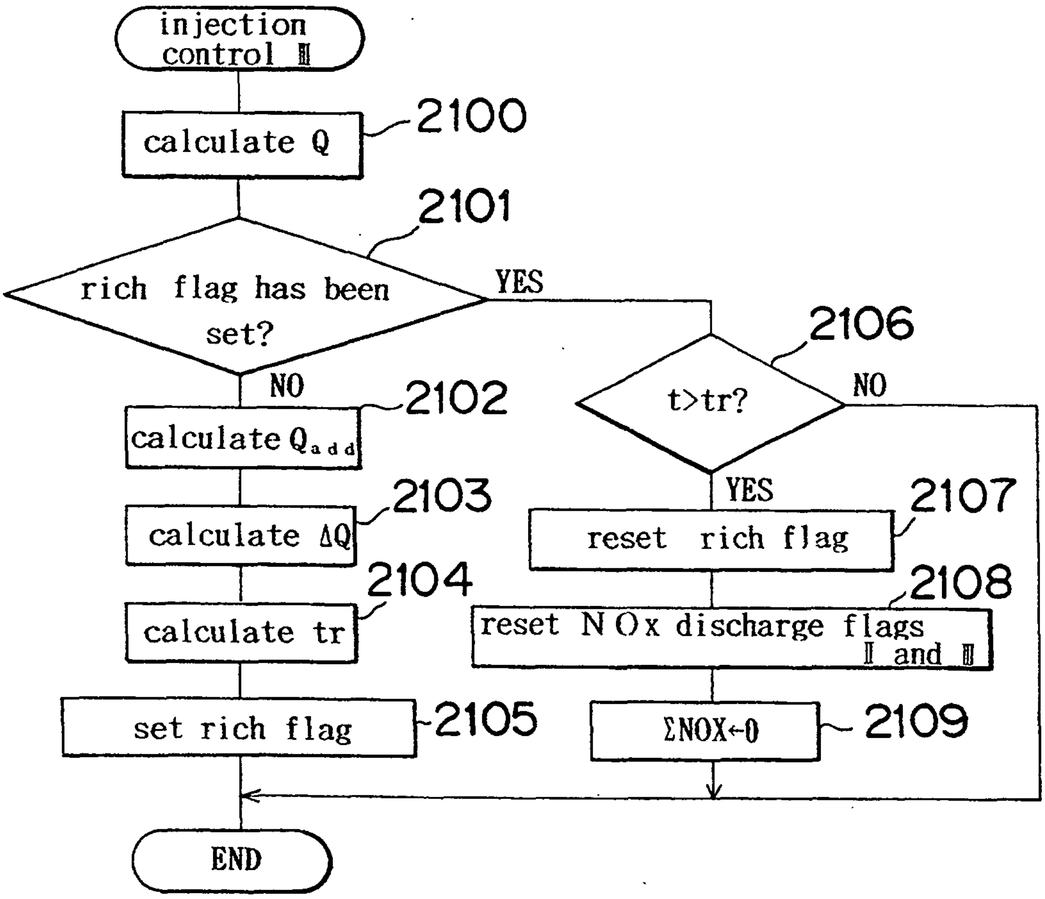
injection control III
calculate Q
2100
rich flag has been set?
2101
YES
NO
calculate $Q_{add}$
2102
calculate ΔQ
2103
calculate tr
2104
set rich flag
2105
t>tr?
2106
NO
YES
reset rich flag
2107
reset NOx discharge flags II and III
2108
ΣNOX←0
2109
END

FIG. 69

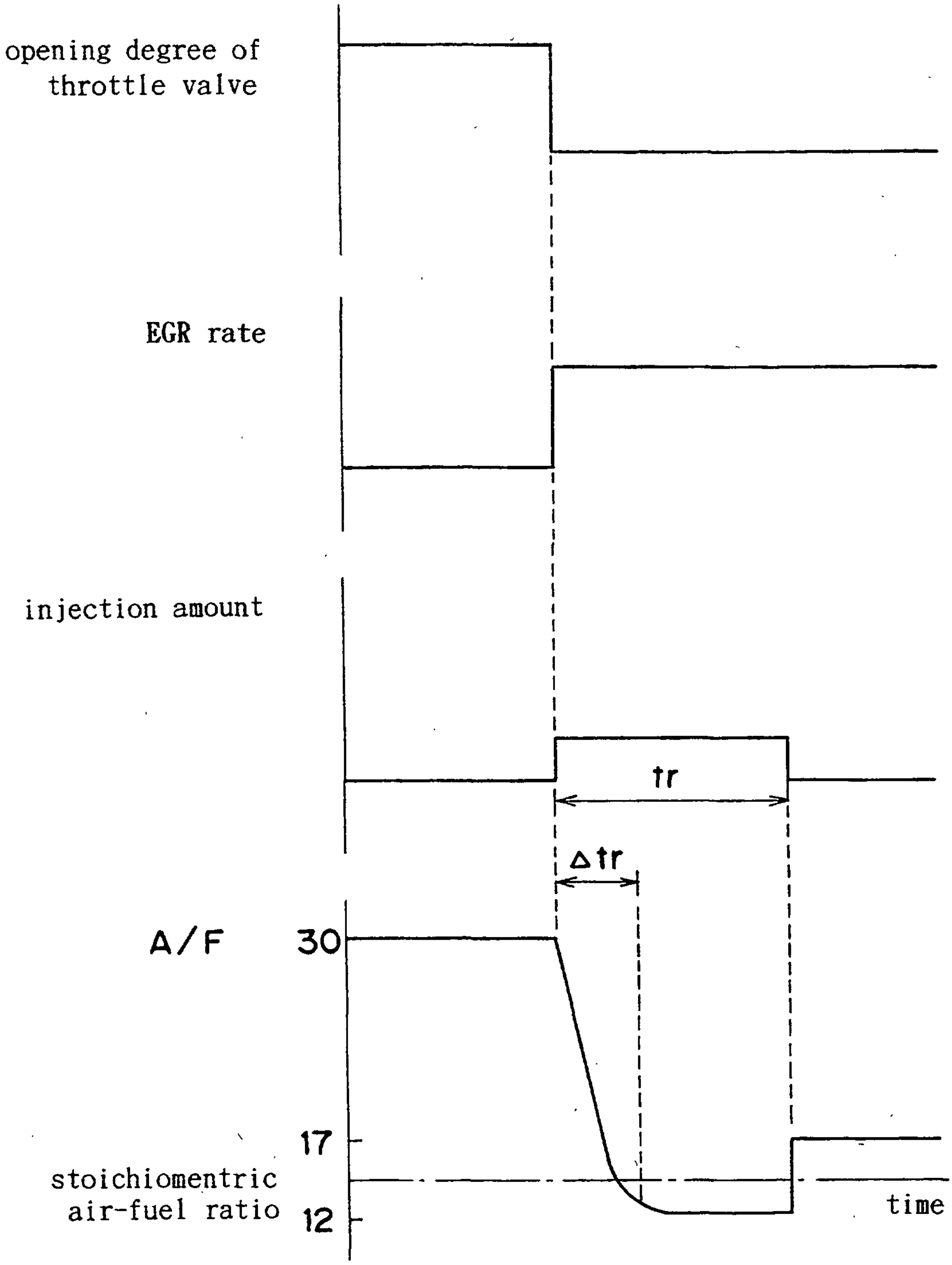
opening degree of throttle valve
EGR rate
injection amount
tr
Δtr
A/F
30
17
stoichiomentric air-fuel ratio
12
time

FIG. 70

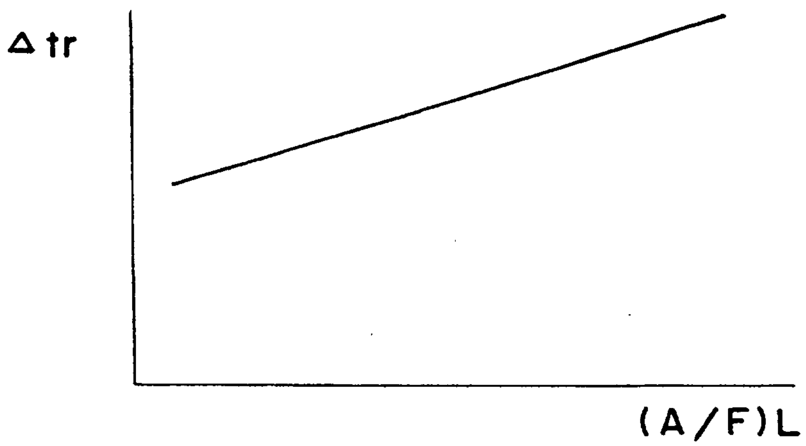

FIG. 71

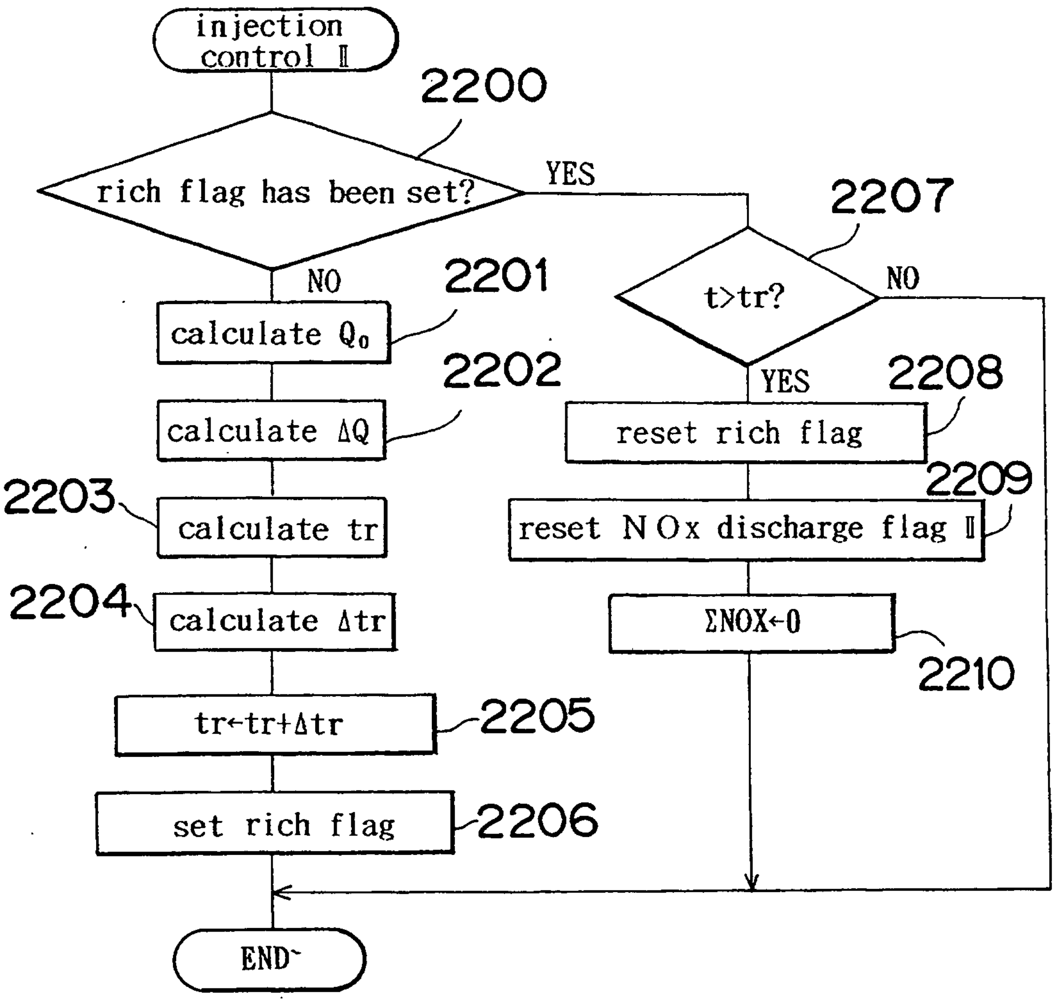
injection control II
2200
rich flag has been set?
YES
NO
2201
calculate $Q_0$
2202
calculate ΔQ
2203
calculate tr
2204
calculate Δtr
tr←tr+Δtr
2205
set rich flag
2206
2207
t>tr?
NO
YES
2208
reset rich flag
2209
reset NOx discharge flag II
ΣNOX←0
2210
END

FIG. 72

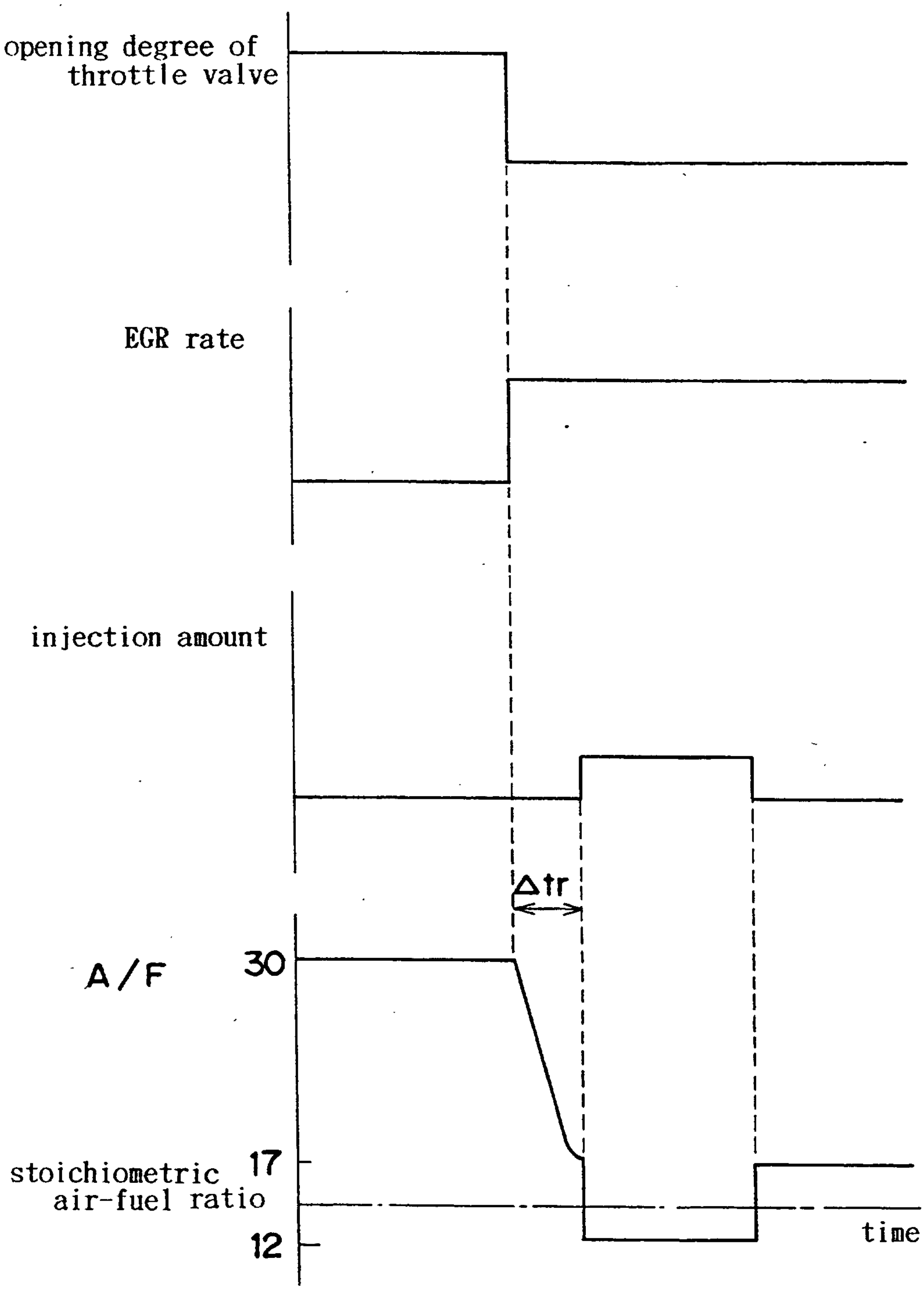

opening degree of throttle valve
EGR rate
injection amount
Δtr
A/F
30
stoichiometric air-fuel ratio
17
12
time

FIG. 73

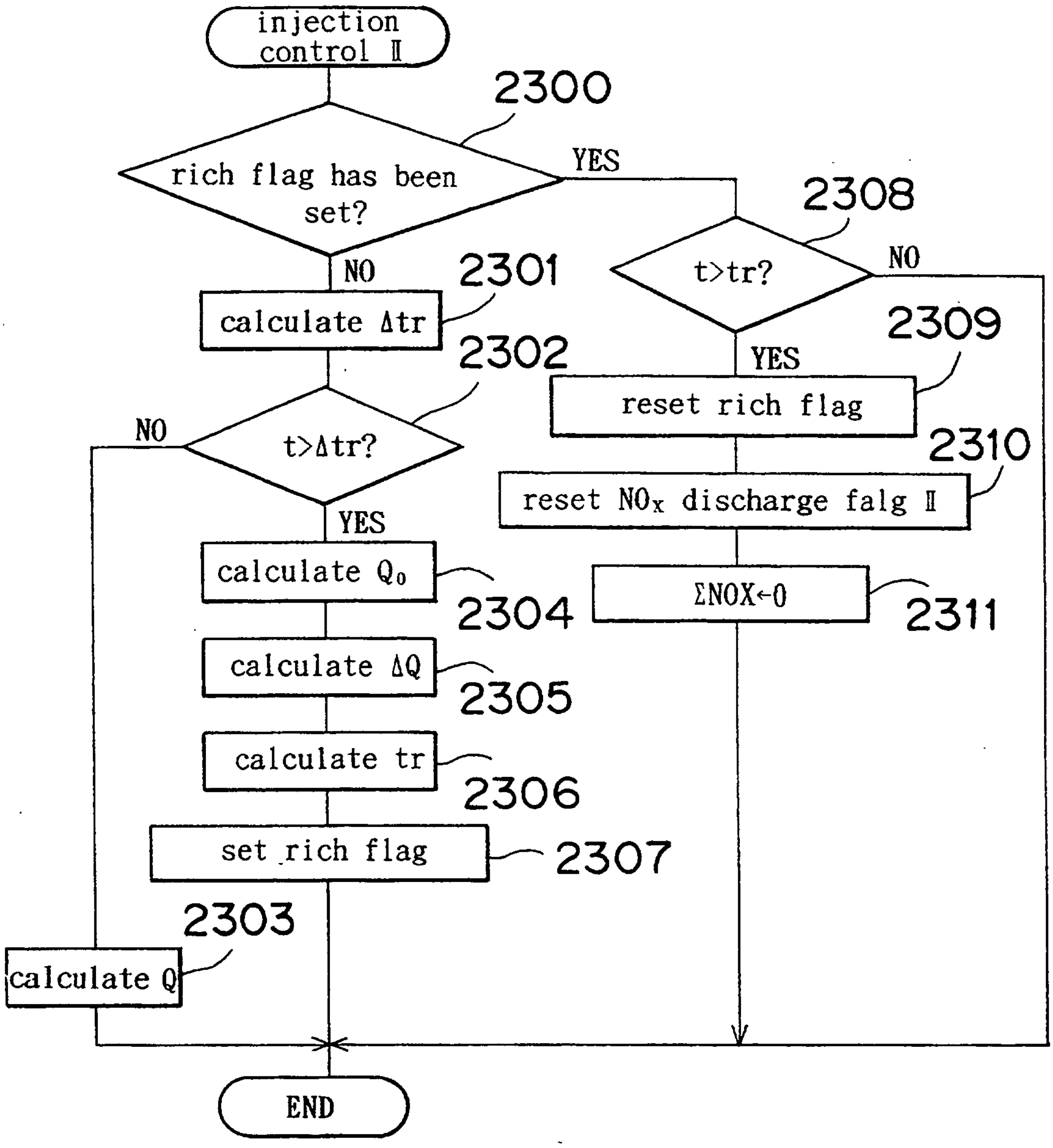
injection control II
2300
rich flag has been set?
YES
NO
2301
calculate Δtr
2302
t>Δtr?
NO
YES
calculate Q0
2304
calculate ΔQ
2305
calculate tr
2306
set rich flag
2307
2303
calculate Q
2308
t>tr?
NO
YES
2309
reset rich flag
2310
reset NOx discharge falg II
ΣNOX←0
2311
END

FIG. 74

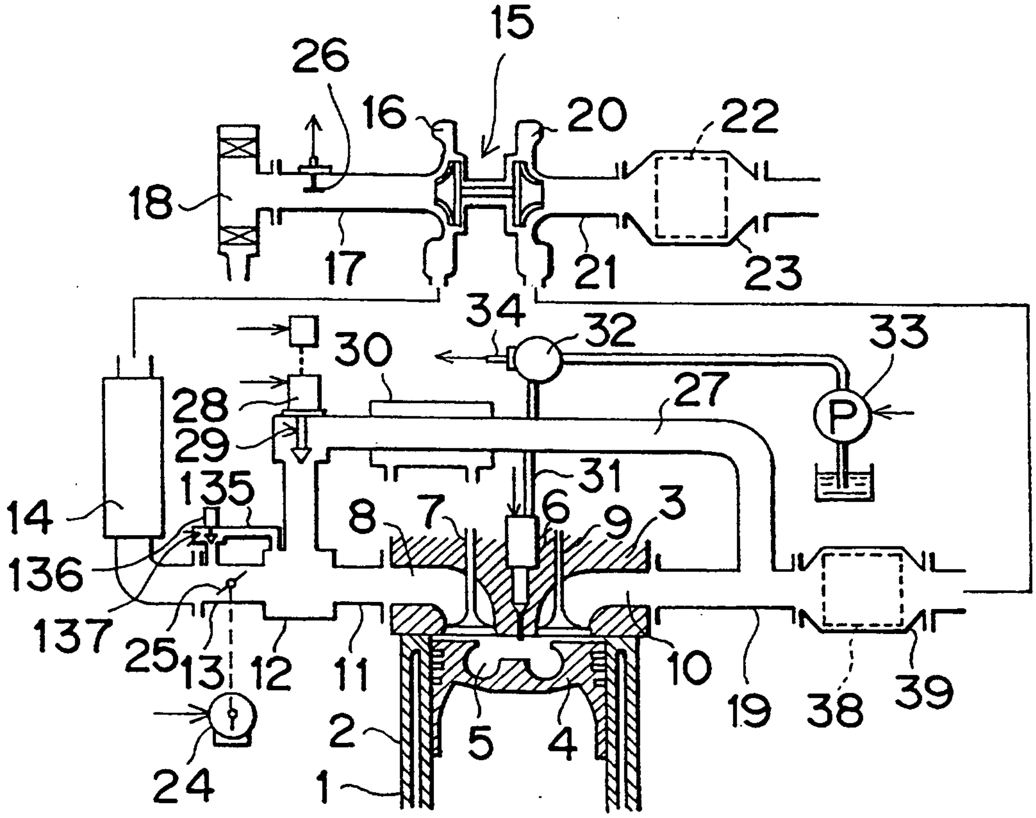
15
26
16
20
22
18
17
21
23
34
32
33
30
28
27
29
31
135
14
8
7
6
9
3
136
137
25
13
12
11
10
19
38
39
24
2
5
4
1

FIG. 75

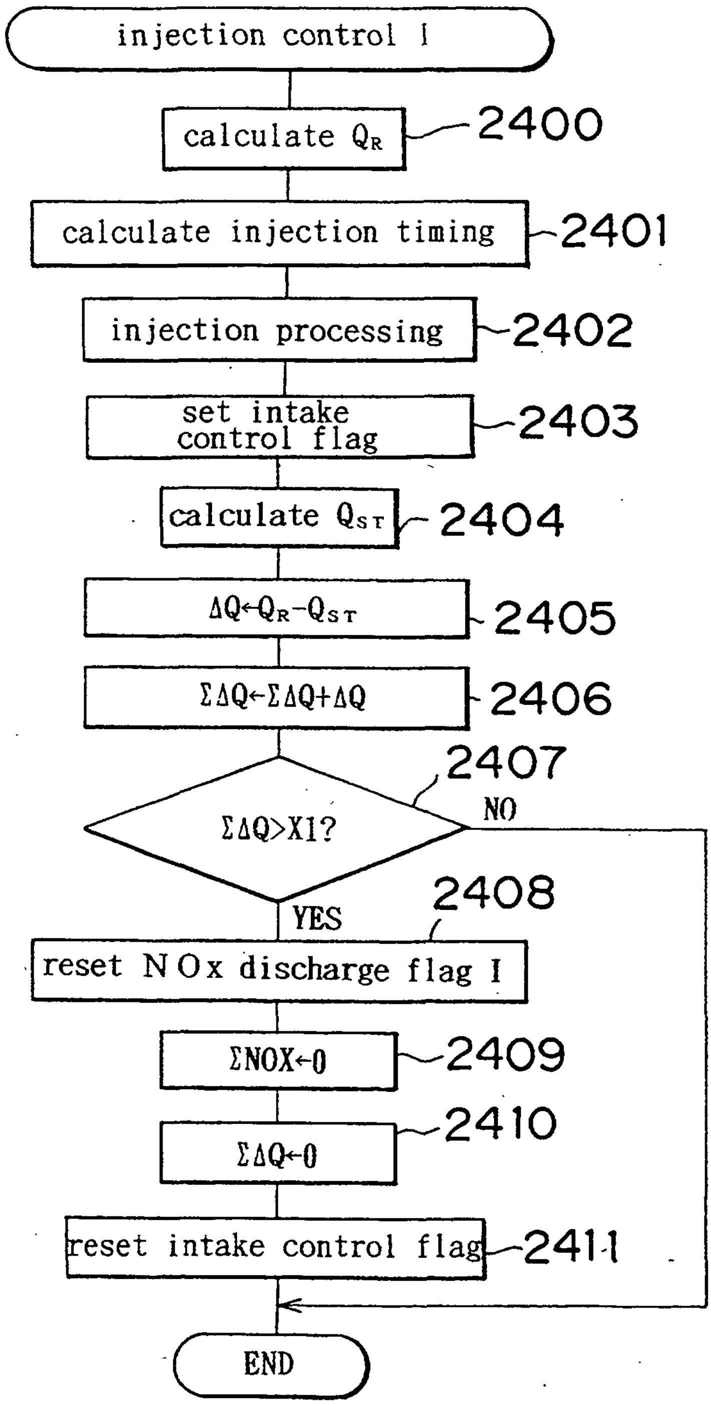
injection control I
calculate $Q_R$
2400
calculate injection timing
2401
injection processing
2402
set intake control flag
2403
calculate $Q_{ST}$
2404
$\Delta Q \leftarrow Q_R - Q_{ST}$
2405
$\Sigma\Delta Q \leftarrow \Sigma\Delta Q + \Delta Q$
2406
$\Sigma\Delta Q > X1$?
2407
NO
YES
2408
reset NOx discharge flag I
$\Sigma NOX \leftarrow 0$
2409
$\Sigma\Delta Q \leftarrow 0$
2410
reset intake control flag
2411
END

FIG. 76

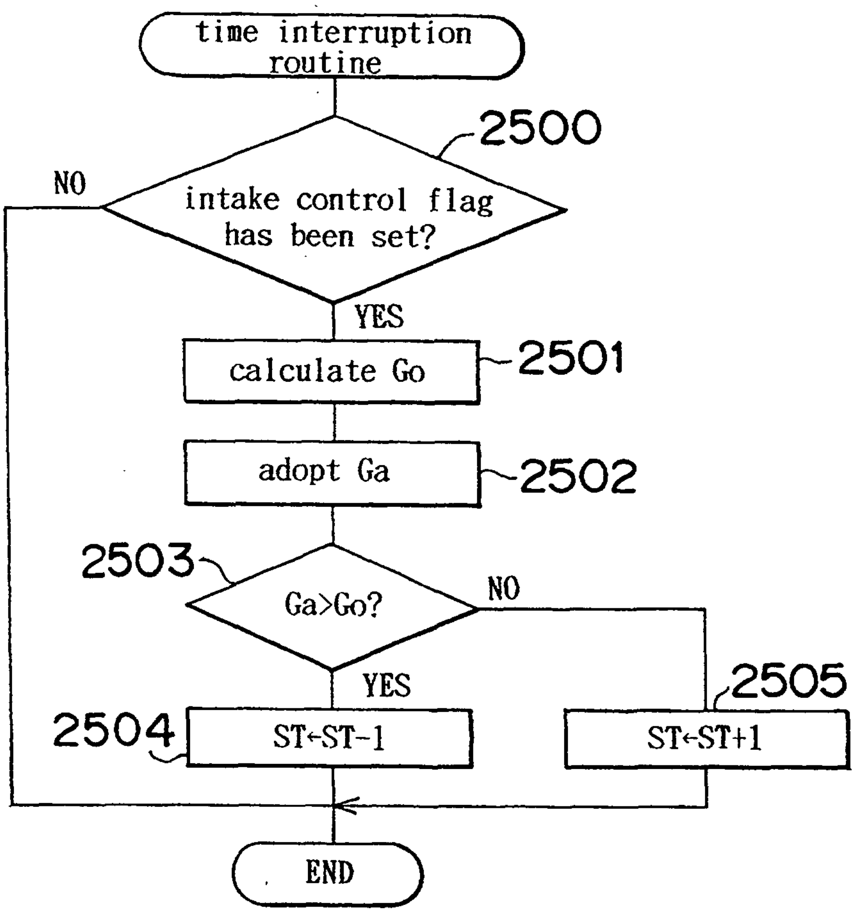
time interruption routine
2500
NO
intake control flag has been set?
YES
calculate Go
2501
adopt Ga
2502
2503
Ga>Go?
NO
YES
2505
2504
ST←ST-1
ST←ST+1
END

FIG. 77

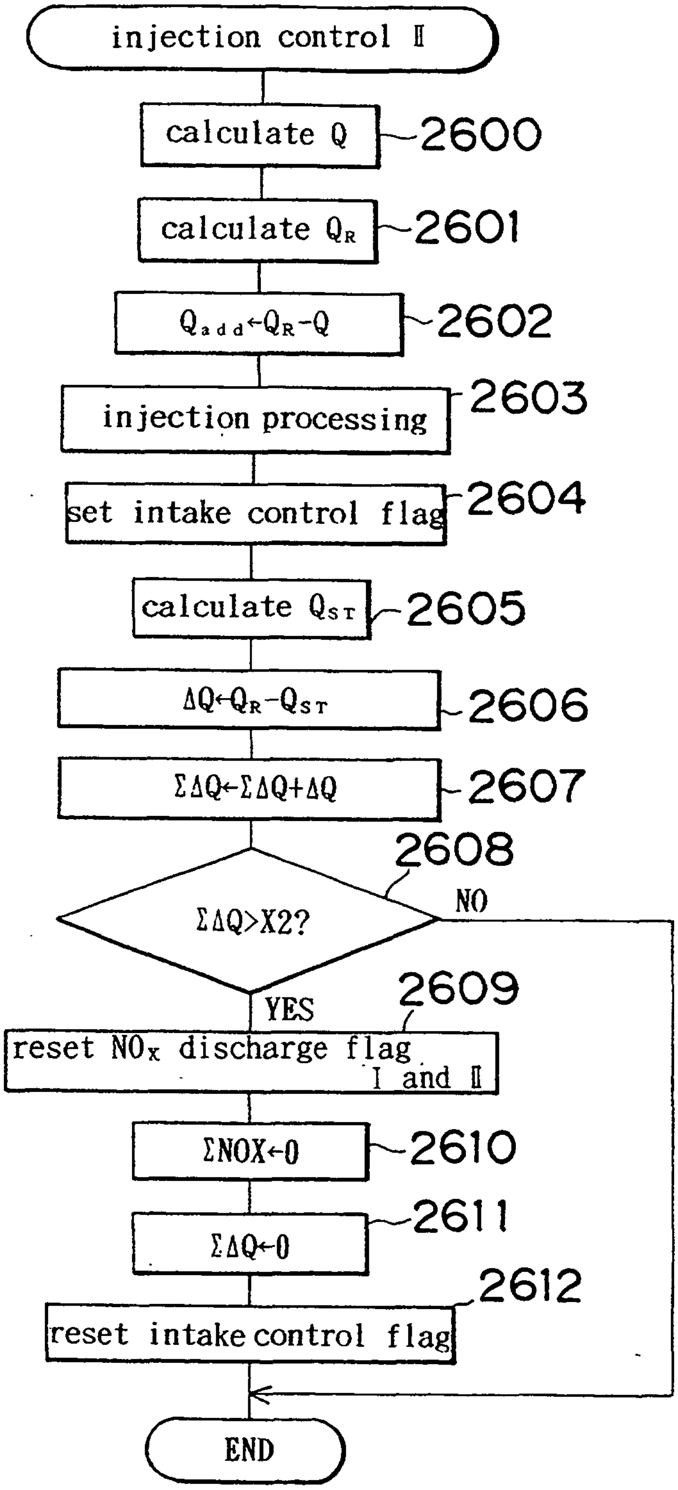
injection control II
calculate Q
2600
calculate $Q_R$
2601
$Q_{add} \leftarrow Q_R - Q$
2602
injection processing
2603
set intake control flag
2604
calculate $Q_{ST}$
2605
$\Delta Q \leftarrow Q_R - Q_{ST}$
2606
$\Sigma\Delta Q \leftarrow \Sigma\Delta Q + \Delta Q$
2607
2608
$\Sigma\Delta Q > X2$?
NO
YES
2609
reset $NO_X$ discharge flag I and II
$\Sigma NOX \leftarrow 0$
2610
$\Sigma\Delta Q \leftarrow 0$
2611
2612
reset intake control flag
END